# EUROPEAN PATENT APPLICATION

(11) **EP 4 818 892 A1**
(43) Date of publication of application: **07.10.2026**
(21) Application number: 26169467.3
(22) Date of filing: 31.03.2026
(51) Int. Cl.: G06F 9/30, G06F 9/38

(54) **MATRIX MULTIPLICATION WITH BLOCK SCALING**

(30) Priority: 02.04.2025 IN 202511032739; 02.09.2025 US 202519317089
(71) Applicant: Nvidia Corporation, Santa Clara, CA 95051 (US)
(72) Inventor: HIRISAVE CHANDRA SHEKHARA, Gokul Ramaswamy, Santa Clara, 95051 (US); PATWARDHAN, Abhishek Avinash, Santa Clara, 95051 (US); EKBOTE, Ameya Bhalchandra, Santa Clara, 95051 (US); BHARAMBE, Girish Bhaskarrao, Santa Clara, 95051 (US)
(74) Representative: Mathys & Squire

(57) **Abstract**

Apparatuses, systems, and techniques to perform matrix multiply-acumulate operations with block scaling of specified portions of input matrices by scale factors. In at least one embodiment, an input matrix is multiplied by a scaled matrix that is generated by multiplying elements of a second input matrix by one or more corresponding scale factors stored in tensor memory.

## Description

### CLAIM OF PRIORITY

This application claims the benefit of Indian Provisional Application No. 202511032739 (Attorney Docket No. 0112912-F11PRF) titled "MATRIX MULTIPLICATION INSTRUCTIONS," filed April 2, 2025, the entire contents of which is incorporated herein by reference.

### TECHNICAL FIELD

At least one embodiment pertains to processing resources used to perform matrix multiplication on scaled operands.

### BACKGROUND

Matrix multiplication is used in neural networks to compute numeric quantities such as outputs of network layers, gradients of weights, and error signals for backpropagation. As an example, the weights of a layer can be represented as a weight matrix and a batch of multiple inputs can be represented as an input matrix. The output of the layer is computed by multiplying the weight matrix by the input matrix. The value of each matrix element is stored in memory in a floating-point decimal data format that uses 32 bits for each value, for example. Larger data sizes (e.g., 32 bits) provide greater precision in computations, but use more computational resources than smaller data sizes. Smaller data sizes, such as a 16 bit floating-point format, can be used to speed up computations on devices that have resource constraints such as memory bandwidth bottlenecks. Smaller data sizes, such as 8 bit formats, can be used to significantly reduce memory usage and increase inference speed, but such small data formats can also significantly reduce precision of results. The amount of time, memory, or computing resources used to perform matrix-multiply-accumulate operations in computer programs can be improved.

### SUMMARY

The invention is defined by the claims. In order to illustrate the invention, aspects and embodiments which may or may not fall within the scope of the claims are described herein.

Apparatuses, systems, and techniques to perform matrix multiply-acumulate operations with block scaling of specified portions of input matrices by scale factors. In at least one embodiment, an input matrix is multiplied by a scaled matrix that is generated by multiplying elements of a second input matrix by one or more corresponding scale factors stored in tensor memory.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a processor for performing a block-scaled matrix multiply accumulate (MMA) instruction having inputs and outputs stored in memory, in accordance with at least one embodiment;
FIG. 2 illustrates interactions in a processor for performing a block-scaled MMA instruction having inputs and outputs stored in memory, in accordance with at least one embodiment;
FIG. 3 illustrates a block-scaled MMA operation having input and output matrices stored in tensor memory or shared memory, in accordance with at least one embodiment;
FIG. 4A illustrates an instruction descriptor for a block-scaled MMA instruction, in accordance with at least one embodiment;
FIG. 4B illustrates block scale data layouts in tensor memory for various scale vector sizes, in accordance with at least one embodiment;
FIG. 5 illustrates scale factors selected from tensor memory for various scale factor selector values, in accordance with at least one embodiment;
FIG. 6 illustrates a processor for performing a block-scaled MMA invocation having inputs and outputs stored in registers, in accordance with at least one embodiment;
FIG. 7 illustrates interactions in a processor for performing a block-scaled MMA instruction having inputs and output matrices stored in registers, in accordance with at least one embodiment;
FIG. 8 illustrates a block-scaled MMA operation having inputs and outputs stored in registers, in accordance with at least one embodiment;
FIG. 9 illustrates block-scaled MMA operations using scale matrices selected from scale data, in accordance with at least one embodiment;
FIG. 10 illustrates block-scaled MMA operations using scale matrices with a scale vector size of 1X, in accordance with at least one embodiment;
FIG. 11 illustrates block-scaled MMA operations using scale matrices with a scale vector size of 2X, in accordance with at least one embodiment;
FIG. 12 illustrates block-scaled MMA operations using scale matrices with a scale vector size of 4X, in accordance with at least one embodiment;
FIG. 13 illustrates an example process to perform block-scaled MMA operations using data stored in tensor memory and/or shared memory, in accordance with at least one embodiment;
FIG. 14 illustrates an example process to perform block-scaled MMA operations using matrices stored in registers, in accordance with at least one embodiment;
FIG. 15 illustrates an example process to select scale matrix elements from scale data, in accordance with at least one embodiment;
FIG. 16 illustrates scale factors selected from registers for various scale factor selector values, in accordance with at least one embodiment;
FIG. 17A illustrates a fragment layout of an input matrix and associated thread IDs of a warp, including threads that contribute scale factors from scale data, in accordance with at least one embodiment;
FIG. 17B illustrates thread pairs that contribute scale factors from scale data A to form a scale matrix A, in accordance with at least one embodiment;
FIG. 18 illustrates threads that contribute scale factors from scale data B to form a scale matrix B, in accordance with at least one embodiment;
FIG. 19 illustrates an example of a system that includes a processor and modules, according to at least one embodiment;
FIG. 20 illustrates an example data center system, in accordance with at least one embodiment;
FIG. 21 illustrates an system-on-a-chip (SOC), in accordance with at least one embodiment;
FIG. 22A illustrates a parallel processor, in accordance with at least one embodiment;
FIG. 22B illustrates a processing cluster, in accordance with at least one embodiment;
FIG. 22C illustrates a graphics multiprocessor, in accordance with at least one embodiment;
FIG. 23 illustrates an accelerator processor, in accordance with at least one embodiment;
FIG. 24A illustrate a central processing unit, in accordance with at least one embodiment;
FIG. 24B illustrates a core of central processing unit in FIG. 24A, in accordance with at least one embodiment;
FIG. 25 illustrates another accelerator processor, in accordance with at least one embodiment;
FIG. 26 illustrates a neuromorphic processor, in accordance with at least one embodiment;
FIG. 27 illustrates a supercomputer, in accordance with at least one embodiment;
FIG. 28 illustrates another accelerator processor, in accordance with at least one embodiment;
FIG. 29 illustrates another processor, in accordance with at least one embodiment;
FIG. 30 illustrates another accelerator processor, in accordance with at least one embodiment;
FIG. 31 illustrates a tensor processing unit, in accordance with at least one embodiment;
FIG. 32 illustrates a RISC-V-compatible processor, in accordance with at least one embodiment;
FIGs. 33A and 33B illustrate a language processing unit, in accordance with at least one embodiment;
FIG. 34 illustrates a software stack of a programming platform, in accordance with at least one embodiment;
FIG. 35 illustrates software that is supported by a programming platform, in accordance with at least one embodiment;
FIG. 36 illustrates compiling code to execute on programming platforms of FIG. 35, in accordance with at least one embodiment;
FIG. 37 illustrates an example of an autonomous vehicle and its system architecture, in accordance with at least one embodiment;
FIG. 38A illustrates inference and/or training logic, in accordance with at least one embodiment;
FIG. 38B illustrates inference and/or training logic, in accordance with at least one embodiment; and
FIG. 38C illustrates training and deployment of a neural network, in accordance with at least one embodiment.

### DETAILED DESCRIPTION

In the following description, numerous specific details are set forth to provide a more thorough understanding of at least one embodiment. However, it will be apparent to one skilled in the art that the inventive concepts may be practiced without one or more of these specific details.

Neural networks use matrices of numbers to represent information such as network inputs, weights, and network outputs. Matrix multiplication is used extensively in neural networks. For example, network outputs are computed by performing matrix multiplication on matrices that represent network inputs and weights. As another example, neural network training involves using matrix multiplication to calculate updated weights for previous layers. Each matrix contains a set of numbers, which are referred to as matrix elements, arranged in rows and columns. Each matrix element can be a floating-point value represented using a particular number of bits. Each matrix element can be represented using 32 bits to achieve high precision. Smaller matrix elements can be used to improve performance by reducing the number of computations and amount of memory needed for each matrix element. For example, a reduced-size format of 8-bits or 4-bits can be used for each matrix element to significantly reduce the amount of memory and computational resources used by a neural network. However, such reduced-size formats have less numeric accuracy than larger formats. Accordingly, using reduced-size formats can significantly reduce the precision of matrix multiplication results, which in turn reduces the accuracy of neural network output.

Matrix multiply accumulate (MMA) processor instructions are performed by systems, methods, and apparatuses described herein to multiply elements of two input matrices by scale factors, and multiply the resulting scaled input matrices using matrix multiplication to produce an output matrix. The output matrix from the matrix multiplication operation can then be scaled up to the larger input size using the scale factors. Matrix multiplication in which the multiplicand matrices have been multiplied by scale factors is referred to as "block scaling" and reduces the size of input matrix elements so that matrix multiplication can be performed using smaller matrix elements. The input matrices can be fragments of larger matrices, so different fragments can be multiplied by different scale factors. Using the same scale factor for a large matrix, such as a weight matrix, does not necessarily result in sufficiently accurate output from matrix multiplication, since different portions of a matrix may have element values in different ranges that cannot be represented by a single scale factor. Using different scale factors for different portions of an input matrix, referred to herein as blocks, can improve accuracy for element sizes of 8 bits or smaller. The scale factors are determined using appropriate techniques, e.g., from expected ranges of matrix element values determined in previous inference and/or training operations of a neural network. As an example, block scaling reduces the size of input matrix elements from a larger format, such as 32-bit floating-point values, to a reduced-size format, such as 8-bit, 6-bit, or 4-bit floating-point formats, to be provided as input to a matrix multiplication operation. The particular reduced-size format to be used for matrix elements is specified by an operand of the instruction. The input matrices can be in memory (e.g., tensor memory or shared memory) or registers.

Scale factors to be used for different portions of input matrices or under different conditions can be selected by block-scaled MMA instruction. The block-scaled MMA instructions have input operands to specify the scale factor selector values, which select particular regions of scale factor data ("scale data") from which the scale factors are to be retrieved for each call to one of the instructions. More specifically, the block-scaled MMA instructions have a scale vector size qualifier to specify that each input matrix is to be partitioned into a specified number of regions referred to herein as "chunks," and the elements of each chunk are to multiplied by scale factors from a corresponding scale vector. As such, different chunks of an input matrix can multiplied by elements of different vectors, which represent different regions of scale data. Scale vectors can be row vectors or column vectors, depending whether the scale vector is to be multiplied by rows of an input matrix or by columns of an input matrix. For example, one scale vector can be multiplied by each of the columns in a first half of an input matrix A, and another scale vector can be multiplied by each of the columns in a second half of an input matrix A. In at least one embodiment, multiplication of a vector of an input matrix by a scale vector is performed by multiplying individual elements to produce an individual element of a resulting scaled vector. Two or more scale vectors can be grouped together to form a scale matrix. In at least one embodiment, the scale vector size qualifier specifies the number of different scale vectors to be multiplied by an input matrix, rather than the size of an individual scale vector. In at least one embodiment, the scale vector size specifies a number of scale vectors in a scale matrix. For example, if there are two scale vectors, the scale vector size qualifier is 2X. In at least one embodiment, the scale vector size qualifier specifies a size of a scale vector, e.g., a number of elements in a scale vector. The scale vectors are selected from predetermined scale data. A scale factor selector value provided as an operand to the instruction can specify which portion of the scale data is to be selected to form a scale vector. The scale data can be 8-bit values in tensor memory or registers, for example. In at least one embodiment, the block-scaled MMA instructions also have input operands to specify thread selector values, which select which threads in a set of threads performing an MMA operation (e.g., a warp) are to be used to retrieve the scale factors from tensor memory or registers.

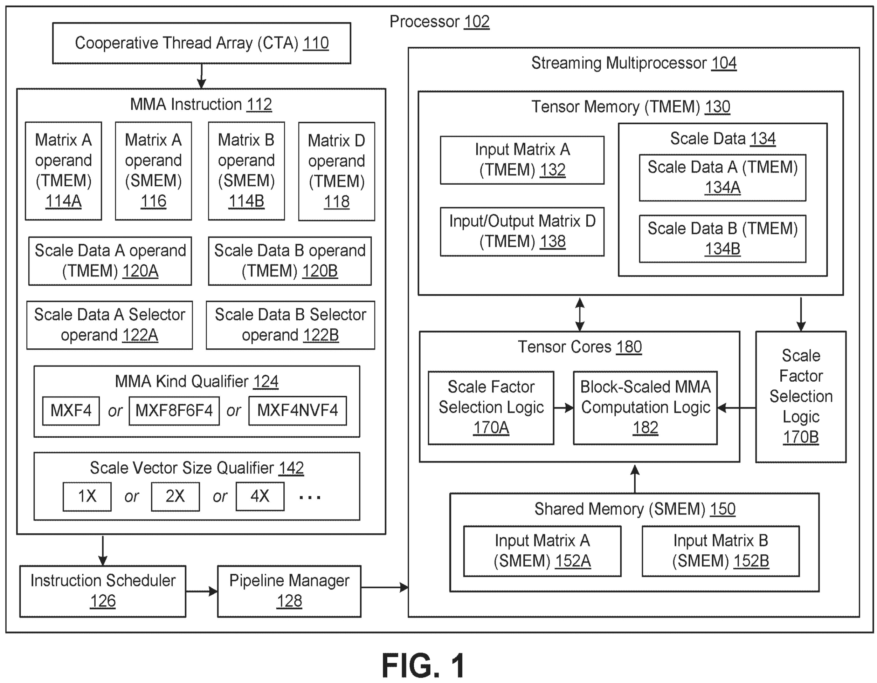

FIG. 1 illustrates a processor 102 for performing a block-scaled matrix multiply accumulate (MMA) instruction 112 having inputs and outputs stored in memory, in accordance with at least one embodiment. MMA instruction 112 can be executed by processor 102 to multiply elements of two input matrices by scale factors, and multiply the resulting scaled input matrices using matrix multiplication to produce an output matrix. Inputs and/or outputs of MMA instruction 112 are stored in tensor memory 130 and shared memory (SMEM) 150. Processor 102 can be a graphics processing unit (GPU), central processing unit (CPU), or other device suitable for performing MMA instruction 112. Processor 102 includes one or more streaming multiprocessors 104 ("SMs"). Each SM 104 includes TMEM 130 and SMEM 150 to store data, and one or more tensor cores 180 to execute computational operations such as MMA operations. Each streaming multiprocessor 104 also includes registers (not shown) to store data.

In at least one embodiment, tensor cores 180 include scale factor selection logic 170A, which selects scale factors from scale data 134 identified by scale data operands 120 in accordance with scale data selector operands 122. Alternatively or additionally, scale factor selection logic 170B can be included in SMs 104 outside of tensor cores 180. In at least one embodiment, tensor cores 180 include block-scaled MMA computation logic 182, which performs computations on input matrix A 132 (in TMEM) or input matrix A 152A (in SMEM), input matrix B 152B (in SMEM), and D 138 (in TMEM). The input matrices are identified by matrix A operand 114A or matrix A operand 116 (SMEM), matrix B operand 114B (SMEM), and matrix D operand 118. In at least one embodiment, block-scaled MMA computation logic 182 multiplies input matrices 132 or 152A and 152B by the respective selected scale factors from scale data 134A, 134B to obtain scaled input matrices, and performs MMA operations on the scaled input matrices to compute an MMA result, which is stored in input/output (e.g., accumulator) matrix D 138 identified by the matrix D operand 118. Accordingly, matrix D provides input and receives output of MMA operations.

In at least one embodiment, processor 102 includes a cooperative thread array (CTA) 110, which can be a group of GPU threads that work together to execute a block of code and share resources such as memory and synchronization primitives. In at least one embodiment, a CTA 110 performed by processor 102 launches an MMA instruction 112 via instruction scheduler 126 and pipeline manager 128 such that the instruction can be executed or otherwise performed on tensor cores 180 of a streaming multiprocessor 104. A set of threads (e.g., 32 threads) is referred to as a warp, which can also be referred to as a subgroup or wavefront, where each thread in the set of threads can belong to a single thread block and is configured to process a different set of data based on a single set of instructions. A CTA 110 can include multiple warps of threads.

Upon being executed by processor 102, the MMA instruction 112 causes the processor 102 to perform MMA operations that compute a product of an input matrix A 132 (in TMEM) or A 152A (in SMEM) and an input matrix B 152B (in SMEM). The MMA operations can be "block-scaled" MMA operations that perform scaling of one or more elements of at least one of the input matrices by multiplying each of the one or more elements by a scale factor to generate one or more scaled input values. The scaled input values are to be used in the computation of the product of matrices A and B instead of corresponding non-scaled elements of matrices A and B received as input. For example, the MMA operations can compute a scaled matrix A by multiplying elements of matrix A 132 by corresponding scale factors. The MMA operations can also compute a scaled matrix B by multiplying elements of matrix B 152B (SMEM) by corresponding scale factors. The MMA operations can further compute a product of scaled matrices A and B.

The MMA instruction 112 can be configured via input parameters to multiply particular matrix elements by selected scale factors. For example, there can be more matrix elements than scale factors, in which case the same "block" of scale factors (e.g., a set of scale factors arranged in rows and columns) is multiplied by two or more corresponding blocks of an input matrix (e.g., a fragment of the input matrix). Multiplication by scale factors can be performed by multiplying each scale factor (e.g., numeric value) in a block by each matrix element (e.g., numeric value) in a block of a matrix. The result of multiplying a scale factor by a matrix element can be used as input to matrix multiplication, or can replace the matrix element in the matrix, depending on implementation details. Particular implementations can use optimizations, e.g., by fusing the multiplication of a scale factor by a matrix element with one or more subsequent operations used in matrix multiplication, in which case one or more of the numeric values described herein are not necessarily stored in memory or registers. The product of a scale factor and an input matrix element, for example, is described in examples herein as a numeric value for explanatory purposes, but implementations do not necessarily store the product as a numeric value in memory or in a register.

In at least one embodiment, an MMA operation is a mathematical operation that, if performed by processor 102, computes a value *D*: $D = AB + D$ where *A, B,* and *D* are matrices, submatrices, submatrix fragments, or tiles, or sets of numeric values. *A* and *B* are input matrices, *D* on the right-hand side is an optional input matrix which, if specified is an accumulator matrix, and *D* on the left-hand side is an output matrix in which the result of the MMA operation is stored. *AB* is the product of matrix *A* and matrix *B. A* is of size *M* × *K* (*M* rows by *K* columns), *B* is of size *K* × *N* (*K* rows by *N* columns), and *D* is of size *M* × *N* (*M* rows by *N* columns). An MMA operation having these dimensions has a shape of *M* × *N* × *K,* also referred to herein as shape *mMnNkK,* where *M, N,* and *K* are integer values indicating the dimensions of the input matrices A and B and also of the result matrix D.

A block-scaled MMA operation can be a mathematical operation that, if performed by processor 102, computes a value *D*: $D = \left(A∗{scale}_{A}\right) \left(B∗{scale}_{B}\right) + D$ where *scale_{A}* and *scale_{B}* are scale matrices, * denotes element-wise multiplication of one or more elements of a matrix *A* by one or more elements of another matrix such as *scale_{A}* and (*A * scale_{A}*)(*B * scale_{B}*) is computed by multiplying the scaled matrix *A* computed as (*A * scale_{A}*) by the scaled matrix *B* computed as (*B * scale_{B}*)*.* In element-wise multiplication, each element of a matrix *A* is multiplied by a corresponding element of a *scale_{A}* matrix to produce a scaled element. The scaled element can be used in subsequent matrix multiplication operations instead of the element of matrix A. The scaled element corresponds to the element of matrix A. In at least one embodiment, the scaled element replaces the element of matrix A in memory and is used as an input to a matrix multiplication operation instead of the element of matrix A. In at least one embodiment, the scaled element does not replace the element of matrix A in memory, but is used as an input to a matrix multiplication operation instead of the element of matrix A.

The MMA instruction 112 has a set of operands and a set of qualifiers. The operands provide parameters for the MMA instruction 112 that can be determined at runtime, and the qualifiers provide configuration parameters for the MMA instruction 112. The operands of the MMA instruction 112 include a matrix A operand 114A, an alternative matrix A operand 116, a matrix B operand 114B, and a matrix D operand 118. The operands also include a scale data A operand 120A, scale data B operand 120B, scale data A selector operand 122A, and scale data B selector operand 122B.

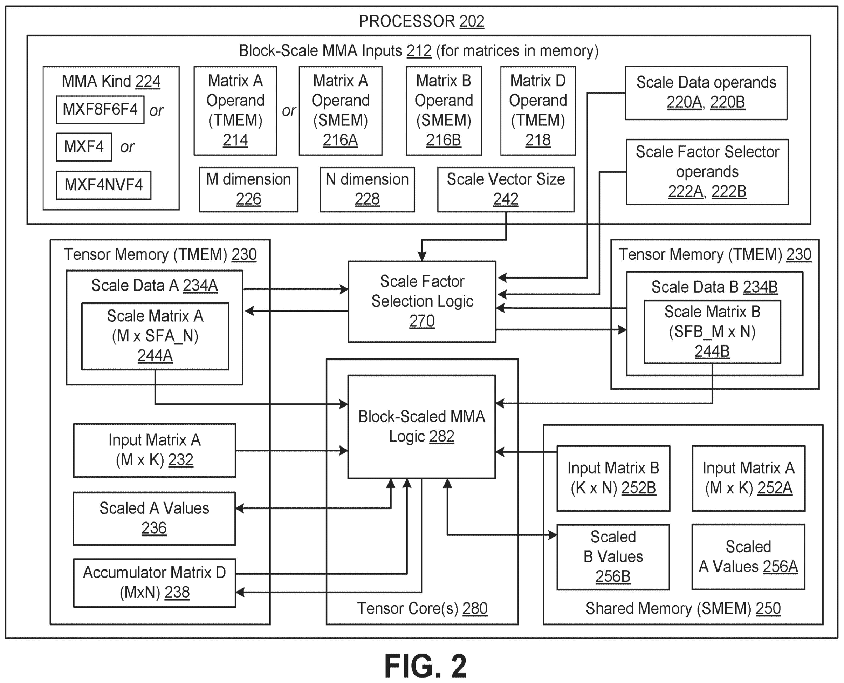

The determination of which elements of *A* are multiplied by which elements of *scale_{A}* depends on configuration inputs provided to the MMA instruction 112, such as a scale vector size qualifier 142, as described above. In at least one embodiment, the scale vector size qualifier 142 determines, at least in part, the size of the *scale_{A}* matrix and/or the size of the *scale_{B}* matrix, as further described herein with respect to FIG. 2. For example, the number of rows (*M*) in *scale_{A}* is the same as the number of rows in *A,* but *scale_{A}* can have fewer columns than *A.* That is, *scale_{A}* has a relatively small number of columns, e.g., 1, 2, or 4 columns. The columns of *scale_{A}* are referred to herein as vectors for explanatory purposes, where each vector of *scale_{A}* is a column vector having *M* rows. If a scale vector size qualifier 142 of 1X is specified for an MMA instruction 112, for example, then *scale_{A}* has one column, in which case, the elements of the column of *scale_{A},* are multiplied by corresponding elements of each column of *A.* As another example, if a scale vector size qualifier 142 of 2X is specified, then *scale_{A}* has two columns. In this case, the elements of the first column of *scale_{A}* are multiplied by corresponding elements of each column in a first half of *A,* (e.g., the first *K*/*2* columns) and the elements of the second column of *scale_{A}* are multiplied by corresponding elements of each column in a second half of *A* (e.g., the second *K*/2 columns). These matrix columns are also referred to herein as column vectors for explanatory purposes. Further, the two halves of *A* are referred to herein as "chunks" of*A.*

One or more of the MMA operands 114-122 identify data on which the MMA instruction 112 is to perform operations. Each of the operands 114-122 can be a shared memory descriptor that identifies an address in shared memory, a tensor memory address that includes a row and a column identifying the address in tensor memory, a register (specified as one or more register names, e.g., {%Ra0}, and/or an intermediate value.

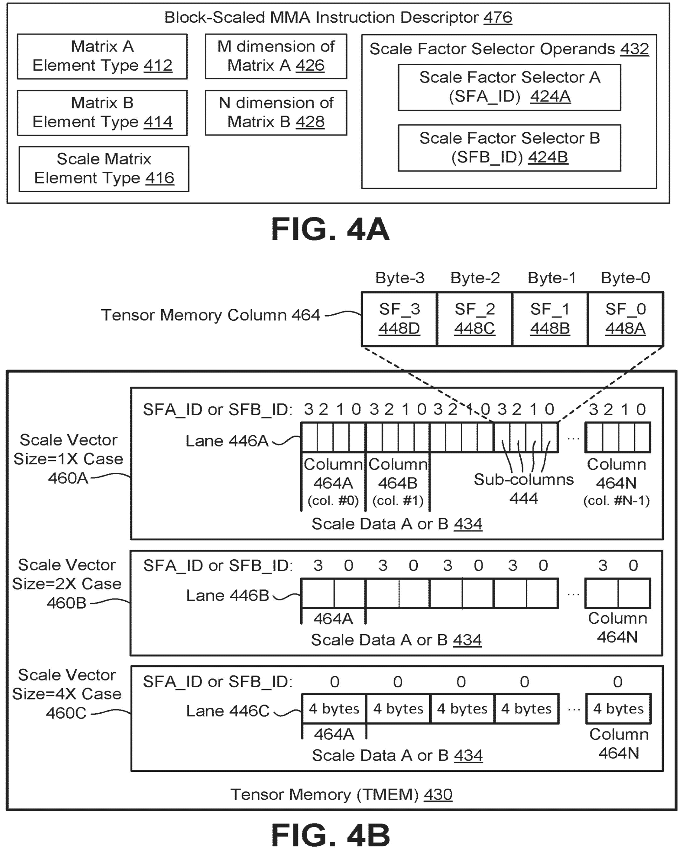

In at least one embodiment, an operand that identifies data includes a reference to the data, e.g., in the form of a memory address. The memory address can be a tensor memory 130 address or shared memory 150 address. In at least one embodiment, an operand that identifies data in tensor memory is a tensor memory address that specifies a lane index and a column index in tensor memory (see, e.g., an example tensor memory layout described with respect to FIG. 4B). In at least one embodiment, an operand that identifies matrix data in shared memory is a matrix descriptor that describes the properties of a matrix in shared memory, including the location of the matrix in shared memory and the current CTA 110. The shared memory descriptor is a 64-bit value contained in a register, and the value includes the matrix start address and other information related to the representation of the matrix (e.g., a base offset, a leading dimension stride mode, and a swizzling mode related to rearrangement of the order of matrix elements in shared memory).

Instruction qualifiers can be specified for an MMA instruction 112 to modify behaviors of MMA instruction 112. The instruction qualifiers can, for example define shapes of input matrices and other parameters of a block-scaling MMA computation. Qualifiers of MMA instruction 112 include an MMA kind qualifier 124, which specifies how many vectors of scale factors are in a scale factor matrix, for example. In at least one embodiment, qualifiers of MMA instruction 112, such as MMA kind qualifier 124, are inputs to the instruction.

As an example, instruction scheduler 126 extracts shared memory descriptors from MMA instruction 112, stores the shared memory descriptors in SMEM 150, and then loads the shared memory descriptors into registers from the SMEM 150. As another example, prior to MMA instruction 112 being executed or otherwise performed on tensor cores 180, processor 102 instructs instruction scheduler 126 to load operands either from SMEM 150 or TMEM 130 (depending on whether the operands are in SMEM 150 or TMEM 130) into registers. Registers are fast storage locations that can hold operands temporarily during execution of MMA instruction 112. After operands are loaded into registers, instruction scheduler 126 schedules MMA instruction 112 to be performed on tensor cores 180 of streaming multiprocessor 104 according to operands and qualifiers of MMA instruction 112.

Matrix A operand 114A specifies a location of matrix A in TMEM 130. Alternatively, matrix A operand 116 specifies a location of matrix A in SMEM 150. Matrix B operand 114B specifies a location of matrix B in shared memory 150. Matrix D operand 118 specifies a location of matrix D in tensor memory 130.

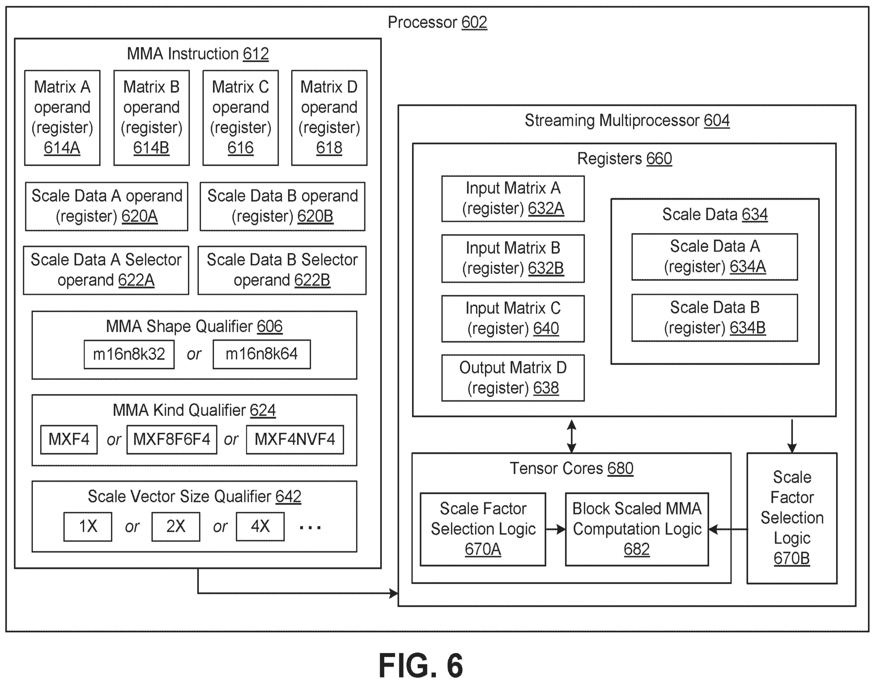

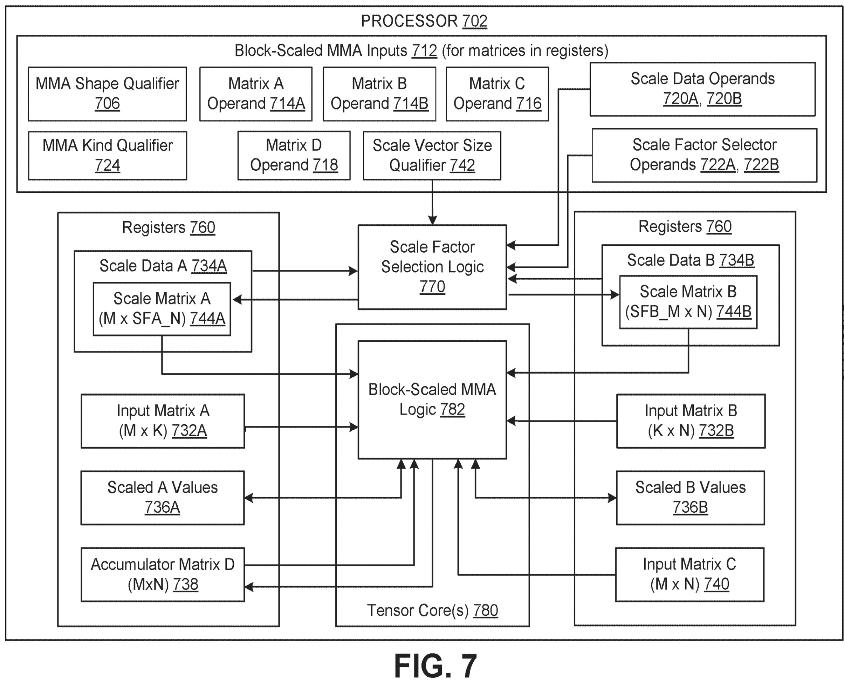

Scale data A operand 120A and scale data B operand 120B specify locations of scale data A and scale data B, respectively, in TMEM 130. Scale data A contains numeric values for one or more scale matrices A (e.g., *scale_{A}*), and scale data B contains numeric data for one or more scale matrices B (e.g., *scale_{B}*)*.* Scale data A selector operand 122A indicates which scale vector(s) to select from scale data A, e.g., to form a scale matrix A, and scale data B selector operand 122B indicates which scale vector(s) to select from scale data B, e.g., to form a scale matrix B. The selector operands 122 also indicate which thread(s) are to contribute (e.g., select from scale data) the scale vectors, as described herein with respect to FIGs. 6A, 6B, and 7. The number of scale vectors selected from scale data is specified by scale vector size qualifier 142, and can be, e.g., 1X, 2X, or 4X, as described with respect to FIG. 2.

A matrix element data type for elements of matrices A and B and a scale factor data type for the elements of the scale matrices A and B (also referred to as scale factors) are specified by an MMA kind qualifier 124 of the MMA instruction 112. The MMA kind qualifier 124 can be mxf4, mxf8f6f4, or mf4nvf4. TABLE 1 lists matrix element data types and scale factor data types that can be used for each valid combination of MMA kind qualifier 124 and scale vector size qualifier 142.

**TABLE 1**

| **kind** | **Element Data Type atype and btype** | **Scale Data Type stype** | **scale_vec_size** |
|---|---|---|---|
| mxf8f6f4 | .e4m3, e5m2 e3m2, e2m3 e2m1 | .ue8m0 | scale_vec::1X |
| mxf4 | .e2m1 | .ue8m0 | scale_vec::2X |
| mxf4nvf4 | .e2m1 | .ue8m0 | scale_vec::2X |
| | .e2m1 | .ue4m3 | scale_vec::4X |

Kind mxf8f6f4 indicates either an 8, 6, or 4 bit matrix element data type and a scale factor data type (ue8m0) having an 8-bit exponent and no mantissa. The particular matrix element data type is selected by matrix A element type and matrix B element type operands described with respect to FIG. 4A. The 8-bit type can be either e4m3 (4-bit exponent, 3-bit mantissa, and 1-bit sign) or e5m2 (5-bit exponent, 2-bit mantissa, and 1-bit sign). The 6-bit type can be either e3m2 or e2m3. The 4-bit type is e2m1 (2-bit exponent, 1-bit mantissa, and 1-bit sign). In at least one embodiment, for mxf8f6f4, the 8-bit, 6-bit, and 4-bit elements of matrices A and B are stored an 8-bit container, which uses 8-bits of storage for each matrix element even if the matrix elements have fewer than 8 bits of data. Kind mxf8f6f4 can be used with scale vector size 1X. The container is, for example, a region of memory having an associated size, which can be greater than a number of bits of storage used by a value that is stored in the container. In at least one embodiment, the container is a smallest unit of storage that can be used to represent an element of an input matrix of an MMA operation.

Kind mxf4 indicates a 4-bit matrix element data type (e2m1) and a scale factor data type has having an 8-bit exponent and no mantissa (ue8m0). Kind mxf4 can be used with scale vector size 2X. For kind mxf4, the 4-bit elements of matrices A and B are stored in a 4-bit container, which uses 4 bits of data for each matrix element.

Kind mxf4nvf4 indicates a 4-bit element type and either an 8-bit exponent scale factor data type (ue8m0) to be used with the 2X scale vector size or a 4-bit exponent, 3-bit mantissa, and 1-bit sign scale factor data type (ue4m3) to be used with the 4X scale vector size. For kind mxf4nvf4, the 4-bit elements of matrices A and B are stored in a 4-bit container, which uses 4 bits of data for each matrix element.

Matrix A 132, matrix D 138, and scale data 134 can be stored in tensor memory 130 of streaming multiprocessor 104. Scale data 134 includes scale data A 134A, which contains scale factors ("SF_A") to be multiplied by matrix A, and scale data B 134B, which contains scale factors ("SF_B") to be multiplied by matrix B. The matrix A 132 can be identified by matrix A operand 114A, and the matrix D 138 can be identified by the matrix D operand 118 of MMA instruction 112. The scale data A 134A and scale data B 134B can be identified by the scale data A selector operand 122A and scale data B selector operand 122B, respectively. Matrix A 152A (SMEM), which can be used as an alternative to matrix A 132, can be stored in shared memory 150 of streaming multiprocessor 104, as can matrix B 152B.

In at least one embodiment, at least one feature described in connection with FIG. 1 is implemented using at least one feature of any system(s) and/or process(es) depicted in and/or described in connection with other figures. In at least one embodiment, at least one feature described in connection with FIG. 1 is used to implement at least a portion of any system(s) and/or process(es) depicted in and/or described with respect to other figures.

At least one feature described in connection with FIG. 1 is implemented using at least one feature of any system(s) and/or process(es) depicted in and/or described in connection with other figures. At least one feature described in connection with FIG. 1 is used to implement at least a portion of any system(s) and/or process(es) depicted in and/or described with respect to other figures.

FIG. 2 illustrates interactions in a processor 202 for performing a block-scaled MMA instruction having block-scaled MMA inputs 212 for matrices stored in tensor memory 230 and/or shared memory 250, in accordance with at least one embodiment. Processor 202 includes tensor memory (TMEM) 230 and shared memory (SMEM) 250. Further, processor 202 includes the block-scaled MMA inputs 212. The block-scaled MMA inputs 212 include operands that refer to matrices stored in TMEM 230 and/or SMEM 250. The block-scaled MMA inputs 212 also include an MMA kind qualifier 224 qualifier (as described with respect to FIG. 1), matrix A operand 214 matrix A operand 216A (SMEM), matrix B operand 216B (SMEM), and matrix D operand 218. The matrix operands are further described with respect to FIG. 1. The block-scaled MMA inputs 212 also include an M dimension 226 operand (e.g., number of rows of matrices A and *D),* an N dimension 228 operand (e.g., number of columns of matrices *B* and *D),* a scale vector size 242 qualifier, scale data operands 220, and scale factor selector operands 222. Processor 102 also includes scale factor selection logic 270 and tensor cores 280, which are similar to scale factor selection logic 170 and tensor cores 180 described herein with reference to FIG. 1.

In at least one embodiment, the scale vector size 242 specifies the number of scale vectors in a scale matrix 244. The term "vector" is used herein to refer to either a row or a column of a matrix. The scale vectors are column vectors in scale matrix A 244A or row vectors in scale matrix B 244B, for example. Accordingly, the scale vector size 242 specifies the number of columns in scale matrix A 244A or the number of rows in scale matrix B 244B. A scale vector size 242 of 1X indicates that there is one scale vector in each scale matrix. Accordingly, if scale vector size qualifier 242 is 1X, there is one column in scale matrix A and one row in scale matrix B. A scale vector size 242 of 2X indicates that there are two scale vectors in a scale matrix 244. Accordingly, if scale vector size qualifier 242 is 2X, there are two columns in scale matrix A and two rows in scale matrix B. A scale vector size 242 of 4X indicates that there are four scale vectors (e.g., four columns in scale matrix A and four rows in scale matrix B). Although particular scale vector sizes are described in the examples herein, other scale vector sizes can be used in other examples, e.g., 3X or 6X.

Scale factors to be used in block scaling operations performed in response to an invocation of block-scaled MMA instruction 112 are stored in scale data 234. More specifically, scale factors to be multiplied by elements of input matrix A 232 (or input matrix A 252A in TMEM) are stored in scale data A 234A, and scale factors to be multiplied by elements of input matrix B 252B are stored in scale data B 234B. In at least one embodiment. processor 200 includes scale factor selection logic 270 outside of tensor cores 280, as shown in FIG. 2. Alternatively or additionally, scale factor selection logic 270 is included in tensor cores 280. Scale factor selection logic 270 retrieves particular scale factors to be used in block scaling operations according to block-scale MMA inputs 212. Different scale factors can be used for different rows and/or columns of input matrices A, B by storing different scale factors in different rows of scale data A 234A and/or scale data B 234B. Further, different portions of scale data 234 can be used for different portions of input matrices by providing different values of the scale data operands 220 pointing to different locations in TMEM 230. Using different scale factors for different portions of an input matrix, referred to herein as blocks, can improve accuracy for input matrix element sizes of 8 bits or smaller. The scale factors are determined using appropriate techniques, e.g., from expected ranges of matrix element values determined in previous inference and/or training operations of a neural network. For example, an expected range (e.g., range of magnitudes) of values of an input matrix element can be determined, and a scale factor can be calculated to convert input matrix elements from a larger element size (e.g., 32 bits) that can represent values in a larger range to a smaller element size (e.g., 4, 6, or 8 bits) that can represent elements in the expected range. The scale factors to be used in a block-scaled MMA operation caused by execution of an MMA instruction 112 are stored in scale data 234, the storage locations of which are specified by the scale data operands 220. Particular portions of scale data 234 to be used in the block-scaled MMA operation are specified by operands of the MMA instruction 112, such as scale factor value selector operands 222.

In response to execution of an MMA instruction 112, scale factor selection logic 270 selects a scale matrix A 244A from scale data A 234A as specified by scale vector size qualifier 242 and scale factor value selector operand 222A. Additionally or alternatively, scale factor selection logic 270 selects a scale matrix B 244B from scale data B 234B as specified by scale vector size qualifier 242 and scale factor value selector operand 222B.

Scale factor selection logic 270 selects provides the selected scale factors as input to block-scaled MMA logic 282. Block-scaled MMA logic 282 multiplies the scale factors by elements of input matrix A to generate scaled elements. The block-scaled MMA logic 282 provides the scaled elements, e.g., as scaled elements of input matrices A and B, to MMA operations. The block-scaled MMA logic 282 performs the MMA operations to generate accumulator matrix D 238. To perform block scaling, the elements of a scale vector are multiplied by elements of a vector of an input matrix to produce corresponding result elements. The result elements correspond to the elements of the input matrix, and can be used as input to matrix multiplication in an MMA computation. In at least one embodiment, in block scaling, multiplication of vectors is element-by-element multiplication, which produces a vector having the same number of elements in which each element is the product of two corresponding elements of the input vectors. In at least one embodiment, this element-by-element multiplication does not involve computing sums of the element products, in particular embodiments.

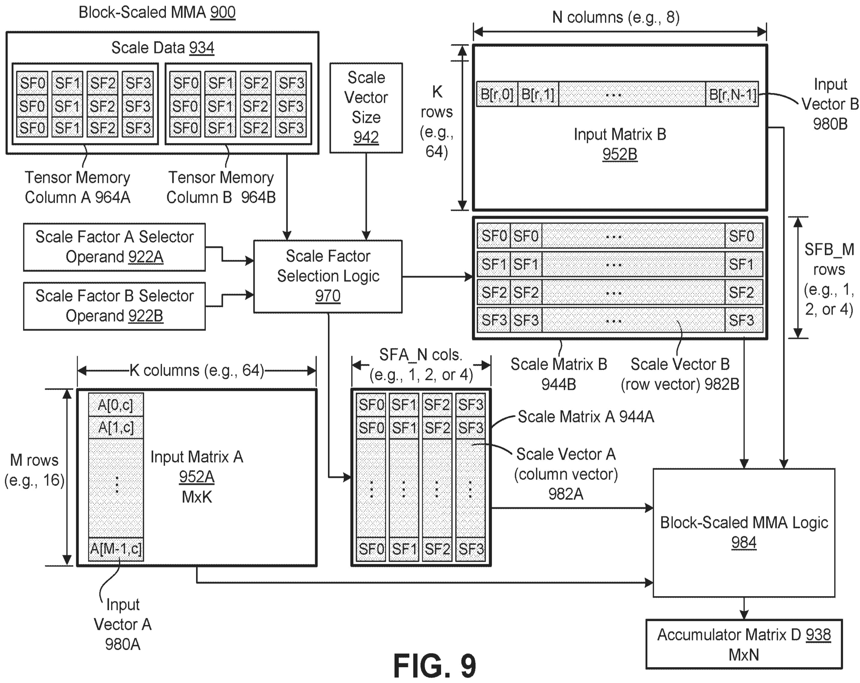

In a block-scaled MMA operation of shape *M* × *N* × *K,* input matrix *A* is of size *M* × *K,* and input matrix *B* is of size *K* × *N.* Further, scale matrix A 244A includes 1, 2, 4, or other number *X* of scale vectors, and each scale vector contains *M* elements. Each element of a scale vector in scale matrix A 244A is to be multiplied by an element in a corresponding row and column of input matrix A 244A. Similarly, scale matrix B 244B includes 1, 2, 4, or other number *X* of scale vectors, and each scale vector contains *N* elements. Each element of a scale vector in scale matrix B 244B is to be multiplied by an element in a corresponding row and column of input matrix B 244B. As an example, for a scale vector named *scale_{A}* an input column vector *A,* and a resulting scaled vector named *scaled_{A},* each element *scaled_{A}*[i] of a scaled input vector *scaled_{A}* is calculated as *scaled_{A}* [i] *= scale_{A}*[i] ** A*[*i*] for *i* between 0 and *M..* The scaled vector *scaled_{A}* is to be used as input to matrix multiplication operations. Similarly, as an example for a scale vector named *scale_{B},* an input column vector *B,* and a resulting scaled vector named *scaled_{B},* each element *scaled_{B}*[i] of a scaled input vector *scaled_{B}* is calculated as *scaled_{B}*[*i*] *= scale_{B}* [*i*] ** B*[*i*] for *i* between 0 and *N.* The scaled vector *scaled_{B}* is to be used as input to matrix multiplication operations. FIG. 9 illustrates a block-scaled MMA example with multiplication of scale vectors by vectors of input matrices.

In at least one embodiment, scale factors stored in scale data 234 are arranged in rows and columns, where each row contains one or more scale factors to be multiplied by a corresponding row of an input matrix A and/or B by threads of processor 202 executed by tensor core(s) 280. In at least one embodiment, different columns of scale data 234 can contain different scale factors to be multiplied by different columns of an input matrix A and/or by different rows of an input matrix B in response to an invocation of an MMA operation by MMA instruction 112. In at least one embodiment, different columns of scale data 234 can contain scale factors to be multiplied by columns one or more input matrices A and/or by rows of one or more input matrices B in response to different invocation of an MMA operation (e.g., by different calls to an MMA instruction 112).

In at least one embodiment, scale data B 234B is arranged in the same row and column orientation as scale data B 234B. Because of the orientation of matrices A and B for matrix multiplication, scale factors stored in rows in scale data B 234B are transformed to a columnar format for inclusion in scale matrix B 244B. Each column of scale data B can be transformed (e.g., transposed from a column to a row) and included in or otherwise used to generate a scale matrix B 244B. A block scaling example illustrating scale data and scale matrices selected from scale data is shown in FIG. 9.

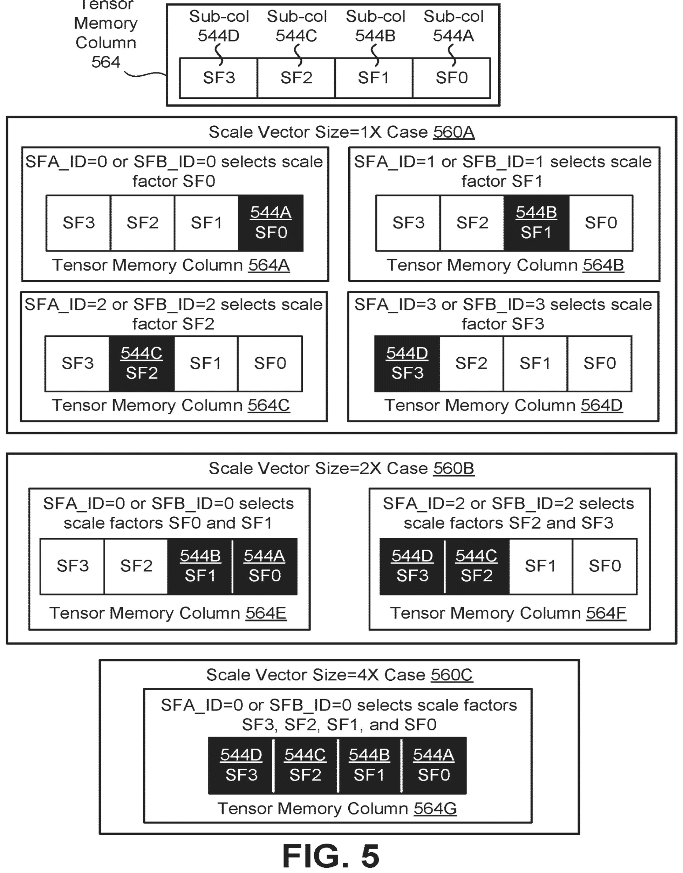

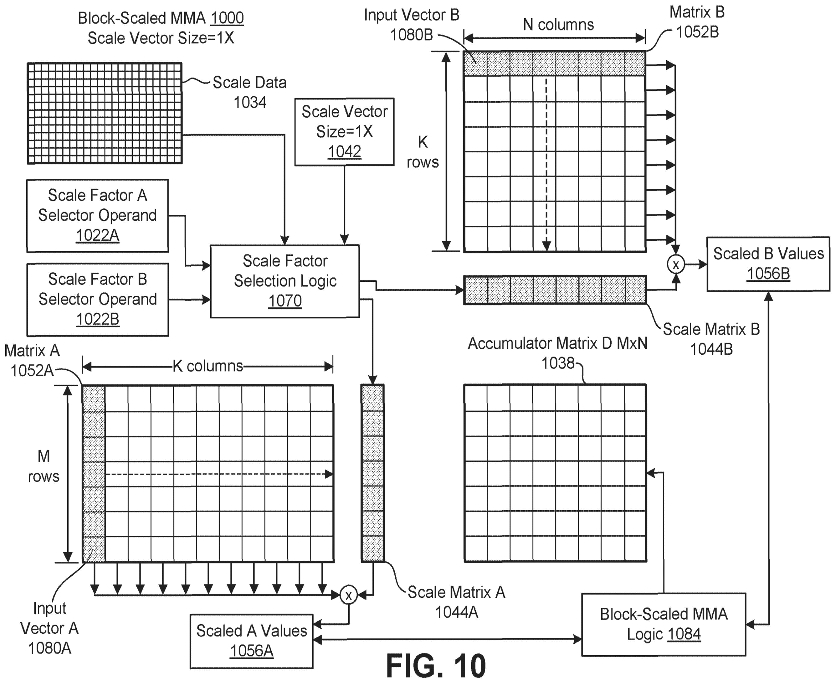

If the scale vector size 242 is 1X, then scale factor selection logic 270 selects one column of scale factors from scale data A 234A, and selects one column of scale factors from scale data B 234B. The column to be selected from scale data A 234A is specified by selector operand 222A, and the column to be selected from scale data B 234B is specified by selector operand 222B. The selected column from scale data A 234A forms a column of scale matrix A 244A (which has one column in the 1X case). Further, the selected column from scale data B 234B forms a row of matrix B 244B (which has one row in the 1X case). For example, scale factor selection logic 270 transposes the selected column from scale data B 234B to form a corresponding row of scale matrix B 244B. Scale factor selection logic 270 transposes the column by, e.g., converting the column to a row, which can involve swapping the indices of each element of the column. Scale factor selection logic 270 includes the resulting row in scale matrix B 244B. The use of selector operands 222 to select vectors of scale data 234 is further described with respect to FIGS. 4B and 5. A block-scaled MMA example illustrating multiplication of scale vectors by input matrices for vector size 1X is shown in FIG. 10.

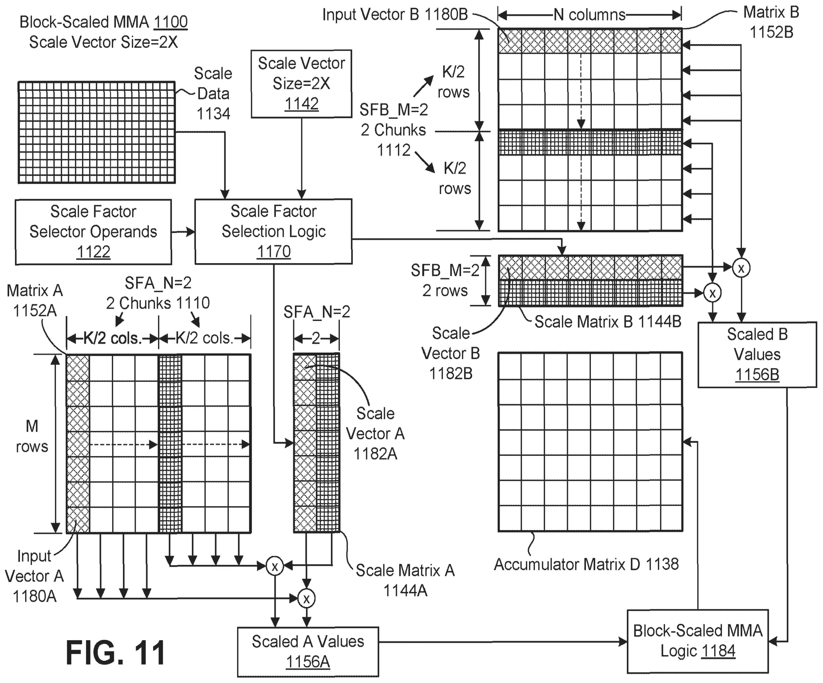

If the scale vector size 242 is 2X, then scale factor selection logic 270 selects two columns of scale factors from scale data A 234A, and selects two columns of scale factors from scale data B 234B. The two columns to be selected from scale data A 234A are specified by selector operand 222A, and the two columns to be selected from scale data B 234B are specified by selector operand 222B. The selected two columns from scale data A 234A form two columns of scale matrix A 244A (which has two columns in the 2X case). Further, the selected two columns from scale data B 234B form rows of scale matrix B 244B (which has two rows in the 2X case). For example, scale factor selection logic 270 transposes each of the selected two columns of scale data B 234B to form a corresponding row. Scale factor selection logic 270 includes the resulting two rows in scale matrix B 244B. A block-scaled MMA example illustrating multiplication of scale vectors by input matrices for vector size 2X is shown in FIG. 11.

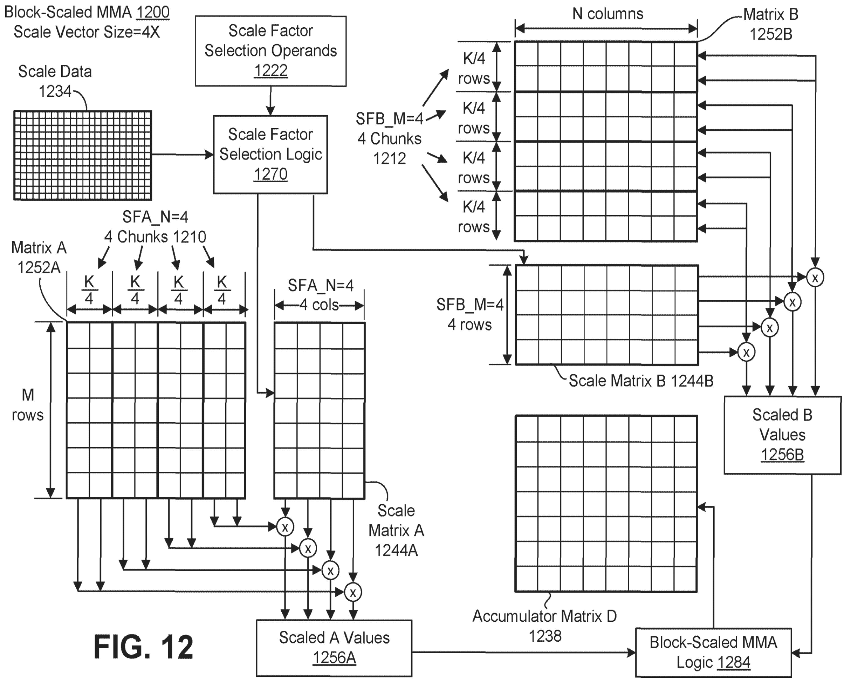

If the scale vector size 242 is 4X, then scale factor selection logic 270 selects four columns of scale factors from scale data A 234A, and selects four columns of scale factors from scale data B 234B. The four columns to be selected from scale data A 234A are specified by selector operand 222A, and the four columns to be selected from scale data B 234B are specified by selector operand 222B. The selected four columns from scale data A 234A form four columns of scale matrix A 244A. Further, the selected four columns from scale data B 234B form rows of scale matrix B 244B. For example, scale factor selection logic 270 transposes each of the selected four columns of scale data B 234B to form a corresponding row. Scale factor selection logic 270 includes the resulting four rows in scale matrix B 244B. A block-scaled MMA example illustrating multiplication of scale vectors by input matrices for vector size 4X is shown in FIG. 12.

In at least one embodiment, if the scale vector size 242 is a specified number X, then scale factor selection logic 270 selects X columns of scale factors from scale data A 234A, and selects X columns of scale factors from scale data B 234B. The X columns to be selected from scale data A 234A are specified by selector operand 222A, and the X columns to be selected from scale data B 234B are specified by selector operand 222B. The selected X columns from scale data A 234A form X columns of scale matrix A 244A. Further, the selected X columns from scale data B 234B form X rows of scale matrix B 244B. For example, scale factor selection logic 270 transposes each of the selected X columns of scale data B 234B to form a corresponding row of scale matrix B 244B. Scale factor selection logic 270 includes the resulting X rows in scale matrix B 244B.

Block-scaled MMA logic 282 performs scaling multiplication on an input matrix A and/or input matrix B 252B to generate a scaled input matrix A and/or scaled input matrix B. To perform scaling multiplication on input matrix A, block-scaled MMA logic 282 multiplies the elements of scale matrix A 244A by corresponding elements of input matrix A. Input matrix A can be input matrix 232 or input matrix A 252A, depending on whether matrix A operand 214 (TMEM) or matrix A operand 216A (SMEM) is specified in a call to the MMA instruction 112).

In the scale vector size=1X case, block-scaled MMA logic 282 performs scaling multiplication on input matrix A by multiplying the elements of a single column of scale matrix A 244A by corresponding elements of each column of input matrix A. The single column of scale matrix A 244A is selected by scale factor selection logic 270 as described herein. Further, in the scale vector size=1X case, block-scaled MMA logic 282 performs scaling multiplication on input matrix B 252B by multiplying the elements of a single row of scale matrix B 244B by corresponding elements of each row of input matrix B. The single row is selected by scale factor selection logic 270 as described herein. In at least one embodiment, the results of the multiplication of elements of input matrices A and/or B by elements of scale matrices A and/or B are used as input to an MMA operation instead of the corresponding elements of the matrices.

In the scale vector size=2X case, block-scaled MMA logic 282 performs scaling multiplication on input matrix A 232 (or input matrix A 252A in SMEM) by partitioning input matrix A into first and second chunks, each of which includes K/2 columns. Further, scale matrix A 244A includes 2 columns. Block-scaled MMA logic 282 multiplies the elements of the first column of scale matrix A 244A by corresponding elements of each column in the first chunk of input matrix A 232 (or input matrix A 252A in SMEM). Further, block-scaled MMA logic 282 multiplies the elements of the second column of scale matrix A 244A by corresponding elements of each column in a second chunk of input matrix A 232 (or input matrix A 252A in SMEM).

Further, in the 2X case, block-scaled MMA logic 282 performs scaling multiplication on input matrix B 252B by partitioning input matrix B into first and second chunks, each of which includes K/2 rows. Further, scale matrix B 244B includes 2 rows. Block-scaled MMA logic 282 multiplies the elements of the first row of scale matrix B 244B by corresponding elements of each row in a first chunk of input matrix B 252B. Further, block-scaled MMA logic 282 multiplies the elements of the second row of scale matrix B 244B by corresponding elements of each row in a second chunk of input matrix B 252B.

In the scale vector size=4X case, block-scaled MMA logic 282 performs scaling multiplication on input matrix A 232 (or input matrix A 252A in SMEM) by partitioning each input matrix A 232 (or input matrix A 252A in SMEM) and/or input matrix B into four chunks, each of which includes K/4 input vectors. The input vectors are columns in input matrix A or rows in input matrix B. Further, each scale matrix 244 includes 4 scale vectors. The scale vectors are columns of scale matrix A 244A or rows of scale matrix B 244B. Accordingly, there are four vectors of scale factors to select from each scale matrix 244 (instead of the two vectors in the 2X case). For scale matrix A 244A, the vectors are columns of scale matrix A 244A. For scale matrix B 244B, the vectors are rows of scale matrix B 244B. Each input matrix A or B is divided into 4 chunks, each having K/4 vectors (instead of the two chunks in the 2X case). Each chunk corresponds to one of the four vectors of the scale matrix 244. For each of the four vectors of the scale matrix 244, block-scaled MMA logic 282 multiplies the elements of the vector by each of the K/4 vectors in a chunk of an input matrix A or B (instead of multiplying the elements of each of the two vectors of scale matrix 244 by each of the K/2 vectors in a chunk, as in the 2X case).

In at least one embodiment, if the scale vector size 242 is a specified number X, then there are X vectors (columns or rows) of scale factors to select from each scale matrix 244. Each input matrix A or B is partitioned into X chunks, each having K/N vectors (columns of input matrix A, or rows of input matrix B). Each chunk corresponds to one of the X vectors of the scale matrix 244. For each of the X vectors of the scale matrix 244, block-scaled MMA logic 282 multiplies the elements of the vector by elements of each of the K/N vectors in a chunk of an input matrix A or B. The results of the multiplications are scaled A values 236 for input matrix A (or scaled A values 256A in SMEM), and scaled B values 256B. The scaled A values 236 (or 256A) and 256B are used as input to an MMA operation performed by block-scaled MMA logic 282. Block-scaled MMA logic 282 generates an accumulator matrix D 238 as a result of the block-scaled MMA operations performed on the scaled values.

In at least one embodiment, if the scale vector size 242 is a specified number X (e.g., scale vector size=XX), then there are X vectors (columns or rows) of scale factors to select from each scale matrix A 244A or B 244B. Each input matrix A or B is partitioned into X chunks, each of which includes 1/X of the vectors of the input matrix A or B. The vectors are columns of input matrix A or rows of input matrix B. Each chunk of input matrix A includes 1/X of the columns of input matrix A. More specifically, because input matrix A has M rows and K columns, each chunk of input matrix A has M rows and K/X columns. Each chunk of input matrix B includes 1/X of the rows of input matrix B. More specifically, because input matrix B has K rows and N columns, each chunk of input matrix B has K/X rows and N columns.

When scale vector size=XX, for an input matrix A 252A, block-scaled MMA logic 282 performs scaling multiplication using scale matrix A 244A by multiplying the elements of each column of scale matrix A 244A by corresponding elements of each of the K/X columns in a chunk of input matrix A 252A. As an example, a chunk of input matrix A includes K/X columns of input matrix A. There are X chunks, and a particular chunk of input matrix A corresponds a particular column of scale matrix A 244A. For each column in the particular chunk of input matrix A, block-scaled MMA logic 282 multiplies each element of that column of input matrix A by each corresponding element of the particular column of scale matrix A 244A. The results of the multiplications are used as inputs to an MMA operation.

When scale vector size=XX, for an input matrix B 252B, block-scaled MMA logic 282 performs scaling multiplication using scale matrix B 244B by multiplying the elements of each row of scale matrix B 244B by corresponding elements of each of the K/X rows in a chunk of input matrix B. As an example, a chunk of input matrix B includes K/X rows of input matrix B. There are X chunks, and a particular chunk of input matrix B corresponds to a particular row of scale matrix B 244B. For each row in the particular chunk of input matrix A, block-scaled MMA logic 282 multiplies each element of that row of input matrix A by each corresponding element of the particular row of scale matrix A 244A. The results of the multiplications are used as inputs to an MMA operation. Although particular numbers of rows and columns, particular scale factors (e.g., 1, 2, and 4), and a particular number of scale factors are described in examples here, other numbers of rows and columns, and other scale factors can be used in other examples by changing numbers and scale factors in accordance with the description herein.

Block-scaled MMA logic 282 generates scaled A values 236 in TMEM 230 (or scaled A values 256A in SMEM 250) by multiplying elements of scale matrix A 244A by elements of input matrix A 232 (or input matrix A 252A), as described above. Similarly, block-scaled MMA logic 282 generates scaled B values 256B in SMEM by multiplying elements of scale matrix B 244B by elements of input matrix B 252B. Block-scaled MMA logic 282 uses tensor cores 280 to generate a resulting accumulator matrix D 238 having dimensions MxN by performing matrix multiplication operations to multiply the matrix of scaled A values 236 (or the matrix of scaled A values 256A) having dimensions *M* × *K* by the matrix of scaled B values 256B, adding element values of accumulator matrix D 238 received as input to the product of A and B, and storing the result in accumulator matrix D 238.

At least one feature described in connection with FIG. 2 is implemented using at least one feature of any system(s) and/or process(es) depicted in and/or described in connection with other figures. At least one feature described in connection with FIG. 2 is used to implement at least a portion of any system(s) and/or process(es) depicted in and/or described with respect to other figures.

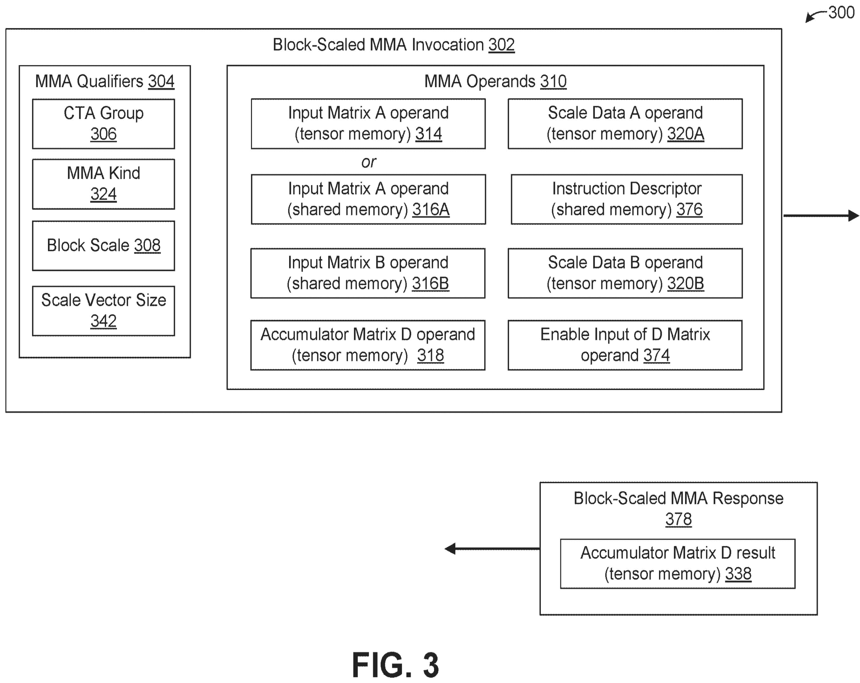

FIG. 3 illustrates a block-scaled MMA operation 300 having input and output matrices stored in tensor memory or shared memory, in accordance with at least one embodiment. Operation 300 represents one or more computational operations that cause a processor (e.g., a GPU) to execute or otherwise perform MMA (matrix multiply-accumulate) instructions using block scaling to adjust the scale of input matrix elements.

Operation 300 includes a block-scaled MMA instruction invocation 302 and an MMA instruction response 378. In at least one embodiment, invocation 302 is an invocation of an instruction to cause one or more processors to perform one or more block-scaling MMA computation operations ("MMA operations") and generate response 378. In at least one embodiment, invocation 302 is a call of an instruction ("instruction call") to cause one or more processors 202 to perform one or more block-scaling MMA operations and generate response 378.

In at least one embodiment, invocation 302 is an invocation of an API to cause one or more processors 802 to perform one or more computation operations and generate response 378. In at least one embodiment, invocation 302 is a function call to be performed by one or more software programs, such as CUDA kernels, on a parallel processing unit, such as a GPU. Invocation 302 specifies parameters and configurations for the execution of block-scaling MMA operations on MMA operands 310, enabling optimized performance through block scaling techniques such as multiplication of MMA input matrix elements by scaling factors that can be different for different rows, columns, and or fragments of the input matrices.

Invocation 302 includes MMA qualifiers 304, which specify parameters to configure aspects of an MMA operation that ordinarily remain constant during program execution. MMA qualifiers 304 include a CTA group qualifier 306, an MMA kind qualifier 324, a block scale qualifier 308, and a scale vector size qualifier 342. CTA group qualifier 306 indicates which CTA group is to perform the MMA operation. CTA group 306 can be cta_group::1 to indicate that CTA group 1 is to perform the MMA operation, or cta_group::2 to indicate that CTA group 2 is to perform the MMA operation.

MMA kind qualifier 324 specifies the size of matrix elements in the input matrixes A and B. MMA kind qualifier 324 can be MXF4, MXF8F6F4, or MF4NVF4, for example, and is further described herein with reference to FIG. 1 and TABLE 1. Block scale qualifier 308, if present, indicates that the MMA operation is to perform block scaling of input matrices. If block scale qualifier 308 is not present, block scaling is not performed for the block-scaled MMA invocation 302. Scale vector size qualifier 342 specifies a scale vector size, which indicates how many scale vectors (e.g., 1, 2, 4, or other size X) of scale matrices 244 are to be used for block scaling. Scale vector size qualifier 342 is described herein with respect to FIG. 2, for example.

Invocation 302 receives, as input, MMA operands 310. MMA operands 310 can include an input matrix A operand 314, which specifies an input matrix A 132 in tensor memory (TMEM) 130. MMA operands 310 can also include an input matrix A operand 316A, which specifies a matrix A 152A in shared memory 150. Accordingly, matrix A can either be in tensor memory 130 or shared memory 150, so either input matrix A operand 314 or input matrix A operand 316A is to be specified in an invocation 302. The term "matrix A operand" herein can refer to either input matrix A operand 314 or input matrix A operand 316A, whichever is specified in a particular block-scaled MMA invocation 302.

MMA operands 310 also include an input matrix B operand 316B, which specifies a secondary input matrix B in shared memory 150 to be used alongside matrix A in the MMA operation. An accumulator matrix D operand 318 specifies an accumulator matrix D 138 in TMEM 130. Accumulator matrix D 138 accumulates the results of matrix multiplication operations across multiple computational cycles (e.g., multiple block-scaled MMA invocations 302). Accumulator matrix D 138 enhances performance by allowing intermediate results to be cached and reused across multiple cycles of the computation, minimizing the need to fetch or write back intermediate results to the main memory.

Scale data A operand 320A refers to a scale matrix A 244A in TMEM 230, and scale data B operand 320B refers to a scale matrix B 244B, also in TMEM 230. Instruction descriptor 376 refers to a group of additional input operands of the block-scaled MMA invocation 302, such as input matrix element types, scale matrix element types, input matrix dimensions, and scale factor selectors. Examples of operands specified in instruction descriptor 376 are shown in FIG. 4A.

Input matrix A operand 314, accumulator matrix D operand 318, scale data A operand 320A, and scale data B operand 320B can be tensor memory addresses, which can be used to specify operand data in TMEM 230. Input matrix operand 316A and input matrix operand 316B can be shared memory descriptors, which can be used to specify operand data in a SMEM 250. An enable input of D matrix operand 374 refers to a configuration parameter that indicates whether the result of the MMA operation is to be added to an accumulator matrix D 238 received as input to the MMA operation.

Block-scaled MMA response 378 represents output of MMA instruction execution, comprising an accumulator matrix D result 338. If the enable input of D matrix operand 374 operand is true (or other designated value), then the MMA operation adds the matrix result computed by the MMA operation to the accumulator matrix D 238. If the enable input of D matrix operand 374 is false (or other designated value), then the MMA operation overwrites accumulator matrix D 238 with the matrix result computed by the MMA operation.

In at least one embodiment, the output is data to be output by an instruction, if invocation 302 is to invoke the instruction. In at least one embodiment, the output is data to be output by an API, if invocation 302 is to invoke the API. In at least one embodiment, block-scaled MMA response 378 includes a status indicator (not shown) indicating success or failure of the MMA operation, such as whether it completed successfully or encountered errors. Accumulator matrix D result 338 represents the final output data matrix resulting from the MMA operation.

In at least one embodiment, scale vector size qualifier 342 is 1X, 2X, 4X, or other suitable number. The number of scale vectors in each scale matrix and other aspects of block scaling are determined by scale vector size qualifier 342, e.g., as described with respect to FIG. 2.

If scale vector size qualifier 342 is 2X, then each of two scale vectors is to be multiplied by a portion of an input matrix. More specifically, the portions of the input matrix are referred to herein as "chunks" of the input matrix. The input matrix is divided into a number of logical chunks, where the number of logical chunks is specified by scale vector size qualifier 342. For example, if scale vector size qualifier 342 is 2X, the input matrix is arranged into two chunks, and each chunk includes one-half of the vectors (e.g., rows or columns) of the input matrix. One of the two scale vectors is to be multiplied by each vector of the first chunk of the input matrix, and the other scale vector is to be multiplied by each vector of the second chunk. A block scaling example illustrating multiplication of scale vectors by input matrices for vector size 2X is shown in FIG. 11.

If scale vector size qualifier 342 is 4X, then each of four scale vectors is to be multiplied by a portion of an input matrix. More specifically, the input matrix is arranged into four chunks, and each chunk includes one-fourth of the vectors (e.g., rows or columns) of the input matrix. Each of the four scale vectors is to be multiplied by each vector of a respective one of the four chunks of the input matrix. A block scaling example illustrating multiplication of scale vectors by input matrices for vector size 4X is shown in FIG. 12.

Example syntax for a block-scaled MMA invocation 302 in which input matrices A and B are in shared memory, the accumulator matrix is in tensor memory, and the scale data values are in tensor memory is as follows:

```
       tcgen05.mma.cta_group.kind.block_scale{.scale_vec_size}
                 [d-tmem], a-desc, b-desc, idesc,
                 [scale-A-tmem], [scale-B-tmem], enable-input-d;
```

Example syntax for a block-scaled MMA invocation 302 in which the input matrix A is in tensor memory, the input matrix B is in shared memory, the accumulator matrix is in tensor memory, and the scale data values are in tensor memory is as follows:

```
       tcgen05.mma.cta_group.kind.block_scale{.scale_vec_size}
                 [d-tmem], [a-tmem], b-desc, idesc,
                 [scale-A-tmem], [scale-B-tmem], enable-input-d;
```

In at least one embodiment, kind is kind::mxf8f6f4, kind::mxf4, or kind::mxf4nvf4, .cta_group is cta _group::1 or .cta_group::2, and .scale_vec_size is .scale_vec::1X, scale_vec::2X, or .scale_vec::4X. In at least one embodiment, the example tcgen05.mma instruction is an asynchronous instruction which initiates an *M* ×*N* × *K* matrix multiply and accumulate operation to compute *D =* (*A * scale_{A}*)(*B * scale_{B}*) + *D*, where the *A* matrix is *M* × *K,* the *B* matrix is *K* × *N*, and the *D* matrix is *M* × *N.* Because the tcgen05.mma instruction is asynchronous, the calling thread(s) can continue to perform other operations while the MMA operation is being performed.

The 32-bit register operand idesc is an instruction descriptor as described with respect to the instruction descriptor 476 of FIG. 4A. The instruction descriptor specifies the shapes, specific types, sparsity and other details of the input matrices, output matrix and the matrix multiply and accumulate operation. The qualifier kind specifies the general kind of the element types of the multiplicand matrices. The specific types of the elements of the input and output matrices for each MMA-kind are specified in the instruction descriptor MMA 476.

An example block-scaled MMA invocation 302 with operands in tensor memory and shared memory is:

```
        tcgen05.mma.cta_group: :1.kind: :mxf8f6f4 [taddr2], [taddr1],
                       bdesc, idesc, [tmem_scaleA], [tmem_scaleB], p;
```

In the example invocation, the CTA group qualifier 306 is "1", the MMA kind qualifier 324 is .kind::mxf8f6f4, the accumulator matrix D operand 318 is "[taddr2]", the input matrix A operand 314 is "[taddr1]", the input matrix B operand 316B is "bdesc", the instruction descriptor 376 is "idesc", the scale data A operand 320A is "[tmem_scaleA]", the scale data B operand 320B is "[tmem_scaleB]", and the enable input of D matrix operand 374 is "p".

At least one feature described in connection with FIG. 3 is implemented using at least one feature of any system(s) and/or process(es) depicted in and/or described in connection with other figures. At least one feature described in connection with FIG. 3 is used to implement at least a portion of any system(s) and/or process(es) depicted in and/or described with respect to other figures.

FIG. 4A illustrates a block-scaled MMA instruction descriptor 476, in accordance with at least one embodiment. The instruction descriptor 476 includes a matrix A element type 412, a matrix B element type 414, a scale matrix element type 416, an M dimension of matrix A 426, an N dimension of matrix B 428, and scale factor selector operands 432. The matrix A element type 412 specifies an element type for input matrix A 314 or 316A. As shown in TABLE 1 herein, if the scale vector size is 1X, the matrix A element type 412 can be E4M3, E5M2, E3M2, E2M3, or E2M1. If the scale vector size is 2X, the matrix A element type 412 is E2M1. The Matrix B element type 414 specifies an element type for input matrix B 316B. Matrix B element type 414 follows same rules as matrix A element type 412.

The scale matrix element type 416 specifies an element type for scale matrices 244. If the scale vector size is 1X or 2X, then the scale matrix element type 416 is UE8M0. If the scale vector size is 4X, then the scale matrix element type 416 is UE4M3. The M dimension of matrix A 426 is the number of rows of input matrix A 132 or 152A. The N dimension of matrix B 428 is the number of columns of input matrix B 152B.

The scale factor selector operands 432 specify scale factor selectors which specify which scale factors are to be selected from scale data 134 The scale factor selector operands 432 include scale factor selector A 424A and scale factor selector B 424B. The scale factor selector A 424A includes an "SFA_ID" value to be used to select a scale factor to be multiplied by elements of matrix A. Similarly, the scale factor selector B 424B specifies an "SFB_ID" value to be used to select a scale factor to be multiplied by elements of matrix B. The scale factor selectors 424A, 424B are described further herein with respect to FIGs. 4B and 5.

FIG. 4B illustrates block scale data layouts in tensor memory 230 for various scale vector sizes, in accordance with at least one embodiment. Tensor memory column 464 is a column of tensor memory 230 in which each lane 446 (e.g., row) specifies up to four scale factors. The four scale factors are selected from respective sub-columns 444 of a tensor memory column 464. The SFA_ID and SFB_ID selector values (from the scale factor selector A 424A, B 424B) specify which of the sub-columns 444 of scale data 434 are to be selected for use as the scale factors for matrices A and B, respectively. Scale data 434 can correspond to either scale data 234A or scale data 234B.

Tensor memory column 464 is one of a sequence of columns 464A, 464B through 464N in a tensor memory lane 446 in tensor memory 130. Tensor memory lane 446 is one of a sequence of lanes 446A, 446B, 446C in tensor memory 130. Each column 464 has sub-columns 444. A scale factor 448 ("SF") is stored in each sub-column 444. More specifically, a column 464 stores four sub-columns 444, and each sub-column 444 stores one byte of data that represents a scale factor 448. Accordingly, a column 464 can store up to four scale factors 448A-448D, as shown in FIG. 4B. The four sub-columns 444 are referred to as byte-3, byte-2, byte-1, and byte-0. The four scale factors stored in byte-3, byte-2, byte-1, and byte-0 of a column 464 are SF_3 448D, SF_2 448C, SF_1 448B, and SF_0 448A, respectively.

Scale vector size qualifier 342 specifies a scale vector size, which indicates how many of the four sub-columns 444 are to provide scale factors. The particular sub-columns 444 that are to provide the scale factors are specified by the scale factor selector operands 424A, 424B. The scale factor selector A 424A selects a scale factor 448 from a lane 446 of scale data A 234A to be multiplied by one or more elements of matrix A. The scale factor selector B 424B selects a scale factor from a lane 446 of scale data B 234B to be multiplied by matrix B. Examples of scale factor selection are shown in FIG. 5.

In a scale vector size=1X case 460A, one scale factor 448 is selected from a tensor memory column 464 of tensor memory lane 446A. The selected scale factor 448 is to be multiplied by each vector of an input matrix. If the scale factor selector 424 is 0, then scale factor #0 448A is selected. Scale factor selectors 424 of 1, 2, and 3 likewise cause scale factor #1 448B, scale factor #2 448C, or scale factor #3 448C to be selected. A block-scaled MMA example illustrating multiplication of scale vectors by input matrices for vector size 1X is shown in FIG. 10.

In a scale vector size=2X case 460B, two scale factors 448 are selected from a tensor memory column 464 of tensor memory lane 446B. Each of the two selected scale factors 448 is to be multiplied by each vector of a respective chunk of an input matrix. If the scale factor selector 424 is 0, then scale factor #1 448B and scale factor #0 448A are selected to be multiplied by each vector in each of two respective chunks of the input matrix. If the scale factor selector 424 is 1, then scale factor #3 448D and scale factor #2 448C are selected to be multiplied by each vector in each of the two respective chunks of the input matrix.

In a scale vector size=4X case 460C, four scale factors 448 are selected from a tensor memory column 464 of tensor memory lane 446C. Each of the four selected scale factors 448 is to be multiplied by each vector of a respective chunk (selected from four chunks) of an input matrix. The valid value for the scale factor selector 424 in the 4X case is 0, which indicates that the four scale factors 448 are to be selected.

As described above, a scale factor can be an 8-bit (1 byte) value represented as the UE8M0 type (8-bit exponent, no mantissa) for scale vector sizes 1X and 2X, or as the UE4M3 (4-bit exponent, 3-bit mantissa, 1 sign bit) for scale vector size 4X. Scale factor 3 (SF_3) 448D is a scale factor value in a fourth byte of a tensor memory column 464. Scale factor 2 (SF_2) 448C is a scale factor value in a third byte of a tensor memory column 464. Scale factor 1 (SF_1) 448B is a scale factor value in the second byte of a tensor memory column 464. Scale factor 0 (SF_0) 448A is a scale factor value in the first byte of a tensor memory column 464.

At least one feature described in connection with FIG. 4 is implemented using at least one feature of any system(s) and/or process(es) depicted in and/or described in connection with other figures. At least one feature described in connection with FIG. 4 is used to implement at least a portion of any system(s) and/or process(es) depicted in and/or described with respect to other figures.

FIG. 5 illustrates scale factors selected from tensor memory 230 for various scale factor selector values 424, in accordance with at least one embodiment. The scale factor selector values 424 include scale factor selector A 424A and scale factor selector B 424B, which are operands of a block-scaled MMA invocation 302 as described with respect to FIGs. 3 and 4. The scale factor selectors 424 specify which scale factors SF0, SF1, SF2, SF3 are to be selected by scale factor selection logic 270 from a tensor memory column 564. The tensor memory column 564 can be in scale data A 234A or in scale data B 234B. For example, there can be different tensor memory columns 564 in scale data A 234A and scale data B 234B.

In at least one embodiment, tensor memory column 564 is a column of tensor memory 230. Tensor memory column 564 includes sub-columns 544A-544D. Each sub-column 544 can be 1 byte of tensor memory, in which case each tensor memory column 564 is 32 bits of data. Each scale factor SF0, SF1, SF2, SF3 is stored in a respective sub-column 544A, 544B, 544C, 544D of tensor memory column 564.

Scale factor selection logic 270 selects one or more scale factors ("scale factors A") for use in block scaling of input matrix A 232 (in TMEM 230) or an input matrix A 252A (in SMEM 250). The scale factor selection logic 270 can cause the scale factors A to be included in scale matrix A 244A (e.g., by referencing or by copying the scale factors A). As an example, scale factors A can include one, two, or four scale factors SF0, SF1, SF2, and/or SF3. Scale factor selector A 424A, referred to herein as "SFA_ID," is used by scale factor selection logic 270 to select one, two, or four scale factors SF0, SF1, SF2, and/or SF3 from a tensor memory column 564 for multiplication by input matrix A 232 or 252A.

The scale factor selection logic 270 selects one or more scale factors ("scale factors B") for use in block scaling of input matrix B 252B. The scale factor selection logic 270 can cause the scale factors B to be included in scale matrix B 244B (e.g., by referencing or by copying the scale factors B). As an example, scale factors B can include one, two, or four scale factors SF0, SF1, SF2, and/or SF3. Scale factor selector B 424B, referred to herein as "SFB_ID," is used by scale factor selection logic 270 to select one, two, or four scale factors SF0, SF1, SF2, and/or SF3 from a tensor memory column 564 for multiplication by input matrix B.

In at least one embodiment, tensor memory column 564 includes a number of rows corresponding to the number of rows in input matrix A. The scale factor selection logic 270 selects a scale factor from each row of tensor memory column 564 to be multiplied by elements of a corresponding row of input matrix A. The scale factor selection logic 270 can cause each selected scale factor value, e.g., SF0, SF1, SF2, or SF3, to be included in a column of a scale matrix A 244A. In at least one embodiment, tensor memory column 564 includes a number of rows corresponding to the number of columns in input matrix B. The scale factor selection logic 270 selects a scale factor from each row to be multiplied by elements of a corresponding column of input matrix B. The scale factor selection logic 270 can cause each selected scale factor value to be included in a row of scale matrix B 244B.

As shown in a scale vector size=1X case 560A, if the scale vector size specified by scale vector size qualifier 342 is 1X, then one scale factor is selected from a tensor memory column 564 in scale data A 234A for input matrix A. Similarly, one scale factor is selected from a tensor memory column 564 in scale data B 234B for input matrix B. More specifically, as shown in example tensor memory column 564A, in the 1X case, if the scale factor selector SFA_ID is 0, then the scale factor selection logic 270 selects scale factor SF0 from sub-column 544A to be multiplied by elements of matrix A. Further, as shown in example tensor memory columns 564B, 564C, 564D, in the 1X case, scale factor selector SFA_ID values of 1, 2, and 3 cause the scale factor selection logic 270 to select scale factors SF1, SF2, and SF3 from sub-columns 544B, 544C, 544D, respectively, to be multiplied by elements of matrix A. Similarly, scale factor selector SFB_ID values of 0, 1, 2, or 3 cause the scale factor selection logic 270 to select the scale factors SF0, SF1, SF2, or SF3, respectively, to be multiplied by elements of matrix B.

As shown in a scale vector size=2X case 560B, if the scale vector size is 2X, then two scale factors are selected from a tensor memory column 564 in scale data A 234A for input matrix A. Similarly, two scale factors are selected from a tensor memory column 564 in scale data B 234B for input matrix B. More specifically, as shown in example tensor memory column 564E, in the 2X case, if the scale factor selector SFA_ID is 0, then the scale factor selection logic 270 selects two scale factors SF1 and SF0 from sub-columns 544B, 544A to be multiplied by elements of matrix A. Further, as shown in example tensor memory column 564F in the 2X case, a scale factor selector SFA_ID value of 2 causes the scale factor selection logic 270 to select scale factors SF3 and SF2 from sub-columns 544D and 544C, respectively, to be multiplied by elements of matrix B. Similarly, a scale factor selector SFB_ID value of 0 causes the scale factor selection logic 270 to select the scale factors SF1 and SF0 to be multiplied by elements of matrix B, and a scale factor selector SFB_ID value of 2 causes the scale factor selection logic 270 to select the scale factors SF3 and SF2 to be multiplied by elements of matrix B.

As shown in a scale vector size=4X case 560C, if the scale vector size is 4X, then four scale factors are selected from a tensor memory column 564 in scale data A 234A for matrix A. Similarly, four scale factors are selected from a tensor memory column 564 in scale data B 234B for input matrix B. More specifically, as shown in example tensor memory column 564G, in the 4X case, if the scale factor selector SFA_ID is 0, then the scale factor selection logic 270 selects four scale factors SF3, SF2, SF1, and SF0 from sub-columns 544D, 544C, 544B, 544A to be multiplied by elements of matrix A. Similarly, as shown in example tensor memory column 564G in the 4X case, a scale factor selector SFB_ID value of 0 causes the scale factor selection logic 270 to select scale factors SF3, SF2, SF1, and SF0 from sub-columns 544D, 544C, 544B, 544A, respectively, to be multiplied by elements of matrix B. Although particular numbers of rows and columns, particular scale factors (e.g., 1, 2, and 4), and a particular number of scale factors are described in examples here, other numbers of rows and columns, and other scale factors can be used in other examples by changing numbers and scale factors in accordance with the description herein.

FIG. 6 illustrates a processor 602 for performing a block-scaled MMA invocation having inputs and outputs stored in registers 660, in accordance with at least one embodiment. Processor 602 is similar to processor 102 of FIG. 1, but executes an MMA instruction 612 having input operands that identify to data stored in registers 660 instead of tensor memory TMEM 130 and/or SMEM 150. More specifically, MMA instruction 612 has input matrix operands 614A, 614B, 616, 618 that refer to input matrices 632A, 632B, 640, 638, which are in registers 660, and scale data operands 620A, 620B that refer to scale data 634A, 634B, which are in registers 660.

MMA instruction 612 can be executed by processor 602 to multiply elements of two input matrices by scale factors, and multiply the resulting scaled input matrices using matrix multiplication to produce an output matrix. Inputs and/or outputs of MMA instruction 612 are stored in registers 660. Processor 602 can be a graphics processing unit (GPU), central processing unit (CPU), or other device suitable for performing MMA instruction 612. Processor 602 includes one or more SMs 604. Each SM 604 includes registers 660 to store data, and one or more tensor cores 680 to execute computational operations such as MMA operations. Each streaming multiprocessor 604 also includes TMEM and SMEM (not shown) to store data.

In at least one embodiment, tensor cores 680 include scale factor selection logic 670A, which selects scale factors from scale data identified by scale data operands 620 in accordance with scale data selector operands 622. Alternatively or additionally, scale factor selection logic 670B can be included in SMs 604 outside of tensor cores 680. In at least one embodiment, tensor cores 680 include block-scaled MMA computation logic 682, which performs computations on input matrices A 632A, B 632B, C 640, and D 638 that are stored in registers 660. The input matrices are identified by matrix A operand 614A, matrix B operand 614B, matrix C operand 616, and matrix D operand 618. In at least one embodiment, block-scaled MMA computation logic 182 multiplies each of input matrices A 632A and B 632B by scale factors selected from scale data A 634A, B 634B to obtain scaled input matrices. Block-scaled MMA computation logic 182 performs MMA operations on the scaled input matrices A, B to compute an MMA result (e.g., accumulator) matrix D 638.

In at least one embodiment, processor 602 includes a cooperative thread array (CTA) (not shown), which can be a group of GPU threads that work together to execute a block of code and share resources such as memory and synchronization primitives. In at least one embodiment, a CTA performed by processor 602 launches an MMA instruction 612 via an instruction scheduler 126 and pipeline manager 128 such that the instruction can be executed or otherwise performed on tensor cores 680 of a streaming multiprocessor 604.

Upon being executed by processor 602, the MMA instruction 612 causes the processor 602 to perform MMA operations that compute a product of an matrix A (register) 632A and an matrix B (register) 632B. The MMA operations can be "block-scaled" MMA operations that perform scaling of one or more elements of at least one of the input matrices by multiplying each of the one or more elements by a scale factor to generate one or more scaled input values. The scaled input values are to be used in the computation of the product of matrices A and B instead of corresponding non-scaled elements of matrices A and B received as input. For example, the MMA operations can compute a scaled matrix A by multiplying elements of matrix A 632A by corresponding scale factors. The MMA operations can also compute a scaled matrix B by multiplying elements of matrix B 632B by corresponding scale factors. The MMA operations can further compute a product of scaled matrices A and B.

The MMA instruction 612 can be configured via input parameters to multiply particular matrix elements by selected scale factors. For example, there can be more matrix elements than scale factors, in which case the same "block" of scale factors (e.g., a set of scale factors arranged in rows and columns) is multiplied by two or more corresponding blocks of an input matrix (e.g., a fragment of the input matrix). Multiplication by scale factors can be performed by multiplying each scale factor (e.g., numeric value) in a block by each matrix element (e.g., numeric value) in a block of a matrix. The result of multiplying a scale factor by a matrix element can be used as input to matrix multiplication, or can replace the matrix element in the matrix, depending on implementation details. Particular implementations can use optimizations, e.g., by fusing the multiplication of a scale factor by a matrix element with one or more subsequent operations used in matrix multiplication, in which case one or more of the numeric values described herein are not necessarily stored in memory or registers. The product of a scale factor and an input matrix element, for example, is described in examples herein as a numeric value for explanatory purposes, but implementations do not necessarily store the product as a numeric value in memory or in a register.

In at least one embodiment, an MMA operation is a mathematical operation that, if performed by processor 602, computes a value D: $D = AB + C$ where *A, B,* C, and *D* are matrices, submatrices, submatrix fragments, or tiles, or sets of numeric values. *A* and *B* are input matrices, C on the right-hand side is an optional input matrix which, if specified, is added to the result of multiplying matrix *A* by matrix *B,* and *D* on the left-hand side is an output matrix in which the result of the MMA operation is stored. The matrix product *AB* is computed as described with respect to FIG. 1, for example.

A block-scaled MMA operation can be a mathematical operation that, if performed by processor 602, computes a value *D*: $D = \left(A∗{scale}_{A}\right) \left(B∗{scale}_{B}\right) + C$ where *scale_{A}* and *scale_{B}* are scale matrices, * denotes element-wise multiplication of one or more elements of a matrix *A* by one or more elements of another matrix *scale_{A},* and (*A* * *scale_{A}*)(*B* * *scale_{B}*) is computed by multiplying the scaled matrix A computed as (*A* * *scale_{A}*) by the scaled matrix *B* computed as (*B * scale_{B}*)*.* The block-scaled MMA operation is described further with respect to FIG. 1, for example.

The MMA instruction 612 has a set of operands and a set of qualifiers. The operands provide parameters for the MMA instruction 612 that can be determined at runtime, and the qualifiers provide configuration parameters for the MMA instruction 612. Instruction scheduler 126 schedules MMA instruction 612 to be performed on tensor cores 680 of streaming multiprocessor 604 according to operands and qualifiers of MMA instruction 612.

The operands of the MMA instruction 612 include a matrix A operand 614A, matrix B operand 614B, matrix C operand 616, and an output matrix operation matrix D operand 618. The operands also include a scale data A operand 620A, scale data B operand 620B, scale data A selector operand 622A, and scale data B selector operand 622B. The determination of which elements of *A* are multiplied by which elements of *scale_{A}* depends on configuration inputs provided to the MMA instruction 612, such as a scale vector size qualifier 642, which determines the size of *scale_{A},* as further described herein with respect to FIG. 2. One or more of the MMA operands 614A-622B identify data on which the MMA instruction 612 is to perform operations. Each of the operands 614A-822B can be a register (specified as one or more register names, e.g., {%Ra0}, and/or an intermediate value.

Instruction qualifiers can be specified for an MMA instruction 612 to modify behaviors of MMA instruction 612. The MMA instruction qualifiers include an MMA shape qualifier 606, an MMA kind qualifier 624, and a scale vector size qualifier 642. The MMA shape qualifier 606 specifies M, N, and K dimensions for the MMA computation, and can be, e.g., m16n8k32 (M=16, N=8, K=32), m16n8k64 (M=16, N=8, K=64), or other suitable shape.

The MMA kind qualifier 624 specifies the size of matrix elements in the input matrixes A and B. MMA kind qualifier 624 can be MXF4, MXF8F6F4, or MF4NVF4, for example, and is further described herein with reference to FIG. 1 and TABLE 1, for example. Scale vector size qualifier 642 specifies a scale vector size, which indicates how many scale vectors (e.g., 1, 2, or 4) of scale matrices 244 are to be used for block scaling.

Input matrix A operand 614A specifies one or more registers in which matrix A 632A is stored. Input matrix B operand 614B specifies one or more registers in which matrix B 632B is stored. Matrix C operand 616 specifies one or more registers in which matrix C 640 is stored. Matrix D operand 618 specifies one or more registers in which matrix D (register) 638 is to be stored by the MMA operation.

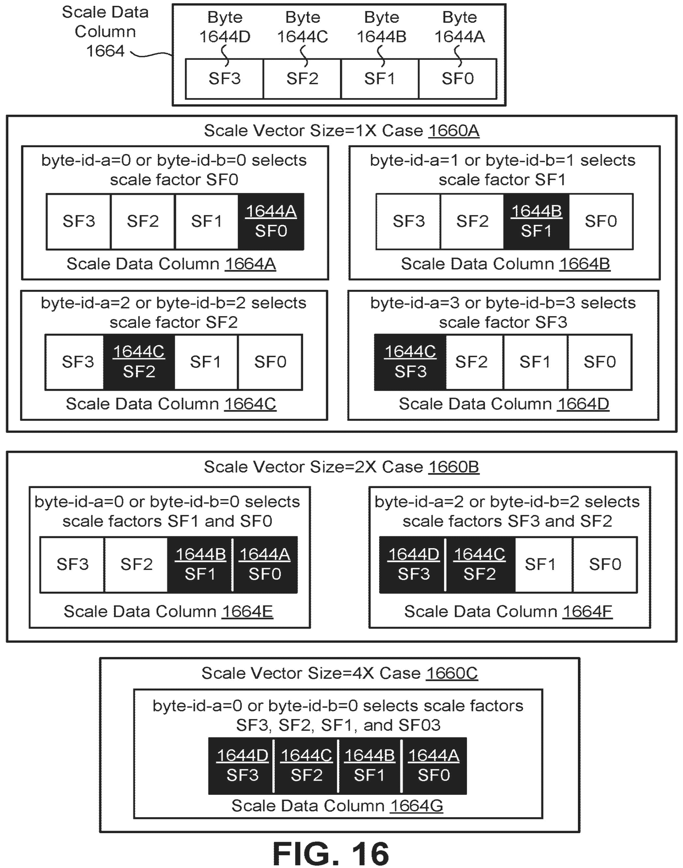

Scale data A operand 620A and scale data B operand 620B each specify one or more registers in which scale data A 634A and scale data B 634B, respectively, are stored. Scale data A 634A contains numeric values for one or more scale matrices A (e.g., *scale_{A}*), and scale data B 634B contains numeric data for one or more scale matrices B (e.g., *scale_{B}*)*.* Scale data A selector operand 622A indicates which columns to select from scale data A 634A, e.g., to form columns of scale matrix A, and scale data B selector operand 622B indicates which columns to select from scale data B 634B, e.g., to be converted to rows of scale matrix B. The use of scale data selector operands 622 to indicate which columns to select from scale data 634 is described further with respect to FIGS. 7 and 16, for example. The selector operands 622 also indicate which thread(s) are to contribute (e.g., select from scale data) the scale vectors, as described herein with respect to FIGs. 6A, 6B, and 7. The number of scale vectors selected from scale data is specified by a scale vector size qualifier, can be 1X, 2X, or 4X, as described with respect to FIG. 2, for example.

In at least one embodiment, at least one feature described in connection with FIG. 6 is implemented using at least one feature of any system(s) and/or process(es) depicted in and/or described in connection with other figures. In at least one embodiment, at least one feature described in connection with FIG. 6 is used to implement at least a portion of any system(s) and/or process(es) depicted in and/or described with respect to other figures.

FIG. 7 illustrates interactions in a processor 702 for performing a block-scaled MMA instruction 612 having input and output matrices stored in registers 760, in accordance with at least one embodiment. In at least one embodiment, block-scaled MMA inputs 712 include qualifiers for the MMA instruction 612 and also include operands for the MMA instruction 612. The operands specify input and output matrices stored in registers 760. The qualifiers include an MMA shape qualifier 706, an MMA kind qualifier 724, and a scale vector size qualifier 742, which are similar to the MMA shape qualifier 606, MMA kind qualifier 624, and scale vector size qualifier 642 described with respect to FIG. 6. The operands include a matrix A operand (register) 714A, a matrix B operand (register) 714B, a matrix C operand (register) 716, and a matrix D operand (register) 718. The matrix operands are further described with respect to FIG. 6. The block-scaled MMA inputs 712 also include an M dimension 726 operand (e.g., number of rows of matrices *A, C,* and *D),* an N dimension 728 operand (e.g., number of columns of matrices *B,* C, and *D),* scale data operands 720, and scale factor selector operands 722.

Scale factor selection logic 770 and block-scaled MMA logic 782 are similar to scale factor selection logic 270 and block-scaled MMA logic 282 of FIG. 2, but access input matrices 732, 740 in registers 760, and store accumulator matrix D 738 in registers 760 (instead of accessing and storing matrices in memory as in FIG. 2). Block-scaled MMA logic 782 can be performed by one or more tensor cores 780. Further, scale factor selection logic 770 can select particular threads to contribute the scale factor values from scale data A 734A and scale data B 734B. The scale factor selection logic 770 selects scale matrices 744 from scale data 734 using operations similar to those described with respect to the scale factor selection logic 270 of FIG. 2. Further, the block-scaled MMA logic 782 multiplies scale matrices 744 by input matrices 743 and provides the resulting scaled input matrices as input to MMA operations to generate accumulator matrix D 738 using operations similar to those described with respect to the block-scaled MMA logic 282 of FIG. 2.

Referring to FIG. 7, scale data operand 720A specifies one or more registers in which scale data A 734A is stored. Further, scale data operand 720B specifies one or more registers in which scale data B 734B is stored. Scale factor selector operand 722A specifies a byte-id-a selector value that scale factor selection logic 770 uses to select a column (also referred to as a byte) from a register in which scale data A 734A is stored. Scale factor selection logic 770 includes (e.g., stores) the selected column of scale data in scale matrix A 744A. The byte-id-a selector value is similar to the SFA_ID value specified by the scale factor selector A 424A of FIG. 4.

Scale factor selector operand 722B specifies a byte-id-b selector value that scale factor selection logic 770 uses to select a column (also referred to as a byte) from a register in which scale data B 734B is stored. Scale factor selection logic 770 converts the selected column of scale data B 734B to a row and includes (e.g., stores) the row in scale matrix A 744A. The byte-id-b selector value is similar to the SFB_ID value specified by the scale factor selector B 424B of FIG. 4. The byte-id-a and byte-id-b selectors are further described with respect to FIG. 16, for example.

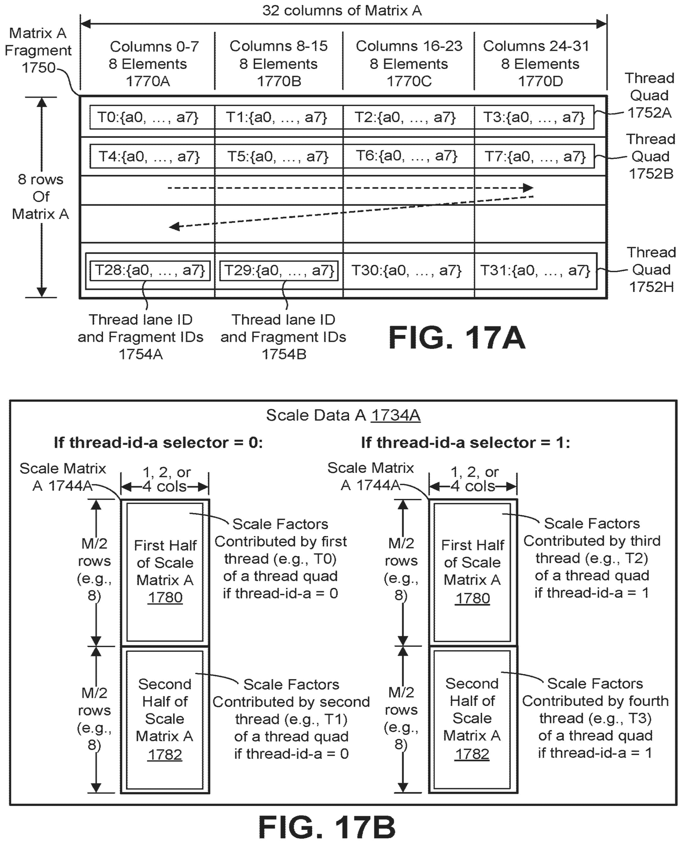

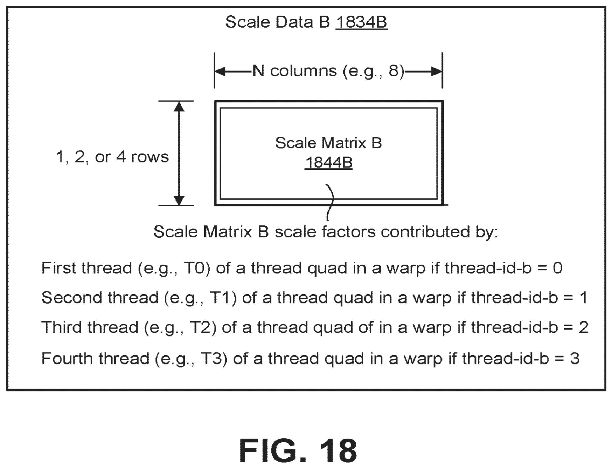

Scale factor selection logic 770 and/or block-scaled MMA logic 782 uses threads of processor 702 to contribute (e.g., select and/or retrieve) column(s) of the scale data 734 to be included in scale matrices 744. In at least one embodiment, two threads contribute scale factors from scale data A (registers) 734A, and one thread contributes scale factors form scale data B (registers) 734B. The threads that contribute scale factors from scale data A 734A are selected as specified by a thread-id-a portion of the selector operand 722A. The thread that contributes scale factors from scale data B 734B is selected as specified by a thread-id-b portion of the selector operand 722B. The thread-id-a and thread-id-b selectors are further described with respect to FIGs. 17A, 17B, and 18, for example.

Block-scaled MMA logic 782 multiplies the selected elements of scale matrix A 744A by corresponding elements of input matrix A 732 to generate scaled A values (registers) 736A. Additionally or alternatively, block-scaled MMA logic 782 multiplies the elements of scale matrix B 744B by corresponding elements of input matrix B 752B to generate scaled B values (registers) 736B, e.g., as described with respect to block-scaled MMA logic 282 of FIG. 2.

At least one feature described in connection with FIG. 7 is implemented using at least one feature of any system(s) and/or process(es) depicted in and/or described in connection with other figures. At least one feature described in connection with FIG. 7 is used to implement at least a portion of any system(s) and/or process(es) depicted in and/or described with respect to other figures.

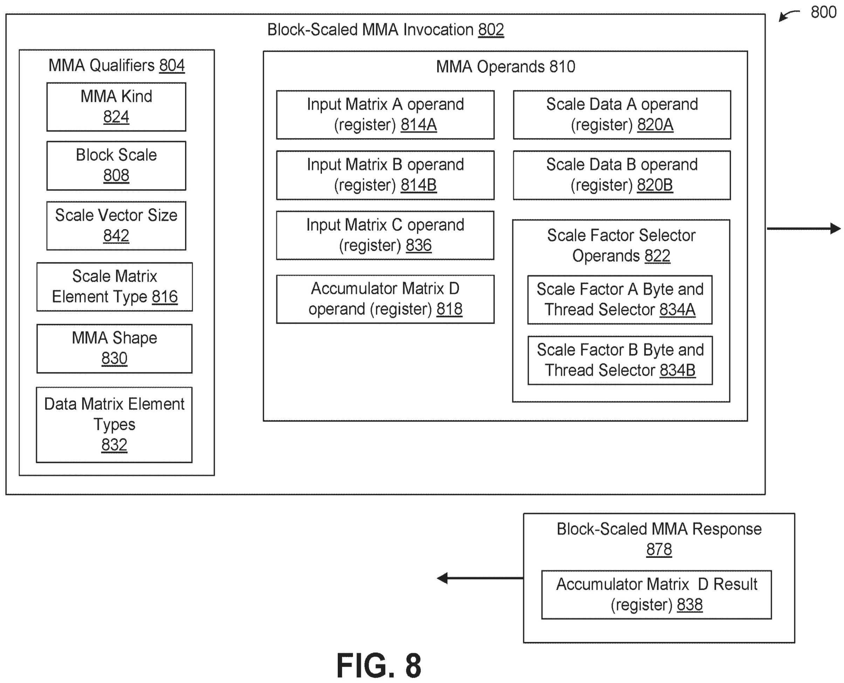

FIG. 8 illustrates a block-scaled MMA invocation 802 having input and output matrices stored in registers, in accordance with at least one embodiment. Operation 800 represents one or more computational operations that cause a processor (e.g., a GPU) to execute or otherwise perform MMA (matrix multiply-accumulate) instructions using block scaling to adjust the scale of input matrix elements stored in registers.

Operation 800 includes block-scaled MMA invocation 802 and a block-scaled MMA response 878. In at least one embodiment, invocation 802 is an invocation of an instruction to cause one or more processors to perform one or more block-scaling MMA computation operations ("MMA operations") and generate response 878. In at least one embodiment, invocation 802 is a call of an instruction ("instruction call") to cause one or more processors 702 to perform one or more block-scaling MMA operations and generate response 878.

In at least one embodiment, invocation 802 is an invocation of an API to cause one or more processors 702 to perform one or more computation operations and generate response 878. In at least one embodiment, invocation 802 is a function call to be performed by one or more software programs, such as CUDA kernels, on a parallel processing unit, such as a GPU. Invocation 802 defines parameters and configurations for the execution of block-scaling MMA operations on MMA operands 810, enabling optimized performance through block scaling techniques such as multiplication of MMA input matrix elements by scaling factors that can be different for different rows, columns, and or fragments of the input matrices.

Invocation 802 includes MMA qualifiers 804, which specify parameters to configure aspects of an MMA operation that ordinarily remain constant during program execution. MMA qualifiers 804 include an MMA kind qualifier 824, a block scale qualifier 808, and a scale vector size qualifier 842, which are similar to MMA kind qualifier 324, block scale qualifier 308, and scale vector size qualifier 342, respectively, of FIG. 3. MMA qualifiers 804 also include a scale matrix element type qualifier 816, an MMA shape qualifier 830, and element types of input and output matrices qualifiers 832. Scale matrix element type qualifier 816 is similar to scale matrix element type 416 described herein with respect FIG. 4. The MMA shape qualifier 830 is similar to the MMA shape qualifier 606 described herein with respect to FIG. 6. The data matrix element types qualifiers 832 include qualifiers specifying the element types of matrices A 732A, B 732B, C 740, and D 738.

Invocation 802 receives, as input, MMA operands 810. The MMA operands 810 include an input matrix A operand 814A, an input matrix B operand 814B, an input matrix C operand 836 and an matrix D operand 818. The input matrix A operand 814A specifies one or more registers 760 that contain an input matrix A 732A. The input matrix B operand 814B specifies one or more registers 760 that contain an input matrix B 732B to be used alongside matrix A in the MMA operation. The input matrix C operand 836 specifies one or more registers 760 that contain an input matrix C 740 to be added to a result of multiplying the scaled A and B matrices. The accumulator matrix D operand 818 specifies one or more registers 760 in which an accumulator matrix D 738 generated by the MMA operation is to be stored. The matrix D operand 818 can be used in conjunction with the input matrix C operand 836 to accumulate the results of matrix multiplication operations across multiple computational cycles (e.g., multiple block-scaled MMA invocations 802). Accumulating the MMA results in this way enhances performance by allowing intermediate results to be cached and reused across multiple cycles of the computation, minimizing the need to fetch or write back intermediate results to the main memory.

The MMA operands 810 also include a scale data A operand (register) 820A, a scale data B operand (register) 820B, and scale factor selector operands 822. The scale data A operand 820A specifies one or more registers 760 that contain a scale matrix A 744A. The scale data B operand 820B specifies one or more registers 760 that contain a scale matrix B 744B. The scale factor selector operands 822 include a scale factor A byte and thread selector 834A and a scale factor B byte and thread selector 834B. The scale factor A byte and thread selector 834A specifies a byte-id-a and/or thread-id-a selector, and the scale factor B byte and thread selector 834B specifies a byte-id-b and/or thread-id-b selector, as described herein with respect to FIG. 7, for example.

Block-scaled MMA response 878 represents output of MMA instruction execution, comprising an matrix D result 838, which is stored in one or more registers 760. In at least one embodiment, the output is data to be output by an instruction, if the invocation 802 is to invoke the instruction. In at least one embodiment, the output is data to be output by an API, if invocation 802 is to invoke the API. In at least one embodiment, block-scaled MMA response 878 includes a status indicator (not shown) indicating success or failure of the MMA operation, such as whether it completed successfully or encountered errors. Accumulator matrix D result 838 represents the final output data matrix resulting from the MMA operation.

Example syntax for a block-scaled MMA invocation 802 in which matrices A, B, C, D and the scale data values are in registers is as follows:

```
      mma.sync.aligned.shape.row.col.kind.block_scale
                   {.scale_vec_size}.dtype.atype.btype.ctype.stype
                   d, a, b, c,
                   scale-a-data, {byte-id-a, thread-id-a},
                   scale-b-data, {byte-id-b, thread-id-b};
```

In this example invocation syntax, a "shape" qualifier specifies an MMA operation shape in the format mMnNkK, where M, N, and K are matrix dimensions. The MMA instruction 612 with the block_scale qualifier initiates a matrix multiplication operation with block scaling. This operation compute *D =* (*A* * *scale_{A}*)(*B* * *scale_{B}*) + *C*, where the *A* matrix is *M* × *K,* the *B* matrix is *K* × *N,* and the *C* and *D* matrices are *M* × *N.* In at least one embodiment, the "sync" qualifier specifies that the mms instruction is synchronous, e.g., the calling thread(s) wait until completion of the MMA operation.

In the example syntax, a "row" qualifier indicates that matrix A is in a row-major format, a "col" qualifier indicates that matrix B is in a column-major format, a "kind" qualifier corresponds to the MMA kind qualifier 624, the "scale _vec_size" qualifier corresponds to the scale vector size qualifier 342, the MMA shape is m16n8k64, the kind is mxf4, the scale vector size is 2X,

For example, if kind is specified as mxf4, then shape is m16n8k64, scale_vec_size is 2X, dtype is f32, atype and btype are e2m1, ctype is f32, and stype is ue8m0. In another example, if kind is specified as mxf4nvf, then shape is m16n8k64, scale_vec_size is either 2X or 4X, dtype is f32, atype and btype are e2m1, ctype is f32, and stype is either ue8m0 (if scale_vec_size is 2X) or ue4m3 (if scale_vec_size is 4X). In another example, if kind is specified as mxf8f6f4, then shape is m16n8k32, scale_vec_size is 1X, dtype is f32, atype and btype are one of e4m3, e5m2, e3m2, e2m3, e2m1, ctype is f32, and stype is ue8m0.

In at least one embodiment, the block_scale qualifier specifies that the matrices A and B are to be scaled with scale_A and scale_B matrices respectively before performing the matrix multiply and accumulate operation. The data type corresponding to each of the element within scale_A and Scale_B matrices is specified by stype. The scale_vec_size qualifier specifies the number of columns in the matrix scale_A and number of rows in the matrix scale _B.

In at least one embodiment, the valid combinations of kind, stype and scale_vec_size are described in TABLE 1. For mma with kind::mxf4 when the qualifier scale_vec_size is not specified, scale_vec_size defaults to 2X. In contrast, when kind is specified as kind::mxf8f6f4, qualifier scale_vec_size defaults to 1X. However, for kind::mxf4nvf4, a valid scale_vec_size is to be specified. A warp executing an mma.sync instruction with shape=m8n8k4 computes 4 matrix multiply and accumulate operations. For other shapes, the mma.sync operations compute a single matrix multiply and accumulate operation per warp.

In at least one embodiment, operands a and b represent two multiplicand matrices A and B, while c and d represent the accumulator and destination matrices, distributed across the threads in a warp. When the block_scale qualifier is specified, operands scale-a-data, scale-b-data represent the scale matrix metadata (e.g., scale data) that contains the scale_A and scale_B matrices respectively. The tuples {byte-id-a, thread-id-a} and {byte-id-b, thread-id-b} represent selectors for matrices scale_A and scale_B respectively from their corresponding metadata arguments scale-a-data, scale-b-data. The operands scale-a-data, scale-b-data are of type b32. The operands byte-id-a, thread-id-a, byte-id-b, thread-id-b are unsigned 16-bit integer values. The registers in each thread hold a fragment of matrix. The qualifiers dtype, atype, btype and ctype indicate the data-type of the elements in the matrices D, A, B and C respectively. The qualifier stype indicate the data-type of the elements in the matrices scale_A and scale_B.

In at least one embodiment, specific shapes have implications for the storage format of matrix elements. When kind is either of kind::mxf8f6f4 or kind::f8f6f4, the individual 4-bit and the 6-bit floating point type elements are to be packed in an 6-bit container. The matrix element of type e2m1 resides in the central 4 bits of the 6-bit container with padding in the upper 2 bits and lower 2 bits of the container. When the matrix element is of type e3m2 or e2m3, the matrix element resides in the lower 6 bits of the 6-bit container with padding in the upper 2 bits of the container. In contrast, when using mma with kind::mxf4 or kind::mxf4nvf4, no explicit padding is necessary even though matrix elements are of type e2m1. In at least one embodiment, when using mma with kind::mxf4 or kind::mxf4nvf4, elements of input matrices 952, such as *A[0, c]* or *B[r, 0]* shown in FIG. 9, have a reduced size, such as 4 bits, and the elements are represented using an amount of data specified by the reduced size. For example, when using mma with kind::mxf4 or kind::mxf4nvf4, elements of input matrices 952 are stored in data units referred to herein as "containers" having the reduced size, e.g., 4 bits or other number of bits less than 8 bits, such as 6 bits.

An example block-scaled MMA invocation 612 with operands in registers is as follows (three lines of register declarations precede the mma instruction invocation):

```
 .reg .b32 %Ra<4>, %Rb<4>;
 .reg .f32 %Rc<4>, %Rd<4>;
 .reg .b32 scaleAData, scaleBData;
 mma.sync.aligned.m16n8k64.row.col.kind::mxf4.block_scale.f32.e2m1.e2m1
 .f32.ue8m0
   {%Rd0, %Rd1, %Rd2, %Rd3},
   {%Ra0, %Ra1, %Ra2, %Ra3},
   {%Rb0, %Rb1},
   {%Rc0, %Rc1, %Rc2, %Rc3},
   scaleAData, {2, 1}, scaleBData, {2, 3};
```

In this example block-scaled MMA invocation 613, the "shape" qualifier is m16n8k64, the "row" qualifier specifies that matrix A is in row-major format, the "col" qualifier specifies that matrix B is in column-major format, the kind::mxf4 qualifier specifies that the scale vector size is 4X, the "block_scale" qualifier specifies that block scaling is to be performed using the scale-a-data and scale-b-data operands, the "f32" qualifier specifies that the element type of matrix D is f32, the e2m1 qualifiers specify that the element types of matrices A and B are each e2m1, the f32 qualifier specifies that the element type of matrix C is f32, and the ue8m0 qualifier specifies that the element type of scale matrix A and scale matrix B is ue8m0.

The {%Rd0, %Rd1, %Rd2, %Rd3} operand specifies that result matrix D is to be stored in registers Rd0, Rd1, Rd2, Rd3, each of which (e.g., Rd0) contains 32 bits. Matrix D has 16x8 elements, and each element occupies 32 bits (because the matrix D element type is f32), so the number of bits to represent matrix D is 16x8x32. In a warp of 32 threads, each thread processes $\frac{16 x 8 x 32}{32} = 128 bits$. Since each matrix element occupies 32 bits, the operand size is 32 bits. To fit the 128 bits processed by each thread into 32-bit operands, four 32-bit operands are needed. Accordingly, matrix D is represented in four 32-bit registers %Rd0, %Rd1, %Rd2, %Rd3. Further, the {%Ra0, %Ra1, %Ra2, %Ra3} operand specifies that input matrix A is to be retrieved from registers Ra0, Ra1, Ra2, Ra3. The {%Rb0, %Rb1} operand specifies that input matrix B is to be retrieved from registers Rb0, %Rb1. The {%Rc0, %Rc1, %Rc2, %Rc3} operand specifies that input matrix C is to be retrieved from registers Rc0, c1, c2, Rc3.

The scaleAData operand specifies a 32-bit (b32) register from which scale data A is to be retrieved. The {2, 1} operand specifies that byte-id-a is 2 and thread-id-a is 1. The scaleBData operand specifies a 32-bit (b32) register from which scale data B is to be retrieved. The second {2, 3} operand specifies that byte-id-b is 2 and thread-id-b is 3.

At least one feature described in connection with FIG. 8 is implemented using at least one feature of any system(s) and/or process(es) depicted in and/or described in connection with other figures. At least one feature described in connection with FIG. 8 is used to implement at least a portion of any system(s) and/or process(es) depicted in and/or described with respect to other figures.

FIG. 9 illustrates block-scaled MMA operations using scale matrices 944A, 944B selected from scale data 934, in accordance with at least one embodiment. In at least one embodiment, block-scaled MMA operations include selecting scale matrices 944A, 944B from scale data 934, performing block scaling of input matrices 952A, 952B using the scale matrices 944A, 944B to compute scaled element values corresponding to the non-scaled element values of the input matrices 952A, 952B, and performing matrix multiplication using the scaled element values instead of one or more of the non-scaled scaled element values of the input matrices 952A, 952B. The matrix multiplication computes an accumulator matrix D 938. The matrix multiplication operations can include and/or be followed by addition operations that accumulate results from previous matrix multiplication operations, e.g., if an accumulator matrix D 938 generated by previous matrix multiplication operations is provided as an operand to the MMA instruction 112.

Scale factor selection logic 970 selects scale matrices 944A, 944B from one or more portions of scale data 934 specified by scale factor selector operands 922. In at least one embodiment, scale factor selection logic 970 selects scale matrix A 944A from scale data A 934A, and selects scale matrix B 944B from scale data B 934B. Block-scaled MMA logic 984 multiplies input element values from each input matrix 952 by element values of a corresponding scale matrix 944 using element-wise multiplication to compute scaled element values. The element-wise multiplication is described herein with respect to FIG. 1, for example. Block-scaled MMA logic 984 performs matrix multiplication operations to compute an accumulator matrix D 938 using the scaled element values as elements of the input matrices instead of the corresponding non-scaled input element values.

Scale factor selection logic 970 selects one or more scale vectors 982 of a scale matrix 944 from tensor memory columns 964 of scale data 934. The number of scale vectors 982 selected from tensor memory columns 964 is specified by scale vector size 942. In at least one embodiment, scale factor selection logic 970 selects one or more scale factors SF0 from a sub-column of tensor memory column 964, as described herein with respect to FIG. 4B (in which scale factors selected from sub-columns 444) and FIG. 5 (in which factors are selected from sub-columns 544). Each scale factor SF0 can have a different value. For example, three scale factors SF0, SF0, SF0 (where 0 indicates column #0) that can have different values are shown in three rows of a sub-column of tensor memory column A 964A, although any suitable number of scale factors SF0 can be selected from the sub-column. Scale factors SF1 (column #1), SF2 (column #2), and SF3 (column #3) are also shown in other sub-columns of tensor memory column A 964A. The number of sub-columns from which scale factors are selected is specified by scale vector size 942. For example, if scale vector size 942 is 1X, then one sub-column of scale factors is selected. The sub-column(s) from which scale factors SF0, SF1, SF2, and/or SF3 are selected are specified by scale factor selector operand 922. For example, if scale vector size 942 is 1X and scale factor A selector operand 922A is SF2 (e.g., a value 2), then the second column (from the left) of scale factors, which contains the SF1 values, is selected from tensor memory column A 964A, as described with respect to FIG. 5. Scale factor selection logic 970 includes each selected column of scale factors in a scale matrix 944 as a scale vector 982, which is a column in scale matrix A 944A or a row in scale matrix B 944B. For example, if scale vector size 942 is 1X and the number of rows M in input matrix A 952A is 16, and a scale factor A selector operand 922A is SF2, then one vector of M=16 scale factors SF1, from the second sub-column of tensor memory column A 964A, is included in a scale matrix A 944A as a scale vector A 982A. That is, if M=16 rows, then 16 scale factors SF1 that can have different values are selected from the second sub-column of tensor memory column A 964A and included in scale matrix A 944A.

Scale factor selection logic 970 identifies one or more scale vectors A 982A to include in scale vector A 982A (which is a column vector) from one or more tensor memory columns A 964A. The number of scale factors is specified by the scale vector size 942. The row(s) of scale factors selected from tensor memory column A 964A are specified by the scale factor A selector operand 922A. In at least one embodiment, scale matrix A 944A references the identified tensor memory sub-column(s) in tensor memory column A 964A, so a copy of the identified sub-column(s) need not be made. In another embodiment, scale factor selection logic 970 copies the identified sub-column(s) to columns of scale matrix A 944A, which can be stored in different memory locations than the scale data 934.

Similarly, scale factor selection logic 970 identifies one or more scale vectors B 982B to include in scale vector B 982B (which is a row vector) from one or more tensor memory columns B 964B. The number of scale factors is specified by the scale vector size 942. The columns of scale factors selected from tensor memory column B 964 B are specified by the scale factor B selector operand 922B. In at least one embodiment, scale matrix B 944BA references the identified tensor memory sub-column(s) in tensor memory column B 964B, so a copy of the identified sub-column(s) need not be made. In another embodiment, scale factor selection logic 970 copies the identified sub-column(s) to rows of scale matrix B 944B (e.g., by transposing the sub-columns to form the rows), which can be stored in different memory locations than the scale data 934.

To perform scaling operations, the block-scaled MMA logic 984 multiplies each scale vector A 982A by one or more input vectors A 980A of input matrix A 952A, as described herein with respect to FIG. 2. Similarly, the block-scaled MMA logic 984 multiplies each scale vector B 982B by one or more input vectors B 980B of input matrix B 952B, as described herein with respect to FIG. 2.

For example, if scale vector size 942 is 1X, then scale matrix A 944A contains a single scale vector A 982A (a column), which is to be multiplied by each input vector A 980A (another column) to generate a scaled vector. If k=64, for example, then the scale vector A 982A is multiplied by each of the 64 input vectors A 980A to generate 64 scaled input vectors. The 64 scaled input vectors are provided as a scaled matrix A input to matrix multiplication operations to be performed by the block-scaled MMA logic 984. Similarly, when scale vector size 942 is 1X, scale matrix B 944B contains a single scale vector B 982B (a row), which is to be multiplied by each input vector A 980B (another row) to generate a scaled vector. If k=64, for example, then the scale vector B 982B is multiplied by each of the 64 input vectors A 980A to generate 64 scaled input vectors. The 64 scaled input vectors are provided as a scaled matrix A input to the block-scaled MMA logic 984. In at least one embodiment, the block-scaled MMA logic 984 combines (e.g., fuses) the scale factor multiplication operations with addition, multiplication, and/or other operations involved in matrix multiplication. FIG. 12 shows an example of scaling operations with scale vector size 942=1X.

As another example, if scale vector size 942 is 4X, then scale matrix A 944A contains four scale vectors A 982A (four columns), which are to be multiplied by four corresponding input vectors A 980A (columns) of input matrix A 952A to generate a four scaled vectors. The four corresponding input vectors A 980A are in four corresponding chunks of input matrix A 952A. This column multiplication is repeated for each additional column in each chunk of input matrix A 952A, as described herein with respect to FIG. 12. For example, if input matrix A 952A has 64 columns, then each of the four scale vectors A 982A of scale matrix A 944A is multiplied by 64/4=16 corresponding columns in a chunk (of four chunks) of input matrix A 952A. The resulting 64 scaled input vectors A 980A are provided as a scale matrix A input to the block-scaled MMA logic 984.

Similarly, when scale vector size 942 is 4X, scale matrix B 944B contains four scale vectors B 982A (four rows), which are to be multiplied by four corresponding input vectors B 980B (rows) of input matrix B 952B to generate a four scaled vectors. The four corresponding input vectors B 980B are in four corresponding chunks of input matrix B 952B. This row multiplication is repeated for each additional row in each chunk of input matrix B 952B, as described herein with respect to FIG. 12. For example, if input matrix B 952B has 64 rows, then each of the four scale vectors B 982B of scale matrix B 944B is multiplied by 64/4=16 rows in a corresponding chunk (of four chunks) of input matrix B 952B. The resulting 64 scaled input vectors B 980B are provided as a scale matrix B input to the block-scaled MMA logic 984. In at least one embodiment, the block-scaled MMA logic 984 combines (e.g., fuses) the scale factor multiplication operations with addition, multiplication, and/or other operations involved in matrix multiplication.

The block-scaled MMA logic 984 performs matrix multiply accumulate operations by multiplying the scaled element values in the scaled input vectors A 980A, which correspond to input vectors A 980A of input matrix A 952A, by the scaled element values in the scaled input vectors B 980B, which correspond to input vectors B 980B. The block-scaled MMA logic 984 adds the result of the matrix multiplication to an input accumulator matrix, if the input accumulator matrix is provided as input (e.g., as an operand of an MMA instruction 112). The block-scaled MMA logic 984 outputs the resulting product matrix as an accumulator matrix D 938. If the input accumulator matrix is provided, then the block-scaled MMA logic 984 outputs the sum of the resulting product matrix and the accumulator matrix as the accumulator matrix D 938.

At least one feature described in connection with FIG. 9 is implemented using at least one feature of any system(s) and/or process(es) depicted in and/or described in connection with other figures. At least one feature described in connection with FIG. 9 is used to implement at least a portion of any system(s) and/or process(es) depicted in and/or described with respect to other figures. For example, scale factor selection logic 970 can correspond to scale factor selection logic 170, and block-scaled MMA logic 984 can correspond to block-scaled MMA computation logic 182 of FIG. 1.

FIG. 10 illustrates block-scaled MMA operations using scale matrices 1044 with a scale vector size 1042 of 1X, in accordance with at least one embodiment. In at least one embodiment, block-scaled MMA operations include selecting scale matrices 1044A, 1044B from scale data 1034, performing block scaling of input matrices 1052A, 1052B using the scale matrices 1044A, 1044B to compute scaled element values corresponding to the non-scaled element values of the input matrices 1052A, 1052B, and performing matrix multiplication using the scaled element values instead of one or more of the non-scaled scaled element values of the input matrices 1052A, 1052B. The matrix multiplication computes an accumulator matrix D 1038. Because the scale vector size 1042 is 1X in the example of FIG. 10, the scale matrix A 1044A is a single column vector, and the scale matrix B 1044B is a single row vector.

Scale factor selection logic 1070 selects scale matrix A 1044A from one or more columns of scale data 1034 as specified by scale factor A selector operand 1022A, and selects scale matrix B 1044B from one or more columns of scale data 1034 as specified by scale factor B selector operand 1022B. Scale factor selection logic 1070 converts columns of scale data 1234 to rows for inclusion in scale matrix B 1044B, e.g., by performing a transpose operation to transpose a column of scale data 1034 into a row vector of scale matrix B 1044B.

To perform scaling operations, block-scaled MMA logic 1084 multiplies the single column vector in scale matrix A 1044A by each of the input vectors A 1080A of input matrix A 1052A using element-wise multiplication to compute scaled A values 1056A. The scaled A values 1056A are used as input to MMA operations instead of the element values of input matrix A 1052A. In at least one embodiment, the scaled A values 1056A can be a matrix "Scaled" of the same dimensions as input matrix A 1052A and in which each matrix element Scaled[row, column] is computed by multiplying A[row, column] by Scale[row, 0], where "A" is input matrix A 1052A and "Scale" is scale matrix A 1044A. The Scaled matrix is used as an input matrix to MMA operations performed by block-scaled MMA logic 1084. In at least one embodiment, the scaled A values 1056A are not stored in a matrix but are instead computed by block-scaled MMA logic 1084 for each element of input matrix A 1052A and used as input to MMA operations. Element-wise multiplication of vectors is further described herein with respect to FIG. 1, for example.

As an example, scale matrix A 1044A contains a single scale vector A 1082A (a column), which is to be multiplied by each input vector A 1080A (another column) to generate a scaled vector. If k=64, for example, then the scale vector A 1082A is multiplied by each of the 64 input vectors A 1080A to generate 64 scaled input vectors, which are shown as scaled A values 1056A. The scaled A values 1056A are provided as a scaled matrix A input to matrix multiplication operations to be performed by the block-scaled MMA logic 1084. Similarly, scale matrix B 1044B contains a single scale vector B 1082B (a row), which is to be multiplied by each input vector B 1080B (a row) to generate a scaled vector. If k=64, for example, then the scale vector B 1082B is multiplied by each of the 64 input vectors B 1080B to generate 64 scaled input vectors, which are shown as scaled B values 1056B. The scaled B values 1056B are provided as a scaled matrix B input to MMA operations to be performed by the block-scaled MMA logic 1084. In at least one embodiment, the block-scaled MMA logic 1084 combines (e.g., fuses) the scale factor multiplication operations with addition, multiplication, and/or other operations involved in matrix multiplication.

Block-scaled MMA logic 1084 performs matrix multiplication operations to compute an accumulator matrix D 1038 using the scaled A values 1056A as elements of a scaled input matrix A and using the scaled B values 1056B as elements of a scaled matrix B.

FIG. 11 illustrates block-scaled MMA operations using scale matrices 1144 with a scale vector size 1142 of 2X, in accordance with at least one embodiment. In at least one embodiment, block-scaled MMA operations include selecting scale matrices 1144A, 1144B from scale data 1134, performing block scaling of input matrices 1152A, 1152B using the scale matrices 1144A, 1144B to compute scaled element values corresponding to the non-scaled element values of the input matrices 1152A, 1152B, and performing matrix multiplication using the scaled element values instead of one or more of the non-scaled scaled element values of the input matrices 1152A, 1152B. The matrix multiplication computes an accumulator matrix D 1138. Because the scale vector size 1142 is 2X in the example of FIG. 11, the scale matrix A 1144A includes two column vectors, and the scale matrix B 1144B includes two row vectors.

Scale factor selection logic 1170 selects scale matrix A 1144A from one or more columns of scale data 1134 as specified by scale factor selector operands 1122, and also selects scale matrix B 1144B from one or more columns of scale data 1134 as specified by scale factor selector operands 1122. Scale factor selection logic 1170 converts a column of scale data 1134 to a row for inclusion in scale matrix B 1144B, e.g., by performing a transpose operation to transpose a column of scale data 1134 into a row vector of scale matrix B 1144B.

Block-scaled MMA logic 1184 performs block scaling of input matrix A 1152A to compute scaled A values 1156A. To perform scaling of input matrix A 1152A, block-scaled MMA logic 1184 multiplies elements of each column vector 1182 of scale matrix A 1144A by elements of each input vector A 1180A (e.g., column) in a chunk 1110 of input matrix A 1152A. In at least one embodiment, the block-scaled MMA logic 1184 stores the results of the multiplications in scaled A values 1156A. Since the scale vector size 1142 is 2X in the example of FIG. 11, input matrix A 1152A is divided into 2 chunks, each having K/2 columns. The example input matrix A 1152A is shown as having K=8 columns and K/2=4 columns per chunk for illustrative purposes. In at least one embodiment, K is 64, and each chunk has 64/2=32 columns. Further, each scale vector A 1182A in scale matrix A 1144A has M elements, where M is the number of rows in input matrix A 1152A.

Block-scaled MMA logic 1184 performs block scaling of input matrix B 1152B to compute scaled B values 1156B. To perform scaling of input matrix B 1152B, block-scaled MMA logic 1184 performs element-wise multiplication of each row vector of scale matrix B 1144B by each input vector 1180B in a chunk of input matrix B 1152B. The block-scaled MMA logic 1184 stores the results of the multiplications in scaled B values 1156B. Since the scale vector size is 2X, input matrix B 1152B is divided into 2 chunks, each having K/2 rows. The example input matrix B 1152B is shown as having K=8 rows for illustrative purposes, and K/4=2 rows per chunk. In one example, K=64, and each chunk has 64/2=32 rows. Further, each scale vector B 1182B in scale matrix B 1144B has N elements, where N is the number of columns in input matrix B 1152B.

Block-scaled MMA logic 1184 computes scaled A values 1156A by multiplying columns of input matrix A 1152A by columns of scale matrix A 1144A as follows. For the first chunk of input matrix A 1152A, e.g., columns 0-3, a scale vector A 1182A, which is the first column of scale matrix A 1144A, is multiplied by each of the 4 columns in the first chunk of input matrix A 1152A (columns 0-3) to compute a portion of scaled A values 1156A corresponding to the first 4 columns of input matrix A 1152A. In at least one embodiment, scaled A values 1156A is a matrix, in which case the scaled A values 1156A can be, e.g., the first 4 columns of scaled A values 1156A. In at least one embodiment, scaled A values 1156A are individual scaled values that are used by MMA operations without being stored in a matrix. Further, for the second chunk of input matrix A 1152A, e.g., columns 4-7, another scale vector A 1182A, which is the second column of scale matrix A 1144A, is multiplied by each of the 4 columns in the second chunk of input matrix A 1152A (columns 4-7) to compute a portion of scaled A values 1156A corresponding to the second 4 columns of input matrix A 1152A.

Block-scaled MMA logic 1184 computes scaled B values 1156B by multiplying rows of input matrix B 1152B by rows of scale matrix B 1144B as follows. For the first chunk of input matrix B 1152B, e.g., rows 0-3, a scale vector B 1182B, which is the first row of scale matrix B 1144B, is multiplied by each of the 4 rows in the first chunk of input matrix B 1152B (rows 0-3) to compute a portion of scaled B values 1156B corresponding to the first 4 rows of input matrix B 1152B. In at least one embodiment, scaled B values 1156B is a matrix, in which case the scaled B values 1156B can be, e.g., the first 4 rows of scaled B values 1156B. In at least one embodiment, scaled B values 1156B are individual scaled values that are used by MMA operations without being stored in a matrix. Further, for the second chunk of input matrix A 1152B, e.g., columns 4-7, another scale vector B 1182B, which is the second row of scale matrix B 1144B, is multiplied by each of the 4 rows in the second chunk of input matrix B 1152B (columns 4-7) to compute a portion of scaled B values 1156B corresponding to the second 4 rows of input matrix B 1152B.

Block-scaled MMA logic 1184 performs matrix multiplication operations to compute an accumulator matrix D 1138 using the scaled A values 1156A as elements of a scaled input matrix A and using the scaled B values 1156B as elements of a scaled matrix B.

FIG. 12 illustrates block-scaled MMA operations 1200 using scale matrices 1244 with a scale vector size of 4X, in accordance with at least one embodiment. In at least one embodiment, block-scaled MMA operations include selecting scale matrices 1244A, 1244B from scale data 1234, performing block scaling of input matrices 1252A, 1252B using the scale matrices 1244A, 1244B to compute scaled element values corresponding to the non-scaled element values of the input matrices 1252A, 1252B, and performing matrix multiplication using the scaled element values instead of one or more of the non-scaled scaled element values of the input matrices 1252A, 1252B. The matrix multiplication computes an accumulator matrix D 1238. Because the scale vector size is 4X in the example of FIG. 12, the scale matrix A 1244A includes four column vectors, and the scale matrix B 1244B includes four row vectors.

Scale factor selection logic 1270 selects scale matrix A 1244A from one or more columns of scale data 1234 as specified by scale factor selector operands 1222, and also selects scale matrix B 1244B from one or more columns of scale data 1234 as specified by scale factor selector operands 1222. Scale factor selection logic 1270 converts columns of scale data 1234 to rows for inclusion in scale matrix B 1244B, e.g., by performing a transpose operation to transpose a column of scale data 1234 into a row vector of scale matrix B 1244B.

Block-scaled MMA logic 1284 performs block scaling of input matrix A 1252A to compute scaled A values 1256A. To perform scaling of input matrix A 1252A, block-scaled MMA logic 1284 multiplies elements of each column vector of scale matrix A 1244A by elements of each input vector (e.g., column) in a chunk 1210 of input matrix A 1252A. The block-scaled MMA logic 1284 stores the results of the multiplications in scaled A values 1256A. Since the scale vector size is 4X in the example of FIG. 12, input matrix A 1252A is divided into 4 chunks 1210, each having K/4 columns. The example input matrix A 1252A is shown as having K=8 columns and K/4=2 columns per chunk 1210 for illustrative purposes. In at least one embodiment, K is 64, and each chunk 1210 has 64/4=16 columns. Further, each scale vector A in scale matrix A 1244A has M elements, where M is the number of rows in input matrix A 1252A.

Block-scaled MMA logic 1284 performs block scaling of input matrix B 1252B to compute scaled B values 1256B. To perform scaling of input matrix B 1252B, block-scaled MMA logic 1284 performs element-wise multiplication of each row vector of scale matrix B 1244B by each of the input vectors in a chunk 1212 of input matrix B 1252B. The block-scaled MMA logic 1284 stores the results of the multiplications in scaled B values 1256B. Since the scale vector size is 4X, input matrix B 1252B is divided into 4 chunks 1212, each having K/4 rows. The example input matrix B 1252B is shown as having K=8 rows for illustrative purposes, and K/4=2 rows per chunk 1212. In one example, K=64, and each chunk 1212 has 64/4=16 rows. Further, each scale vector B in scale matrix B 1244B has N elements, where N is the number of columns in input matrix B 1252B.

Block-scaled MMA logic 1284 computes scaled A values 1256A by multiplying columns of input matrix A 1252A by columns of scale matrix A 1244A as follows. Because the scale vector size is 4X, input matrix A 1252A has four chunks 1210, and scale matrix A 1244A has four column vectors. In the illustrated example, each chunk 1210 of input matrix A 1252A has K/4=2 column vectors. Each chunk 1210 corresponds to one of the column vectors of scale matrix A 1244A, and the column vectors of a chunk 1210 are multiplied by the corresponding column vector of scale matrix A 1244A, as shown by a pair of arrows from the two vectors in each chunk 1210 of input matrix A 1252A to an "x" (multiplication) symbol pointed to by an arrow from a corresponding column vector of scale matrix A 1244A.

For the first chunk 1210 of input matrix A 1252A, e.g., columns 0-1, a scale vector A, which is the first column of scale matrix A 1244A, is multiplied by each of the 2 columns in the first chunk 1210 of input matrix A 1252A (columns 0-1) to compute a portion of scaled A values 1256A corresponding to the first 2 columns of input matrix A 1252A. In at least one embodiment, scaled A values 1256A is a matrix, in which case the scaled A values 1256A can be, e.g., the first 2 columns of scaled A values 1256A. In at least one embodiment, scaled A values 1256A are individual scaled values that are used by MMA operations without being stored in a matrix. Further, for the second chunk 1210 of input matrix A 1252A, e.g., columns 2-3, another scale vector A, which is the second column of scale matrix A 1244A, is multiplied by each of the 2 columns in the second chunk 1210 of input matrix A 1252A (columns 2-3) to compute a portion of scaled A values 1256A corresponding to the second 4 columns of input matrix A 1252A. For the third and fourth chunks 1210 of input matrix A 1252A, the third and fourth columns of scale matrix A 1244A are similarly multiplied by the third and fourth chunks 1210 of input matrix A 1252A.

Block-scaled MMA logic 1284 computes scaled B values 1256B by multiplying rows of input matrix B 1252B by rows of scale matrix B 1244B as follows. Because the scale vector size is 4X, input matrix B 1252B has four chunks 1212, and scale matrix B 1244B has four row vectors. In the illustrated example, each chunk 1212 of input matrix B 1252B has K/4=2 row vectors. Each chunk 1212 corresponds to one of the row vectors of scale matrix B 1244B, and the row vectors of a chunk 1212 are multiplied by the corresponding row vector of scale matrix B 1244B, as shown by a pair of arrows from the two vectors in each chunk 1212 of input matrix B 1252B to an "x" (multiplication) symbol pointed to by an arrow from a corresponding column vector of scale matrix B 1244B.

For the first chunk 1212 of input matrix B 1252B, e.g., rows 0-1, a scale vector B, which is the first row of scale matrix B 1244B, is multiplied by each of the 2 rows in the first chunk 1212 of input matrix B 1252B (rows 0-1) to compute a portion of scaled B values 1256B corresponding to the first 2 rows of input matrix B 1252B. In at least one embodiment, scaled B values 1256B is a matrix, in which case the scaled B values 1256B can be, e.g., the first 2 rows of scaled B values 1256B. In at least one embodiment, scaled B values 1256B are individual scaled values that are used by MMA operations without being stored in a matrix. Further, for the second chunk 1212 of input matrix A 1252B, e.g., columns 2-3, another scale vector B, which is the second row of scale matrix B 1244B, is multiplied by each of the 2 rows in the second chunk 1212 of input matrix B 1252B (columns 2-3) to compute a portion of scaled B values 1256B corresponding to the second 2 rows of input matrix B 1252B. For the third and fourth chunks 1212 of input matrix B 1252B, the third and fourth rows of scale matrix B 1244B are similarly multiplied by the third and fourth chunks 1212 of input matrix B 1252B.

Block-scaled MMA logic 1284 performs matrix multiplication operations to compute an accumulator matrix D 1238 using the scaled A values 1256A as elements of a scaled input matrix A and using the scaled B values 1256B as elements of a scaled matrix B.

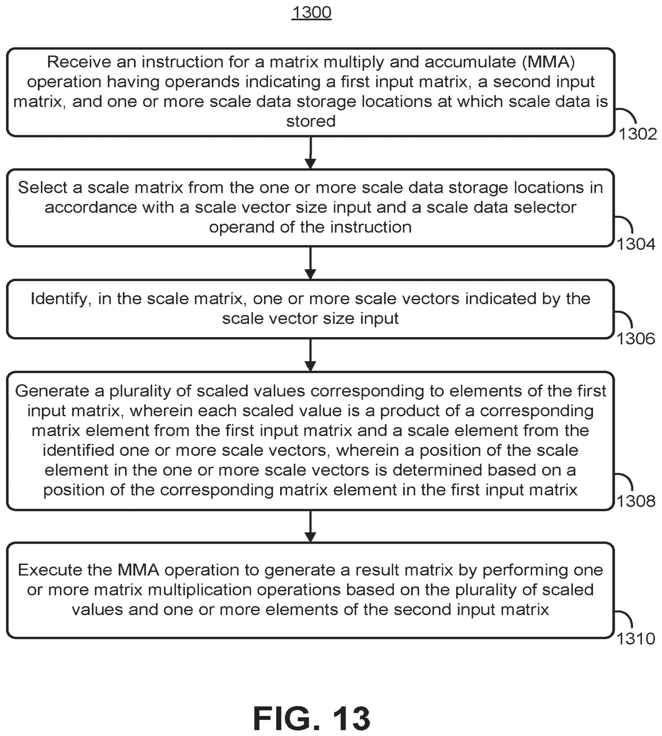

FIG. 13 illustrates an example process 1300 to perform block-scaled MMA operations using data stored in tensor memory and/or shared memory, in accordance with at least one embodiment. In at least one embodiment, some or all of process 1300 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. In at least one embodiment, code is stored on a computer-readable storage medium in form of a computer program comprising a plurality of computer-readable instructions executable by one or more processors. In at least one embodiment, a computer-readable storage medium is a non-transitory computer-readable medium. At least some computer-readable instructions usable to perform process 1300 are not stored solely using transitory signals (e.g., a propagating transient electric or electromagnetic transmission). A non-transitory computer-readable medium does not necessarily include non-transitory data storage circuitry (e.g., buffers, caches, and queues) within transceivers of transitory signals.

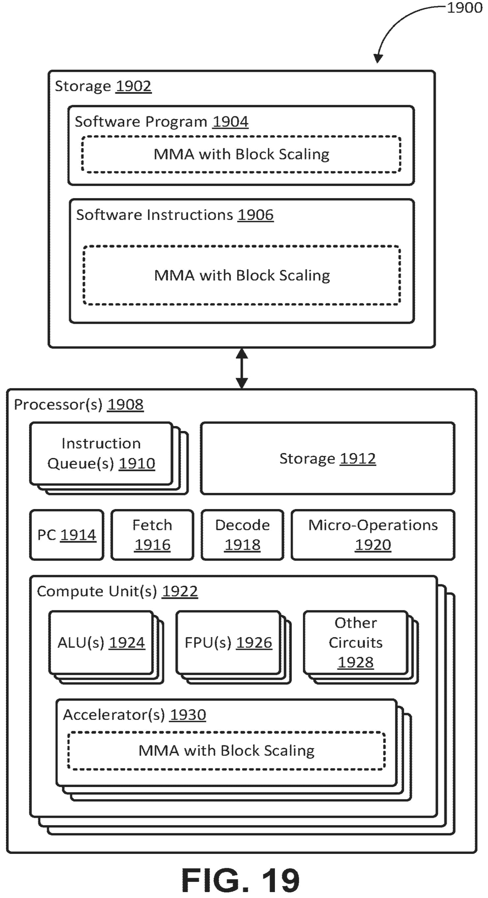

In at least one embodiment, process 1300 is performed by one or more systems such as those described in this present disclosure. In at least one embodiment, process 1300 is performed by the system such as described in connection with FIGS. 1-12. In at least one embodiment, process 1300 is performed by a system of one or more programming models (e.g., CUDA, HIP, oneAPI, and/or variations thereof). One or more processes of process 1300 are performed in any suitable order, including sequential, parallel, and/or variations thereof, and by any suitable system, such as those described herein, and using any suitable processing unit, such as a CPU, GPU, PPU, GPGPU, and/or variations thereof. Although process 1300 is depicted as a series of steps or operations, process 1300 may include altered or reordered steps or operations, or omit certain steps or operations, except where explicitly noted or logically required, such as when an output of one step or operation is used as input for another. In at least one embodiment, process 1300 is performed by one or more systems such as those described in connection with FIGS. 19-38C. One or more processes of process 1300 may be performed as part of performing one or more APIs such as those described herein.

The system performing at least a part of process 1300 includes code to at least receive 1302 an instruction for a matrix multiply and accumulate (MMA) operation having operands indicating a first input matrix, a second input matrix, and one or more scale data storage locations at which scale data is stored. The instruction can be an MMA instruction 112 that, when called in a block-scaled MMA invocation 302, has MMA operands 310 specifying matrices stored in tensor memory 130 and/or shared memory 150. The matrices include an input matrix A 132 (e.g., in tensor memory 130) or an input matrix A 152A (e.g., in shared memory 150). The matrices also include an input matrix B 152B (e.g., in shared memory 150).

The MMA instruction 112 is associated with or includes an MMA kind qualifier 124. If the MMA kind qualifier 124 is mxf4 or mxf4nvf4, which indicate that the matrix element type of the input matrices is a 4-bit quantity. That is, the mxf4 or mxf4nvf4 qualifier indicates that each element of matrix A and/or matrix B is stored in 4 bits of storage (e.g., in memory or a register). Further, The mxf4 and mxf4nvf4 qualifiers specify that the 4-bit elements of matrices A and B are to be stored in 4-bit containers, which uses 4 bits of data for each matrix element without using additional data. In at least one embodiment, using the 4-bit container is more efficient than using a container of a larger size, such as an 8-bit container. In at least one embodiment, the mxf8f6f4 specifies that the matrix element type of matrix A and/or matrix B is 8 bits, 6 bits, or 4 bits, and that the elements are to be stored in 8-bit containers. In at least one embodiment, using the 8-bit container is less efficient than using the 4-bit container, because less memory is used to store each matrix element, and less memory bandwidth and/or communication bandwidth (e.g., amount of data accessed, sent, received, or otherwise processed per unit time) is used by operations performed on matrix elements when the container size is 4 bits compared to a larger size such as 8 bits.

In at least one embodiment, the first input matrix corresponds to input matrix A 132 or 152A, the second input matrix corresponds to input matrix B 152B, and the scale data storage locations correspond to scale data A 134A and/or scale data B 134B of FIG. 1. In at least one embodiment, the first input matrix corresponds to input matrix A 632A stored in registers 660, and the second input matrix corresponds to input matrix B (register) 632B stored in registers 660. In at least one embodiment, the scale data storage locations corresponds to scale data operand 720A and/or scale data operand 720B. In at least one embodiment, the scale data storage locations correspond to scale data A 634A and/or scale data B 634B stored in registers 660.

The system performing at least a part of process 1300 includes code to at least select 1304 a scale matrix from the one or more scale data storage locations in accordance with a scale vector size input and a scale data selector operand of the instruction. The scale matrix can be scale matrix A 744A and/or scale matrix B 744B of FIG. 7, for example. The scale vector size input can be scale vector size qualifier 742, and the scale data selector operand can be scale factor selector operand 722A and/or scale factor selector operand 722B. In at least one embodiment, the system selects the scale matrix using the scale vector size qualifier 742, scale data operands 720, and/or scale factor selector operands 722. The system can select the scale matrix as described herein with respect to FIG. 9, for example. The scale matrix can correspond to the scale matrix A 944A, which includes at least one scale vector A 982A. The scale matrix can alternatively or additionally correspond to the scale matrix B 944B, which includes at least one scale vector B 982B.

The system performing at least a part of process 1300 includes code to at least identify 1306, in the scale matrix, one or more scale vectors indicated by the scale vector size input (e.g., the scale vector size qualifier 742). The scale matrix includes one or more scale vectors, which can be row or column vectors depending on whether the scale matrix is for scaling an input matrix A or an input matrix B. For scaling an input matrix A, the scale matrix contains column vectors of elements to be multiplied by elements of input matrix A. For scaling an input matrix B, the scale matrix contains row vectors of elements to be multiplied by elements of input matrix B. The number of vectors selected from the scale matrix is specified by the scale vector size input. In at least one embodiment, the system identifies the scale vectors as described herein with respect FIGs. 1 and 9, for example.

The system performing at least a part of process 1300 includes code to at least generate 1308 a plurality of scaled values corresponding to elements of the first input matrix. Each scaled value is a product of a corresponding matrix element from the first input matrix and a scale element from the identified one or more scale vectors. Further, a position of the scale element in the one or more scale vectors is determined based on a position of the corresponding matrix element in the first input matrix. The scaled values can be generated by multiplying matrix elements by corresponding scale elements of the scale vectors.

In at least one embodiment, the system generates scaled A values 236 in tensor memory or scaled A values 256A in shared memory, and/or generates scaled B values 256B in shared memory. The scaled values are also described herein with respect to the scaled A values 1056A and scaled B values 1056B of FIG. 10, for example. in at least one embodiment, scaled matrices A and B are generated using element-wise multiplication, in which the vectors of input matrices A and B are multiplied by respective scale factors.

The system performing at least a part of process 1300 includes code to at least execute 1310 the MMA operation to generate a result matrix by performing one or more matrix multiplication operations based on the plurality of scaled values and one or more elements of the second input matrix. In at least one embodiment, the system performs matrix multiplication operations. For example, the block-scaled MMA logic 282 multiplies a scaled matrix A having the same dimensions as the first input matrix and containing the scaled values in elements at locations in the matrix (e.g., row, column locations) corresponding to the locations of the elements of the first input matrix A that were multiplied by scale factors to compute the scaled values. In at least one embodiment, the matrix multiplication operations for multiplying an input scaled matrix A of dimensions MxK by an input scaled matrix B of dimensions KxN include generating an output matrix D having dimensions MxN and, for each element D[i, j] of the output matrix, computing a product of each element of row i of scaled matrix A and a respective element of column j of scaled matrix B, then computing a sum of the products of and storing the sum of the products in D[i, j]. The sum of products of each row and column is also referred to as a dot product of a row vector and column vector. In at least one embodiment, input matrix A

In another example, the block-scaled MMA logic 282 replaces the elements of the first input matrix with the scaled values that are computed by multiplying the elements of the first input matrix by the scale values. In at least one embodiment, the block-scaled MMA logic 282 generates an accumulator matrix D 238 using matrix multiplication to multiply matrix elements having the scaled A values 236 by the matrix elements of the second input matrix.

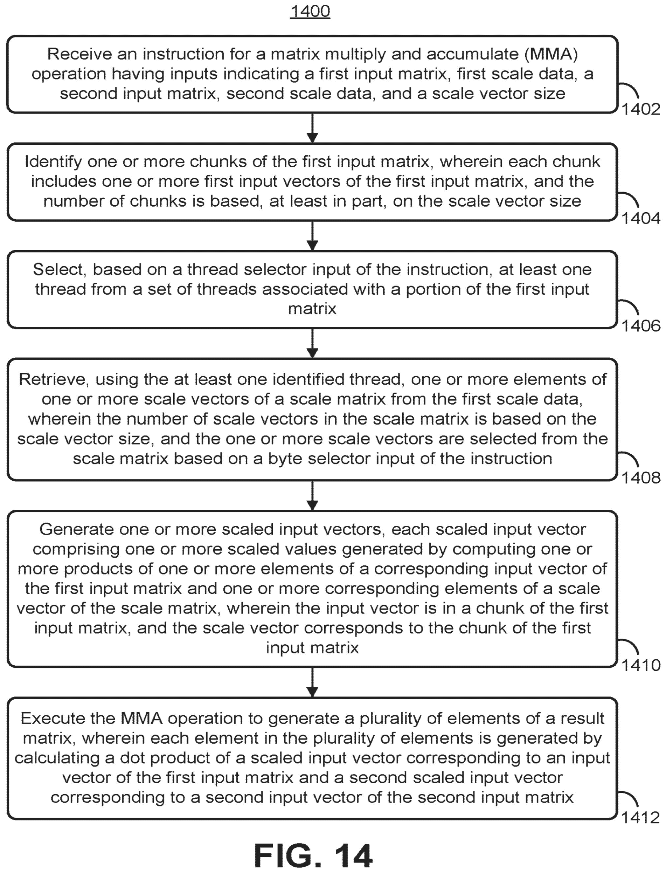

FIG. 14 illustrates an example process 1400 to perform block-scaled MMA operations using data stored in registers, in accordance with at least one embodiment. In at least one embodiment, some or all of process 1400 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. In at least one embodiment, code is stored on a computer-readable storage medium in form of a computer program comprising a plurality of computer-readable instructions executable by one or more processors. In at least one embodiment, a computer-readable storage medium is a non-transitory computer-readable medium. At least some computer-readable instructions usable to perform process 1400 are not stored solely using transitory signals (e.g., a propagating transient electric or electromagnetic transmission). A non-transitory computer-readable medium does not necessarily include non-transitory data storage circuitry (e.g., buffers, caches, and queues) within transceivers of transitory signals.

In at least one embodiment, process 1400 is performed by one or more systems such as those described in this present disclosure. In at least one embodiment, process 1400 is performed by the system such as described in connection with FIGS. 1-12. In at least one embodiment, process 1400 is performed by a system of one or more programming models (e.g., CUDA, HIP, oneAPI, and/or variations thereof). One or more processes of process 1400 are performed in any suitable order, including sequential, parallel, and/or variations thereof, and by any suitable system, such as those described herein, and using any suitable processing unit, such as a CPU, GPU, PPU, GPGPU, and/or variations thereof. Although process 1400 is depicted as a series of steps or operations, process 1400 may include altered or reordered steps or operations, or omit certain steps or operations, except where explicitly noted or logically required, such as when an output of one step or operation is used as input for another. In at least one embodiment, process 1400 is performed by one or more systems such as those described in connection with FIGS. 19-38C. One or more processes of process 1400 may be performed as part of performing one or more APIs such as those described herein.

The system performing at least a part of process 1400 includes code to at least receive 1402 an instruction for a matrix multiply and accumulate (MMA) operation having inputs indicating a first input matrix, first scale data, a second input matrix, second scale data, and a scale vector size. The instruction can be an MMA instruction 612 that, when called in a block-scaled MMA invocation 802, has MMA operands 810 specifying matrices stored in registers 660. The matrices include an input matrix A 632A and an input matrix B 632B. The MMA operands 810 also specify the first scale data, e.g., as scale data A 634A, and the second scale data, e.g., as scale data B 634B. The MMA instruction 612 is also associated with or includes the scale vector size, e.g., as scale vector size qualifier 642.

The system performing at least a part of process 1400 includes code to at least identify 1404 one or more chunks of the first input matrix, wherein each chunk includes one or more first input vectors of the first input matrix, and the number of chunks is based, at least in part, on the scale vector size. The system identifies the chunks as described herein with respect to, e.g., FIG. 2 and FIG. 11, which illustrates example chunks 1110 of input matrix A 1152A and chunks 1112 of input matrix B 1152B. In at least one embodiment, the MMA instruction 612 has an MMA kind qualifier 824 that specifies the number of chunks in the input matrices A and B.

The system performing at least a part of process 1400 includes code to at least select 1406, based on a thread selection input of the instruction, at least one thread from a set of threads associated with a portion of the first input matrix. The thread selection input can be, e.g., scale one or more factor selector operands 822 described herein with respect to FIG. 8. The scale factor selector operands 822 include a scale factor A byte and thread selector 834A, which include a byte selector ("byte-id-a") and a thread selector ("thread-id-a"). Similarly, the scale factor selector operands 822 include a scale factor B byte and thread selector 834B, which includes a byte selector ("byte-id-b") and a thread selector ("thread-id-b").

The system selects two threads from a four-thread thread quad 1752 associated with the first input matrix (e.g., an input matrix A). The two threads for the first input matrix are selected according to the thread-id-a selector value, e.g., as described herein with respect to FIGs. 17A and 17B. The system also selects one thread from a four-thread quad 1752 associated with the second input matrix (e.g., an input matrix B). For example, the system uses threads T0 and T1 of the thread quad 1752 to contribute the scale factors for scaling input matrix A if the thread-id-a selector is 0, or uses threads T2 and T3 to contribute the scale factors if the thread-id-selector is 1. Further, the system uses one of the threads of the thread quad 1752 to contribute the scaling factors for scaling input matrix B. The system selects thread T0, T1, T2, or T3 from the quad 1752 depending on the value of the thread-id-b selector value, as described herein with respect to FIG. 18.

The system performing at least a part of process 1400 includes code to at least retrieve 1408, using the at least one identified thread, one or more elements of one or more scale vectors of a scale matrix from the first scale data. The number of scale vectors in the scale matrix is based on the scale vector size, and the one or more scale vectors are selected from the scale matrix based on a byte selector operand of the instruction.

For example, if input matrix A is to be scaled by a scale matrix, then the system uses the two threads to contribute the scaling factors for scaling the input matrix A. One of the two threads contributes scaling factors from scale data A 734A to a first half of scale matrix A 1780, and the other thread contributes scaling factors from scale data A 734A to a second half of scale matrix A 1782, as described herein with respect to FIG. 17B. The scaling factors that are contributed to scale matrix A are selected from one or more sub-columns of a scale data column 1664 of scale data A 734A in accordance with a byte-id-a selector, as described herein with respect to FIGs. 4B, 5, and 16. For example, 1, 2, 4, or other number of sub-columns of scale data A 734A can be contributed to (e.g., loaded and/or included in) scale matrix A 744A as column vectors using the threads specified by thread-id-a, where the number of sub-columns is specified by the scale vector size qualifier 742.

Further, for example, if input matrix B is to be scaled by a scale matrix, then the system uses one thread to contribute the scaling factors for scaling the input matrix B. The thread contributes scaling factors from scale data B 734B to scale matrix B 1844B, as shown in FIG. 18. The scaling factors that are contributed to scale matrix B are selected from one or more sub-columns of a scale data column 1664 of scale data B 734B in accordance with a byte-id-b selector. For example, 1, 2, 4, or other number of sub-columns of scale data B 734B can be contributed to (e.g., loaded, transposed, and/or included in) scale matrix B 744B as row vectors using the thread specified by thread-id-b, where the number of sub-columns is specified by the scale vector size qualifier 742.

The system performing at least a part of process 1400 includes code to at least generate 1410 one or more scaled input vectors, each scaled input vector comprising one or more scaled values. The system generates the scaled values by computing one or more products of one or more elements of a corresponding input vector of the first input matrix and one or more corresponding elements of a scale vector of the scale matrix. The input vector is in a chunk of the first input matrix, and the scale vector corresponds to the chunk of the first input matrix. For example, if the scale vector size is 2X, the first input matrix corresponds to input matrix A 1152A having 2 chunks 1110 of K/2 columns each. Further, the input vector can correspond to an input vector A 1180A, the chunk of the first input matrix can correspond to the chunk 1100 containing the first 4 columns of input matrix A 1152A, and the scale vector can be scale vector A 1182A, which is the first column of scale matrix A 1144A. The scale vector A 1182A is multiplied by each of the 4 columns in the chunk.

The system performing at least a part of process 1400 includes code to at least execute 1412 the MMA operation to generate a plurality of elements of a result matrix. Each element in the plurality of elements is generated using a matrix multiplication technique in which the system calculates a dot product of a scaled input vector corresponding to an input vector of the first input matrix and a second scaled input vector corresponding to a second input vector of the second input matrix.

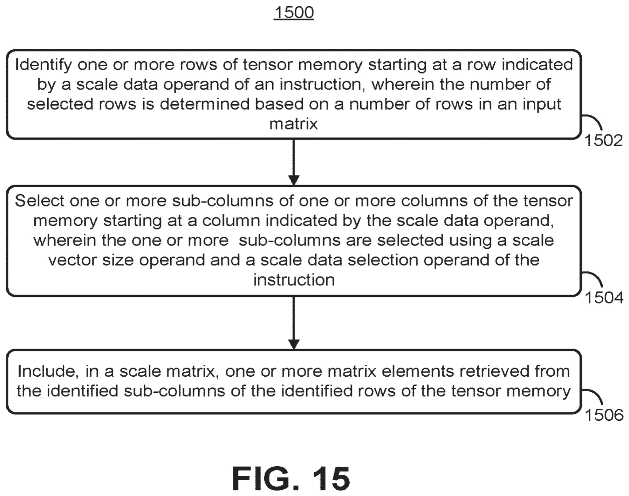

FIG. 15 illustrates an example process 1500 to select scale matrix elements from scale data, in accordance with at least one embodiment. In at least one embodiment, some or all of process 1500 (or any other processes described herein, or variations and/or combinations thereof) is performed under control of one or more computer systems configured with computer-executable instructions and is implemented as code (e.g., computer-executable instructions, one or more computer programs, or one or more applications) executing collectively on one or more processors, by hardware, software, or combinations thereof. In at least one embodiment, code is stored on a computer-readable storage medium in form of a computer program comprising a plurality of computer-readable instructions executable by one or more processors. In at least one embodiment, a computer-readable storage medium is a non-transitory computer-readable medium. At least some computer-readable instructions usable to perform process 1500 are not stored solely using transitory signals (e.g., a propagating transient electric or electromagnetic transmission). A non-transitory computer-readable medium does not necessarily include non-transitory data storage circuitry (e.g., buffers, caches, and queues) within transceivers of transitory signals.

In at least one embodiment, process 1500 is performed by one or more systems such as those described in this present disclosure. In at least one embodiment, process 1500 is performed by the system such as described in connection with FIGS. 1-12. In at least one embodiment, process 1500 is performed by a system of one or more programming models (e.g., CUDA, HIP, oneAPI, and/or variations thereof). One or more processes of process 1500 are performed in any suitable order, including sequential, parallel, and/or variations thereof, and by any suitable system, such as those described herein, and using any suitable processing unit, such as a CPU, GPU, PPU, GPGPU, and/or variations thereof. Although process 1500 is depicted as a series of steps or operations, process 1500 may include altered or reordered steps or operations, or omit certain steps or operations, except where explicitly noted or logically required, such as when an output of one step or operation is used as input for another. In at least one embodiment, process 1500 is performed by one or more systems such as those described in connection with FIGS. 19-38C. One or more processes of process 1500 may be performed as part of performing one or more APIs such as those described herein.

The system performing at least a part of process 1500 includes code to at least identify 1502 one or more rows of tensor memory starting at a row indicated by a scale data operand of an instruction, wherein the number of selected rows is determined based on a number of rows in an input matrix. For example, the rows can correspond to lanes 446 of tensor memory 430, as described herein with respect to FIG. 4B. The system can identify M rows of tensor memory 430 corresponding to M lanes of tensor memory, where the M lanes start at a lane 446A indicated by a scale data operand such as scale data A 234A. The scale data A 234A can be a shared memory descriptor including a lane number and a column number, for example,

The system performing at least a part of process 1500 includes code to at least select 1504 one or more sub-columns of one or more columns of the tensor memory starting at a column indicated by the scale data operand, wherein the one or more sub-columns are selected using a scale vector size operand and a scale data selection operand of the instruction. For example, the system selects one or more sub-columns 444 of a column 464A of tensor memory 430, where the location (e.g., column number) of column 464A in tensor memory 432 is specified by a scale data operand such as scale data A 234A.

The system performing at least a part of process 1500 includes code to at least include 1506, in a scale matrix, one or more matrix elements retrieved from the identified sub-columns of the identified rows of the tensor memory. For example, as shown in FIGs. 4B and 5, if scale vector size=2X and SFA_ID=0, then the system selects two scale factors, such as SF_0 448A and SF_1 448B, from two sub-columns 544A, 544B, respectively, in a lane 446A of a tensor memory column 464A. The system includes the two scale factors SF_0 and SF_1 in a row of scale matrix A 244A as two matrix elements in two respective columns. Referring to FIG. 11, two scale factors can be stored in the two elements in the top row of scale matrix A 1144A.

FIG. 16 illustrates scale factors selected from registers 660 for various scale factor selector operands 822, in accordance with at least one embodiment. The scale factor selector operands 822 are operands of a block-scaled MMA invocation 802 as described with respect to FIG. 8. The scale factor selector operands 822. The scale factor selectors 834 specify which scale factors SF0, SF1, SF2, SF3 are to be selected by scale factor selection logic 770 from a scale data column 1664. In at least one embodiment, the scale data column 1664 can be in scale data A 734A or in scale data B (registers) 734B. For example, there can be different scale data columns 1664 in scale data A 734A and scale data B 734B.

In at least one embodiment, scale data column 1664 is stored in one or more registers 660. Scale data column 1664 includes four sub-columns 1644A-1644D. Each sub-column 1644 can be 1 byte of register storage, in which case each scale data column 1664 is 32 bits of data,. Each scale factor SF0, SF1, SF2, SF3 is stored in a respective sub-column 1644A, 1644B, 1644C, 1644D of scale data column 1664.

Scale factor selection logic 770 selects one or more scale factors ("scale factors A") for use in block scaling of an input matrix A 732A. The scale factor selection logic 770 can cause the scale factors A to be included in a scale matrix A 744A (e.g., by referencing or by copying the scale factors A). As an example, scale factors A can include one, two, or four scale factors SF0, SF1, SF2, and/or SF3.

The scale factor selector operands 822 include a scale factor A byte and thread selector 834A, which includes a "byte-id-a" selector. The byte-id-a selector is used by scale factor selection logic 770 to select one, two, or four scale factors SF0, SF1, SF2, and/or SF3 from a scale data column 1664. The scale factor A byte and thread selector 834A can also include a thread-id-a selector, which is used by scale factor selection logic 770 to select one or more threads that are to contribute the scale factors that are indicated by the byte-id-a selector as described herein with respect to FIGs. 17A and 17B, for example.

The scale factor selection logic 770 selects one or more scale factors ("scale factors B") for use in block scaling of input matrix B 732B. The scale factor selection logic 770 can cause the scale factors B to be included in scale matrix B 744B (e.g., by referencing or by copying the scale factors B). As an example, scale factors B can include one, two, or four scale factors SF0, SF1, SF2, and/or SF3. The scale factor selector operands 822 include a scale factor B byte and thread selector 834B, which includes a "byte-id-b" selector to be used by scale factor selection logic 770 to select one, two, or four scale factors SF0, SF1, SF2, and/or SF3 from a scale data column 1664 for multiplication by input matrix B. The scale factor B byte and thread selector 834B can also include a thread-id-b selector, which is used by scale factor selection logic 770 to select one or more threads that are to contribute the scale factors that are indicated by the byte-id-b selector, as described herein with respect to FIGs. 17A and 18, for example.

In at least one embodiment, scale data column 1664 includes a number of rows corresponding to the number of rows in input matrix A 732A. The scale factor selection logic 770 selects a scale factor from each row of scale data column 1664 to be multiplied by elements of a corresponding row of input matrix A. The scale factor selection logic 770 can cause each selected scale factor value, e.g., SF0, SF1, SF2, or SF3, to be included in a column of a scale matrix A 744A. In at least one embodiment, scale data column 1664 includes a number of rows corresponding to the number of columns in input matrix B 732B. The scale factor selection logic 770 selects a scale factor from each row of scale data column 1664 to be multiplied by elements of a corresponding column of input matrix B. The scale factor selection logic 770 can cause each selected scale factor value to be included in a row of scale matrix B 744B.

As shown in a scale vector size=1X case 1660A, if the scale vector size specified by scale vector size qualifier 842 is 1X, then one scale factor is selected from a scale data column 1664 in scale data A 734A for input matrix A. Similarly, one scale factor is selected from a scale data column 1664 in scale data B 734B for input matrix B. More specifically, as shown in example scale data column 1664A, in the 1X case, if the scale factor selector byte-id-a is 0, then the scale factor selection logic 770 selects scale factor SF0 from sub-column 1644A to be multiplied by elements of matrix A. Further, as shown in example scale data columns 1664B, 1664C, 1664D, in the 1X case, scale factor selector byte-id-a values of 1, 2, and 3 cause the scale factor selection logic 770 to select scale factors SF1, SF2, and SF3 from sub-columns 1644B, 1644C, 1644D, respectively, to be multiplied by elements of matrix A. Similarly, scale factor selector byte-id-b values of 0, 1, 2, or 3 cause the scale factor selection logic 770 to select the scale factors SF0, SF1, SF2, or SF3, respectively, to be multiplied by elements of matrix B.

As shown in a scale vector size=2X case 1660B, if the scale vector size is 2X, then two scale factors are selected from a scale data column 1664 in scale data A 734A for input matrix A. Similarly, two scale factors are selected from a scale data column 1664 in scale data B 734B for input matrix B. More specifically, as shown in example scale data column 1664E, in the 2X case, if the scale factor selector byte-id-a is 0, then the scale factor selection logic 770 selects two scale factors SF1 and SF0 from sub-columns 1644B, 1644A to be multiplied by elements of matrix A. Further, as shown in example scale data column 1664F in the 2X case, a scale factor selector byte-id-a value of 2 causes the scale factor selection logic 770 to select scale factors SF3 and SF2 from sub-columns 1644D and 1644C, respectively, to be multiplied by elements of matrix B. Similarly, a scale factor selector byte-id-b value of 0 causes the scale factor selection logic 770 to select the scale factors SF1 and SF0 to be multiplied by elements of matrix B, and a scale factor selector byte-id-b value of 2 causes the scale factor selection logic 270 to select the scale factors SF3 and SF2 to be multiplied by elements of matrix B.

As shown in a scale vector size=4X case 1660C, if the scale vector size is 4X, then four scale factors are selected from a scale data column 1664 in scale data A 734A for matrix A. Similarly, four scale factors are selected from a scale data column 1664 in scale data B 734B for input matrix B. More specifically, as shown in example scale data column 1664G, in the 4X case, if the scale factor selector byte-id-a is 0, then the scale factor selection logic 770 selects four scale factors SF3, SF2, SF1, and SF0 from sub-columns 1644D, 1644C, 1644B, 1644A to be multiplied by elements of input matrix A. Similarly, as shown in scale data column 1664G in the 4X case, a scale factor selector byte-id-b value of 0 causes the scale factor selection logic 770 to select scale factors SF3, SF2, SF1, and SF0 from sub-columns 1644D, 1644C, 1644B, 1644A, respectively, to be multiplied by elements of input matrix B. Although particular numbers of rows and columns, particular scale factors (e.g., 1, 2, and 4), and a particular number of scale factors are described in examples here, other numbers of rows and columns, and other scale factors can be used in other examples by changing numbers and scale factors in accordance with the description herein.

FIG. 17A illustrates a fragment layout of an input matrix 732A and associated thread IDs of a warp, including threads that contribute scale factors from scale data 734A, in accordance with at least one embodiment. Matrix A fragment 1750 includes, for example, 32 columns and 8 rows of an input matrix A 732A. The input matrix A 732A is to be used in an MMA operation having an example shape m16n8k64, in which M is 16, n is 8, and k is 64. Since input matrix A 732A has 16 rows and 64 columns, the matrix A fragment 1750, which has 8 rows (dimension M) and 32 columns (dimension K), represents one-fourth of an input matrix A 732A. Each column of the matrix A fragment 1750 contains 32 bits of data and can store 8 4-bit elements of an input matrix A 732A.

The matrix A fragment 1750 is processed by 4x8=32 threads (e.g., one warp) using the mapping of matrix A fragment 1750 to threads shown in FIG. 17A. Each row of the matrix A fragment 1750 is processed by 4 threads, which form a thread quad 1752. Two threads of a thread quad 1752 retrieve scale factors from scale data A 734A as described herein, for example.

The columns of matrix A fragment 1750 are divided into four groups of 8 columns each for MMA computations (e.g., matrix multiplication computations performed subsequent to block scaling). Each group includes eight elements 1770 of one row of the matrix A fragment 1750. Accordingly, each row of the matrix A fragment 1750 has four groups of eight elements. The eight elements 1770 are, e.g., eight adjacent elements of in eight respective columns of a group in the matrix A fragment 1750. A first group of eight elements 1770A includes the eight matrix elements in columns 0-7 of matrix A fragment 1750. A second group of eight elements 1770B includes the eight matrix elements in columns 8-15. A third group of eight elements 1770C includes the eight matrix elements in columns 17-23. A fourth group of eight elements 1770D includes the eight matrix elements in columns 24-21.

In the example of FIG. 17A, the MMA computations are performed by 32 threads (e.g., a warp). Each element is a 4-bit value (e.g., E2M1), so each group of eight elements 1770 is 32 bits in size. Each group of eight elements 1770 is processed by one of the threads performing the MMA computations. The four groups of each row are processed by four corresponding threads, which are referred to as a thread quad 1752. For example, thread quad 1752A, which processes the first row of the matrix A fragment 1750 in an MMA computation, includes threads T0, T1, T2, and T3. To perform the matrix multiplication and accumulation, thread T0 processes columns 0-7, thread T1 processes columns 8-15, thread T2 processes columns 17-23, and thread T3 processes columns 24-31. Thread quad 1752B processes the second row, and so on for the third through eighth rows. The eight row is processed by thread quad 1752H. Because each row of matrix A fragment 1750 is processed by 4 threads, and the matrix A fragment 1750 has eight rows, 32 threads (e.g., one warp) are used to perform the MMA operations on the 8x32 matrix A fragment 1750 in parallel. Further, because the matrix A fragment 1750 is one-fourth of an example 17x64 input matrix A 732A, four warps can be used to process a full input matrix A 732A in parallel.

A thread ID and associated fragment IDs a0, ..., a7 indicating eight columns to be processed by the thread are shown, for each thread, in the form Tx:{a0, ..., a7}, which is referred to herein as thread ID and fragment IDs 1754. For example, thread ID and fragment IDs 1754A includes a thread ID T28 of a thread having ID=28 to perform MMA computations on the first group of eight columns in row 7 and a sequence of eight fragment IDs corresponding to the first group of eight columns. As another example, thread ID and fragment IDs 1754B includes a thread ID T29 of a thread to perform MMA computations on the first group of eight columns in row 7 and a sequence of eight fragment IDs corresponding to the second group of eight columns.

A sequence of fragment IDs {a0, ..., a7} includes eight fragment IDs a0...a7. Each fragment ID identifies a column of a matrix (e.g., of an input matrix A 732A). The combination of a thread ID and a fragment ID correspond to an element of matrix A. For example, thread ID T0 and fragment ID a7 correspond to the element at row #0, column #7 of matrix A. As another example, in an MMA operation of size M=16, N=8, K=64 (MMA shape m16n8k64), input matrix A 732A is 16x64, matrix B input matrix B 732B is a64x8, and the resulting matrix D 138 produced by multiplying A by B is 16x8.

In at least one embodiment, block scaling is performed prior to matrix multiplication and accumulation operations. Thread quad 1752A includes four threads T0-T3, two of which contribute (e.g., retrieve) scale factors of scale data A 734A to be multiplied by elements of row 0 of matrix A fragment 1750. For example, the selected two threads of thread quad 1752A can retrieve the scale factors from scale data A 734A and include the retrieved scale factors in a scale matrix A 744A for multiplication by elements of row 0 of a chunk of columns of matrix A. Further, thread quad 1752B includes four threads T4-T7, two of which are selected to contribute scale factors of scale data A 734A to be multiplied by elements row 1 of matrix A fragment 1750. Still further, thread quad 1752H includes four threads T28-T31, two of which are selected to contribute scale factors of scale data A 734A to be multiplied by elements of row 7 of matrix A fragment 1750. In at least one embodiment, scale factors of scale data B 734B are contributed by a single thread, since half as many scale factor multiplications are performed for matrix B, which is, e.g., 64x8, than for matrix A, which is, e.g., 16x64 in the m16n8k64 example shape.

The thread pair to contribute scale factors of scale data A 734A is selected using a thread-id-a selector, which is a portion of scale factor A byte and thread selector 834A, as described with reference to FIG. 17B. The thread to contribute the scale factors of scale data B 734B is selected using a thread-id-b selector, which is a portion of scale factor B byte and thread selector 834B, as described with reference to FIG. 18.

FIG. 17B illustrates thread pairs that contribute scale factors from a scale data A 1734A to form a scale matrix A 1744A, in accordance with at least one embodiment. In at least one embodiment, scale data A 1734A and scale matrix A 1744A correspond to scale data 734A and scale matrix A 744A of FIG. 7, respectively. In at least one embodiment, one or more portions of a scale matrix A 744A, which contain scale factors, are contributed (e.g., loaded from scale data A 734A) by two threads of a thread quad 1752. To perform block scaling operations, a scale factor SF_A and/or a scale factor SF_B are retrieved from scale data A 734A and/or scale data B 734B, respectively. Each of the scale factors SF_A and SF_B can be an 8-bit value (e.g., UE8M0 or UE4M3), for example.

In block scaling operations, an element of matrix A is multiplied by a corresponding scale factor SF_A selected from scale matrix A 1744A to compute a scaled element of matrix A. Further, an element of matrix B is multiplied by a corresponding scale factor SF_B selected from a scale matrix B 744B to compute a scaled element of matrix B. The scaled elements can be stored in any suitable registers 760 and/or memory locations (e.g., in tensor memory 230 or shared memory 250), for example. The scaled elements correspond to the scaled A values 1156A and/or the scaled B values 1156B described with respect to FIG. 11, for example. The scaled elements are used as input to matrix multiplication and accumulation operations. The matrix multiplication and accumulation operations are performed by one or more of the threads that process the matrix A fragment 1750. The particular columns or rows of scale data 734A, 734B to be retrieved from registers 760 and the particular threads that contribute the scale factors SF_A and SF_B from scale data B 734B, and/or perform other operations to contribute the scale factors, are specified by the scale factor A byte and thread selector 834A and scale factor B byte and thread selector 834B operands, respectively.

In the example of FIG. 17B, two threads of a thread quad 1752 are used to retrieve the SF_A scale factors for matrix A, and one thread of a thread quad 1752 is used to retrieve the SF_B scale factors for matrix B. In one example, the scale factors SF_A are arranged in a scale matrix A 1744A having 16 rows and 4 columns (although 1, 2, 4, or other number of the columns are used for block scaling, depending on whether the scale vector size qualifier 842 is 1X, 2X, 4X, or other value). For each of the rows (e.g., 16 rows) of scale matrix A 244A, scale factor(s) SF_A from 1, 2, or 4 of the columns of scale matrix A 744A are to be multiplied by corresponding elements of a corresponding row of a matrix such as input matrix A 732A, for example. The particular columns in each row of scale matrix A 244A that provide the scale factor(s) SF_A are selected by a byte-id-a portion of the scale factor A byte and thread selector 834A operand.

As shown in FIG. 18, the scale factors SF_B are arranged in a scale matrix B 1844B (corresponding to scale matrix B 744B) having 4 rows and 8 columns. In at least one embodiment, 1, 2, or 4 of the 4 rows are used for block scaling, depending on whether the scale vector size qualifier 342 is 1X, 2X, or 4X. For each of the columns (e.g., 8 columns) of scale matrix B 244B, scale factor(s) SF_B from 1, 2, or 4 of the rows of scale matrix B 244B are to be multiplied by corresponding elements of a corresponding row of input matrix B 252B, for example. The particular columns in each row of scale matrix A 244A to provide the scale factor(s) SF_B are selected by a byte-id-b portion of the scale factor selector B 424B operand.

Referring again to FIG. 17B, a first half of scale matrix A 1780, which includes rows 0-7 of scale matrix A 744A, is contributed from scale data A 734A by thread 0 (e.g., T0) from a thread quad 1752 if the thread-id-a portion of scale factor selector A 424A is 0, or by thread 2 (e.g., T2) of the thread quad 1752 if the thread-id-a portion is 1. In other words, if the scale factor selector A 424A specifies that thread-id-a is 0, the lower two threads T0 and T1 of the thread quad 1742 contribute the scale factors SF_A for the two halves of scale matrix A 1744A. If the scale factor selector A 424A specifies that thread-id-a is 1, the upper two threads T2 and T3 of the thread quad 1742 contribute the scale factors SF_A for the two halves of scale matrix A 1744A. As a further example, if thread-id-a is 0, then thread T0 contributes (e.g., loads) rows 0-7 of scale matrix 1744A (which has four 8-bit columns) from scale data A 234A, and thread T1 contributes rows 8-15 from scale data A 234A. As still another example, if thread-id-a is 1, then thread T2 contributes rows 0-7 of scale matrix 1744A from scale data A 234A, and thread T3 contributes rows 8-15 from scale data A 234A.

A second half of scale matrix A 1782, which includes rows 8-15 of scale matrix A 244A, is contributed by thread 1 (e.g., T1) of a thread quad 1752 if a thread-id-a portion of scale factor selector A 424A is 0, or by thread 3 (e.g., T3) of the thread quad 1752 if the thread-id-a portion of the scale factor selector A 424A is 1. Although scale matrix A 1744A is described as having 1, 2, or 4 columns in examples described herein, scale matrix A 1744A can have any suitable number of columns in other examples.

FIG. 18 illustrates threads that contribute scale factors from scale data B 1834B to form a scale matrix B 1844B, in accordance with at least one embodiment. Scale data B 1834B includes scale data to be used for scaling an input matrix B 252B. In at least one embodiment, scale data B 1834 and scale matrix B 1844B correspond to scale data B 734 and scale matrix B 744B of FIG. 7, respectively. Scale matrix B 1844B is contributed (e.g., selected, loaded, or otherwise accessed) from scale data B 1834B by one thread of a thread quad 1752. In at least one embodiment, the scale matrix B 644B is otherwise accessed from scale data 634B by one or more threads of a thread quad 1752. Scale matrix B 1844B contains scale factors SF_B. Scale matrix B 1844B is contributed by thread 0 (e.g., T0) from a thread quad 1752 if the thread-id-b of a scale factor B byte and thread selector 834B is 0, by thread T1 if the thread-id-b is 1, by thread T2 if the thread-id-b is 2, or by thread T3 if the thread-id-b is 3.

FIG. 19 illustrates an example of a system 1900 that can include software and hardware to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described herein, according to at least one embodiment. System 1900 can include storage 1902 and processor(s) 1908. Storage 1902 can include, for example, memory, cache, or other storage described further herein. Storage 1902 can be separate from processor(s) 1908, or storage 1902 can be included in processor(s) 1908 (e.g., in storage 1912). In at least one embodiment, software program 1904 and/or software instructions 1906 can be stored in memory, cache, or other storage and provided to processor(s) 1908 to cause one or more circuits of processor(s) 1908 to perform operations described herein. In at least one embodiment, software program 1904 and/or software libraries (or instructions) 1906 can be integrated into one or more circuits of processor(s) 1908. Software program 1904, which can be used to perform any of the operations described herein, may be stored on storage 1902.

In at least one embodiment, as used in any implementation described herein, unless otherwise clear from context or stated explicitly to contrary, a module refers to any combination of software logic, firmware logic, hardware logic, and/or circuitry configured to provide functionality described herein. In at least one embodiment, software is embodied as a software package, code and/or instruction set or instructions, and "hardware," as used in any implementation described herein, includes, for example, singly or in any combination, hardwired circuitry, programmable circuitry, state machine circuitry, fixed function circuitry, execution unit circuitry, and/or firmware that stores instructions performed by programmable circuitry. In at least one embodiment, modules are, collectively or individually, embodied as circuitry that forms part of a larger system, for example, an integrated circuit (IC), system on-chip (SoC), and so forth. In at least one embodiment, a module performs one or more processes in connection with any suitable processing unit and/or combination of processing units, such as one or more CPUs, GPUs, GPGPUs, PPUs, and/or variations thereof including those further described herein.

In at least one embodiment, software program 1904 can include a collection of software code, commands, instructions, or other sequences of text to instruct a computing device to perform one or more computational operations and/or invoke one or more other sets of instructions, such as API(s) or API function(s) or Instruction Set Architecture (ISA) level instructions, to be executed or otherwise performed. Instructions (e.g., hardware instructions) or microcode can involve ISA level instructions, which can include native ISA instructions or non-native ISA instructions. Software program 1904 and/or software instructions 1906 can be distributed among multiple processors that communicate over a bus, network, by writing to shared memory, and/or any suitable communication process such as those described herein.

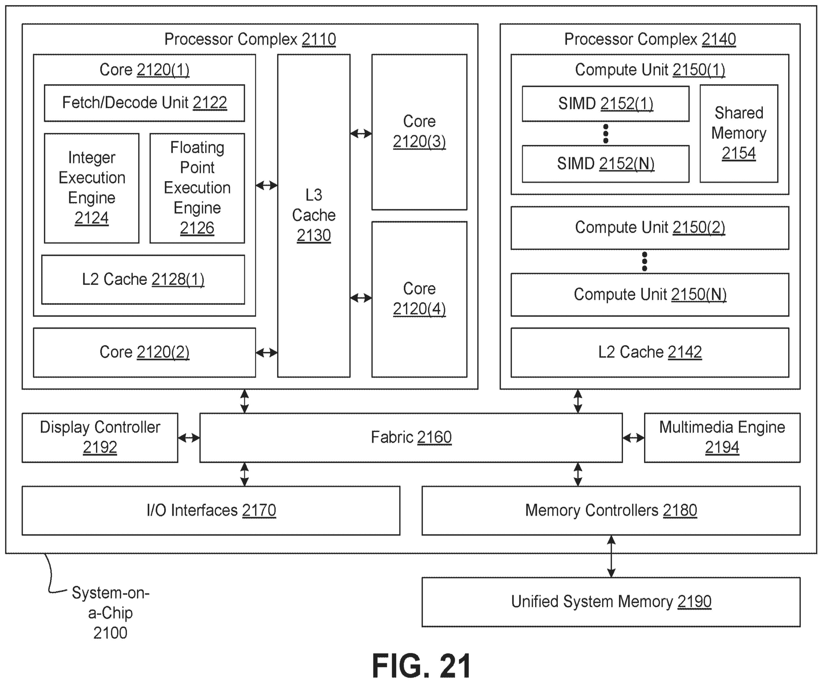

Processor(s) 1908 may include any number of processors and any suitable processing unit and/or combination of processing units, such as, but not limited to, central processing units ("CPUs"), graphics processing units ("GPUs"), or other processors (including accelerators, field programmable gate arrays (FPGAs), graphics processors, parallel processors, GPGPUs, DPUs, and/or variations thereof including those further described herein), including any processors described herein, such as, but not limited to, processors in FIGs. 21-32. In at least one embodiment, processor(s) 1908 can retrieve or fetch instructions (e.g., one or more APIs and/or ISA instructions) from storage 1902 using, for example, instruction fetch 1916 (e.g., for an Instruction Fetch stage). Instructions can include instructions to perform an instruction to perform one or more matrix multiply-accumulate (MMA) operations to multiply a first input matrix by a scaled matrix generated by multiplying one or more elements of a second input matrix by one or more corresponding scale factors. In at least one embodiment, processor(s) 1908 can include storage 1912 and instruction queue 1910 to store and queue instructions fetched from storage 1902. In at least one embodiment, fetched instructions can be decoded by decode 1918 to determine what operation should be performed by processor(s) 1908 (e.g., in an Instruction Decode stage). In at least one embodiment, processor(s) 1908 can fetch additional operands (data) that may be used for instructions, and operands can be stored, e.g., in registers or storage 1912. In at least one embodiment, micro-operations 1920 can perform operations on data stored in one or more registers or storage 1912. For example, each step of instructions fetched by processor(s) 1908 can be decomposed during execution so processor(s) 1908 can execute instructions in steps through a series of micro-operations 1920. In at least one embodiment, program counter (PC) 1914 can hold an address for a next instruction and can be updated to point to the next instruction to be executed by processor(s) 1908.

In at least one embodiment, processor(s) 1908 can perform instructions (e.g., in an Execution stage). For example, processor(s) 1908 can perform an operation specified by the instructions, such as an arithmetic operation, a logical operation, or a data transfer. In at least one embodiment, compute unit(s) 1922 can execute instructions to perform any of the operations described herein. In at least one embodiment, compute unit(s) can include ALU(s) 1924 (Arithmetic Logic Units), which may be used for performing arithmetic and logical operations. In at least one embodiment, compute unit(s) can include FPU(s) (Floating Point Units) 1926, which may be used for performing floating-point calculations. In at least one embodiment, other circuits 1928 can be used to perform other operations, such as vector and/or scalar operations. In at least one embodiment, accelerator(s) 1930 can include one or more matrix multiplication accelerators, one or more parallel processing units (PPUs), such as GPUs, or any other accelerator or processor further described herein. In at least one embodiment, software program 1904 can utilize one or more APIs and/or ISA instructions to perform various computing operations with accelerator(s) 1930, such as matrix multiplication, arithmetic operations, or any other computing operation further described herein. In at least one embodiment, one or more computing operations using accelerator(s) 1930 can include at least one or more groups of computing operations to be accelerated by execution at least in part by accelerator(s) 1930, including to perform an instruction to perform one or more matrix multiply-accumulate (MMA) operations to multiply a first input matrix by a scaled matrix generated by multiplying one or more elements of a second input matrix by one or more corresponding scale factors.

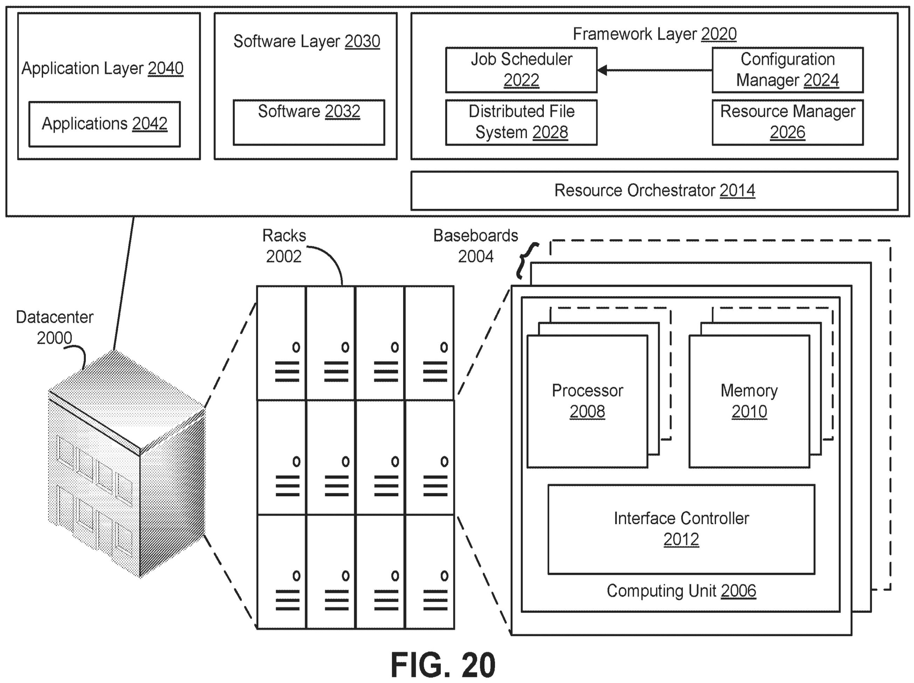

In at least one embodiment, system 1900 can be used to perform one or more instructions that include functions or operations, such as those described in connection with FIGs. 1-18. In at least one embodiment, system 1900 comprising one or more processors causes one or more circuits to perform an instruction to perform one or more matrix multiply-accumulate (MMA) operations to multiply a first input matrix by a scaled matrix generated by multiplying one or more elements of a second input matrix by one or more corresponding scale factors and/or otherwise perform operations described herein. In at least one embodiment, system 1900 is included in and/or otherwise includes systems illustrated in FIGS. 1-18 to cause one or more circuits to perform an instruction to perform one or more matrix multiply-accumulate (MMA) operations to multiply a first input matrix by a scaled matrix generated by multiplying one or more elements of a second input matrix by one or more corresponding scale factors and/or otherwise perform operations described herein. In at least one embodiment, system 1900 includes one or more hardware illustrated in FIGS. 20-33B, such as to perform an instruction to perform one or more matrix multiply-accumulate (MMA) operations to multiply a first input matrix by a scaled matrix generated by multiplying one or more elements of a second input matrix by one or more corresponding scale factors and/or otherwise perform operations described herein.

### DATA CENTER

FIG. 20 illustrates an example data center 2000, in accordance with at least one embodiment. Data center 2000 may include one or more rooms having racks 2002 and auxiliary equipment used to house one or more racks 2002 and one or more baseboards 2004. Rack 2002 can include one or more baseboards 2004. Rack 2002 can include a housing that receives and supports individual baseboards 2004. Operational aspects of rack 2002 may be regulated at a rack level, corresponding to a group of baseboards 2004, or at a baseboard level, corresponding to individual baseboards 2004, among other options. Rack 2002 or baseboards 2004 can have particularly selected maximum operating parameters, such as, but not limited to, power consumption, operating frequencies, and others. Data center 2000 can be supported by various cooling systems, such as, but not limited to, cooling towers, cooling loops, pumps, and other support systems. Cooling systems may include sensors and controllers to monitor and managing cooling properties for racks 2002. Baseboards 2004 within racks 2002 can get operational power from one or more power distribution units (PDUs; not shown). PDUs may be arranged within racks 2002, for example between racks 2002 including baseboards 2004, or within racks 2002 that also house baseboards 2004.

Racks 2002 and baseboards 2004 can include sub-systems, modules, add-in cards, and other semiconductor components. Baseboards 2004 can include one or more computing units 2006 that can include one or more processors 2008, one or more memory 2010, and an interface controller 2012. Computing units 2006 may include any number of processors, such as, but not limited to, central processing units ("CPUs"), graphics processing units ("GPUs"), or other processors (including accelerators, field programmable gate arrays (FPGAs), graphics processors, etc.), including any processors described herein, such as, but not limited to, processors in FIGs. 21-33. Computing units 2006 can include one or more memory storage devices 2010 (e.g., dynamic read-only memory, solid state storage or disk drives), as well as network input/output ("NW I/O") devices, network switches, virtual machines ("VMs"), power modules, and cooling modules, etc. One or more computing units 2006 may be a server having one or more of above-mentioned computing resources.

Computing units 2006 can include separate groupings of computing units housed within one or more racks (not shown), or many racks housed in data centers at various geographical locations (also not shown). Separate groupings of computing units may include grouped compute, network, memory or storage resources that may be configured or allocated to support one or more workloads. Several computing units (e.g., including CPUs and/or other processors) may be grouped within one or more racks to provide compute resources to support one or more workloads. A resource orchestrator 2014 may configure or otherwise control one or more computing units 2006 or groups of computing units. Resource orchestrator 2014 may include a software design infrastructure ("SDI") management entity for data center 2000. Resource orchestrator 2014 may include hardware, software or some combination thereof.

Data center 2000 can include any one of or any combination of a framework layer 2020, a software layer 2030 and an application layer 2040. As shown in FIG. 20, framework layer 2020 includes a job scheduler 2022, a configuration manager 2024, a resource manager 2026 and a distributed file system 2028. Framework layer 2020 may include a framework to support software 2032 of software layer 2030 and/or one or more application(s) 2042 of application layer 2040. Software 2032 or application(s) 2042 may respectively include web-based service software or applications, such as, but not limited to, those provided by Amazon Web Services, Google Cloud and Microsoft Azure. Framework layer 2020 may be a type of free and open-source software web application framework such as, but not limited to, Apache Spark^{™} (hereinafter "Spark") that may utilize distributed file system 2028 for large-scale data processing (e.g., "big data"). Job scheduler 2022 may include a Spark driver to facilitate scheduling of workloads supported by various layers of data center 2000. Configuration manager 2024 may be capable of configuring different layers such as, but not limited to, software layer 2030 and framework layer 2020 including Spark and distributed file system 2028 for supporting large-scale data processing. Resource manager 2026 may be capable of managing clustered or grouped computing units 2006 mapped to or allocated for support of distributed file system 2028 and job scheduler 2022. Resource manager 2026 may coordinate with resource orchestrator 2014 to manage these mapped or allocated computing resources.

Software 2032 can be included in software layer 2030 and may include software used by at least portions of a computing unit 2006, one or more computing units 2006, groups of computing units 2006, and/or distributed file system 2028 of framework layer 2020. One or more types of software may include, but are not limited to, Internet web page search software, e-mail virus scan software, database software, and streaming video content software.

Application(s) 2042 can be included in application layer 2040 and may include one or more types of applications used by at least portions of a computing unit 2006, one or more computing units 2006, groups of computing units 2006, and/or distributed file system 2028 of framework layer 2020. One or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

Any of configuration manager 2024, resource manager 2026, and resource orchestrator 2014 may implement any number and type of self-modifying actions based on any amount and type of data acquired in any technically feasible fashion. Self-modifying actions may relieve a data center operator of data center 2000 from making possibly bad configuration decisions and possibly avoiding underutilized and/or poor performing portions of a data center.

Data center 2000 may include tools, services, software or other resources to train one or more machine learning models or predict or infer information using one or more machine learning models in accordance with one or more embodiments described herein. For example, a machine learning model may be trained by calculating weight parameters in accordance with a neural network architecture using software and computing resources described above with respect to data center 2000. Trained machine learning models corresponding to one or more neural networks may be used to infer or predict information using resources described above with respect to data center 2000 by using weight parameters calculated through one or more training techniques described herein.

Data center 2000 may use CPUs, application-specific integrated circuits (ASICs), GPUs, FPGAs, or other hardware (e.g., embodiments in FIGs. 21-33) to perform some or all of processes and techniques described elsewhere herein, such as, but not limited to, training and/or inferencing using above-described resources. Moreover, one or more software and/or hardware resources described above may be configured as a service to allow users to train or performing inferencing of information, such as, but not limited to, image recognition, speech recognition, or other artificial intelligence services.

In at least one embodiment, processor 2008 can include one of the processors below and/or comprises one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. In at least one embodiment, processor 2008 is configured by software 2032 to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. Data center 2000 may use logic, CPUs, application-specific integrated circuits (ASICs), GPUs, FPGAs, or other hardware (e.g., embodiments in FIGs. 21-33) to perform any of the operations described above or elsewhere herein.

### PROCESSORS

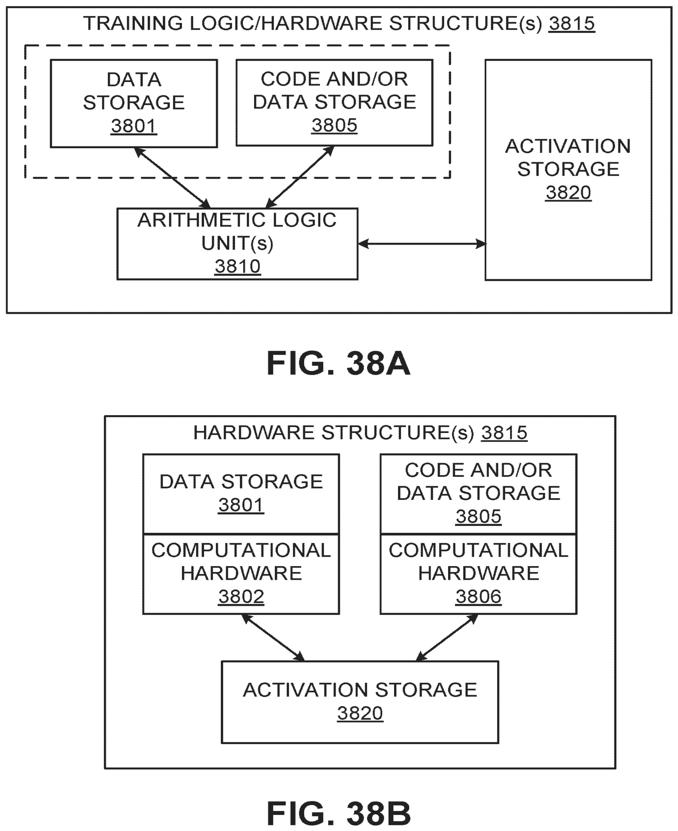

The following figures set forth, without limitation, example processors and processing systems that can be used to perform an instruction to perform one or more matrix multiply-accumulate (MMA) operations to multiply a first input matrix by a scaled matrix generated by multiplying one or more elements of a second input matrix by one or more corresponding scale factors or otherwise perform some or all of processes, operations and/or and techniques described elsewhere herein. Example processors and processing systems can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. Processors and processing systems can include logic, central processing units (CPUs), application-specific integrated circuits (ASICs), graphics processing units (GPUs), field programmable arrays (FPGAs), XPUs (i.e., any compute architecture that best fits the need of an application) or other hardware (e.g., embodiments in FIGs. 21-33) to perform any of the operations described above, below, or elsewhere herein. Processors and/or processing systems described herein can include one or more circuits that can be used to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. As used herein, one or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. FIGs. 38A and 38B illustrate logic 3815 which, as described elsewhere herein, can be used in one or more devices to perform operations such as, but not limited to, those discussed herein in accordance with at least one embodiment. Logic can refer, for example, to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU).

FIG. 21 illustrates a processor which is a system-on-a-chip (SOC) 2100 (which may be referred to as system-on-chip, a superchip, or another name), in accordance with at least one embodiment. SOC 2100 can include processor complex 2110 and processor complex 2140. SOC 2100 can include any number of processor complexes 2110 and/or processor complexes 2140 that may include any number of processors that are described herein, such as, but not limited to, those in FIGs. 21-33, in any combination. For example, processor 2110 may include a central processing unit (CPU), and processor 2140 may include a graphics processor. Alternatively, processor 2110 may include a graphics processor, and processor 2140 may include a graphics processor. SOC 2100 may include any number of display controllers 2192, any number of multimedia engines 2194, any number of I/O Interfaces 2170, any number of memory controllers 2180, and any number of fabrics 2160 in any combination. For explanatory purposes, multiple instances of like objects are denoted herein with reference numbers identifying the object and parenthetical numbers identifying the instance where needed. SOC 2100 can include a processor from Broadcom in Palo Alto, CA.

Processor complex 2110 can include a CPU, processor complex 2140 can include a GPU, and SOC 2100 can include a processing unit that integrates 2110 and 2140 onto a single chip. Some tasks may be assigned to processor complex 2110 and other tasks may be assigned to processor complex 2140. Processor complex 2110 can be configured to execute main control software associated with SOC 2100, such as, but not limited to, an operating system. Processor complex 2110 can be the master processor of SOC 2100, controlling and coordinating operations of other processors. Processor complex 2110 can issue commands that control the operation of processor complex 2140 to perform some or all of the operations described herein. Processor complex 2110 can be configured to execute host executable code derived from CUDA or other source code (e.g., HIP source code), and processor complex 2140 can be configured to execute device executable code derived from CUDA or other source code in order to perform any of the operations described herein.

Processor complex 2110 can include cores 2120(1)-2120(4) and a cache (e.g., L3 cache) 2130 to store information to perform operations described herein. Processor complex 2110 may include any number of cores 2120 and any number and type of caches in any combination. Cores 2120 can be configured to execute instructions of a particular instruction set architecture ("ISA") to perform some or all of the operations described herein. Each core 2120 can include a CPU core. Core 2120(1)-2120(4) can be referred to as a computing units or compute units. SOC 2100 can includes any number of processor complexes 2110, fabric 2160, I/O interfaces 2170, and memory controllers 2180.

Each core 2120 can include a fetch/decode unit 2122, an integer execution engine 2124, a floating point execution engine 2126, and an L2 cache 2128. Fetch/decode unit 2122 can fetch instructions to perform some or all of the operations described herein (such as, but not limited to, an API that is compiled into instructions) and decode such instructions, generate micro-operations, and dispatch separate micro-instructions to integer execution engine 2124 and/or floating point execution engine 2126. Fetch/decode unit 2122 can concurrently dispatch one micro-instruction to integer execution engine 2124 and another micro-instruction to floating point execution engine 2126. Integer execution engine 2124 can execute integer and memory operations. Floating point engine 2126 can execute floating point and vector operations. Fetch-decode unit 2122 can dispatch micro-instructions to one or more execution engines that replaces both integer execution engine 2124 and floating point execution engine 2126.

Each core 2120(i), where i is an integer representing a particular instance of core 2120, may access L2 cache 2128(i) included in core 2120(i). Each core 2120 included in core complex 2110(j), where j is an integer representing a particular instance of core complex 2110, can be connected to other cores 2120 included in core complex 2110(j) via L3 cache 2130(j) included in core complex 2110(j). Cores 2120 included in core complex 2110(j), where j is an integer representing a particular instance of core complex 2110, can access all of L3 cache 2130(j) included in core complex 2110(j). L3 cache 2130 may include any number of slices.

Processor complex 2140 can be a graphics complex that can be configured to perform compute operations (e.g., compute operations involved in operations described herein) in a highly-parallel fashion. Processor complex 2140 can be configured to execute graphics pipeline operations such as, but not limited to, draw commands, pixel operations, geometric computations, and other operations associated with rendering an image to a display. Processor complex 2140 can be configured to execute operations unrelated to graphics, such as, but not limited to, neural network training and/or simulations. Processor complex 2140 can be configured to execute both operations related to graphics and operations unrelated to graphics.

Processor complex 2140 can include any number of compute units 2150(1)-2150(N), where N is any integer greater than 1, and an L2 cache 2142. Compute units 2150 can share L2 cache 2142, which may store information to be used to perform some or all of the operations described herein. L2 cache 2142 can be partitioned. Processor complex 2140 can include any number of compute units 2150 and any number (including zero) and type of caches. Processor complex 2140 can include any amount of dedicated graphics hardware.

Each compute unit 2150 can include any number of SIMD units 2152(1)-2152(N), where N is any integer greater than 1, and a shared memory 2154. Each SIMD unit 2152 can implement a SIMD architecture and can be configured to some or all of the operations described herein, in parallel. Each compute unit 2150 may execute any number of thread blocks, but each thread block can execute on a single compute unit 2150, although in some embodiments a thread block can execute on multiple compute units. A thread block can include any number of threads of execution. A workgroup can be a thread block. Each SIMD unit 2152 can execute a group of threads. A group of threads (e.g., 16 threads), which can also be referred to as a warp, or subgroup, or wavefront (e.g., as used by AMD and Intel), where each thread in the warp, wave, subgroup, or wavefront can belong to a single thread block and is configured to process a different set of data based on a single set of instructions. Predication can be used to disable one or more threads in a warp, subgroup, or wavefront. A lane can be a thread. A work item can be a thread, such as, but not limited to, e.g., with OpenCL. Different warps, subgroups, or wavefronts in a thread block may synchronize together and communicate via shared memory 2154. Each compute unit 2150 can include one or more thread block clusters, where a thread block cluster can enable programmatic control of locality at a granularity larger than a single thread block of a single streaming multiprocessor (SM). Thread block clusters (also referred to as "clusters") can enable multiple thread blocks running concurrently across streaming multiprocessors to synchronize and collaboratively fetch, exchange, or otherwise use data. In at least one embodiment, streaming multiprocessors ("SMs") can be referred to streaming microprocessors, stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

Fabric 2160 can be a system interconnect that facilitates data and control transmissions across processor complex 2110, processor complex 2140, I/O interfaces 2170, memory controllers 2180, display controller 2192, and multimedia engine 2194, e.g., to perform some or all of the operations described herein. SOC 2100 may include any amount and type of system interconnect in addition to or instead of fabric 2160 that facilitates data and control transmissions across any number and type of directly or indirectly linked components that may be internal or external to SOC 2100. I/O interfaces 2170 can be representative of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 2170. Peripheral devices that can be coupled to I/O interfaces 2170 may include keyboards, mice, printers, scanners, joysticks or other types of game controllers, media recording devices, external storage devices, network interface cards, and so forth.

Display controller 2192 may display images on one or more display device(s), such as, but not limited to, a liquid crystal display ("LCD") device. Multimedia engine 2194 can include any amount and type of circuitry that is related to multimedia, such as, but not limited to, a video decoder, a video encoder, an image signal processor, etc. Memory controllers 2180 may facilitate data transfers between SOC 2100 and a unified system memory 2190. Processor complex 2110 and processor complex 2140 may share unified system memory 2190. Unified system memory 2190 can include various types of memory devices, including dynamic random access memory (DRAM) or graphics random access memory, such as, but not limited to, synchronous graphics random access memory (SGRAM), including graphics double data rate (GDDR) memory. Unified system memory 2190 may include 3D stacked memory, including but not limited to high bandwidth memory (HBM), HBM2e, or HDM3.

SOC 2100 may implement a memory subsystem that includes any amount and type of memory controllers 2180 and memory devices (e.g., shared memory 2154) that may be dedicated to one component or shared among multiple components in order to perform any of the operations described herein. SOC 2100 can implement a cache subsystem that includes one or more cache memories (e.g., L2 caches 2128, L3 cache 2130, and L2 cache 2142) that may each be private to or shared between any number of components (e.g., cores 2120, core complex 2110, SIMD units 2152, compute units 2150, and processor complex 2140).

In at least one embodiment, SOC 2100 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

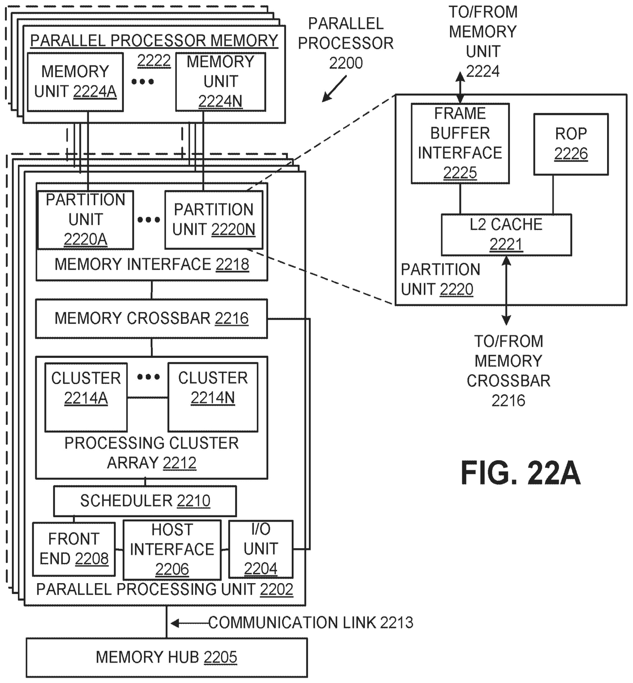

FIG. 22A illustrates a parallel processor 2200, in accordance with at least one embodiment. Parallel processor 2200 may be implemented using one or more circuits and may be referred to as a programmable processor (e.g., a CPU and/or GPU), logic, an application specific integrated circuit (ASIC), a field programmable gate array (FPGA) or other hardware (e.g., embodiments in FIGs. 21-33) to perform any of the operations described above or elsewhere herein.

Parallel processor 2200 can include a parallel processing unit 2202 to perform any of the operations described above or elsewhere herein. Parallel processing unit 2202 can include an I/O unit 2204 that enables communication with other devices, including other instances of parallel processing unit 2202. I/O unit 2204 may be directly connected to other devices. I/O unit 2204 may connect with other devices via use of a hub or switch interface, such as, but not limited to, a memory hub 2205. Connections between memory hub 2205 and I/O unit 2204 can form a communication link 2213. I/O unit 2204 may connect with a host interface 2206 and a memory crossbar 2216, where host interface 2206 receives commands directed to performing processing operations and memory crossbar 2216 receives commands directed to performing memory operations.

When host interface 2206 receives a command buffer via I/O unit 2204, host interface 2206 can direct work operations to perform those commands to a front end 2208. Front end 2208 can couple with a scheduler 2210 (which may be referred to as a sequencer), which is configured to distribute commands or other work items to a processing cluster array 2212. Scheduler 2210 can ensure that processing cluster array 2212 is properly configured and in a valid state before tasks may be distributed to a cluster of processing cluster array 2212. Scheduler 2210 may be implemented via firmware logic executing on a microcontroller. Microcontroller-implemented scheduler 2210 can be configurable to perform complex scheduling and work distribution operations at coarse and fine granularity, enabling rapid preemption and context switching of threads executing on processing array 2212. Host software can prove workloads for scheduling on processing cluster array 2212 via one of multiple graphics processing paths. Workloads can then be automatically distributed across processing array cluster 2212 by scheduler 2210 logic within a microcontroller including scheduler 2210.

Processing cluster array 2212 can perform any of the operations described above or elsewhere herein and can include up to "N" processing clusters (e.g., cluster 2214A, cluster 2214B, through cluster 2214N), where "N" represents a positive integer (which may be a different integer "N" than used in other figures). Each cluster 2214A-2214N of processing cluster array 2212 can execute a large number of concurrent threads. Scheduler 2210 can allocate work to clusters 2214A-2214N of processing cluster array 2212 using various scheduling and/or work distribution algorithms, which may vary depending on workload arising for each type of program or computation. Scheduling can be handled dynamically by scheduler 2210, or can be assisted in part by compiler logic during compilation of program logic configured for execution by processing cluster array 2212. Different clusters 2214A-2214N of processing cluster array 2212 can be allocated for processing different types of programs or for performing different types of computations.

Processing cluster array 2212 can be configured to perform various types of parallel processing operations, such as, but not limited to, any of the operations described above or elsewhere herein. Processing cluster array 2212 can be configured to perform general-purpose parallel compute operations. For example, processing cluster array 2212 can include logic to execute processing tasks including filtering of video and/or audio data, performing modeling operations, including physics operations, and performing data transformations.

Processing cluster array 2212 can be configured to perform parallel graphics processing operations. Processing cluster array 2212 can include additional logic to support execution of such graphics processing operations, including but not limited to, texture sampling logic to perform texture operations, as well as tessellation logic and other vertex processing logic. Processing cluster array 2212 can be configured to execute graphics processing related shader programs such as, but not limited to, vertex shaders, tessellation shaders, geometry shaders, and pixel shaders. Parallel processing unit 2202 can transfer data from system memory via I/O unit 2204 for processing. During processing, transferred data can be stored to on-chip memory (e.g., parallel processor memory 2222) during processing, then written back to system memory.

When parallel processing unit 2202 is used to perform graphics processing, scheduler 2210 can be configured to divide a processing workload into approximately equal sized tasks, to better enable distribution of graphics processing operations to multiple clusters 2214A-2214N of processing cluster array 2212. Portions of processing cluster array 2212 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of clusters 2214A-2214N may be stored in buffers to allow intermediate data to be transmitted between clusters 2214A-2214N for further processing.

Processing cluster array 2212 can receive processing tasks to be executed via scheduler 2210, which receives commands defining processing tasks from front end 2208. Processing tasks can include indices of data to be processed, e.g., surface (patch) data, primitive data, vertex data, and/or pixel data, as well as state parameters and commands defining how data is to be processed (e.g., what program is to be executed). Scheduler 2210 may be configured to fetch indices corresponding to tasks or may receive indices from front end 2208. Front end 2208 can be configured to ensure processing cluster array 2212 is configured to a valid state before a workload specified by incoming command buffers (e.g., batch-buffers, push buffers, etc.) is initiated.

Each of one or more instances of parallel processing unit 2202 can couple with a parallel processor memory 2222 to perform any of the operations described above or elsewhere herein. Parallel processor memory 2222 can be accessed via memory crossbar 2216, which can receive memory requests from processing cluster array 2212 as well as I/O unit 2204. Memory crossbar 2216 can access parallel processor memory 2222 via a memory interface 2218. Memory interface 2218 can include multiple partition units (e.g., partition unit 2220A, partition unit 2220B, through partition unit 2220N) that can each couple to a portion (e.g., memory unit) of parallel processor memory 2222. A number of partition units 2220A-2220N can be configured to be equal to a number of memory units, such that a first partition unit 2220A has a corresponding first memory unit 2224A, a second partition unit 2220B has a corresponding memory unit 2224B, and an N-th partition unit 2220N has a corresponding N-th memory unit 2224N. A number of partition units 2220A-2220N may not be equal to a number of memory units.

Memory units 2224A-2224N can include various types of memory devices, including dynamic random access memory (DRAM) or graphics random access memory, such as, but not limited to, synchronous graphics random access memory (SGRAM), including graphics double data rate (GDDR) memory. Memory units 2224A-2224N may also include 3D stacked memory, including but not limited to high bandwidth memory (HBM), HBM2e, or HDM3. Render targets, such as, but not limited to, frame buffers or texture maps may be stored across memory units 2224A-2224N, allowing partition units 2220A-2220N to write portions of each render target in parallel to efficiently use available bandwidth of parallel processor memory 2222. A local instance of parallel processor memory 2222 may be excluded in favor of a unified memory design that utilizes system memory in conjunction with local cache memory.

Any one of clusters 2214A-2214N of processing cluster array 2212 can process data that will be written to any of memory units 2224A-2224N within parallel processor memory 2222. Memory crossbar 2216 can be configured to transfer an output of each cluster 2214A-2214N to any partition unit 2220A-2220N or to another cluster 2214A-2214N, which can perform additional processing operations on an output. Each cluster 2214A-2214N can communicate with memory interface 2218 through memory crossbar 2216 to read from or write to various external memory devices. Memory crossbar 2216 can have a connection to memory interface 2218 to communicate with I/O unit 2204, as well as a connection to a local instance of parallel processor memory 2222, enabling processing units within different processing clusters 2214A-2214N to communicate with system memory or other memory that is not local to parallel processing unit 2202. Memory crossbar 2216 can use virtual channels to separate traffic streams between clusters 2214A-2214N and partition units 2220A-2220N.

Multiple instances of parallel processing unit 2202 can be provided on a single add-in card, or multiple add-in cards can be interconnected. Different instances of parallel processing unit 2202 can be configured to interoperate even if different instances have different numbers of processing cores, different amounts of local parallel processor memory, and/or other configuration differences. For example, some instances of parallel processing unit 2202 can include higher precision floating point units relative to other instances. Systems incorporating one or more instances of parallel processing unit 2202 or parallel processor 2200 can be implemented in a variety of configurations and form factors, including but not limited to desktop, laptop, or handheld personal computers, servers, workstations, game consoles, and/or embedded systems.

FIG. 22A further includes a block diagram of a partition unit 2220, in accordance with at least one embodiment. Partition unit 2220 is an instance of one of partition units 2220A-2220N of FIG. 22A. Partition unit 2220 can include an L2 cache 2221, a frame buffer interface 2225, and a ROP 2226 (raster operations unit). L2 cache 2221 can be a read/write cache that is configured to perform load and store operations received from memory crossbar 2216 and ROP 2226. Read misses and urgent write-back requests can be output by L2 cache 2221 to frame buffer interface 2225 for processing. Updates can also be sent to a frame buffer via frame buffer interface 2225 for processing. Frame buffer interface 2225 may interface with one of memory units in parallel processor memory, such as, but not limited to, memory units 2224A-2224N (shown as 2224) of FIG. 22A (e.g., within parallel processor memory 2222).

ROP 2226 can be a processing unit that performs raster operations such as, but not limited to, stencil, z test, blending, etc. ROP 2226 can then output processed graphics data that is stored in graphics memory. ROP 2226 can include compression logic to compress depth or color data that is written to memory and decompress depth or color data that is read from memory. Compression logic can be lossless compression logic that makes use of one or more of multiple compression algorithms. A type of compression that is performed by ROP 2226 can vary based on statistical characteristics of data to be compressed. For example, delta color compression is performed on depth and color data on a per-tile basis.

ROP 2226 can be included within each processing cluster (e.g., cluster 2214A-2214N of FIG. 22A) instead of within partition unit 2220. Read and write requests for pixel data may be transmitted over memory crossbar 2216 instead of pixel fragment data. Processed graphics data may be displayed on a display routed for further processing by processor(s), or routed for further processing by one of processing entities within parallel processor 2200 of FIG. 22A.

In at least one embodiment, parallel processor 2200 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

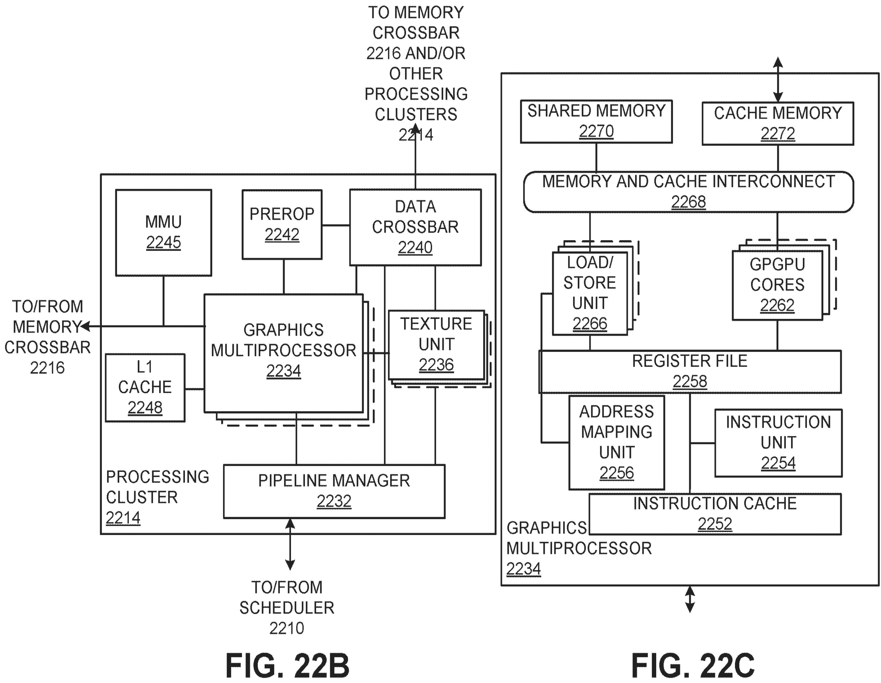

FIG. 22B includes a block diagram of a processing cluster 2214 within a parallel processing unit, in accordance with at least one embodiment. A processing cluster can be an instance of one of processing clusters 2214A-2214N of FIG. 22A that can be used to perform any of the operations described above or elsewhere herein. Processing cluster 2214 can be configured to execute many threads in parallel, where "thread" refers to an instance of a particular program executing on a particular set of input data. Single-instruction, multiple-data (SIMD) instruction issue techniques can be used to support parallel execution of a large number of threads without providing multiple independent instruction units. Single-instruction, multiple-thread (SIMT) techniques may be used to support parallel execution of a large number of generally synchronized threads, using a common instruction unit configured to issue instructions to a set of processing engines within each one of processing clusters.

Operation of processing cluster 2214 can be controlled via a pipeline manager 2232 that distributes processing tasks to SIMT parallel processors. Pipeline manager 2232 can receive instructions from scheduler 2210 of FIG. 22A and manages execution of those instructions via a graphics multiprocessor 2234 and/or a texture unit 2236. Graphics multiprocessor 2234 may be an example instance of a SIMT parallel processor. However, various types of SIMT parallel processors of differing architectures may be included within processing cluster 2214. One or more instances of graphics multiprocessor 2234 can be included within a processing cluster 2214. Graphics multiprocessor 2234 can process data and a data crossbar 2240 can be used to distribute processed data to one of multiple possible destinations, including other shader units. Pipeline manager 2232 can facilitate distribution of processed data by specifying destinations for processed data to be distributed via data crossbar 2240.

Each graphics multiprocessor 2234 within processing cluster 2214 can include an identical set of functional execution logic (e.g., arithmetic logic units, load-store units, etc.) to perform computations for any of the operations described above or elsewhere herein. Functional execution logic can be configured in a pipelined manner in which new instructions can be issued before previous instructions may be complete. Functional execution logic can support a variety of operations including integer and floating point arithmetic, comparison operations, Boolean operations, bit-shifting, and computation of various algebraic functions. Same functional-unit hardware can be leveraged to perform different operations and any combination of functional units may be present.

Instructions transmitted to processing cluster 2214 may constitute a thread, which can also be referred to as a warp, subgroup, wave, or a wavefront. A set of threads executing across a set of parallel processing engines can be referred to as a thread group. A thread group can execute a common program on different input data. Each thread within a thread group can be assigned to a different processing engine within a graphics multiprocessor 2234. A thread group may include fewer threads than a number of processing engines within graphics multiprocessor 2234. When a thread group includes fewer threads than a number of processing engines, one or more of processing engines may be idle during cycles in which that thread group is being processed. A thread group may also include more threads than a number of processing engines within graphics multiprocessor 2234. When a thread group includes more threads than number of processing engines within graphics multiprocessor 2234, processing can be performed over consecutive clock cycles. Multiple thread groups can be executed concurrently on a graphics multiprocessor 2234.

Graphics multiprocessor 2234 includes an internal cache memory to perform load and store operations, such as, but not limited to, any of the operations described above or elsewhere herein. Graphics multiprocessor 2234 can forego an internal cache and use a cache memory (e.g., L1 cache 2248) within processing cluster 2214. Each graphics multiprocessor 2234 may also have access to L2 caches within partition units (e.g., partition units 2220A-2220N of FIG. 22A) that can be shared among all processing clusters 2214 and may be used to transfer data between threads. Graphics multiprocessor 2234 may also access off-chip global memory, which can include one or more of local parallel processor memory and/or system memory. Any memory external to parallel processing unit 2202 may be used as global memory. Processing cluster 2214 can include multiple instances of graphics multiprocessor 2234 and can share common instructions and data, which may be stored in L1 cache 2248.

Each processing cluster 2214 may include an MMU 2245 (memory management unit) that can be configured to map virtual addresses into physical addresses. One or more instances of MMU 2245 may reside within memory interface 2218 of FIG. 22A. MMU 2245 can include a set of page table entries (PTEs) used to map a virtual address to a physical address of a tile and optionally a cache line index. MMU 2245 may include address translation lookaside buffers (TLB) or caches that may reside within graphics multiprocessor 2234 or L1 2248 cache or processing cluster 2214. A physical address can be processed to distribute surface data access locally to allow for efficient request interleaving among partition units. A cache line index may be used to determine whether a request for a cache line is a hit or miss.

A processing cluster 2214 may be configured such that each graphics multiprocessor 2234 is coupled to a texture unit 2236 for performing texture mapping operations, e.g., determining texture sample positions, reading texture data, and filtering texture data. Texture data can be read from an internal texture L1 cache (not shown) or from an L1 cache within graphics multiprocessor 2234 and can be fetched from an L2 cache, local parallel processor memory, or system memory, as needed. Each graphics multiprocessor 2234 can output processed tasks to data crossbar 2240 to provide processed task to another processing cluster 2214 for further processing or to store processed task in an L2 cache, local parallel processor memory, or system memory via memory crossbar 2216. A preROP 2242 (pre-raster operations unit) can be configured to receive data from graphics multiprocessor 2234, and direct data to ROP units, which may be located with partition units as described herein (e.g., partition units 2220A-2220N of FIG. 22A). PreROP 2242 unit can perform optimizations for color blending, organizing pixel color data, and performing address translations.

In at least one embodiment, processing cluster 2214 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

FIG. 22C shows a graphics multiprocessor 2234, in accordance with at least one embodiment, e.g., to perform any of the operations described above or elsewhere herein. Graphics multiprocessor 2234 can couple with pipeline manager 2232 of processing cluster 2214. Graphics multiprocessor 2234 can include an execution pipeline including but not limited to an instruction cache 2252 (that, e.g., can store instructions, such as, not limited to compiled API instructions), an instruction unit 2254, an address mapping unit 2256, a register file 2258, one or more general purpose graphics processing unit (GPGPU) cores 2262, and one or more load/store units 2266, where one or more load/store units 2266 can perform load/store operations to load/store instructions corresponding to performing an operation. GPGPU cores 2262 and load/store units 2266 can be coupled with cache memory 2272 and shared memory 2270 via a memory and cache interconnect 2268. GPGPU cores 2262 can be part of an SoC such as, but not limited to, part of integrated circuit 2100 in FIG. 21.

Instruction cache 2252 can receive a stream of instructions (e.g., to perform any of the operations described above or elsewhere herein) to execute from pipeline manager 2232. Instructions can be cached in instruction cache 2252 and dispatched for execution by an instruction unit 2254. Instruction unit 2254 can dispatch instructions as thread groups (e.g., warps, subgroups, wavefronts, or waves), with each thread of thread group assigned to a different execution unit within GPGPU cores 2262. An instruction can access any of a local, shared, or global address space by specifying an address within a unified address space. Address mapping unit 2256 can be used to translate addresses in a unified address space into a distinct memory address that can be accessed by load/store units 2266.

Register file 2258 can provide a set of registers for functional units of graphics multiprocessor 2234. Register file 2258 may provide temporary storage for operands connected to data paths of functional units (e.g., GPGPU cores 2262, load/store units 2266) of graphics multiprocessor 2234. Register file 2258 may be divided between each of functional units such that each functional unit is allocated a dedicated portion of register file 2258. Register file 2258 can be divided between different warps (which may be referred to as wavefronts, subgroups, and/or waves or threads) being executed by graphics multiprocessor 2234.

GPGPU cores 2262 can each include floating point units (FPUs) and/or integer arithmetic logic units (ALUs) that can be used to execute instructions of graphics multiprocessor 2234. GPGPU cores 2262 can be similar in architecture or can differ in architecture. A first portion of GPGPU cores 2262 can include a single precision FPU and an integer ALU while a second portion of GPGPU cores include a double precision FPU. FPUs can implement IEEE 754-2008 standard floating point arithmetic or enable variable precision floating point arithmetic. Graphics multiprocessor 2234 can additionally include one or more fixed function or special function units to perform specific functions such as, but not limited to, copy rectangle or pixel blending operations. One or more of GPGPU cores 2262 can also include fixed or special function logic.

GPGPU cores 2262 can include SIMD logic capable of performing a single instruction on multiple sets of data. GPGPU cores 2262 can physically execute SIMD4, SIMD8, and SIMD16 instructions and logically execute SIMD1, SIMD2, and SIMD32 instructions. SIMD instructions for GPGPU cores can be generated at compile time by a shader compiler or automatically generated when executing programs written and compiled for single program multiple data (SPMD) or SIMT architectures. Multiple threads of a program can be configured for an SIMT execution model that can be executed via a single SIMD instruction. For example, eight SIMT threads that perform same or similar operations can be executed in parallel via a single SIMD8 logic unit.

Memory and cache interconnect 2268 can include an interconnect network that connects each functional unit of graphics multiprocessor 2234 to register file 2258 and to shared memory 2270. Memory and cache interconnect 2268 may be a crossbar interconnect that allows load/store unit 2266 to implement load and store operations between shared memory 2270 and register file 2258. register file 2258 can operate at a same frequency as GPGPU cores 2262, thus data transfer between GPGPU cores 2262 and register file 2258 can have very low latency. Shared memory 2270 can be used to enable communication between threads that execute on functional units within graphics multiprocessor 2234. Cache memory 2272 can be used as a data cache for example, to cache texture data communicated between functional units and texture unit 2236. Shared memory 2270 can also be used as a program managed cache. Threads executing on GPGPU cores 2262 can programmatically store data within shared memory in addition to automatically cached data that is stored within cache memory 2272.

A parallel processor or GPGPU as described herein may be communicatively coupled to host/processor cores to accelerate graphics operations, machine-learning operations, pattern analysis operations, and various general purpose GPU (GPGPU) functions. A GPU may be communicatively coupled to host processor/cores over a bus or other interconnect (e.g., a highspeed interconnect such as, but not limited to, PCIe or NVLink). An SoC may include a parallel processor or GPGPU as described herein, where said parallel processor or said GPGPU is performed on said SoC. A GPU may be integrated on a package or chip as cores and communicatively coupled to cores over an internal processor bus/interconnect internal to a package or chip. Regardless a manner in which a GPU is connected, processor cores may allocate work to such GPU in a form of sequences of commands/instructions contained in a work descriptor. GPU then may use dedicated circuitry/logic for efficiently processing these commands/instructions to perform any of the operations described above or elsewhere herein.

In at least one embodiment, graphics multiprocessor 2234 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

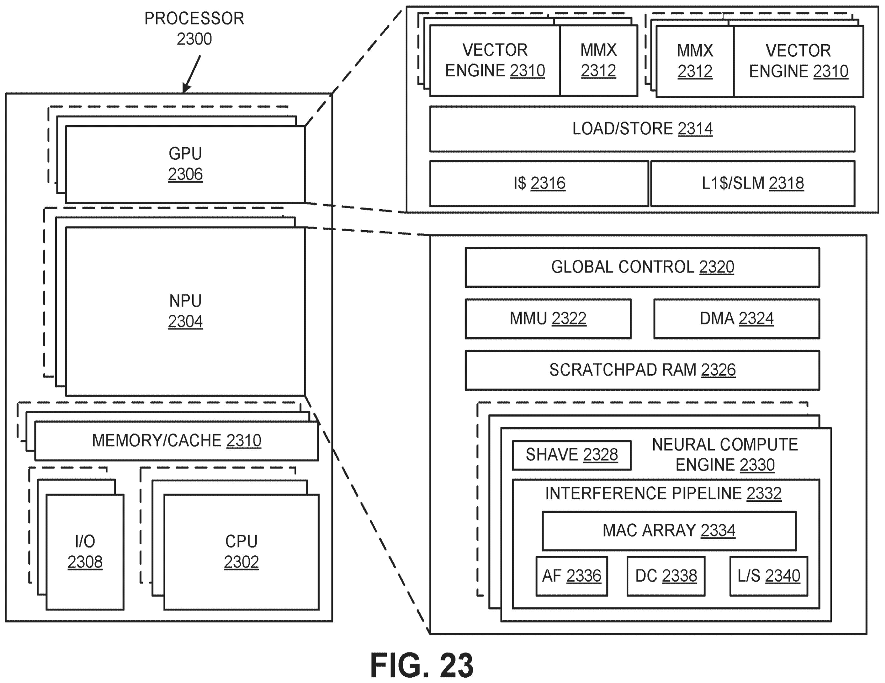

FIG. 23 shows a processor 2300, in accordance with at least one embodiment. Processor 2300 can include a processor with hybrid architecture (e.g., Lunar Lake or Meteor Lake) from Intel Corporation in Santa Clara, CA or another processor that shares at least some of the components described herein. Processor 2300 can include one or more Central Processing Unit(s) (CPU 2302), one or more Graphics Processing Unit(s) (GPU 2306), and/or one or more Neural Processing Unit(s) (NPU 2308) that can be, e.g., a dedicated AI accelerator that offloads artificial intelligence (AI) workloads from CPU 2302 and GPU 2306. Processor 2300 can use instructions that, if executed cause processor 2300 and/or any of its components to perform some or all of processes and techniques described elsewhere herein. Processor 2300 may include any number of memory and cache units 2310 to facilitate processing amongst different components of processor 2300. Memory and cache 2310 on processor 2300 may include one or more levels of cache (e.g., L1, L2, L3, and/or last-level cache) and high-bandwidth memory (e.g., HBM2e or HBM3) in any combination. With respect to processor 2300 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2300 (e.g., in cache and/or memory). A result of API(s) can then be stored in storage within or outside of processor 2300, including registers, DRAM, flash, SRAM, cache, or other memory. One or more of APIs described herein can include a call.

Processor 2300 can include compute engines as CPUs 2302 and can include any number of cores, such as, but not limited to, up to 16 cores/22 threads. Cores in CPU 2302 can include P-cores (Performance), E- cores (Efficient) & LP-E cores (Low-power Efficient). Performance-cores can be used for low latency single-threaded, compute-intensive workloads, while Efficient-cores can be used for multi-threaded, less compute-intensive workloads. Low-power Efficient cores can be used for scalable multithreaded performance and offloading background tasks. P-cores can be used for single & limited threading performance, whereas E- and LP-E cores can be used for multi-threaded throughput and power efficiency.

GPU 2306 can include any number of graphics engines, such as, but not limited to, Intel^{®} Arc^{™} graphics engines (Xe LPG) with 8 Xe cores (up to 128 Execution Units or EUs). As shown in FIG. 23, GPU 2306 can include vector engines 2310 and matrix engines 2312, that, for example, can run FP, INT, and matrix operation tasks all at the same time or separately or in batches. GPU 2306 can include a load/store unit 2314, as well as other memory, such as, but not limited to, an instruction cache (I$) 2316 and L1 cache/subsystem local memory (SLM) 2318 that can, e.g., store instructions to perform any of the operations described above or elsewhere herein.

NPU 2304 can include one or more Intel^{®} AI Boost built-in neural processing unit(s) (NPUs). NPU 2304 can be enumerated to a host processor as an integrated PCIe device. NPU 2304 can include one or more (e.g., two) Neural Compute Engine (NCE) tiles 2330. Each tile can be configured with any combination of, but not limited to, (e.g., 2000) Multiply Accumulate (MAC) Engines 2334, a Post Processing Engine (not shown), a AI DSP Processor (not shown), and memory (2 MB of dedicated SRAM) per tile as shown in FIG. 23. For general compute needs, Neural Compute Engines 2330 can include interference pipeline 2332, activation function (AF) 2336, data conversion 2338, load/store 2340, and Streaming Hybrid Architecture Vector Engines (SHAVE) 2328 for high performance parallel computing, which can include DMA (Direct Memory Access) engines 2324 to shuttle data between system memory DRAM (Dynamic Random Access Memory) 2326 and a software managed cache. Built-in device MMU (Memory Management Unit) 2322 plus IOMMU (Input-Output Memory Management Unit) (not shown) can support multiple simultaneous hardware contexts and provide security isolation between execution contexts as per MCDM (Microsoft Compute Driver Model) architecture. Processor 2300 can also include a media unit (not shown) that is included on or separately from XCDs or other components of processor 2300 to enable video playback and video processing of compressed or non-compressed data, such using HEVC, AV1, VP9 and AVC HW accelerated decode support and HEVC, VP9 and AVC HW accelerated encode support.

A Intel^{®} Thread Director, which includes firmware that is built into processor 2300, can prioritize and manage distribution of workloads, sending tasks to optimized cores. For example, Thread Director can tie P-cores, E-cores and/or LP-E cores (described above) together with task-scheduling capabilities and ability to send less-demanding tasks to E-cores or LP-E cores. Intel^{®} Deep Learning Boost (Intel^{®} DL Boost) (not shown) can provide built in AI acceleration for training and inference workloads, and may include VNNI (for CPU) and DP4a (for GPU) instruction set support. This instruction set may be optimized with OpenVINO^{™} Toolkit and oneAPI to accelerate INT8 inferencing. A software stack, e.g., as described elsewhere herein, can be used to enable AI inference using OpenVINO^{™} toolkit. Processor 2300 can be configured to execute an application program, such as, but not limited to, a CUDA program.

In at least one embodiment, processor 2300 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

Processor 2300 can alternatively include a processor based on AI Engine Direct architecture from Qualcomm Corporation in Santa Clara, CA or another processor that shares at least some of the components described herein. that may include any number of NPUs, GPUs, CPUs and other related components, such as, but not limited to, NPU 2304 as a Hexagon NPU, GPU 2306 as a Adreno GPU, CPU 2302 as a Kryo or Qualcomm Oryon CPU, as well as a Qualcomm Sensing Hub (not shown) and a memory subsystem 2310, in any combination. Hexagon NPU 2304 can include a power rail a micro-tile inferencing unit, a hardware acceleration unit, a tensor unit, a scalar unit, and a vector unit (all not shown), which can have dedicated memory or share memory (e.g., cache or memory, such HBM3) for, e.g., storing instructions to perform any of the operations described above or elsewhere herein. Adreno GPU 2306 can provide graphics and parallel processing for AI in formats, such as, but not limited to, 32-bit floating point (FP32), 16-bit floating point (FP16), and 8-bit integer (INT8). Kryo or Qualcomm Oryon CPUs 2302 can perform AI workloads, and can handle contextualization for pervasive generative AI applications. CPU 2302 can also include an instruction fetch unit, a rename and retire unit, a memory management unit, a vector execution unit, an integer execution unit, and a load and store unit for processing and instruction management. With respect to processor 2300 and any of its components described above or elsewhere herein, one or more of APIs described herein can, for example, get compiled into instructions, which may be fetched by instruction fetch unit, decoded by a processor decoder or equivalents, scheduled (e.g., in order or out of order) for execution by a scheduler or equivalents, executed by execution logic or equivalents, reordered, and then retired by rename and retire unit. API(s) (and/or compiled instructions including API(s)) can be stored in any storage outside or inside of processor 2300 (e.g., in cache and/or memory). Any number of CPU cores 2302 may be included in any number of CPU cluster(s) that can be coupled to memory and/or cache, such as, but not limited to a shared L2 cache. Memory can be separate or shared, e.g., CPU clusters of CPU cores 2302 can couple to memory subsystem 2310 that can include fabric, system level cache and any number of memory management units that can, for example, read and write memory (e.g., DRAM). Qualcomm Sensing Hub (not shown) includes micro NPUs, a power rail, and traditional sensors (a gyrometer, accelerometer, even a barometer) with voice and data streams. Memory subsystem 2310 can include memory and cache on processor 2300, which may include one or more levels of cache (e.g., L1, L2, L3, and/or last-level cache) and high-bandwidth memory (e.g., HBM2e or HBM3) in any combination, e.g., for storing information and/or instructions to perform any of the operations described above or elsewhere herein. All or some of memory and/or cache in memory subsystem 2310 can be shared or used individually by any one or combinations of components (e.g., GPU 2306, NPU 2304, and CPU 2302) on processor 2300.

Qualcomm AI Engine 2300 may be programmed and controlled with an a software stack to perform some or all of the operations described herein, and include, e.g., a Qualcomm^{®} Neural Processing SDK for inferencing with versions for Android, Linux, and Windows. Developer libraries and services support programming languages, virtual platforms, and compilers. At a lower level of software stack, system software includes basic real-time operating system (RTOS), system interfaces, and drivers. Software stack supports different operating systems, including Android, Windows, Linux, and QNX, and deployment and monitoring infrastructure like Prometheus, Kubernetes, and Docker. For direct cross-platform access to GPU 2306, OpenCL and DirectML may be supported. For CPU 2302, a LLVM compiler infrastructure optimizations enable accelerated and efficient AI inference. With respect to Qualcomm AI Engine 2300 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of Qualcomm AI Engine 2300 (e.g., in cache and/or memory). A result of API(s) can then be stored in storage within or outside of Qualcomm AI Engine 2300, including registers, DRAM, flash, SRAM, cache, or other memory.

In at least one embodiment, processor 2300 or Qualcomm AI Engine 2300 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

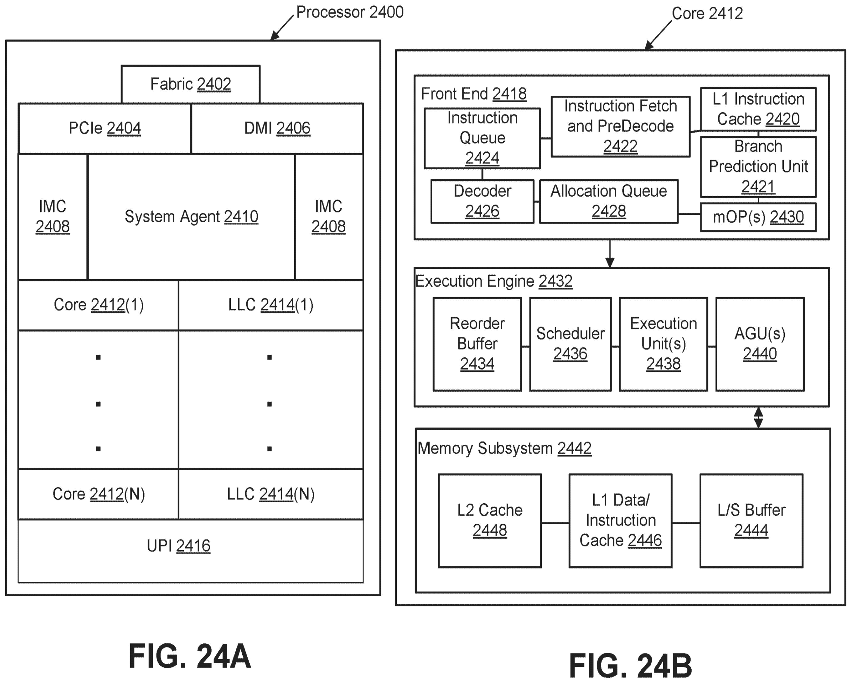

FIG. 24A illustrates a processor 2400, in accordance with at least one embodiment. Processor 2400 can include an processor with scalable family from Intel Corporation in Santa Clara, CA or another processor that shares at least some of the components described herein. Processor 2400 can include one or more cores 2412(1)-2412(N), where N is any integer greater than 1 that can perform the operations described elsewhere herein. Cores 2412(1)-2412(N) can be interlinked together using ring and/or mesh interconnects. With a mesh interconnects architecture, an array of vertical and horizontal communication paths may allow traversal from one core to another 2412(1)-2412(N) through a shortest path (hop on vertical path to correct row, and hop across horizontal path to correct column). For mesh interconnects, a die can house cores 2412(1)-2412(N) and can include a grid of converged mesh stops (CMS) that may be associated (e.g., 1:1) with cores 2412(1)-2412(N). Each core can be associated with one lower level cache (LLC) slice 2414(1)-2414(N), or cores 2412(1)-2412(N) can share cache, e.g., lower level cache. LLCs 2414(1)-2414(N) can be inclusive by incorporating blocks in higher level cache (e.g., L2 cache) or non-inclusive (having blocks that may be not present in higher level cache). Each core and LLC slice can include a Caching and Home Agent (CHA) (not shown) that can maintain cache coherency by providing scalability of resources across mesh interconnects for Intel^{®} Ultra Path Interconnect (Intel^{®} UPI 2416) cache coherency functionality. UPI 2416 can provide a coherent interconnect for scalable systems and can allow for multiple processors to share a single shared address space through links, such as, but not limited to, two or three UPI links per processor.

Processor 2400 can also include System Agent 2410 that can house and/or perform various functionalities, such as, but not limited to, memory management, display functions, and/or input/output (I/O) functions. For example, processor 2400 can include one or more integrated memory controller(s) (IMC) 2408. IMC 2408 can control and manage memory, such as, but not limited to, different memory types e.g., DDR ram, like DDR4 or others described elsewhere herein. System Agent 2410 can include a display controller (not shown) to support display(s). System Agent 2410 can also incorporate PCIe 2404 (e.g., up to 20 lanes of PCIe), e.g., that can connect with an external dedicated graphics hookup over DMI bus (e.g., Intel's DMI 3.0 bus) 2406. System Agent 2410 can include an Image Processing Unit (IPU) (not shown) which incorporates an image signal processor (ISP) on-die. Fabric 2402 can provide scalability for connecting to other nodes (e.g., processors, such as processor 2400), and can, for example, be used with Cornelis Networks, an element of Intel^{®} Scalable System Framework, that delivers the performance for high performance computing (HPC) workloads and the ability to scale to tens of thousands of nodes.

FIG. 24B illustrates components within core 2412, in accordance with at least one embodiment. Core 2412 can include front-end 2418, back-end or execution engine 2432, and memory subsystem 2442. Front-end 2418 can provide execution engine 2432 with operations (e.g., operations described elsewhere herein) by decoding instructions stored in memory. For example, front-end 2418 can include a micro-operations (µOps) cache path and/or a legacy path, along with branch prediction unit 2421 that can determine paths instructions. A legacy path for instructions may include fetching variable-length (e.g., x86) instructions from L1 instruction cache 2420 with instruction fetch and predecode 2422, queuing the instructions in instruction queue 2424, and decoding instructions using decoder 2426 into µOps that can be provided to allocation queue 2428. Alternatively, a µOPs cache path may include a cache containing already decoded µOps (µOps 2430) that can be sent to allocation queue 2428. Allocation queue 2428 can perform as an interface between front-end 2418 and execution engine 2432, and can provide instructions to execution engine 2432. One or more of API(s) described herein can, for example, get compiled into instructions that can be stored, processed, and executed by front-end 2418, execution engine 2432, and stored in memory subsystem 2442.

Execution engine 2432 can receive micro-operations into reorder buffer 2434, which can register allocation, rename, and retire µOPs. From reorder buffer, µOPs can be sent to scheduler 2436 that can be connected one or more different execution units 2438, which can be connected to address generation unit (AGU) 2440. Execution units 2438 can perform, e.g., basic arithmetic logic unit (ALU) operations, multiplication, division, and/or more complex operations, such as, but not limited to, various vector operations. Scheduler 2436 may manage queuing µOPs for one or more of execution units 2438 depending, e.g., on operations needed to be performed.

Memory subsystem 2442 can process load and store requests as well as ordering operations. For example, µOPs may relate to memory access (e.g. load and store), and those can be sent on dedicated scheduler ports that can perform those memory operations. Store and load operations, for example, can be sent to load and store buffer(s) 2444. Memory subsystem 2442 can also include shared or separate L1 data and instruction cache 2446, as well as L2 cache 2448 that can be used and shared by L1 data and instruction cache 2446. As described above for FIG. 24A, each core 2412 can be connected to a slice of a third level of cache (e.g., LLC 2414) that can be shared by all core 2412.

In at least one embodiment, processor 2400 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

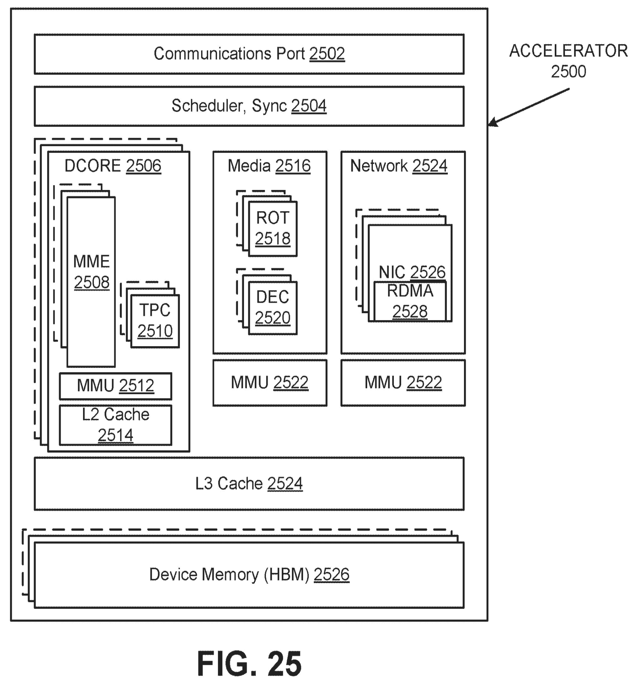

FIG. 25 illustrates an AI accelerator 2500, in accordance with at least one embodiment. Processor 2500 can include a processor with AI accelerator architecture from Intel Corporation in Santa Clara, CA or another processor that shares at least some of the components described herein. AI accelerator 2500 may use instructions that, if executed by AI accelerator 2500, cause AI accelerator 2500 to perform some or all of processes and techniques described elsewhere herein. For example, with respect to AI accelerator 2500 and any of its components described above or elsewhere herein, one or more of APIs described herein can, for example, get compiled into instructions, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of AI accelerator 2500 (e.g., in cache and/or memory). A result of API(s) can then be stored in storage within or outside of AI accelerator 2500, including registers, DRAM, flash, SRAM, cache, or other memory. AI accelerator 2500 may include one or more compute dies that can include homogeneous or heterogeneous processors. Compute dies may include one or more central processing units (CPU), one or more graphics processing units (GPU), or combinations of both.

In at least one embodiment, compute dies may include compute engines to perform AI computations. In at least one embodiment, AI accelerator 2500 compute dies may be split into any number of (e.g., four) clusters that may be referred to as a DCORE (Deep Learning Core) 2506 and contain any number of Matrix Multiplication Engines (MMEs) 2508, Tensor Processor Cores (TPCs) 2510, memory management unit 2512, and L2 Cache 2514, in any combination. MME(s) 2508 can perform operations that use Matrix Multiplication, like fully connected layers, convolutions and batched-General Matrix Multiplications (GEMMs). MMEs 2508 may be equipped with Multiply-Accumulate Units (MACs) (not shown) that, for example, may perform General Matrix Multiplication (GEMM) operations, such as, but not limited to, an AxB multiplication that involves generating tensor C[NxM] from two input tensors, A[NxK] and B[KxN]. MME(s) 2508 may be programmed with array dimensions, locations, data types, and various execution operands. MME(s) 2508 can retrieve tensors A and B from memory, pulling them into its streaming buffers for matrix multiplication to be performed in parallel by MACs. MME(s) 2508 may push tensor C back to memory upon completion. TPC(s) 2510 may include any number of scalar units for performing scalar operations, any number of vector units for performing vector operations, any number of register files or local memory units (e.g., a vector local memory), and load and store components for instructions, which can be coupled to memory or cache (e.g., HBM, L3 cache and/or L2 cache) (all not shown). TPCs can support different types of parallel processing, e.g., Very Long Instruction Word (VLIW) Single-Instruction Multiple-Data (SIMD) that supports data types, such as, but not limited to, FP32, BF16, FP16 & FP8 (both E4M3 and E5M2), UINT32, INT32, UINT16, INT16, UINT8 and INT8 datatypes. Any number of compute dies may be connected through an interconnect. An interconnect that can connect compute dies can be over an interposer bridge that, e.g., is transparent to software.

Memory on AI Accelerator 2500 may include one or more levels of cache (e.g., L1, L2, L3, and/or last-level cache) and high-bandwidth memory (e.g., HBM2e or HBM3) in any combination. Memory and/or cache systems can be unified or separate. Compute dies of AI accelerator 2500 may include on-die memory that includes one or more levels (e.g., two-levels) of cache. On-die SRAM or other memory described elsewhere herein can be used as a uniformly accessible last-level cache (L3) or split to slices of L2 cache that may be accessible to groups of MMEs 2508 and TPCs 2510. Using on-die memory as L2 or L3 cache can be fully configurable by software, which dynamically may decide per I/O tensor its optimal cache allocation. AI Accelerator 2500 may include one or more Memory Management Units (MMUs) 2522 for managing memory, such as allowing AI accelerator 2500 memory subsystem to operate in a virtual space when accessing VRAM.

AI accelerator 2500 may include a communications port (e.g., a PCIe Gen5 X16 port) 2502 for communicating with a host and Scheduling and Synchronization Unit 2504. AI accelerator 2500 may include Media Unit 2516 that may include any number or combinations of Media Decoder Engines (DECs) 2520 and Rotator Engines (ROT) 2518. AI accelerator 2500 may include a network unit 2524 that may include any number or combinations of network ports 2526 and accompanied RDMA Engine(s) 2528, L2 Cache, and memory (e.g., HBM2e or HBM3) stacks. AI accelerator 2500 can incorporate a programmable Control Path entity (not shown) to manage parallel and efficient execution of various engines. Control Path can include Submission Queues (SQs) that may be issued by runtime system, Completion Queues (CQs) that may be used for job completion reporting, a Programmable Scheduling Mechanism that may be utilized for task scheduling, a Programmable Hardware Synchronization Mechanism or 'Sync Manager (SM)' that may be used for hardware synchronization, a Programmable Interrupt Service Mechanism or 'Interrupt Manager (INTR)' that can enable passing of asynchronous events to drivers.

AI accelerator 2500 may include media decoding units that support Video Formats, such as, but not limited to, HEVC, Progressive H.264, SVC base layer, MVC, VP9, JPEG, Progressive JPEG. AI accelerator 2500 may support post processing of decoded media streams, such as, but not limited to, image down-scaling (resizing an image), vertical and horizontal scaling at different scaling ratios, Image up-scaling, Image cropping, bilinear scaling, and Lancos scaling. AI accelerator 2500 may implement two post processing channels per decoder unit, one with scalar (up and down) and one just to output the original image. AI accelerator 2500 may include a hardware rotator engine that performs the following transformations of an input image: 2D rotation, 3D rotation, Projection, distorting and undistorting images, resampling input data at user-defined coordinates, and rescaling.

RDMA 2528 over Converged Ethernet on AI accelerator 2500 may enable scaling from a single node (i.e., a single AI Accelerator 2500 to hundreds or thousands of nodes or AI Accelerators 2500). NW Subsystem 2524 can include an Intel^{®} Gaudi^{®} Communication Library (IGCL), a master conductor that orchestrates data movement, and a programable scheduling mechanism that can enable smooth activation of engines while maintaining task dependencies. A accelerator networking sub-system can include Gigabit Ethernet NIC ports 2526, a Layer2 MAC (not shown), and RDMA Engines 2528. AI Accelerator 2500 can include Aggregation Engines for performing summing activities. All engines in processor 2500 can operate in parallel, e.g., MME(s) 2508, TPC(s) 2510 and NIC(s) 2526 can all work at the same time. There can be dependency between operations running on different engines, e.g., output of one engine can be used as input of another engine, and/or MME, TPC and NIC can be scheduled to run in parallel. When one engine has completed its executing operation, another engine can be scheduled to start working on the next operation (immediately upon readiness of its inputs).

AI Accelerator 2500 can be operated and controlled using software layer 2528 that may include low-level components, such as, but not limited to, a graph compiler, an automatic kernel fuser and a library of precompiled kernels, as well as integration to AI ecosystems, such as, but not limited to, PyTorch, DeepSpeed, Hugging Face, vLLM, Ray and more, or as described elsewhere herein with respect to software and programming platforms. Software layer 2528 may include implementations of algorithms, such as, but not limited to, Paged Attention, Flash Attention and more. Software layer 2528 may generate optimized binary code that implements a given model topology, such as, but not limited to, performing operator fusion, data layout management, parallelization, pipelining and memory management, and graph-level optimizations.

In at least one embodiment, AI accelerator 2500 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

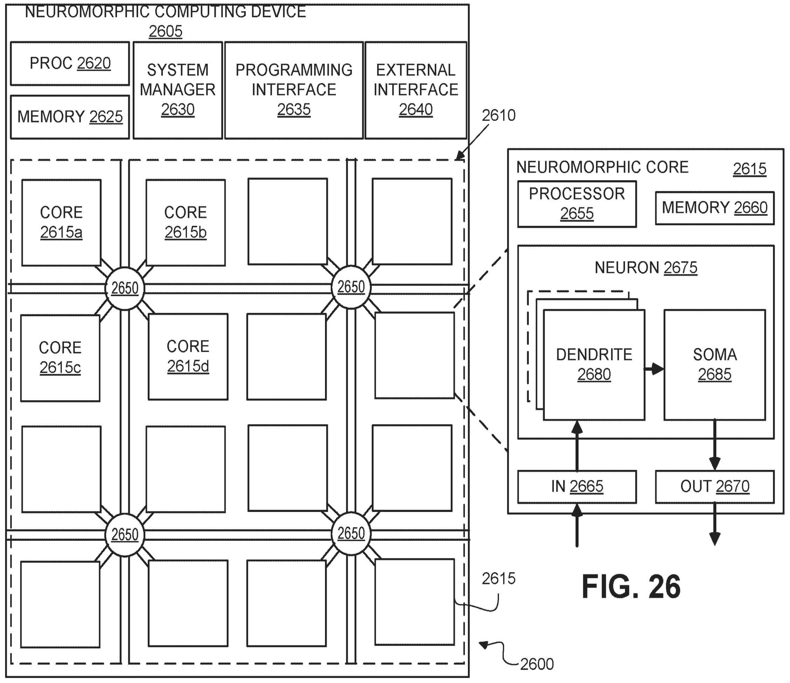

A neuromorphic computing system is described that adopts a multicore architecture where each core houses computing elements including neurons, synapses with on-chip learning capability, and local memory to store synaptic weights and routing tables. FIG. 26 is a simplified block diagram 2600 illustrating an example of at least a portion of such a neuromorphic computing device 2605, in accordance with at least one embodiment. Neuromorphic computing device 2605 can include a neuromorphic processor from Intel Corporation in Santa Clara, CA or another processor that shares at least some of the components described herein. As shown in this example, a device 2605 may be provided with a network 2610 of multiple neural network cores interconnected by an on-device network such that multiple different connections may be potentially defined between cores. For instance, a network 2610 of spiking neural network cores may be provided in device 2605 and may each communicate via short packetized spike messages sent from core to core over network channels. Each core (e.g., 2615) may possess processing and memory resources and logic to implement some number of primitive nonlinear temporal computing elements, such as, but not limited to, multiple (e.g., 1000+) distinct artificial neurons (referred to herein as "neurons"). For instance, each core may be capable of concurrently implementing multiple neurons such that neuromorphic cores may implement many multiples of neurons using device 2605. With respect to neuromorphic computing device 2605 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of neuromorphic computing device 2605 (e.g., in cache and/or memory). A result of API(s) can then be stored in storage within or outside of neuromorphic computing device 2605, including registers, DRAM, flash, SRAM, cache, or other memory equivalents.

Continuing with the example of FIG. 26, neuromorphic computing device 2605 may additionally include processor 2620 and system memory 2625 to implement one or more components to manage and provide functionality of neuromorphic computing device 2605. For instance, system manager 2630 may be provided to manage global attributes and operations of neuromorphic computing device 2605 (e.g., attributes affecting network of cores 2610, multiple cores in network 2610, interconnections of neuromorphic computing device 2605 with other devices, manage access to global system memory 2625, among other potential examples). In one example, system manager 2630 may manage the definition and provisioning of a specific routing tables to various routers in network 2610, orchestration of a network definition and attributes (e.g., weights, decay rates, etc.) to be applied in network 2610, core synchronization and time multiplexing management, routing of inputs to appropriate cores, among other potential functions.

As another example, neuromorphic computing device 2605 may additionally include programming interface 2635 through which a user or system may specify a neural network definition to be applied (e.g., through a routing table and individual neuron properties) and implemented by mesh 2610 of neuromorphic cores. A software-based programming tool may be provided with or separate from neuromorphic computing device 2605 through which a user may provide a definition for a particular neural network to be implemented using network 2610 of neuromorphic cores. Programming interface 2635 may take an input of a programmer to then generate corresponding routing tables and populate local memory of individual neuromorphic cores (e.g., 2615) with specified parameters to implement a corresponding, customized network of artificial neurons implemented by neuromorphic cores 2615.

In some cases, neuromorphic computing device 2605 may advantageously interface with and interoperate with other devices, including general purpose computing devices, to realize certain applications and use cases. Accordingly, external interface logic 2640 may be provided in some cases to communicate (e.g., over one or more defined communication protocols) with one or more other devices. An external interface 2640 may be utilized to accept input data from another device or external memory controller acting as a source of input data. External interface 2640 may be additionally or alternatively utilized to allow results or output of computations of a neural network implemented using neuromorphic computing device 2605 to be provided to another device (e.g., another general purpose processor implementing a machine learning algorithm) to realize additional applications and enhancements, among other examples.

As shown in FIG. 26, network 2610 of multiple neural network cores interconnected by an on-device network is shown illustrating a portion of a network fabric interconnecting multiple neuromorphic cores (e.g., 2615 a-d). For instance, a number of neuromorphic cores (e.g., 2615 a-d) may be provided in a mesh, with each core being interconnected by a network including a number of routers (e.g., 2650). In one implementation, each neuromorphic core (e.g., 2615 a-d) may be connected to a single one of routers (e.g., 2650) and routers may be connected to at least one other router (as shown at 2610 in FIG. 26). As an example, in one particular implementation, four neuromorphic cores (e.g., 2615 a-d) may be connected to a single router (e.g., 2650) and each of routers 2650 may be connected to two or more other routers to form a manycore mesh, allowing each neuromorphic core to interconnect with each other neuromorphic core in neuromorphic computing device 2605. Moreover, as each neuromorphic core may be configured to implement multiple distinct neurons, router network of neuromorphic computing device 2605 may similarly enable connections, or artificial synapses (or, simply, "synapses"), to be defined between any two of potentially many (e.g., 30,000+) neurons defined using network of neuromorphic cores 2610 provided in neuromorphic computing device 2605.

FIG. 26 shows a block diagram illustrating internal components of one example implementation of neuromorphic core 2615. In one example, a single neuromorphic core may implement some number of neurons (e.g. 1024) that share architectural resources of neuromorphic core 2615 in a time-multiplexed manner. In one example, each neuromorphic core 2615 may include processor block 2655 capable of performing arithmetic functions and routing in connection with the realization of a digitally implemented artificial neuron, such as, but not limited to, explained herein. Each neuromorphic core 2615 may additionally provide local memory in which a routing table may be stored and accessed for a neural network, accumulated potential of each soma of each neuron implemented using core 2615 may be tracked, parameters of each neuron implemented by core may 2615 be recorded, among other data and usage. Components, or architectural resources, of neuromorphic core 2615 may further include input interface 2665 to accept input spike messages generated by other neurons on other neuromorphic cores and output interface 2670 to send spike messages to other neuromorphic cores over mesh network 2610. In some instances, routing logic for neuromorphic core 2615 may be at least partially implemented using output interface 2670. Further, in some cases, core (e.g., 2615) may implement multiple neurons within an example SNN and some of these neurons may be interconnected. In such instances, spike messages sent between neurons hosted on core 2615 may forego communication over routing fabric of neuromorphic computing device 2605 and may instead by managed locally at particular neuromorphic core 2615.

Each neuromorphic core may additionally include logic to implement, for each neuron 2675, artificial dendrite 2680 and artificial soma 2685 (referred to herein, simply, as "dendrite" and "soma" respectively). Dendrite 2680 may be a hardware-implemented process that receives spikes from network 2610. Soma 2685 may be a hardware-implemented process that receives each dendrite's accumulated neurotransmitter amounts for the current time and evolves each dendrite and soma's potential state to generate outgoing spike messages at the appropriate times. Dendrite 2680 may be defined for each connection receiving inputs from another source (e.g., another neuron). In one implementation, dendrite process 2680 may receive and handle spike messages as they serially arrive in time-multiplexed fashion from network 2610. As spikes are received, neuron's activation (tracked using soma 2685 (and local memory 2660)) may increase. When neuron's activation exceeds a threshold set for neuron 2675, neuron 2675 may generate a spike message that is propagated to a fixed set of fanout neurons via output interface 2670. Network distributes spike messages to all destination neurons, and in response those neurons, in turn, may update their activations in a transient, time-dependent manner, and so on, potentially causing the activation of some of these destination neurons to also surpass corresponding thresholds and trigger further spike messages, as in real biological neural networks.

As noted above, neuromorphic computing device 2605 may reliably implement a spike-based model of neural computation. Such models may also be referred to as Spiking Neural Networks (SNNs). In addition to neuronal and synaptic state, SNNs also incorporate the concept of time. For instance, in an SNN, communication occurs over event-driven action potentials, or spikes, that convey no explicit information other than the spike time as well as an implicit source and destination neuron pair corresponding to the transmission of the spike. Computation occurs in each neuron as a result of the dynamic, nonlinear integration of weighted spike input. In some implementations, recurrence and dynamic feedback may be incorporated within an SNN computational model. Further, a variety of network connectivity models may be adopted to model various real world networks or relationships, including fully connected (all-to-all) networks, feed-forward trees, fully random projections, "small world" networks, among other examples. A homogeneous, two-dimensional network of neuromorphic cores, such as, but not limited to, shown in the example of FIG. 26 may advantageously supports all of these network models. As some or all cores of neuromorphic computing device 2605 may be connected, some or all neurons defined in cores may be therefore also fully connected through some number of router hops. Neuromorphic computing device 2605 may further include fully configurable routing tables to define a variety of different neural networks by allowing each core's neurons to distribute their spikes to any number of cores in mesh 2610 to realize fully arbitrary connectivity graphs.

In an improved implementation of a system capable of supporting SNNs, such as, but not limited to, a very large scale integration (VLSI) hardware device illustrated in the example of FIG. 26, high speed and reliable circuits may be provided to implement SNNs to model information processing algorithms as employed by a brain, but in a more programmable manner. For instance, while a biological brain can only implement a specific set of defined behaviors, as conditioned by years of development, a neuromorphic processor device may provide a capability to rapidly reprogram all neural parameters. Accordingly, a single neuromorphic processor may be utilized to realize a broader range of behaviors than those provided by a single slice of biological brain tissue. This distinction may be realized by adopting a neuromorphic processor with neuromorphic design realizations that differ markedly from those of neural circuits found in nature.

As an example, a neuromorphic processor may utilize time-multiplexed computation in both a spike communication network and neuron machinery of neuromorphic computing device 2605 to implement SNNs. Accordingly, physical circuitry of neuromorphic computing device 2605 may be shared among many neurons to realize higher neuron density. With time multiplexing, a network can connect N cores with O(N) total wiring length, whereas discrete point-to-point wiring would scale as O(N²), realizing a significant reduction in wiring resources to accommodate planar and non-plastic VLSI wiring technologies, among other examples. In neuromorphic cores, time multiplexing may be implemented through dense memory allocation, for instance, using Static Random Access Memory (SRAM), with shared buses, address decoding logic, and other multiplexed logic elements. State of each neuron may be stored in processor's memory, with data describing each neuron state including state of each neuron's collective synapses, all currents and voltages over its membrane, among other example information (such as, but not limited to, configuration and other information).

A neuromorphic processor may adopt a "digital" implementation that diverts from other processors adopting more "analog" or "isomorphic" neuromorphic approaches. For instance, a digital implementation may implement integration of synaptic current using digital adder and multiplier circuits, as opposed to analog isomorphic neuromorphic approaches that accumulate charge on capacitors in an electrically analogous manner to how neurons accumulate synaptic charge on their lipid membranes. Accumulated synaptic charge may be stored, for instance, for each neuron in local memory of a corresponding core. Further, at an architectural level of an example digital neuromorphic processor, reliable and deterministic operation may be realized by synchronizing time across a network of cores such that any two executions of a design, given same initial conditions and configuration, will produce identical results. Asynchrony may be preserved at a circuit level to allow individual cores to operate as fast and freely as possible, while maintaining determinism at a system level. Accordingly, a notion of time as a temporal variable may be abstracted away in neural computations, separating it from a "wall clock" time that the hardware utilized to perform the computation. Accordingly, in some implementation, a time synchronization mechanism may be provided that globally synchronizes neuromorphic cores at discrete time intervals. A synchronization mechanism allows neural computation to complete as fast as circuitry allows, with a divergence between run time and biological time that a neuromorphic system models.

In operation, neuromorphic computing device 2605 may begin in an idle state with all neuromorphic cores inactive. As each core asynchronously cycles through its neurons, it generates spike messages that a mesh interconnect routes to appropriate destination cores containing all destination neurons. Implementation of multiple neurons on a single neuromorphic core may be time-multiplexed, and a time step may be defined in which all spikes involving multiple neurons may be processed and considered using shared resources of a corresponding core. As each core finishes servicing its neurons for a respective time step, cores may, in some implementations, communicate (e.g., using a handshake) with neighboring cores using synchronization messages to flush a mesh of all spike messages in flight, allowing cores to safely determine that all spikes have been serviced for a time step. At that point all cores may be considered synchronized, allowing them to advance their time step and return to an initial state and begin a next time step.

Given this context, and as introduced above, a device (e.g., 2605) implementing a mesh 2610 of interconnected neuromorphic cores may be provided, with core 2615 implementing potentially multiple artificial neurons capable of being interconnected to implement an SNN. Each neuromorphic core (e.g., 2615) may provide two loosely coupled asynchronous processes: an input dendrite process (e.g., 2680) that receives spikes from network 2610 and applies them to an appropriate destination dendrite compartments at the appropriate future times, and output soma process (e.g., 2685) that receives each dendrite compartment's accumulated neurotransmitter amounts for the current time and evolves each dendrite and soma's membrane potential state, generating outgoing spike messages at appropriate times (e.g., when a threshold potential of a soma has been reached). Note that, from a biological perspective, dendrite and soma names used here only approximate a role of these functions and should not be interpreted too literally.

In at least one embodiment, neuromorphic computing device 2605 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

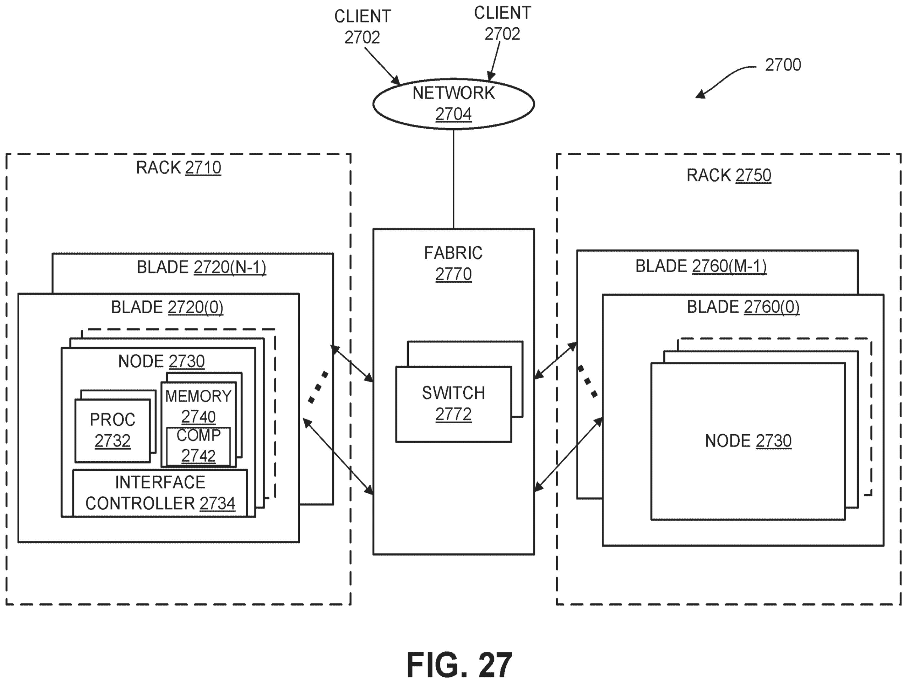

FIG. 27 is a block diagram of an embodiment of a multi-node network in which remote memory computation can be implemented, in accordance with any embodiment. System 2700 may represent a network of nodes described herein that can, e.g., be used to perform some or all of the operations described herein. System 2700 can represent a data center. System 2700 may represent a server farm. System 2700 may represent a data cloud or a processing cloud. System 2700 can represent a supercomputer. System 27 may include tens, hundreds, or thousands of nodes. Nodes of system 2700 may include processors, such as, but not limited to, central processing units (CPUs), graphics processing units (GPUs), or any combination of processors described herein, such as, but not limited to, other processors in FIGs. 21-33. With respect to any of processors in system 2700 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of a processor or node (e.g., in cache and/or memory). A result of API(s) can then be stored in storage within or outside of a processor or node, including registers, DRAM, flash, SRAM, cache, or other memory equivalents. System 2700 may include over nine thousand nodes, with each node including two Intel Xeon Max processors, six Intel Max series GPUs and a unified memory architecture, such as, but not limited to, that used in Intel Aurora Supercomputer from Intel Corporation in Santa Clara, CA or another supercomputer that shares at least some of the components described herein.

One or more clients 2702 make requests over network 2704 to system 2700. Network 2704 represents one or more local networks, or wide area networks, or a combination. Clients 2702 can be human or machine clients, which generate requests for execution of operations by system 2700. System 2700 executes applications or data computation tasks requested by clients 2702.

System 2700 can include one or more racks, which represent structural and interconnect resources to house and interconnect multiple computation nodes. Rack 2710 can include multiple nodes 2730. Rack 2710 may host multiple blade components 2720(0) to 2720(N-1), where N is an integer greater than or equal to 2. Hosting can refer to providing power, structural or mechanical support, and interconnection. Blades 2720(0) to 2720(N-1) can refer to computing resources on printed circuit boards (PCBs), where a PCB houses hardware components for one or more nodes 2730. Blades 2720(0) to 2720(N-1) may or may not include a chassis or housing or other "box" other than that provided by rack 2710. Blades 2720(0) to 2720(N-1) may include housing with exposed connector to connect into rack 2710. System 2700 may or may not include rack 2710, and each blade (e.g., 2720(0)) can include a chassis or housing that can stack or otherwise reside in close proximity to other blades and allow interconnection of nodes 2730. System 2700 may include 10,624 compute blades, which include 63,744 Intel Max Series GPUs and 21,248 Intel Xeon Max CPUs across 166 racks.

System 2700 can include fabric 2770, which represents one or more interconnectors for nodes 2730. Fabric 2770 can include multiple switches 2772 or routers or other hardware to route signals among nodes 2730. Additionally, fabric 2770 can couple system 2700 to network 2704 for access by clients 2702. In addition to routing equipment, fabric 2770 can be considered to include cables or ports or other hardware equipment to couples nodes 2730 together. Fabric 2770 can have one or more associated protocols to manage routing of signals through system 2700. A protocol or protocols is at least partly dependent on hardware equipment used in system 2700.

As illustrated, rack 2710 can include N blades (e.g., 2720(0) to 2720(N-1)). In addition to rack 2710, system 2700 can include rack 2750. As illustrated, rack 2750 may include M blades (e.g., 2760(0) to 2760(M-1)). M is not necessarily the same as N; thus, it will be understood that various different hardware equipment components could be used, and coupled together into system 2700 over fabric 2770. Blades 2760(0) to 2760(M-1) can be the same or similar to blades 2720(0) to 2720(N-1). Nodes 2730 can be any type of node as described herein, and may not be necessarily all the same type of node. System 2700 is not limited to being homogenous, nor is it limited to not being homogenous.

A node in blade 2720(0) is illustrated in detail. However, other nodes in system 2700 can be the same or similar. At least some nodes 2730 may be computation nodes, with processor 2732 and memory 2740. A computation node refers to a node with processing resources (e.g., one or more processors) that executes an operating system and can receive and process one or more tasks. At least some nodes 2730 can include storage server nodes with a server as processing resources 2732 and memory 2740. A storage server refers to a node with more storage resources than a computation node, and rather than having processors for execution of tasks, a storage server includes processing resources to manage access to storage nodes within a storage server.

Node 2730 can include interface controller 2734, which can represent logic to control access by node 2730 to fabric 2770. Logic can include hardware resources to interconnect to physical interconnection hardware. Logic can include software or firmware logic to manage interconnection. Interface controller 2734 can include a host fabric interface, which can include a fabric interface in accordance with any embodiment described herein.

Node 2730 may include memory subsystem 2740. Memory 2740 can include memory computation resources (comp) 2742, which represent one or more capabilities by memory 2740 to perform memory computations. System 2700 enables remote memory operations, such as, but not limited to, the operations described elsewhere herein. Thus, nodes 2730 can request memory computations by remote nodes, where data for computation remains local to an executing node instead of being sent over fabric 2770 or instead of being sent from memory to a fabric interface. In response to execution of memory computation, executing node can provide a result to a requesting node.

Processor 2732 can include one or more separate processors. Each separate processor can include a single processing unit, a multicore processing unit, or a combination. A processing unit can include a primary processor such as, but not limited to, a CPU (central processing unit), a peripheral processor such as, but not limited to, a GPU (graphics processing unit), or a combination. Memory 2740 can be or include memory devices and a memory controller.

Reference to memory devices can apply to different memory types. Memory devices generally refer to volatile memory technologies. Volatile memory is memory whose state (and therefore data stored on it) is indeterminate if power is interrupted. Nonvolatile memory refers to memory whose state is determinate even if power is interrupted. Dynamic volatile memory can refresh data stored in a device to maintain state. One example of dynamic volatile memory includes DRAM (dynamic random access memory), or some variant such as, but not limited to, synchronous DRAM (SDRAM). A memory subsystem as described herein may be compatible with a number of memory technologies, such as, but not limited to, DDR3 (dual data rate version 3, original release by JEDEC (Joint Electronic Device Engineering Council) on June 27, 2007, currently on release 21), DDR4 (DDR version 4, initial specification published in September 2012 by JEDEC), DDR4E (DDR version 4, extended, currently in discussion by JEDEC), LPDDR3 (low power DDR version 3, JESD209-3B, Aug 2013 by JEDEC), LPDDR4 (LOW POWER DOUBLE DATA RATE (LPDDR) version 4, JESD209-4, originally published by JEDEC in August 2014), WIO2 (Wide I/O 2 (WideI02), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5 (currently in discussion by JEDEC), HBM2 (HBM version 2), currently in discussion by JEDEC), or others or combinations of memory technologies, and technologies based on derivatives or extensions of such specifications.

In addition to, or alternatively to, volatile memory, in one embodiment, reference to memory devices can refer to a nonvolatile memory device whose state is determinate even if power is interrupted. In one embodiment, nonvolatile memory device is a block addressable memory device, such as, but not limited to, NAND or NOR technologies. Thus, a memory device can also include a future generation nonvolatile devices, such as, but not limited to, a three dimensional crosspoint (3DXP) memory device, other byte addressable nonvolatile memory devices, or memory devices that use chalcogenide phase change material (e.g., chalcogenide glass). In one embodiment, a memory device can be or include multi-threshold level NAND flash memory, NOR flash memory, single or multi-level phase change memory (PCM) or phase change memory with a switch (PCMS), a resistive memory, nanowire memory, ferroelectric transistor random access memory (FeTRAM), magnetoresistive random access memory (MRAM) memory that incorporates memristor technology, or spin transfer torque (STT)-MRAM, or a combination of any of the above, or other memory.

In at least one embodiment, system 2700 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

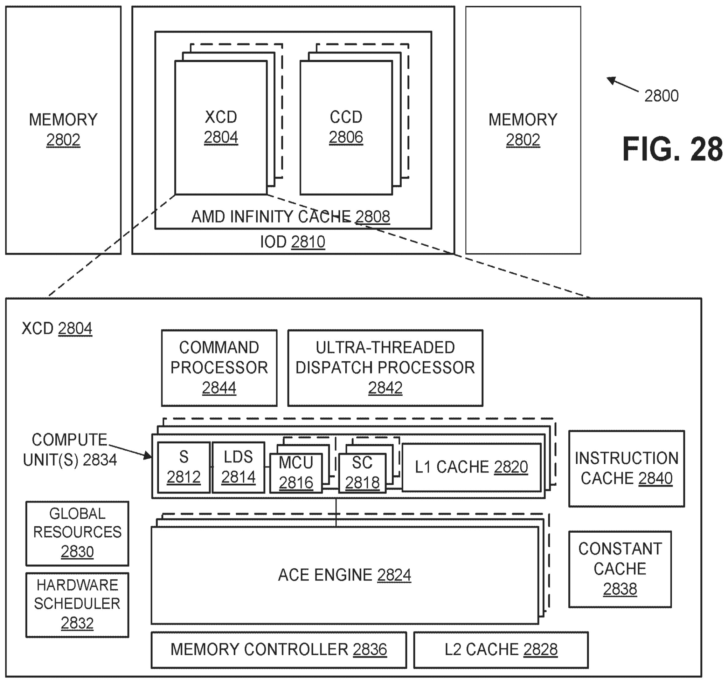

FIG. 28 illustrates accelerated processing unit 2800, in accordance with at least one embodiment. Accelerated processing unit 2800 can include a processor based on CDNA architecture from AMD Corporation in Santa Clara, CA or another processor that shares at least some of the components described herein. Accelerated processing unit 2800 can include one or more accelerator complex dies (XCDs) 2804 for performing operations described elsewhere herein, such as, but not limited to, graphics processing and/or parallel processing as well as computations with instruction-level parallelism, including support for a broad range of precisions (INT8, FP8, BF16, FP16, TF32, FP32, and FP64) and sparse matrix data (i.e. sparsity). XCDs may, in some instances, be referred to as Graphics Compute Dies (GCDs). Accelerated processing unit 2800 can include one or more complex compute dies (CCDs) 2806 for performing operations described elsewhere herein, such as, but not limited to, those operations performed by host processors. CCDs may, in some instances, be referred to as core complexes or CCXs, such as, but not limited to, CCXs used in AMD Ryzen processors. XCDs and CCDs can share any type of cache or memory (e.g., one or more memory units 2802), or have cache or memory allocated to each XCD or CCD or groups of XCDs or CCDs. For example, on-package AMD Infinity Fabric connects XCDs and CCD into shared AMD Infinity Cache 2808 and, in some embodiments, high-bandwidth memory (e.g., HMB3). Accelerated processing unit 2800 can include an AMD MI300a processor that includes three CPU chiplets (or CCDs) and six accelerator chiplets (XCDs) on top of four input-output dies (IODs) that may be layered on a piece of silicon that links them together (e.g., via AMD Infinity Fabric) to eight stacks of high-bandwidth DRAM that ring a superchip. An AMD MI300x processor substitutes CCDs for two more XCDs, for an accelerator-only system.

Accelerated processing unit 2800 can include one or more input/output (I/O) interfaces. For example, XCDs 2804 and CCDs 2806 can be together on one or more input-output dies (IODs) 2810 that can include one or more I/O interfaces. IODs 2810 can include of any number and type of I/O interfaces (e.g., PCI , PCI-Extended ("PCI-X"), PCIe, gigabit Ethernet ("GBE"), USB, etc.). Various types of peripheral devices can be coupled to I/O interfaces 2870. I/O interfaces from IODs 2810 can also be used for connected one or more accelerated processing units 2800, e.g., in a server architecture.

Accelerated processing unit 2800 can include one or more memory units 2802 for storing instructions and other information used to perform operations described elsewhere herein. Memory units 2802 can include any volatile memory, such as, but not limited to, memory types described elsewhere herein and can include, e.g., high-bandwidth memory (e.g., HMB3) or high-bandwidth DRAM. Memory associated with accelerated processing unit 2800 (e.g., memory units 2802) can include system memory that can be used, for example, for commands, instructions and constants, and inputs and outputs. Memory units 2802 can also include device memory that can be used as storage and, for example, for commands, instructions and constants, and inputs and outputs, as return buffer(s) and for private data. Memory units 2802 can be linked to one or more IODs 2810. L1 cache 2820 starts a memory hierarchy that includes shared L2 cache 2828, e.g., within XCDs. AMD Infinity Cache^{™}, which is a last level cache (LLC) located on an active I/O die (IOD). CCDs 2806 and XCDs 2804 may have separate or shared memory. AMD Infinity Architecture and AMD Infinity Fabric^{™} technology can enable coherent, high-throughput unification of GPU and CPU chiplet technologies (e.g., XCDs, CCDs, and/or CCXs) with memory (e.g., stacked HBM3 memory) in single devices and across multi-device platforms.

As shown in FIG. 28, an XCD 2804 can include a shared set of global resources 2830, which can include hardware scheduler 2832 and Asynchronous Compute Engines (ACE) 2824 that send tasks (e.g., compute shader workgroups) to Compute Units (CUs or cores) 2834. ACEs 2824 (e.g., four) can be each associated with CUs 2834 (e.g., 40 CUs), and some of CUs 2834 can be disabled for yield management. CUs 2834 can have dedicated cache or share cache (e.g., L2 cache) 2828 that may be used to coalesce all memory traffic for a die. CUs 2834 can include threaded and parallel processor cores including instruction fetching and scheduling with Scheduler (S) 2812, matrix core unit (MCU) 2816 and shader core (SC) 2818 (e.g., execution units for scalar, vector and matrix data types), as well as load/store pipelines with an L1 cache 2820 and Local Data Share (LDS) 2814. Local data share can include, for example, a scratch RAM with built-in arithmetic capabilities that allow data to be shared between threads in a workgroup. An instruction cache 2840 (e.g., for storing and providing instructions for performing operations described elsewhere herein) and a constant cache 2838 can be connected to one or more CUs and can be shared between two CUs. Matrix cores 2816 can process a variety of data types, such as, but not limited to, INT8, FP8, FP16, BF16 and TF32 data types. Accelerated processing unit 2800 can include compute units 2834 that may be arranged in an array format, e.g., as a data-parallel-processor (DPP) array. Ultra-threaded dispatch processor 2842 can communicate with compute units 2834, and command processor 2844 can read commands that a host has written to memory-mapped registers in a system-memory address space (not shown). Command processor 2844 can send hardware-generated interrupts to a host processor (e.g., a CCD) when a command is completed. Memory controller 2836 can also have direct access to all device memory and host-specified areas of system memory. To satisfy read and write requests, memory controller 2836 can perform functions of a direct-memory access (DMA) controller, including computing memory-address offsets based on a format of requested data in memory. For example, one or more of APIs described herein can, for example, get compiled into instructions that can be stored in instruction cache 2840 and then fetched by instruction fetch logic in processor 2840, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2800 (e.g., in cache and/or memory). A result of API(s) can then be stored in storage within or outside of processor 2800, including registers, DRAM, flash, SRAM, cache, or other memory equivalents.

An application can include a program running on a host processor (e.g., a CCD) and programs, called kernels, running on one or more XCDs. Programs can be controlled by host commands that set internal base-address and other configuration registers, specify a data domain on which accelerated processing unit 2800 can operate, invalidate and flush caches on accelerated processing unit 2800, and cause accelerated processing unit 2800 to begin execution of a program. Kernels can be referred to as programs executed by accelerated processing unit 2800. A kernel can be executed independently on every work item, or as groups of work-items that can be referred to as a wavefront, which can execute a kernel on all work-items in a group (e.g., 64) in one pass. Compute units 2834 can include a scalar arithmetic logic unit (ALU), which can operates on one value per wavefront (common to all work items), a vector ALU, which can operate on unique values per work-item, a local data share 2814, which can allow work-items within a workgroup to communicate and share data, a scalar memory (not shown), which can transfer data between scalar general-purpose registers (SGPRs) and memory through a cache, and vector memory, which can transfer data between vector general-purpose registers (VGPRs) and memory, including sampling texture maps. Kernel control flow can be handled using scalar ALU instructions, which can includes if/else, branches and looping. Scalar ALU (SALU) and memory instructions can work on an entire wavefront and operate on one or more SGPRs. Vector memory and ALU instructions can operate on all work-items in a wavefront at one time.

In at least one embodiment, accelerated processing unit 2800 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

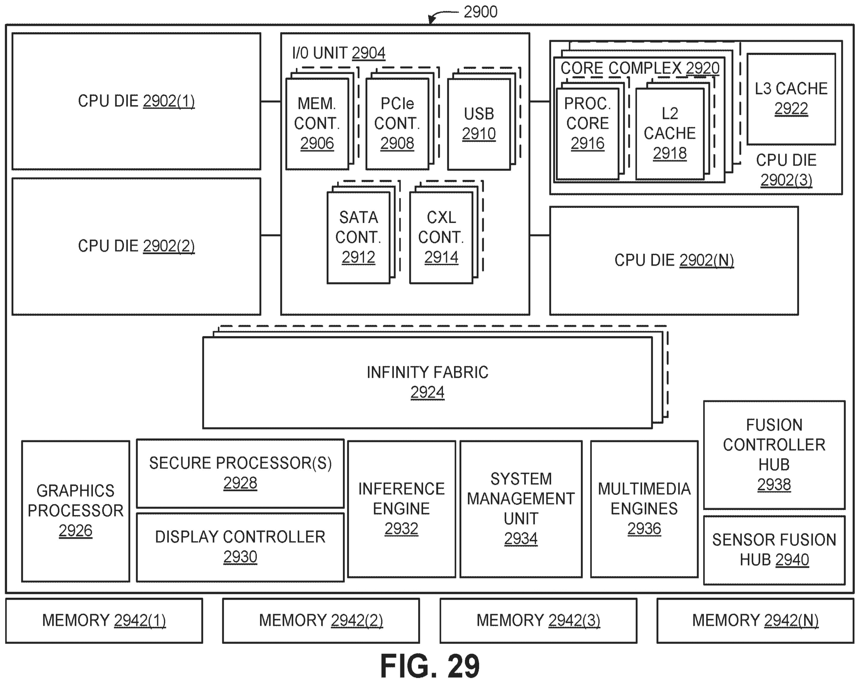

FIG. 29 illustrates a processor 2900, such as, but not limited to, a processor based on a Zen architecture (such as, e.g., Zen 1, 2, 3, 4, 5 or other) from AMD Corporation in Santa Clara, CA or another processor that shares at least some of the components described herein. Processor 2900 includes one or more CPU dies 2902(1)-2902(N), where N is any integer greater than 1. CPU die 2902 can include any number of processor cores 2916 (e.g., to perform any of the operations described elsewhere herein) and any number of cache memories (e.g., to store instructions and other information to perform any of the operations described elsewhere herein), in any combination. For example, L2 Cache units 2918 can be coupled to processor core(s) 2916, which can share and/or couple individually to L2 Cache units 2918. Processor cores 2916 can couple to L3 cache 2922 individually and/or share L3 Cache, which can be a lowest level cache (LLC) 2922 for access to data and other information used by processor cores 2916. One or more processor cores 2916 and one or more L2 Cache units 2918 can be included in a core complex (CCX) 2920 that can include (e.g., a 32 MB) shared cache (e.g., L3 cache 2922). Core complex 2920 can be fabricated onto a die (CCD or CPU die) 2902. For example, up to 12 core complexes 2920 can be configured into a processor along with 8 CPU dies 2902 to provide up to 96 processor cores 2916 for processor 2900. A 'Zen 4c' core complex 2920, for example, can include up to eight cores 2916 and a shared 16 MB L3 cache 2922. Two of these core complexes 2920 can be combined onto a single CPU die 2902 for 16 cores per die and a total of 32 MB of L3 cache 2922 per die. Up to eight of CPU dies 2902 may be combined with an I/O unit 2904 to provide CPUs with up to 128 processor cores 2916. Up to four 'Zen 4c' dies described above can be combined to provide CPUs with up to 64 processor cores 2916.

Processor 2900 can include a variety of configurations for input/output operations that are described further herein. I/O unit 2904 can include one or more memory controllers 2906 that can manage memory usage (e.g., DDR5 memory) for processor 2900. I/O unit 2904 may include one or more SATA disk controllers for managing storage 2912 and one or more Compute Express Link (CXL^{™}) 1.1+ memory controllers 2914 that can provide CPU-to-device and CPU-to-memory connections and can be flexibly assigned to specific functions at server design time. I/O unit 2904 may include PCIe controller 2908 for connecting peripherals and other components connected to processor 2900. I/O unit 2904 may include USB ports 2910 for connecting to other components separate from processor 2900. CPU dies 2902 can support any number of connections, e.g., one or two connections, to I/O unit 2904. As shown, I/O unit 2904 can include components described further herein, and I/O unit 2904 can be a I/O die that houses several different components. Memory controller 2906, PCIe controller 2908, USB ports 2910, SATA controller 2912, and/or CXL controller 2914 can be integrated anywhere within processor 2900 either separately or in any groups or combinations thereof.

Processor 2900 can include Infinity Fabric 2924 interconnects (which can be similar to or based on PCIe architectures) that can provide connections among CPUs (e.g., CPU dies 2902(1)-2902(N)), graphics processor(s) 2926, inference engine(s) 2932, and other components in a multi-chip architecture, such as secure processor(s) 2928 and I/O unit 2904. One or more AMD Infinity Fabric^{™} interconnects 2910 can connect to CPU dies 2902(1)-2902(N) and serve as a connection that is used between CPUs. One or more Infinity Fabric connections 2910 can connect each CPU die 2902 to I/O unit 2910.

In at least one embodiment, processor 2900 can include central processing units (CPUs) and other associated hardware and software described above and further herein. Processor 2900 can also include graphics processor(s) 2926. Graphics processor 2926 can be used for image generation and processing, as well as other computations and operations described further herein. Graphics processor 2926 can be based on RDNA 3 or 3.5 architecture from AMD in Santa Clara, CA. Graphics processor 2926 can include graphics compute dies (GCDs) and memory cache dies (MCDs). GCDs can include any number of compute units (CUs) for graphics or other processing, such as operations performed by arithmetic logic units (ALUs) that are described further herein. Graphics processor 2926 can include L2 cache that can be used by compute units. MCDs (not shown) can include any number of memory units and can include cache, such as L3 cache, as well as memory interfaces for coupling to memory, such as memory 2942(1)-(N), where N is an integer. Components within graphics processor 2926 can be connected using various approaches, such as using Infinity Fabric 2924 interconnects outside or within graphics processor 2926.

Inference engine 2932 can provide neural processing capabilities for processor 2900 for computational processes that are used for neural networks, deep learning, and other artificial intelligence-related operations described further herein. Processor 2900 can include secure processor(s) 2928 for managing security of processor 2900, display controller 2930 for controlling displays, a system management unit 2934 for managing and operating some or all of the components on processor 2900, multimedia engines 2936 for audio and video operations, fusion controller hub 2938 for managing USB, SATA and PCIe connections to processor 2900, and sensor fusion hub 2940 for managing sensors, such as accelerometers. Processor 2900 can also include memory 2942(1)-(N), where N is any integer. Memory can include different memory types, such as LPDDR5 and/or DDR5, or others described elsewhere herein.

For performing operations described further herein, processor 2900 can include an execution pipeline including a front-end that can include a cache (e.g., L1 cache) that stores instructions (not shown). Flow of instructions can be modified by a branch predictor. Instructions can be decoded by a decoder, dispatched to a back-end for execution, and renamed. Instruction fetch and decode pipes, for example, can be dispatched to integer or floating point execution operations that can be scheduled by a scheduler and transferred to vector and/or general-purpose registers. Floating point multiplier and/or add operations can be processed, and arithmetic logic units (ALUs) can also be used to perform computations, such as arithmetic and logic operations. Outputs from computation units can be coupled to a load/store queue, which can be connected to cache, such as L1 cache and/or L2 cache.

With respect to processor 2900 and any of its components described above or elsewhere herein, one or more of APIs or equivalents described herein can, for example, get compiled into instructions or equivalents (e.g., AVX-512 instructions based on an SIMD model), which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 2900 (e.g., in cache and/or memory). A result of API(s) can then be stored in storage within or outside of processor 2900, including registers, DRAM, flash, SRAM, cache, or other memory equivalents.

In at least one embodiment, processor 2900 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

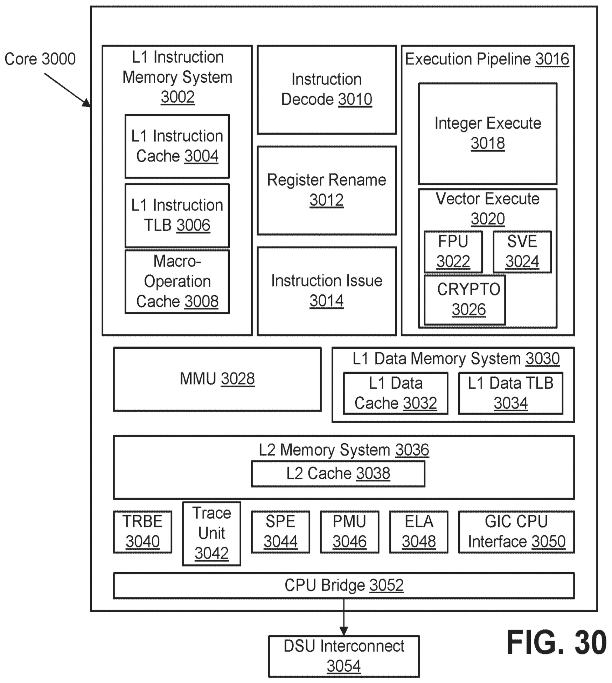

FIG. 30 illustrates an example of a processing core 3000 that may implement Arm architecture (e.g., v9.0-A) or another processor that shares at least some of the components described herein. Neoverse^{™} V2 core 3000 can be implemented inside a DynamIQ Shared Unit (DSU) cluster via DSU-110 interconnect 3054 for connected one or more cores, e.g., for parallel processing. Neoverse^{™} V2 core may be implemented as a single core in a DSU cluster that is configured for Direct connect, with or without L3 cache, snoop filter, or Snoop Control Unit (SCU) logic (not shown). Neoverse^{™} V2 core can include a CPU bridge 3052 that connects core 3000 to DSU-110 interconnect, which can also connect core 3000 to an external memory system and the rest of a system-on-a-chip. L1 instruction memory system 3002 can fetch instructions from an instruction cache 3004 and deliver instructions (e.g., one or more APIs described herein that may be compiled into instructions) to an instruction decode unit 3010, e.g., to perform some or all of operations described above or elsewhere herein. L1 instruction memory system 3002 may include L1 instruction cache 3004, e.g., with 64-byte cache lines, L1 instruction Translation Lookaside Buffer (TLB) 3006, e.g., with native support for 4KB, 16KB, 64KB, and 2MB page sizes, Macro-Operation Cache (MOP) 3008 (e.g., 1536-entry, 4-way skewed associative L0 MOP cache), which can contain decoded and optimized instructions for higher performance. Instruction decode unit 3010 can decode AArch64 instructions into internal format. Register rename unit 3012 can perform register renaming to facilitate out-of-order execution and dispatches decoded instructions to various issue queues. Instruction issue unit 3014 can control when decoded instructions may be dispatched to execution pipelines, and it can include issue queues for storing instructions pending dispatch to execution pipelines. Integer execution pipeline 3016 can be included in an execution pipeline and include integer execute unit 3018 that can perform arithmetic and logical data processing operations. Vector execute unit 3020 can be included in an execution pipeline and can perform Advanced SIMD and floating-point operations (FPU) 3022, execute Scalable Vector Extension (SVE) and Scalable Vector Extension 2 (SVE2) instructions 3024, and can optionally execute cryptographic instructions (Crypto) 3026. Advanced SIMD can include media and signal processing architecture that adds instructions primarily for audio, video, 3D graphics, image, and speech processing. A floating-point architecture provides support for single-precision and double-precision floating-point operations. L1 data memory system 3030 can execute load and store instructions, as well as service memory coherency requests. L1 data memory system 3030 can include an L1 data cache 3032 and a fully associative L1 data TLB 3034 with native support for 4KB, 16KB and 64KB page sizes and 2MB and 512MB block sizes. Memory Management Unit (MMU) 3028 can provide fine-grained memory system control through a set of virtual-to-physical address mappings and memory attributes that can be held in translation tables, which can be saved into TLB 3034 when an address is translated. L2 memory system 3036 can include L2 cache 3038, and it can be connected to DSU-110 3054 through an asynchronous CPU bridge 3052. Neoverse^{™} V2 core 3000 can support a range of debug, test, and trace options including a trace unit 3042 and a trace buffer 3040, and an Embedded Logic Analyzer (ELA) 3048. Neoverse^{™} V2 core 3000 can implement Statistical Profiling Extension (SPE) 3044 to provide a statistical view of the performance characteristics of executed instructions that software writers can use to optimize their code for better performance. Performance Monitoring Unit (PMU) 3046 can provide performance monitors that can be configured to gather statistics on operation of each core and memory system. Information can be used for debug and code profiling. Generic Interrupt Controller (GIC) CPU interface 3050, when integrated with an external distributor component, can be a resource for supporting and managing interrupts in a cluster system. In a cluster, there can be one CPU bridge 3052 between each Neoverse^{™} V2 core 3000 and DSU-110 3054. CPU bridge 3052 can control buffering and synchronization between core 3000 and DSU-1103054. CPU bridge 3052 can be asynchronous to allow different frequency, power, and area implementation points for each core 3000. CPU bridge 3052 can run synchronously without affecting other interfaces such as, but not limited to, debug and trace which can be asynchronous.

In at least one embodiment, core 3000 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

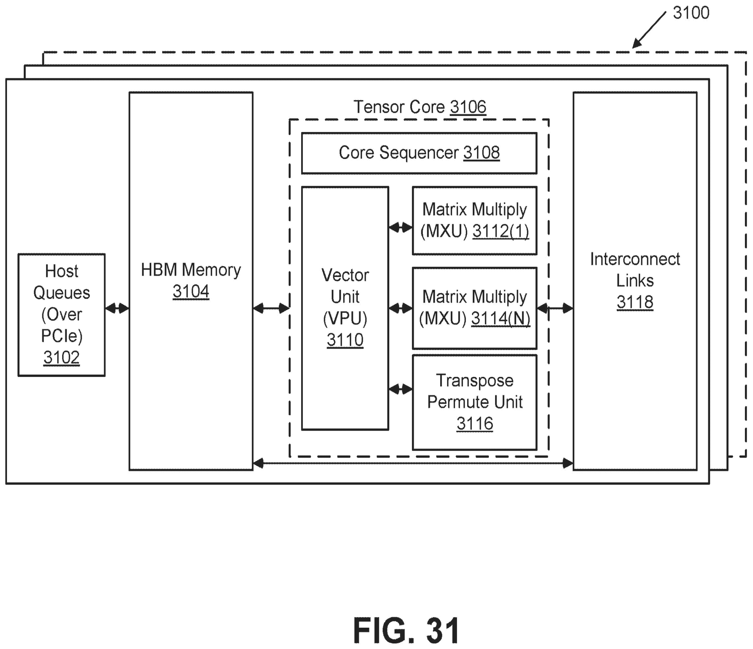

FIG. 31 illustrates one or more chips including one or more tensor processing units (TPUs) 3100, in accordance with at least one embodiment. TPUs 3100 in FIG. 31 can include application specific integrated circuits (ASICs), e.g., to perform some or all of the operations described above or elsewhere herein, such as, but not limited to, accelerate machine learning workloads performing matrix operations. TPUs 3100 may be ASICs from Alphabet Corporation in Mountain View, CA. Cloud TPU includes a cloud service that makes TPUs available as a scalable resource for processing tasks, such as, but not limited to, machine learning workloads that can run on frameworks such as, but not limited to, TensorFlow, Pytorch, and JAX.

Chip 3100 can include any number of TPUs that can include tensor cores 3106. Tensor core 3106 can include one or more core sequencer 3108, vector processing unit (VPU) 3110, matrix multiply unit (MXU) 3112(A)-3114(N), where N is any integer greater than 1, and a transpose permute unit 3116. Core Sequencer 3108 can fetch (e.g., VLIW (Very Long Instruction Word)) instructions from core's 3106 Instruction Memory (Imem), execute scalar operations using a scalar data memory (Smem) and scalar registers (Sregs) (not shown), and forward vector instructions to Vector Processing Unit (VPU) (3110. Instructions can, for example, launch eight operations: two scalar, two vector ALU, vector load and store, and a pair of slots that queue data to and from matrix multiply and transpose units. VPU 3110 can perform vector operations using a large on-chip vector memory (Vmem), and vector registers (Vregs). VPU 3110 can stream data to and from MXU through decoupling FIFOs. VPU 3110 can collect and distribute data to Vmem via data-level parallelism (2D matrix and vector functional units) and instruction-level parallelism (8 operations per instruction). A large two-dimensional matrix multiply unit (MXU) 3112(A)-3112(N) can, e.g., use a systolic array to reduce area and energy plus large, software-controlled on-chip memories instead of caches. Transpose Reduction Permute Unit 3116 can do (e.g., 128x128) matrix transposes, reductions, and permutations of VPU 3110 lanes. High Bandwidth Memory 3104 can be used for applications on chip, and it can be coupled to host queue(s) 3102, e.g., over PCIe. One or more chips 3100 can be connected together for computing. For example, one or more chips 3100 can be connected as a torus, e.g., a 2D torus. Chip 3100 can also include any number (e.g., four) Inter-Core Interconnect (ICI) links 3118 that can enable direct connections between chips to form a supercomputer.

With respect to any processors in chip 3100 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of any processors in chip 3100 (e.g., in cache and/or memory). A result of API(s) can then be stored in storage within or outside of any processors in chip 3100, including registers, DRAM, flash, SRAM, cache, or other memory equivalents.

In at least one embodiment, chip 3100 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

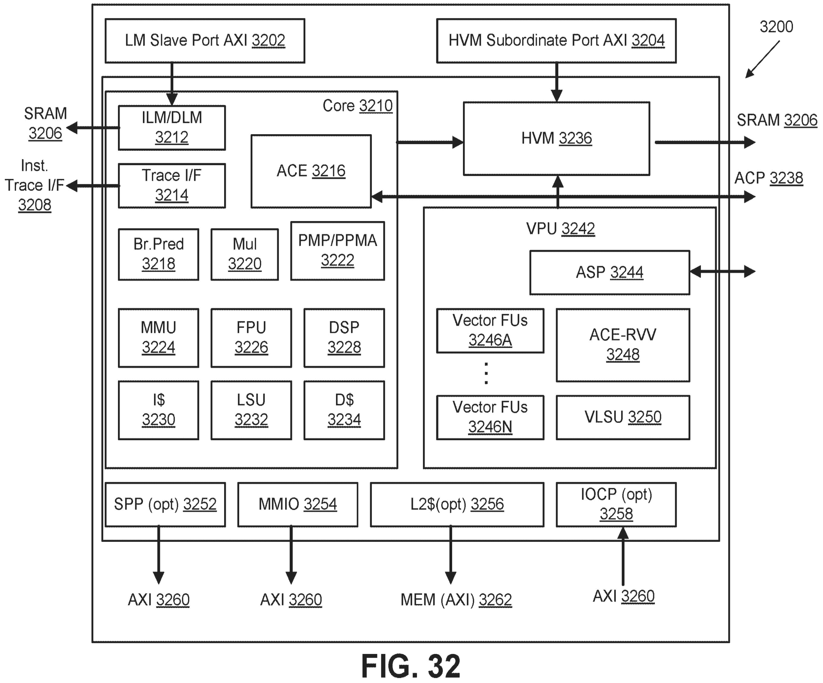

FIG. 32 illustrates a vector processor, in accordance with at least one embodiment. Vector processor 3200 may support a RISC-V standard. Vector processor 3200 can include one more cores 3210 (e.g., scalar units) with one or more Vector Processing Units (VPUs) 3242 (e.g., vector units) that can, e.g., perform some or all of the operations described above or elsewhere herein. Core 3210 may include Andes Custom Extension (ACE) 3216 that can be used for communication of customized instructions for processor 3200, for example, via ACP 3238. Core 3210 may include 1-cycle multiplier and 1-cycle instruction/data local memory (ILM/DLM) for increased parallelism by allowing simultaneous instruction fetches and data accesses. Memory management unit (MMU) 3224 may manage system memory and cache, and provide for branch execution, issuance of instruction pairs, L1 instruction/data caches and local memory storage. Core 3210 can include Physical memory protection and programmable physical memory attribute unit (PMP/PPMA) 3222. Core 3210 can include a digital signal processor (DSP) 3228, and a floating-point unit (FPU) 3226 as well as load-store unit (LSU) 3232 to interface with memory hierarchy (D$ 3234 and I$ 3230). Core 3210 can include branch prediction unit 3218 and multiplier unit 3220.

Vector processing unit (VPU) 3242 can include one or more vector functional units (FUs) 3246(A)-3246(N) that can be chained together for parallel processing, independent memory paths for RISC-V vector (RVV) load/store via ACE-RVV 3248 and Andes Streaming port (ASP) 3244 load/store, and a vector load/store unit (VLSU) 3250.

Vector processor 3200 can include bus interfaces, such as, but not limited to, L2 cache memory port 3256 for cacheable access, a MMIO port 3254 for non-cacheable access, an input-output coherence Port (IOCP) 3258 for cacheless bus master, local memory access ports for ILM/DLM 3212, which can be coupled to SRAM 3206, and high-bandwidth vector memory (HVM) 3236 access, a shared peripheral port (SPP) 3252 for external peripherals. Other memory ports include LM slave port AXI 3202, HVM subordinate port AXI 3204, MEM (AXI) 3262, and AXI 3260. Trace I/F 3214 can capture, encode, and transmit off-chip via Inst. Trace I/F 3208, e.g., a record of executed processor instructions, which software tools can use to reconstruct the exact execution sequence of a program.

With respect to any processors in processor 3200 and any of its components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 3200 (e.g., in cache and/or memory). A result of API(s) can then be stored in storage within or outside of processor 3200, including registers, DRAM, flash, SRAM, cache, or other memory equivalents.

In at least one embodiment, vector processor 3200 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

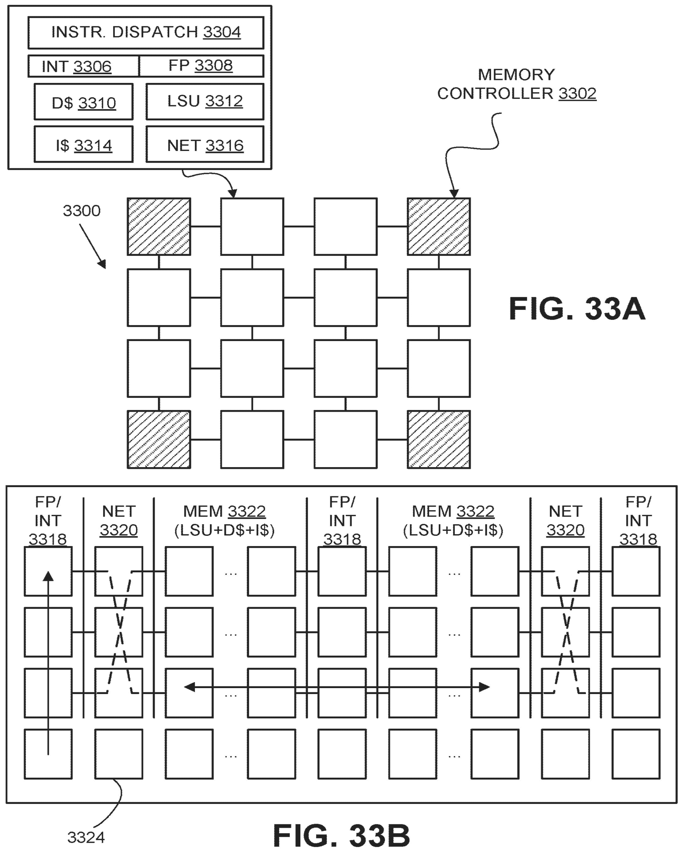

FIG. 33A illustrates a diagram of an example many-core tiled processor microarchitecture. Many-core tiled processor in FIG. 33A can include a language processing processor. As illustrated in FIG. 33A, each "tile" of a processor architecture is a processing element tied together using a network-on-chip (NoC) that can be used, e.g., to perform some or all of the operations described above or elsewhere herein. For example, each tile may have an instruction dispatch 3304 and an integer (INT) 3306 and floating-point (FP) unit 3308 as well as load-store unit (LSU) 3312 to interface with memory hierarchy (data cache (D$) 3310 and instruction cache (I$) 3314) and network (NET) 3316 interface for communication with other tiles. Some tiles in processor 3300 may include memory controller 3302 for managing and controlling memory, as described further herein. Processor 3300 can have a functional slice architecture. Processor 3300 may be located on an application specific integrated circuit (ASIC), and FIG. 33A may represent a layout of an ASIC. Processor 3300 can include a co-processor that is designed to execute instructions for a predictive model. A predictive model is any model that is configured to make a prediction from input data. A predictive model can use a classifier to make a classification prediction. A predictive model may be a machine learning model such as, but not limited to, a tensor flow model, and processor 3300 is a tensor streaming processor.

Processor 3300 can employ different microarchitectures, which disaggregates functional units shown in each tile in FIG. 33B. Instead, functional tiles 3324 of processor 3300 may be aggregated into a plurality of functional process units (hereafter referred to as "slices") 3304, each corresponding to a particular function type (e.g., FP/INT 3318, NET 3320, MEM 3322). For example, as illustrated in FIG. 33B, each slice may correspond to a column of functional tiles extending in a north-south direction. In addition, processor 3300 also may include communication lanes to carry data between tiles of different slices, each running horizontally in an east-west direction. Each communication lane may be connected to each of slices 3304 of processor 3300.

Slices 3304 of processor 3300 may each correspond to a different function, and may include arithmetic logic slices (e.g., FP/INT3318), lane switching slices (e.g., NET 3320), and memory slices (e.g., MEM 3322). Arithmetic logic units may execute one or more arithmetic and/or logic operations on data received via communication lanes to generate output data. Examples of arithmetic logic units may be matrix multiplication units and vector multiplication units. Memory slices include memory cells that store data. Memory slices can provide data to other slices through communication lanes. Memory slices can also receive data from other slices through communication lanes. Lane switching slices can configurably route data from one communication lane to any other communication lane. For example, data from a first lane can be provided to a second lane through a lane switching slice. In some embodiments, a lane switching slice can be implemented as a crossbar switch. Each slice 3304 also includes its own instruction queue (not shown) that stores instructions, and an instruction control unit (ICU) to control execution of instructions. Instructions in a given instruction queue may be executed only by tiles in its associated functional slice and may not be executed by other slice(s) of processor 3300.

By arranging tiles of processor 3300 into different functional slices 3304, on-chip instruction and control flow of processor 3300 can be decoupled from data flow. For example, one arrow in FIG. 33B illustrates flow of instructions within processor architecture, in accordance with some embodiments. Another arrow in FIG. 33B illustrates data flow within processor architecture, in accordance with at least one embodiment. As illustrated, instructions and control flow can flow in a first direction across tiles of processor 3300 (e.g., north-south, along a length of functional slices, as shown by the first arrow), while data flows flow in a second direction across tiles of processor 3300 (e.g., east-west, across functional slices, as shown by the second arrow) that is perpendicular to the first direction.

Different functional slices of processor 3300 may correspond to MEM 3322 (memory), VXM (vector execution module), MXM (matrix execution module), NIM (numerical interpretation module), and SXM (switching and permutation module). Each slice may include N tiles that may all be controlled by a same instruction control unit (ICU) (not shown). Each slice may operate completely independently and can only be coordinated using barrier-like synchronization primitives or through a compiler by exploiting "tractable determinism." Each tile of processor 3300 can correspond to an execution unit organized as an ×M SIMD tile. For example, each tile of on-chip memory of processor 3300 may be organized to store an L-element vector atomically. As such, a MEM slice having N tiles may work together to store or process a large vector (e.g., having a total of N×M elements).

Tiles in a slice may execute instructions in a "staggered" fashion where instructions may be issued tile-by-tile within a slice over a period of N cycles. Functional slices may be arranged physically on-chip to allow efficient data-flow for pipelined execution across hundreds of cycles for common patterns. Data flows can perform a single "u-turn" (change in direction) corresponding to a single matrix operation before being written back to memory, in some embodiments, a particular data flow may change direction multiple times (due to multiple matrix and vector operations) before resulting data is written back into memory.

When using processor 3300 (e.g., TSP) having a functional slice architecture, TSP compiler (not shown) generates an explicit plan for how processor 3300 can execute a program (e.g., a microprogram). Compiler can specify when each operation will be executed, which functional slices will perform work, and which STREAM registers hold operands. Compiler can maintain a high-fidelity (cycle accurate) model of processor 3300 (e.g., TSP) hardware state so a microprogram can orchestrate data flow.

Processor 3300 (e.g., TSP) can use a Web-hosted compiler that takes as its input a model (e.g., a ML model such as, but not limited to, a TensorFlow model) and emits a proprietary instruction stream targeting processor 3300 (e.g., TSP). Compiler is responsible for coordinating control and data flow of a program, and specifies any instruction-level parallelism by explicitly bundling instructions that can and should execute concurrently so that they may be dispatched together. Primary hardware structure includes an architecturally-visible streaming register file (STREAMs), described in greater detail below, which serves as a conduit through which operands flow from MEM slices (e.g., SRAM) to functional slices and vice versa.

MEM 3322 of processor 3300 can serve as: (1) storage for model parameters, microprograms and data on which they operate, and (2) network-on-chip (NoC) for communicating data operands from MEM to functional slices and computed results back to MEM. In some embodiments, on-chip memory can consumes ≈75% of chip area of processor 3300. In some embodiments, due to bandwidth requirements of processor 3300, on-chip memory of MEM tiles may include SRAM, and not DRAM. On-chip memory capacity of processor 3300 can determine (i) number of ML models that can simultaneously reside on-chip, (ii) size of any given model, and (iii) partitioning of large models to fit into multi-chip systems. In some embodiments, MEM system of processor 3300 can provide a plurality of memory slices organized into two different hemispheres (referred to as "MEM WEST" and "MEM EAST", respectively).

Memory slices of each hemisphere may be mirrored, such that slices may be physically numbered {0, . . . L} in an East hemisphere, and {L, ... 0} in a West hemisphere, such that memory slice 0 for each hemisphere corresponds to a slice closest to VXM slices between hemispheres, where each hemisphere comprises L slices. Direction of data transfer towards the center of a chip may be referred to as inwards, while data transfer toward the outer (Eastern or Western most) edge of a chip may be referred to as outwards. Although hemispheres of memory of processor 3300 may be referred to as east and west, it is understood that in other embodiments, other names may be used to refer to different hemispheres of memory.

In some embodiments, a streaming register file, referred to as STREAMS, transfers operands and results between SRAM of MEM slices and functional slices of processor 3300. In some embodiments, a plurality of MEM slices (e.g., between 2 and 10 adjacent MEM slices) may be physically organized as a set. Each set of slices may be located between a pair of STREAM register files, such that each slice is able to read or write to STREAM registers in either direction. By placing STREAM register files between sets of MEM slices, a number of cycles needed for data operands to be transmitted across a hemisphere is decreased (e.g., by a factor corresponding to a number of slices per set). A number of slices per set may be configured based upon a distance over which data may be transmitted over a single clock cycle.

With respect to any processors in FIG. 33 and any components described above or elsewhere herein, one or more of APIs or equivalents described herein can, for example, get compiled into instructions or equivalents, which may be fetched by instruction fetch logic or equivalents, decoded by a processor decoder or equivalents, scheduled (e.g., in order or out of order) for execution by a scheduler or equivalents, executed by execution logic or equivalents, reordered, and then retired by retirement logic or equivalents. API(s) (and/or compiled instructions including API(s)) can be stored in any storage outside or inside of processor 3300 (e.g., in cache and/or memory). A result of API(s) can then be stored in storage within or outside of processor 3300, including registers, DRAM, flash, SRAM, cache, or other memory equivalents.

In at least one embodiment, processor 3300 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

### SOFTWARE CONSTRUCTIONS

The following figures set forth, without limitation, examples of software constructs for implementing at least one embodiment.

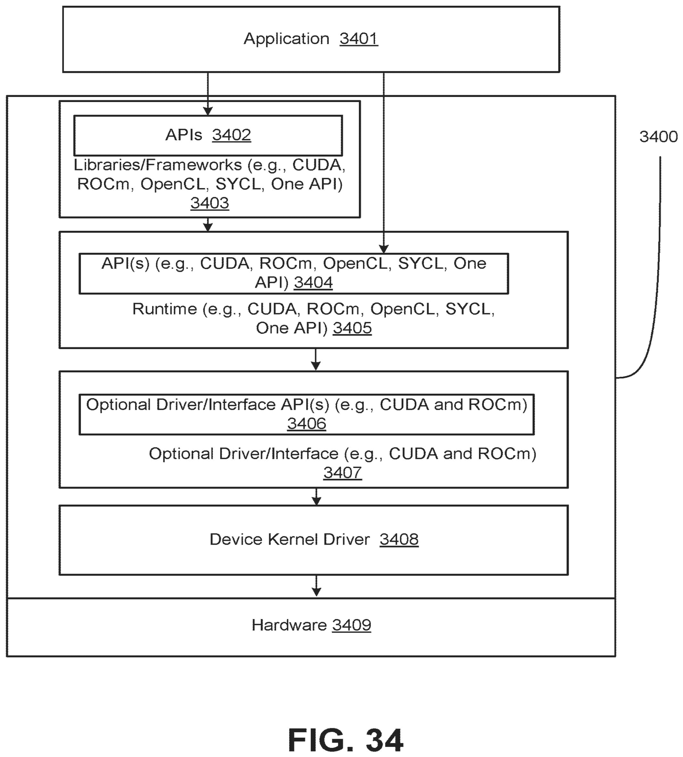

FIG. 34 illustrates a software stack of a programming platform, in accordance with at least one embodiment. A programming platform can include a platform for leveraging hardware on a computing system to accelerate computational tasks. A programming platform may be accessible to software developers through libraries, compiler directives, and/or extensions to programming languages, in at least one embodiment. A programming platform may be CUDA, Radeon Open Compute Platform ("ROCm"), OpenCL (OpenCL^{™} is developed by Khronos group), SYCL, or Intel oneAPI.

A software stack 3400 of a programming platform can provide an execution environment for an application 3401. Application 3401 may include any computer software capable of being launched on software stack 3400. Application 3401 may include an artificial intelligence ("AI")/machine learning ("ML") application, a high performance computing ("HPC") application, a virtual desktop infrastructure ("VDI"), or a data center workload.

Application 3401 and software stack 3400 run on hardware 3408. Hardware 3408 may include one or more GPUs, CPUs, FPGAs, AI engines, and/or other types of compute devices that support a programming platform. Software stack 3400 may be vendor specific and compatible with only devices from particular vendor(s), such as CUDA, ROCm, OneAPI, OpenCL, or other implementations. Hardware 3408 can include a host connected to one more devices that can be accessed to perform computational tasks via application programming interface ("API") calls. A device within hardware 3408 may include a GPU, FPGA, AI engine, or other compute device (but may also include a CPU) and its memory, as opposed to a host within hardware 3408 that may include a CPU (but may also include a compute device) and its memory, in at least one embodiment. With respect to any hardware 3408 described above or elsewhere herein, one or more of APIs described herein can, for example, get compiled into instructions, which may be fetched by instruction fetch logic, decoded by a processor decoder, scheduled (e.g., in order or out of order) for execution by a scheduler, executed by execution logic, reordered, and then retired by retirement logic. API(s) (and/or compiled instructions including API(s)) can be stored in any storage outside or inside of hardware 3408 (e.g., in cache and/or memory). A result of API(s) can then be stored in storage within or outside of hardware 3408, including registers, DRAM, flash, SRAM, cache, or other memory. One or more of APIs described herein can receive a call. One or more of APIs described herein can communicate with a library or a portion of a library to perform a function described by the call. One or more of APIs described herein can receive a call and communicate with a library or portion of a library to perform a function described by the call.

Software stack 3400 of a programming platform can include a number of libraries 3403, a runtime 3405, an optional driver/interface 3407, and a device kernel driver 3408. Each of libraries 3403 may include data and programming code that can be used by computer programs and leveraged during software development. Libraries 3403 may include pre-written code and subroutines, classes, values, type specifications, configuration data, documentation, help data, and/or message templates. Libraries 3403 can include functions that may be optimized for execution on one or more types of devices. Libraries 3403 may include functions for performing mathematical, deep learning, and/or other types of operations on devices. Libraries 3403 can be associated with corresponding APIs 3402, which may include one or more APIs, that expose functions implemented in libraries 3403. A processor (e.g. CPU, GPU) may perform, call, or otherwise use one or more APIs to prioritize kernels. For example, a first kernel (e.g., parent) can launch a second kernel (e.g., child kernel), and said second kernel can be used by a processor to launch additional kernels (e.g., grandchildren kernels) independent of said first kernel. A processor may perform an API or calls an API from memory to be performed to support dynamic stream priority (e.g., updating priority while a stream is being used to perform operations). For example, when a processor performs said API, it allows a programmer to copy stream priority from one stream to one or more other streams.

Software stack 3400 may include an API to support dynamic stream priority (e.g., updating priority while a stream is being used to perform operations), which can allow a programmer to set priority of a stream at any time after creation. Software stack 3400 can include an API to support dynamic stream priority (e.g., updating priority while the stream is being used to perform operations), which may allow a programmer to obtain current priority of a stream, where the priority is one of a plurality of attributes of a stream. Software stack 3400 can include an API to support dynamic stream priority (e.g., updating priority while the stream is being used to perform operations), which may allow a programmer to obtain current priority of a stream as a single attribute. Software stack 3400 can include an API to support dynamic stream priority (e.g., updating priority while the stream is being used to perform operations), which allows a programmer to launch a kernel to perform operations on a stream at a set priority, which may be different from the stream priority. Software stack 3400 may include an API to indicate whether an object (e.g., a thread synchronization object such as, but not limited to, a barrier) tracks whether all data movement operations for a set of threads operating on a GPU may be complete has a specified state after a specified period of time, where a specified state can be a state indicating that data has been moved and is ready for use, and is specified using an expected parity value as an input to the API.

Software stack 3400 can include one or more APIs to updated kernels. A processor can perform an API or call an API from memory to be performed to update to an existing API is to support context-free kernels, which may allow a programmer to add a kernel node to a graph without a graphics context, so that a graphics context can be dynamically associated with a kernel at runtime. Software stack 3400 may include one or more APIs to allow a programmer to obtain a kernel identifier and a graphics context as separate parameters from a kernel node, so that parameters to be obtained from kernels and from context-free kernels. Software stack 3400 can include one or more APIs to use parallel processor(s), such as, but not limited to, one or more graphics processing units, to launch task graphs (e.g., task graphs) and to execute one or more task graphs (e.g., including one or more programs).

Software stack 3400 may include one or more APIs to associate one or more instructions with one or more memory ordering operations, such as, but not limited to, a fence or membar operation. Instructions can be associated with one or more domains such that a memory ordering operation is executed in association to one or more particular domains without interfering with instructions of other domains. An API can indicate a thread has arrived (e.g., at a thread synchronization barrier), or finished a stage of work in relation to asynchronous data movement operations on a GPU. Software stack 3400 may include one or more to allow programmers to manually indicate an expected transaction count when a thread has finished a stage of work, which can be used to update an object that tracks whether all data movement operations for a set of threads may be complete.

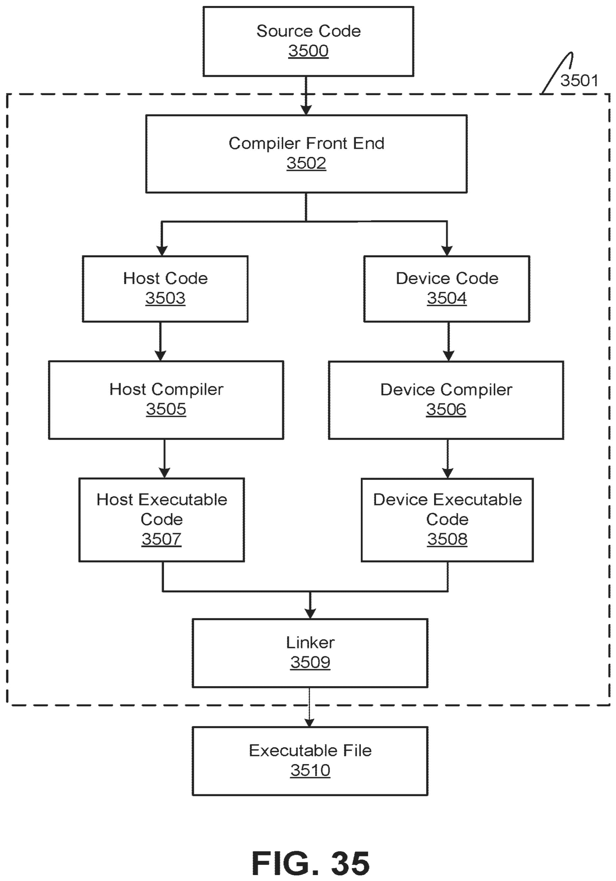

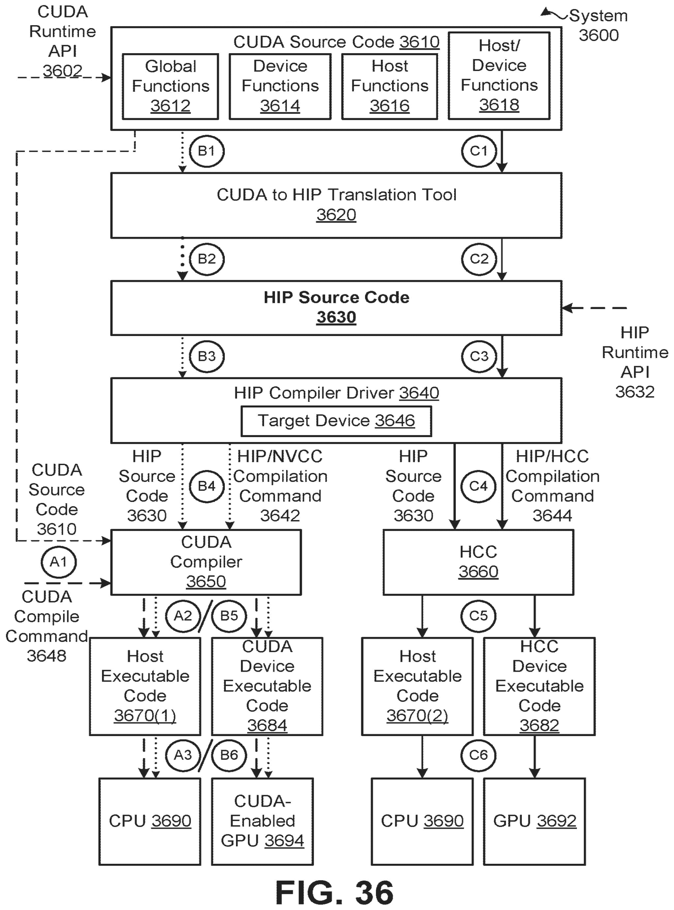

Application 3401 can be written as source code that is compiled into executable code, as discussed in greater detail below in conjunction with FIGs. 35 and 36. Executable code of application 3401 may run, at least in part, on an execution environment provided by software stack 3400. During execution of application 3401, code may be reached that needs to run on a device, as opposed to a host. In such a case, runtime 3405 may be called to load and launch requisite code on a device. Runtime 3405 may include any technically feasible runtime system that is able to support execution of application 3401.

Runtime 3405 can be implemented as one or more runtime libraries associated with corresponding APIs, which are shown as API(s) 3404. One or more of such runtime libraries may include functions for memory management, execution control, device management, error handling, and/or synchronization, among other things,. Memory management functions may include functions to allocate, deallocate, and copy device memory, as well as transfer data between host memory and device memory. Execution control functions may include functions to launch a function (sometimes referred to as a "kernel" when a function is a global function callable from a host) on a device and set attribute values in a buffer maintained by a runtime library for a given function to be executed on a device.

Runtime libraries and corresponding API(s) 3404 may be implemented in any technically feasible manner. One (or any number of) API may expose a low-level set of functions for fine-grained control of a device, while another (or any number of) API may expose a higher-level set of such functions. A high-level runtime API may be built on top of a low-level API. One or more of runtime APIs may be language-specific APIs that may be layered on top of a language-independent runtime API.

An optional driver or interface 3407 may be implemented, e.g., for CUDA and ROCm implementations, that are described further below. Optional driver/interface 3407 may be associated with optional driver or interface API(s), such as, but not limited to, CUDA and/or ROCm API(s).

One or more processors disclosed in "processing systems" can perform, access, or otherwise use software stack 3400. For example, system-on-a-chip 2100, parallel processor 2200, graphics multiprocessor 2234, processor 2300, processor 2400, accelerator 2500, neuromorphic processor 2605, supercomputer 2700, acceleration processing unit 2800, processor 2900, processor 3000, tensor processing unit 3100, processor 3200, and language processing unit 3300 can perform, use, call, or otherwise implement (e.g., through accessing a memory) one or more APIs included in software stack 3400.

Device kernel driver 3408 can be configured to facilitate communication with an underlying device. Device kernel driver 3408 may provide low-level functionalities upon which APIs, such as, but not limited to, API(s) 3404, and/or other software relies. Device kernel driver 3408 may be configured to compile intermediate representation ("IR") code into binary code at runtime. For CUDA or other implementations such as, but not limited to, ROCm, OneAPI, or OpenCL, device kernel driver 3408 may compile Parallel Thread Execution ("PTX") IR code that is not hardware specific into binary code for a specific target device at runtime (with caching of compiled binary code), which is also sometimes referred to as "finalizing" code. Doing so may permit finalized code to run on a target device, which may not have existed when source code was originally compiled into PTX code. Alternatively, device source code may be compiled into binary code offline, without requiring device kernel driver 3408 to compile IR code at runtime.

Processors described elsewhere herein, such as, but not limited to, processors in FIGs. 21-33 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software, e.g., software stack 3400 to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

In accordance with at least one embodiment, software stack 3400 of FIG. 34 can be performed in a CUDA implementation. A CUDA software stack 3400, on which an application 3401 may be launched, may include CUDA libraries 3403, a CUDA runtime 3405, a CUDA driver 3407, and a device kernel driver 3408. CUDA software stack 3400 can execute on hardware (e.g., graphics multiprocessor 2234 that may include a GPU that supports CUDA and is developed by NVIDIA Corporation of Santa Clara, CA.

Application 3401, CUDA runtime 3405, and device kernel driver 3408 can perform functionalities that are described above and elsewhere herein. CUDA driver 3407 can include a library (libcuda.so) that may implement a CUDA driver API 3406. Similar to a CUDA runtime API 3404 implemented by a CUDA runtime library (cudart), CUDA driver API 3406 may expose functions for memory management, execution control, device management, error handling, synchronization, and/or graphics interoperability, among other things. CUDA driver API 3406 can differ from CUDA runtime API 3404 in that CUDA runtime API 3404 simplifies device code management by providing implicit initialization, context (analogous to a process) management, and module (analogous to dynamically loaded libraries) management. In contrast to high-level CUDA runtime API 3404, CUDA driver API 3406 can be a low-level API providing more fine-grained control of a device, particularly with respect to contexts and module loading. CUDA driver API 3406 may expose functions for context management that may be not exposed by CUDA runtime API 3404. CUDA driver API 3406 may also be language-independent and support, e.g., OpenCL, in addition to CUDA runtime API 3404. Further, development libraries, including CUDA runtime 3405, may be considered as separate from driver components, including user-mode CUDA driver 3407 and kernel-mode device driver 3408 (also sometimes referred to as a "display" driver).

CUDA libraries 3403 may include mathematical libraries, deep learning libraries, parallel algorithm libraries, and/or signal/image/video processing libraries, which parallel computing applications such as, but not limited to, application 3401 may utilize. CUDA libraries 3403 may include mathematical libraries such as, but not limited to, a cuBLAS library that is an implementation of Basic Linear Algebra Subprograms ("BLAS") for performing linear algebra operations, a cuFFT library for computing fast Fourier transforms ("FFTs"), and a cuRAND library for generating random numbers, among others. CUDA libraries 3403 may include deep learning libraries such as, but not limited to, a cuDNN library of primitives for deep neural networks and a TensorRT platform for high-performance deep learning inference, among others.

In at least one embodiment, processors described elsewhere herein, such as, but not limited to, processors in FIGs. 21-33 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software, e.g., software stack 3400 to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

In accordance with at least one embodiment, software stack 3400 of FIG. 34 can be performed in a ROCm implementation. A ROCm software stack 3400, on which an application 3401 may be launched, includes a language runtime 3403, a system runtime 3405, a thunk 3407, and a ROCm kernel driver 3408. ROCm software stack 3400 executes on hardware 3409, which may include a GPU that supports ROCm and is developed by AMD Corporation of Santa Clara, CA.

Application 3401 may perform similar functionalities as discussed above in conjunction with FIG. 34. In addition, language runtime 3403 and system runtime 3405 may perform similar functionalities as runtime 3405 discussed above in conjunction with FIG. 34. Language runtime 3403 and system runtime 3405 may differ in that system runtime 3405 is a language-independent runtime that implements a ROCr system runtime API 3404 and makes use of a Heterogeneous System Architecture ("HSA") Runtime API. HSA runtime API can include a thin, user-mode API that exposes interfaces to access and interact with an AMD GPU, including functions for memory management, execution control via architected dispatch of kernels, error handling, system and agent information, and runtime initialization and shutdown, among other things. In contrast to system runtime 3405, language runtime 3403 can be an implementation of a language-specific runtime API 3402 layered on top of ROCr system runtime API 3404. Language runtime API may include a Heterogeneous compute Interface for Portability ("HIP") language runtime API, a Heterogeneous Compute Compiler ("HCC") language runtime API, or an OpenCL API, among others. HIP language in particular is an extension of C++ programming language with functionally similar versions of CUDA mechanisms, and a HIP language runtime API may include functions that may be similar to those of CUDA runtime API discussed above in conjunction with FIG. 34, such as, but not limited to, functions for memory management, execution control, device management, error handling, and synchronization, among other things.

Thunk (ROCt) 3407 can be an interface 3406 that can be used to interact with underlying ROCm driver 3408. ROCm driver 3408 can be a ROCk driver, which is a combination of an AMDGPU driver and a HSA kernel driver (amdkfd). AMDGPU driver can be a device kernel driver for GPUs developed by AMD that performs similar functionalities as device kernel driver 3409 discussed above in conjunction with FIG. 34. HSA kernel driver can be a driver permitting different types of processors to share system resources more effectively via hardware features.

Various libraries (not shown) may be included in ROCm software stack 3400 above language runtime 3403 and provide functionality similar to CUDA libraries 3403, discussed above in conjunction with FIG. 34. Various libraries may include mathematical, deep learning, and/or other libraries such as, but not limited to, a hipBLAS library that implements functions similar to those of CUDA cuBLAS, a rocFFT library for computing FFTs that is similar to CUDA cuFFT, among others.

Processors described elsewhere herein, such as, but not limited to, processors in FIGs. 21-33 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software, e.g., software stack 3400 to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

In accordance with at least one embodiment, software stack 3400 of FIG. 34 can be performed in a OpenCL implementation. An OpenCL software stack 3400, on which an application 3401 may be launched, can include an OpenCL framework 3403, an OpenCL runtime 3405, and a driver 3408. OpenCL software stack 3400 may execute on hardware 3409 that is not vendor-specific. As OpenCL is supported by devices developed by different vendors, specific OpenCL drivers may be required to interoperate with hardware from such vendors.

Application 3401, OpenCL runtime 3405, device kernel driver 3408, and hardware 3409 may perform similar functionalities as other implementations of application 3401, runtime 3405, device kernel driver 3408, and hardware 3409, respectively, that are discussed above in conjunction with FIG. 34. Application 3401 can further include an OpenCL kernel (not shown) with code that is to be executed on a device.

OpenCL may define a "platform" that allows a host to control devices connected to a host. An OpenCL framework can provide a platform layer API and a runtime API, shown as platform API 3402 and runtime API 3404. Runtime API 3404 can use contexts to manage execution of kernels on devices. Each identified device may be associated with a respective context, which runtime API 3404 may use to manage command queues, program objects, and kernel objects, share memory objects, among other things, for that device. Platform API 3402 can expose functions that permit device contexts to be used to select and initialize devices, submit work to devices via command queues, and enable data transfer to and from devices, among other things. In addition, OpenCL framework can provide various built-in functions (not shown), including math functions, relational functions, and image processing functions, among others.

A compiler (not shown) can also be included in OpenCL framework 3403. Source code may be compiled offline prior to executing an application or online during execution of an application. In contrast to CUDA and ROCm, OpenCL applications may be compiled online by a compiler that is representative of any number of compilers that may be used to compile source code and/or IR code, such as, but not limited to, Standard Portable Intermediate Representation ("SPIR-V") code, into binary code. Alternatively, OpenCL applications may be compiled offline, prior to execution of such applications.

In at least one embodiment, processors described elsewhere herein, such as, but not limited to, processors in FIGs. 21-33 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software, e.g., software stack 3400 to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

In accordance with at least one embodiment, software can be supported by a programming platform that is configured to support various programming models, middlewares and/or libraries, and frameworks that an application may rely upon. Application may be an AI/ML application implemented using, for example, a deep learning framework such as, but not limited to, MXNet, PyTorch, or TensorFlow, which may rely on libraries such as, but not limited to, cuDNN, NVIDIA Collective Communications Library ("NCCL"), and/or NVIDA Developer Data Loading Library ("DALI") CUDA libraries to provide accelerated computing on underlying hardware.

Programming platform may be one of a CUDA, ROCm, or OpenCL platform described above in conjunction with FIG. 34. Programming platform can support multiple programming models, which may be abstractions of an underlying computing system permitting expressions of algorithms and data structures. Programming models may expose features of underlying hardware in order to improve performance. Programming models may include CUDA, HIP, OpenCL, C++ Accelerated Massive Parallelism ("C++AMP"), Open Multi-Processing ("OpenMP"), Open Accelerators ("OpenACC"), and/or Vulkan Compute.

Libraries and/or middlewares may provide implementations of abstractions of programming models. Such libraries can include data and programming code that may be used by computer programs and leveraged during software development. Such middlewares can include software that provides services to applications beyond those available from programming platform. Libraries and/or middlewares may include cuBLAS, cuFFT, cuRAND, and other CUDA libraries, or rocBLAS, rocFFT, rocRAND, and other ROCm libraries. In addition, libraries and/or middlewares may include NCCL and ROCm Communication Collectives Library ("RCCL") libraries providing communication routines for GPUs, a MIOpen library for deep learning acceleration, and/or an Eigen library for linear algebra, matrix and vector operations, geometrical transformations, numerical solvers, and related algorithms.

Application frameworks may depend on libraries and/or middlewares. Each of application frameworks can be a software framework used to implement a standard structure of application software. Returning to the AI/ML example discussed above, an AI/ML application may be implemented using a framework such as, but not limited to, Caffe, Caffe2, TensorFlow, Keras, PyTorch, or MxNet deep learning frameworks, for example.

In at least one embodiment, processors described elsewhere herein, such as, but not limited to, processors in FIGs. 21-33 can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits can be configured by software, e.g., programming platforms described herein, to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

FIG. 35 illustrates compiling code to execute on one of programming platforms of FIG. 34 described above, in accordance with at least one embodiment. A compiler 3501 is configured to receive source code 3500, compile source code 3500, and output an executable file 3510. Complier 3501 can be configured to convert source code 3500 into host executable code 3507 for execution on a host and device executable code 3508 for execution on a device. Source code 3500 may either be compiled offline prior to execution of an application, or online during execution of an application. Source code 3500 may include code in any programming language supported by compiler 3501, such as, but not limited to, C++, C, Fortran, etc. Source code 3500 may be included in a single-source file having a mixture of host code and device code, with locations of device code being indicated therein. A single-source file may be a .cu file that includes CUDA code or a .hip.cpp file that includes HIP code or a file in another format that includes both host code and device code. Alternatively, source code 3500 may include multiple source code files, rather than a single-source file, into which host code and device code may be separated. Compiler 3501 includes or has access to one or more libraries to recognize a sequence of API calls to perform a single fused API, where a single fused API is a combined API for two or more APIs. In at least one embodiment, compiler 3501 may be an NVIDIA CUDA compiler ("NVCC") for compiling CUDA code in .cu files, or a HCC compiler for compiling HIP code in .hip.cpp files, or other compilers.

Compiler 3501 can be configured to compile source code 3500 into host executable code 3507 for execution on a host and device executable code 3508 for execution on a device. Compiler 3501 performs operations including parsing source code 3500 into an abstract system tree (AST), performing optimizations, and generating executable code. When source code 3500 includes a single-source file, compiler 3501 may separate device code from host code in such a single-source file, compile device code and host code into device executable code 3508 and host executable code 3507, respectively, and link device executable code 3508 and host executable code 3507 together in a single file.

Compiler 3501 can include a compiler front end 3502, a host compiler 3505, a device compiler 3506, and a linker 3509. Compiler front end 3502 can be configured to separate device code 3504 from host code 3503 in source code 3500. Device code 3504 may be compiled by device compiler 3506 into device executable code 3508, which as described may include binary code or IR code, in at least one embodiment. Separately, host code 3503 may be compiled by host compiler 3505 into host executable code 3507. For NVCC other compilers, such as, but not limited to, those for oneAPI, ROCm, and OpenCL, host compiler 3505 may be a general purpose C/C++ compiler that outputs native object code, while device compiler 3506 may be a Low Level Virtual Machine ("LLVM")-based compiler that forks a LLVM compiler infrastructure and outputs PTX code or binary code. For HCC, both host compiler 3505 and device compiler 3506 may be LLVM-based compilers that output target binary code.

Subsequent to compiling source code 3500 into host executable code 3507 and device executable code 3508, linker 3509 can link host and device executable code 3507 and 3508 together in executable file 3510. Native object code for a host and PTX or binary code for a device may be linked together in an Executable and Linkable Format ("ELF") file, which is a container format used to store object code. Host executable code 3507 and device executable code 3508 may be in any suitable format, such as, but not limited to, binary code and/or IR code. In the case of CUDA, host executable code 3507 may include native object code and device executable code 3508 may include code in PTX intermediate representation, in at least one embodiment. In the case of ROCm, both host executable code 3507 and device executable code 3508 may include target binary code, in at least one embodiment. Other implementations, such as, but not limited to, oneAPI, OpenCL are contemplated and can be performed similarly to the CUDA and ROCm implementations above.

Source code 3500 may be translated prior to compiling source code. Source code is passed through a translation tool (not shown), which translates source code 3500 into translated source code. A compiler 3501 can be used to compile translated source code into host executable code 3507 and device executable code 3508 in a process that is similar to compilation of source code 3500 by compiler 3501 into host executable code 3507 and device executable code 3508, as discussed above in conjunction with FIG. 35.

A translation performed by translation tool can be used to port source code 3500 for execution in a different environment than that in which it was originally intended to run. Translation tool may include a HIP translator that is used to "hipify" CUDA code intended for a CUDA platform into HIP code that can be compiled and executed on a ROCm platform. Translation of source code 3500 may include parsing source code 3500 and converting calls to API(s) provided by one programming model (e.g., CUDA) into corresponding calls to API(s) provided by another programming model (e.g., HIP), as discussed in greater detail below in conjunction with FIG. 36. Returning to the example of hipifying CUDA code, calls to CUDA runtime API, CUDA driver API, and/or CUDA libraries may be converted to corresponding HIP API calls. Automated translations performed by translation tool 3501 may sometimes be incomplete, requiring additional, manual effort to fully port source code 3500.

One or more techniques described herein may utilize a variety of methods for converting one type of code to another type of code. For example, compiler 3501 or other compilers described herein can convert a high-level language (e.g., source code that is abstract to hardware) to a lower-level language (e.g., machine code or an intermediate representation). Source code can be scanned, parsed, transformed into an abstract syntax tree semantically analyzed, then converted into an intermediate code, and then converted into machine code or assembly language. Compiler 3501 or other compilers described herein can include a transpiler, which can convert, for example, one type of source code to another type of source code or one type of machine code to another type of machine code. Source code can be parsed, and transformed into an abstract syntax tree, which can then be converted to an intermediate model that can be transformed into an abstract syntax tree of target language and code can be generated. Compiler 3501 or other compilers described herein can be used to enable interchangeability between different device architectures. For example, an application for one platform (e.g., a CUDA application) can be compiled into code for implementation on another platform (e.g., an AMD processor, Intel processor, or other processor). Source code 3500 can include source code for one platform (e.g., CUDA). Compiler 3501 can compile the source 3500 into an executable file 3510 that can be used by another platform (e.g., AMD or Intel). Programming toolkits can allow applications for one platform (e.g., CUDA) to be compiled (e.g., natively) for another platform (e.g., AMD or Intel). For example, a GPGPU programming toolkit can allow for CUDA applications to be natively compiled for AMD GPUs. Programs (e.g., CUDA programs) or its build system do not have to be modified or translated to another language before compiling to code for another platform. A compiler may accept the same command-line options and programming dialect (e.g., CUDA dialect) as another compiler (e.g., nvcc for CUDA), serving as a drop-in replacement to impersonate an installation of a toolkit (e.g., NVIDIA CUDA Toolkit), so existing build tools and scripts (e.g., like cmake) work without further modification. In at least one embodiment, an nvcc-compatible compiler can be used to compile nvcc-dialect CUDA for AMD GPUs, including PTX asm. Implementations of CUDA runtime and driver APIs for AMD GPUs can be used. Libraries (e.g., open source wrapper libraries) can provide APIs, such as "CUDA-X" APIs by delegating to the corresponding ROCm libraries. An example implementation includes SCALE from Spectral Compute in London, England. SCALE can allow programs written using CUDA language to be directly compiled to lower-level language (e.g., machine code) for AMD GPUs. SCALE can create one or more directories that can be used to impersonate NVIDIA CUDA Toolkit (from the point of view of a build system) by instructing a build system that a CUDA installation path is one provided by SCALE, rather than the one provided by NVIDIA. Additional implementations can include a Clang compiler that can provide a language front-end and tooling infrastructure for languages in the C language family (C, C++, Objective C/C++, OpenCL, CUDA, and RenderScript). In at least one embodiment, compilers and/or transpilers described herein, such as, but not limited to compiler 3501, compiler 3505, and/or compiler 3506 can include one or more circuits to compile code (e.g., CUDA, HIP, OpenCL, OneAPI, or others) to perform an instruction to perform one or more matrix multiply-accumulate (MMA) operations to multiply a first input matrix by a scaled matrix generated by multiplying one or more elements of a second input matrix by one or more corresponding scale factors and/or perform any of the operations described above or elsewhere herein. In at least one embodiment, compilers and/or transpilers described herein, such as, but not limited to compiler 3501, compiler 3505, and/or compiler 3506 can include one or more circuits to convert code (e.g., source code for CUDA) to one or more other types of code (e.g., machine code for CUDA and/or another platform, such as AMD or Intel processors) to perform an instruction to perform one or more matrix multiply-accumulate (MMA) operations to multiply a first input matrix by a scaled matrix generated by multiplying one or more elements of a second input matrix by one or more corresponding scale factors and/or perform any of the operations described above or elsewhere herein.

FIG. 36 illustrates a system 3600 configured to compile and execute CUDA source code 3610 using different types of processing units, in accordance with at least one embodiment. System 3600 includes CUDA source code 3610, a CUDA compiler 3650, host executable code 3670(1), host executable code 3670(2), CUDA device executable code 3684, a CPU 3690, a CUDA-enabled GPU 3694, a GPU 3692, a CUDA to HIP translation tool 3620, HIP source code 3630, a HIP compiler driver 3640, an HCC 3660, and HCC device executable code 3682.

CUDA source code 3610 may be a collection of human-readable code in a CUDA programming language. A CUDA programming language can be an extension of the C++ programming language that includes mechanisms to define device code and distinguish between device code and host code. Device code can include source code that, after compilation, is executable in parallel on a device. A device may be a processor that is optimized for parallel instruction processing, such as, but not limited to, CUDA-enabled GPU 3690, GPU 3692, or another GPGPU, etc. Host code is source code that, after compilation, is executable on a host. A host is a processor that is optimized for sequential instruction processing, such as, but not limited to, CPU 3690.

CUDA source code 3610 can include any number (including zero) of global functions 3612, any number (including zero) of device functions 3614, any number (including zero) of host functions 3616, and any number (including zero) of host/device functions 3618. Global functions 3612, device functions 3614, host functions 3616, and host/device functions 3618 may be mixed in CUDA source code 3610. Each of global functions 3612 may be executable on a device and callable from a host. One or more of global functions 3612 may therefore act as entry points to a device. Each of global functions 3612 can be a kernel. In a technique known as dynamic parallelism, one or more of global functions 3612 can define a kernel that is executable on a device and callable from such a device. A kernel can be executed N (where N is any positive integer) times in parallel by N different threads on a device during execution.

Each of device functions 3614 can be executed on a device and callable from such a device only. Each of host functions 3616 can be executed on a host and callable from such a host only. Each of host/device functions 3616 may define both a host version of a function that is executable on a host and callable from such a host only and a device version of the function that is executable on a device and callable from such a device only.

CUDA source code 3610 may also include any number of calls to any number of functions that may be defined via a CUDA runtime API 3602. CUDA runtime API 3602 may include any number of functions that execute on a host to allocate and deallocate device memory, transfer data between host memory and device memory, manage systems with multiple devices, etc. CUDA source code 3610 may also include any number of calls to any number of functions that may be specified in any number of other CUDA APIs. A CUDA API may be any API that is designed for use by CUDA code. CUDA APIs can include CUDA runtime API 3602, a CUDA driver API, APIs for any number of CUDA libraries, etc, including any API(s) described elsewhere herein. Relative to CUDA runtime API 3602, a CUDA driver API can be a lower-level API but can provide finer-grained control of a device. Examples of CUDA libraries include cuBLAS, cuFFT, cuRAND, cuDNN, etc.

CUDA compiler 3650 may compile input CUDA code (e.g., CUDA source code 3610) to generate host executable code 3670(1) and CUDA device executable code 3684. CUDA compiler 3650 may be, but is not limited to, NVCC. Host executable code 3670(1) can be a compiled version of host code included in input source code that is executable on CPU 3690. CPU 3690 may be any processor that is optimized for sequential instruction processing.

CUDA device executable code 3684 may be a compiled version of device code included in input source code that is executable on CUDA-enabled GPU 3694. CUDA device executable code 3684 may include binary code. CUDA device executable code 3684 can include IR code, such as, but not limited to, PTX code, that is further compiled at runtime into binary code for a specific target device (e.g., CUDA-enabled GPU 3694) by a device driver. CUDA-enabled GPU 3694 may include any processor that is optimized for parallel instruction processing and that supports CUDA. CUDA-enabled GPU 3694 may be developed by NVIDIA Corporation of Santa Clara, CA.

CUDA to HIP translation tool 3620 can be configured to translate CUDA source code 3610 to functionally similar HIP source code 3630. HIP source code 3630 may include a collection of human-readable code in a HIP programming language. HIP code can include human-readable code in a HIP programming language. A HIP programming language can include an extension of the C++ programming language that includes functionally similar versions of CUDA mechanisms to define device code and distinguish between device code and host code. A HIP programming language may include a subset of functionality of a CUDA programming language. For example, a HIP programming language includes mechanism(s) to define global functions 3612, but such a HIP programming language may lack support for dynamic parallelism and therefore global functions 3612 defined in HIP code may be callable from a host only.

HIP source code 3630 may include any number (including zero) of global functions 3612, any number (including zero) of device functions 3614, any number (including zero) of host functions 3616, and any number (including zero) of host/device functions 3618. HIP source code 3630 may also include any number of calls to any number of functions that may be specified in a HIP runtime API 3632. HIP runtime API 3632 may include functionally similar versions of a subset of functions included in CUDA runtime API 3602. HIP source code 3630 may also include any number of calls to any number of functions that may be specified in any number of other HIP APIs. A HIP API may be any API that is designed for use by HIP code and/or ROCm. HIP APIs may include HIP runtime API 3632, a HIP driver API, APIs for any number of HIP libraries, APIs for any number of ROCm libraries, etc.

CUDA to HIP translation tool 3620 can convert each kernel call in CUDA code from a CUDA syntax to a HIP syntax and can convert any number of other CUDA calls in CUDA code to any number of other functionally similar HIP calls. A CUDA call can include a call to a function specified in a CUDA API, and a HIP call can include a call to a function specified in a HIP API. CUDA to HIP translation tool 3620 may convert any number of calls to functions specified in CUDA runtime API 3602 to any number of calls to functions specified in HIP runtime API 3632.

CUDA to HIP translation tool 3620 can include a tool known as hipify-perl that executes a text-based translation process. CUDA to HIP translation tool 3620 can include a tool known as hipify-clang that, relative to hipify-perl, executes a more complex and more robust translation process that involves parsing CUDA code using clang (a compiler front-end) and then translating resulting symbols. Converting CUDA code to HIP code may include modifications (e.g., manual edits) in addition to those performed by CUDA to HIP translation tool 3620.

HIP compiler driver 3640 can include a front end that determines a target device 3646 and then configures a compiler that is compatible with target device 3646 to compile HIP source code 3630. Target device 3646 can include a processor that is optimized for parallel instruction processing. HIP compiler driver 3640 may determine target device 3646 in any technically feasible fashion.

If target device 3646 is compatible with CUDA (e.g., CUDA-enabled GPU 3694), then HIP compiler driver 3640 can generate a HIP/NVCC compilation command 3642. HIP/NVCC compilation command 3642 can configure CUDA compiler 3650 to compile HIP source code 3630 using a HIP to CUDA translation header and a CUDA runtime library. In response to HIP/NVCC compilation command 3642, CUDA compiler 3650 may generate host executable code 3670(1) and CUDA device executable code 3684.

If target device 3646 is not compatible with CUDA, then HIP compiler driver 3640 may generate a HIP/HCC compilation command 3644. HIP/HCC compilation command 3644 can configure HCC 3660 to compile HIP source code 3630 using an HCC header and a HIP/HCC runtime library. In response to HIP/HCC compilation command 3644, HCC 3660 may generate host executable code 3670(2) and HCC device executable code 3682. HCC device executable code 3682 may be a compiled version of device code included in HIP source code 3630 that is executable on GPU 3692. GPU 3692 may be any processor that is optimized for parallel instruction processing, is not compatible with CUDA, and is compatible with HCC. GPU 3692 can be developed by AMD Corporation of Santa Clara, CA. GPU 3692 can include a non-CUDA-enabled GPU 3692.

For explanatory purposes only, three different flows that may be implemented in at least one embodiment to compile CUDA source code 3610 for execution on CPU 3690 and different devices are depicted in FIG. 36. A direct CUDA flow can compile CUDA source code 3610 for execution on CPU 3690 and CUDA-enabled GPU 3694 without translating CUDA source code 3610 to HIP source code 3630. An indirect CUDA flow can translate CUDA source code 3610 to HIP source code 3630 and then compiles HIP source code 3630 for execution on CPU 3690 and CUDA-enabled GPU 3694. A CUDA/HCC flow can translate CUDA source code 3610 to HIP source code 3630 and then can compile HIP source code 3630 for execution on CPU 3690 and GPU 3692.

A direct CUDA flow that may be implemented is depicted via dashed lines and a series of bubbles annotated A1-A3. As depicted with bubble annotated A1, CUDA compiler 3650 can receive CUDA source code 3610 and a CUDA compile command 3648 that can configure CUDA compiler 3650 to compile CUDA source code 3610. CUDA source code 3610 that can be used in a direct CUDA flow can be written in a CUDA programming language that is based on a programming language other than C++ (e.g., C, Fortran, Python, Java, etc.). In response to CUDA compile command 3648, CUDA compiler 3650 can generate host executable code 3670(1) and CUDA device executable code 3684 (depicted with bubble annotated A2). As depicted with bubble annotated A3, host executable code 3670(1) and CUDA device executable code 3684 may be executed on, respectively, CPU 3690 and CUDA-enabled GPU 3694. CUDA device executable code 3684 can include binary code. CUDA device executable code 3684 can include PTX code and can be further compiled into binary code for a specific target device at runtime.

An indirect CUDA flow that may be implemented is depicted via dotted lines and a series of bubbles annotated B1-B6. As depicted with bubble annotated B1, CUDA to HIP translation tool 3620 can receive CUDA source code 3610. As depicted with bubble annotated B2, CUDA to HIP translation tool 3620 can translate CUDA source code 3610 to HIP source code 3630. As depicted with bubble annotated B3, HIP compiler driver 3640 can receive HIP source code 3630 and can determine that target device 3646 is CUDA-enabled.

As depicted with bubble annotated B4, HIP compiler driver 3640 can generate HIP/NVCC compilation command 3642 and can transmit both HIP/NVCC compilation command 3642 and HIP source code 3630 to CUDA compiler 3650. HIP/NVCC compilation command 3642 can configure CUDA compiler 3650 to compile HIP source code 3630 using a HIP to CUDA translation header and a CUDA runtime library. HIP to CUDA translation header can translate any number of mechanisms (e.g., functions) specified in any number of HIP APIs to any number of mechanisms specified in any number of CUDA APIs. CUDA compiler 3650 may use HIP to CUDA translation header in conjunction with a CUDA runtime library corresponding to CUDA runtime API 3602 to generate host executable code 3670(1) and CUDA device executable code 3684. In response to HIP/NVCC compilation command 3642, CUDA compiler 3650 can generate host executable code 3670(1) and CUDA device executable code 3684 (depicted with bubble annotated B5). As depicted with bubble annotated B6, host executable code 3670(1) and CUDA device executable code 3684 may be executed on, respectively, CPU 3690 and CUDA-enabled GPU 3694. CUDA device executable code 3684 can include binary code. CUDA device executable code 3684 can include PTX code and can be further compiled into binary code for a specific target device at runtime.

A CUDA/HCC flow that may be implemented is depicted via solid lines and a series of bubbles annotated C1-C6. As depicted with bubble annotated C1, CUDA to HIP translation tool 3620 can receive CUDA source code 3610. As depicted with bubble annotated C2, CUDA to HIP translation tool 3620 can translate CUDA source code 3610 to HIP source code 3630. As depicted with bubble annotated C3, HIP compiler driver 3640 can receive HIP source code 3630 and can determine that target device 3646 is not CUDA-enabled.

HIP compiler driver 3640 may generate HIP/HCC compilation command 3644 and may transmit both HIP/HCC compilation command 3644 and HIP source code 3630 to HCC 3660 (depicted with bubble annotated C4). HIP/HCC compilation command 3644 can configure HCC 3660 to compile HIP source code 3630 using an HCC header and a HIP/HCC runtime library. HIP/HCC runtime library can correspond to HIP runtime API 3632. HCC header may include any number and type of interoperability mechanisms for HIP and HCC. In response to HIP/HCC compilation command 3644, HCC 3660 can generate host executable code 3670(2) and HCC device executable code 3682 (depicted with bubble annotated C5). As depicted with bubble annotated C6, host executable code 3670(2) and HCC device executable code 3682 may be executed on, respectively, CPU 3690 and GPU 3692.

After CUDA source code 3610 is translated to HIP source code 3630, HIP compiler driver 3640 may subsequently be used to generate executable code for either CUDA-enabled GPU 3694 or GPU 3692 without re-executing CUDA to HIP translation tool 3620. CUDA to HIP translation tool 3620 can translate CUDA source code 3610 to HIP source code 3630 that is then stored in memory. HIP compiler driver 3640 can then configure HCC 3660 to generate host executable code 3670(2) and HCC device executable code 3682 based on HIP source code 3630. In at least one embodiment, HIP compiler driver 3640 subsequently configures CUDA compiler 3650 to generate host executable code 3670(1) and CUDA device executable code 3684 based on stored HIP source code 3630.

An example kernel may be translated by CUDA-to-HIP translation tool 3620 of FIG. 36, in accordance with at least one embodiment. CUDA source code 3610 partitions an overall problem that a given kernel is designed to solve into relatively coarse sub-problems that can independently be solved using thread blocks. Each thread block includes any number of threads. Each sub-problem can be partitioned into relatively fine pieces that can be solved cooperatively in parallel by threads within a thread block. Threads within a thread block can cooperate by sharing data through shared memory and by synchronizing execution to coordinate memory accesses.

CUDA source code 3610 can organize thread blocks associated with a given kernel into a one-dimensional, a two-dimensional, or a three-dimensional grid of thread blocks. Each thread block includes any number of threads, and a grid includes any number of thread blocks.

A kernel can be a function in device code that is defined using
a "_global_" declaration specifier. The dimension of a grid that executes a kernel for a given kernel call and associated streams may be specified using a CUDA kernel launch syntax. CUDA kernel launch syntax is specified as "KernelName<<<GridSize, BlockSize, SharedMemorySize, Stream>>>(KernelArguments);". An execution configuration syntax can include a "<<<...>>>" construct that is inserted between a kernel name ("KernelName") and a parenthesized list of kernel arguments ("KernelArguments"). CUDA kernel launch syntax can include a CUDA launch function syntax instead of an execution configuration syntax.

"GridSize" can be of a type dim3 and specify the dimension and size of a grid. Type dim3 may be a CUDA-defined structure that includes unsigned integers x, y, and z. If z is not specified, then z may default to one. If y is not specified, then y may default to one. The number of thread blocks in a grid can be equal to the product of GridSize.x, GridSize.y, and GridSize.z. "BlockSize" can be of type dim3 and specify the dimension and size of each thread block. The number of threads per thread block may be equal to the product of BlockSize.x, BlockSize.y, and BlockSize.z. Each thread that executes a kernel may be given a unique thread ID that is accessible within the kernel through a built-in variable (e.g., "threadIdx").

With respect to CUDA kernel launch syntax, "SharedMemorySize" may be an optional argument that may specify a number of bytes in a shared memory that is dynamically allocated per thread block for a given kernel call in addition to statically allocated memory. With respect to CUDA kernel launch syntax, SharedMemorySize may default to zero. With respect to CUDA kernel launch syntax, "Stream" may be an optional argument that specifies an associated stream and defaults to zero to specify a default stream. A stream may be a sequence of commands (possibly issued by different host threads) that execute in order. Different streams may execute commands out of order with respect to one another or concurrently.

CUDA source code 3610 may include a kernel definition for an example kernel "MatAdd" and a main function. Main function may be host code that executes on a host and includes a kernel call that causes kernel MatAdd to execute on a device. Kernel MatAdd can add two matrices A and B of size NxN, where N is a positive integer, and store the result in a matrix C. Main function can define a threadsPerBlock variable as 16 by 16 and a numBlocks variable as N/16 by N/16. Main function can then specify kernel call "MatAdd<<<numBlocks, threadsPerBlock>>>(A, B, C);". As per CUDA kernel launch syntax, kernel MatAdd can be executed using a grid of thread blocks having a dimension N/16 by N/16, where each thread block has a dimension of 16 by 16. Each thread block can include 256 threads, a grid can be created with enough blocks to have one thread per matrix element, and each thread in such a grid may execute kernel MatAdd to perform one pair-wise addition.

While translating CUDA source code 3610 to HIP source code 3630, CUDA to HIP translation tool 3620 may translate each kernel call in CUDA source code 3610 from CUDA kernel launch syntax to a HIP kernel launch syntax and may convert any number of other CUDA calls in source code 3610 to any number of other functionally similar HIP calls. HIP kernel launch syntax can be specified as "hipLaunchKernelGGL(KernelName,GridSize, BlockSize, SharedMemorySize, Stream, KernelArguments);". Each of KernelName, GridSize, BlockSize, ShareMemorySize, Stream, and KernelArguments can have the same meaning in HIP kernel launch syntax as in CUDA kernel launch syntax (described previously herein). Arguments SharedMemorySize and Stream can be required in HIP kernel launch syntax and can be optional in CUDA kernel launch syntax.

A portion of HIP source code 3630 can be identical to a portion of CUDA source code 3610 depicted except for a kernel call that causes kernel MatAdd to execute on a device. Kernel MatAdd may be defined in HIP source code 3630 with the same "_global_" declaration specifier with which kernel MatAdd is defined in CUDA source code 3610. A kernel call in HIP source code 3630 may be "hipLaunchKernelGGL(MatAdd, numBlocks, threadsPerBlock, 0, 0, A, B, C);", while a corresponding kernel call in CUDA source code 3610 is "MatAdd<<<numBlocks, threadsPerBlock>>>(A, B, C);".

Other implementations are contemplated and can be performed similarly to the CUDA and HIP implementations above, such as oneAPI, OpenCL, and other programming platforms. Code can be translated in any direction. For example, CUDA can be translated to HIP, and CUDA can be translated to OpenCL. SnuCL-Tr and CUCL can be used to translate OpenCL to CUDA or CUDA to OpenCL, respectively. Compiled code or intermediate representations (e.g., CUDA PTX code) can also be translated to run on other processor platforms (e.g., AMD or Intel). For example, PTX code can be translated to run on Intel or AMD processors using a translation tool, such as ZLUDA.

One or more techniques described herein can utilize a oneAPI programming model. A oneAPI programming model can refer to a programming model for interacting with various compute accelerator architectures. OneAPI may refer to an application programming interface (API) designed to interact with various compute accelerator architectures. A oneAPI programming model may utilize a DPC++ programming language. A DPC++ programming language may refer to a high-level language for data parallel programming productivity. A DPC++ programming language can be based at least in part on C and/or C++ programming languages. A oneAPI programming model can be a programming model such as, but not limited to, those developed by Intel Corporation of Santa Clara, CA.

OneAPI and/or oneAPI programming model can be utilized to interact with various accelerator, GPU, processor, and/or variations thereof, architectures. OneAPI may include a set of libraries that implement various functionalities. OneAPI may include at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

A oneAPI DPC++ library, also referred to as oneDPL, can be a library that implements algorithms and functions to accelerate DPC++ kernel programming. OneDPL may implement one or more standard template library (STL) functions. OneDPL can implement one or more parallel STL functions. OneDPL can provide a set of library classes and functions such as, but not limited to, parallel algorithms, iterators, function object classes, range-based API, and/or variations thereof. OneDPL can implement one or more classes and/or functions of a C++ standard library. OneDPL can implement one or more random number generator functions.

A oneAPI math kernel library, also referred to as oneMKL, can be a library that implements various optimized and parallelized routines for various mathematical functions and/or operations. OneMKL can implement one or more basic linear algebra subprograms (BLAS) and/or linear algebra package (LAPACK) dense linear algebra routines. OneMKL may implement one or more sparse BLAS linear algebra routines. OneMKL can implement one or more random number generators (RNGs). OneMKL may implement one or more vector mathematics (VM) routines for mathematical operations on vectors. OneMKL may implement one or more Fast Fourier Transform (FFT) functions.

A oneAPI data analytics library, also referred to as oneDAL, can include a library that implements various data analysis applications and distributed computations. OneDAL can implement various algorithms for preprocessing, transformation, analysis, modeling, validation, and decision making for data analytics, in batch, online, and distributed processing modes of computation. OneDAL can implement various C++ and/or Java APIs and various connectors to one or more data sources. OneDAL may implement DPC++ API extensions to a traditional C++ interface and enables GPU usage for various algorithms.

A oneAPI deep neural network library, also referred to as oneDNN, can include a library that implements various deep learning functions. OneDNN may implement various neural network, machine learning, and deep learning functions, algorithms, and/or variations thereof.

A oneAPI collective communications library, also referred to as oneCCL, can include a library that implements various applications for deep learning and machine learning workloads. OneCCL can be built upon lower-level communication middleware, such as, but not limited to, message passing interface (MPI) and libfabrics. OneCCL can enable a set of deep learning specific optimizations, such as, but not limited to, prioritization, persistent operations, out of order executions, and/or variations thereof. OneCCL can implement various CPU and GPU functions.

A oneAPI threading building blocks library, also referred to as oneTBB, can include a library that implements various parallelized processes for various applications. OneTBB can be utilized for task-based, shared parallel programming on a host. OneTBB may implement generic parallel algorithms. OneTBB may implement concurrent containers. OneTBB may implement a scalable memory allocator. OneTBB may implement a work-stealing task scheduler. OneTBB may implement low-level synchronization primitives. OneTBB may be compiler-independent and usable on various processors, such as, but not limited to, GPUs, PPUs, CPUs, and/or variations thereof.

A oneAPI video processing library, also referred to as oneVPL, can include a library that is utilized for accelerating video processing in one or more applications. OneVPL can implement various video decoding, encoding, and processing functions. OneVPL can implement various functions for media pipelines on CPUs, GPUs, and other accelerators. OneVPL can implement device discovery and selection in media centric and video analytics workloads. OneVPL can implement API primitives for zero-copy buffer sharing.

A oneAPI programming model may utilize a DPC++ programming language. A DPC++ programming language can include a programming language that can include functionally similar versions of CUDA mechanisms to define device code and distinguish between device code and host code. A DPC++ programming language may include a subset of functionality of a CUDA programming language. One or more CUDA programming model operations may be performed using a oneAPI programming model using a DPC++ programming language.

Any application programming interface (API) described herein can be compiled into one or more instructions, operations, or any other signal by a compiler, interpreter, or other software tool. Compilation can include generating one or more machine-executable instructions, operations, or other signals from source code. An API compiled into one or more instructions, operations, or other signals, when performed, can cause one or more processors such as, but not limited to, processors described, e.g., in FIGs. 21-33, or any other logic circuit further described herein to perform one or more computing operations.

In at least one embodiment, translation tools described elsewhere herein, such as, but not limited to, can include one or more circuits to translate CUDA code to perform an instruction to perform one or more matrix multiply-accumulate (MMA) operations to multiply a first input matrix by a scaled matrix generated by multiplying one or more elements of a second input matrix by one or more corresponding scale factors to HIP, oneAPI, OpenCL, or any other language used to perform any of the operations described above or elsewhere herein. One or more circuits can be configured by software to translate CUDA code to perform an instruction to perform one or more matrix multiply-accumulate (MMA) operations to multiply a first input matrix by a scaled matrix generated by multiplying one or more elements of a second input matrix by one or more corresponding scale factors to HIP, oneAPI, OpenCL, or any other language used to perform any of the operations described above or elsewhere herein.

### AUTONOMOUS VEHICLE

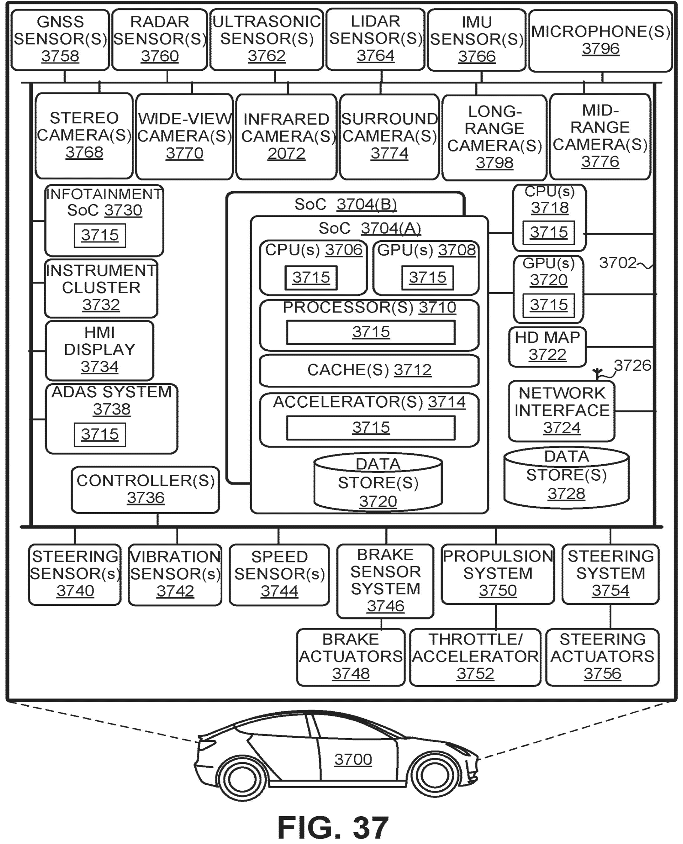

FIG. 37 illustrates an example of an autonomous vehicle 3700, in accordance with at least one embodiment. Autonomous vehicle 3700 (alternatively referred to herein as "vehicle 3700") may be a passenger vehicle, such as, but not limited to, a car, a truck, a bus, and/or another type of vehicle that accommodates one or more passengers. In at least one embodiment, vehicle 3700 may be a semi-tractor-trailer truck used for hauling cargo. Vehicle 3700 may be an airplane, robotic vehicle, or other kind of vehicle.

Autonomous vehicles may be described in terms of automation levels, defined by National Highway Traffic Safety Administration ("NHTSA"), a division of US Department of Transportation, and Society of Automotive Engineers ("SAE") "Taxonomy and Definitions for Terms Related to Driving Automation Systems for On-Road Motor Vehicles" (e.g., Standard No. J3016-201806, published on June 15, 2018, Standard No. J3016-201609, published on September 30, 2016, and previous and future versions of this standard). In at least one embodiment, vehicle 3700 may be capable of functionality in accordance with one or more of Level 1 through Level 5 of autonomous driving levels. For example, in at least one embodiment, vehicle 3700 may be capable of conditional automation (Level 3), high automation (Level 4), and/or full automation (Level 5), depending on embodiment.

Vehicle 3700 may include components such as, but not limited to, a chassis, a vehicle body, wheels (e.g., 2, 4, 6, 8, 18, etc.), tires, axles, and other components of a vehicle. Vehicle 3700 may include a propulsion system 3750, such as, but not limited to, an internal combustion engine, hybrid electric power plant, an all-electric engine, and/or another propulsion system type. Propulsion system 3750 may be connected to a drive train of vehicle 3700, which may include a transmission, to enable propulsion of vehicle 3700. Propulsion system 3750 may be controlled in response to receiving signals from a throttle/accelerator(s) 3752.

A steering system 3754, which may include a steering wheel, is used to steer vehicle 3700 (e.g., along a desired path or route) when propulsion system 3750 is operating (e.g., when vehicle 3700 is in motion). Steering system 3754 may receive signals from steering actuator(s) 3756. A steering wheel may be optional for full automation (Level 5) functionality. A brake sensor system 3746 may be used to operate vehicle brakes in response to receiving signals from brake actuator(s) 3748 and/or brake sensors.

Controller(s) 3736, which may include one or more system on chips ("SoCs") and/or graphics processing unit(s) ("GPU(s)"), can provide signals (e.g., representative of commands) to one or more components and/or systems of vehicle 3700. For instance, controller(s) 3736 may send signals to operate vehicle brakes via brake actuator(s) 3748, to operate steering system 3754 via steering actuator(s) 3756, to operate propulsion system 3750 via throttle/accelerator(s) 3752. Controller(s) 3736 may include one or more onboard (e.g., integrated) computing devices that process sensor signals, and output operation commands (e.g., signals representing commands) to enable autonomous driving and/or to assist a human driver in driving vehicle 3700. Controller(s) 3736 may include a first controller for autonomous driving functions, a second controller for functional safety functions, a third controller for artificial intelligence functionality (e.g., computer vision), a fourth controller for infotainment functionality, a fifth controller for redundancy in emergency conditions, and/or other controllers. A single controller may handle two or more of above functionalities, two or more controllers may handle a single functionality, and/or any combination thereof.

Controller(s) 3736 may provide signals for controlling one or more components and/or systems of vehicle 3700 in response to sensor data received from one or more sensors (e.g., sensor inputs). Sensor data may be received from, for example, global navigation satellite systems ("GNSS") sensor(s) 3758 (e.g., Global Positioning System sensor(s)), RADAR sensor(s) 3760, ultrasonic sensor(s) 3762, LIDAR sensor(s) 3764, inertial measurement unit ("IMU") sensor(s) 3766 (e.g., accelerometer(s), gyroscope(s), a magnetic compass or magnetic compasses, magnetometer(s), etc.), microphone(s) 3796, stereo camera(s) 3768, wide-view camera(s) 3770 (e.g., fisheye cameras), infrared camera(s) 3772, surround camera(s) 3774 (e.g., 360 degree cameras), long-range cameras 3798, mid-range camera(s) 3776, speed sensor(s) 3744 (e.g., for measuring speed of vehicle 3700), vibration sensor(s) 3742, steering sensor(s) 3740, brake sensor(s) (e.g., as part of brake sensor system 3746), and/or other sensor types.

One or more of controller(s) 3736 may receive inputs (e.g., represented by input data) from an instrument cluster 3732 of vehicle 3700 and provide outputs (e.g., represented by output data, display data, etc.) via a human-machine interface ("HMI") display 3734, an audible annunciator, a loudspeaker, and/or via other components of vehicle 3700. Outputs may include information such as, but not limited to, vehicle velocity, speed, time, map data (e.g., a High Definition map (not shown), location data (e.g., vehicle's 3700 location, such as, but not limited to, on a map), direction, location of other vehicles (e.g., an occupancy grid), information about objects and status of objects as perceived by controller(s) 3736, etc. For example, HMI display 3734 may display information about presence of one or more objects (e.g., a street sign, caution sign, traffic light changing, etc.), and/or information about driving maneuvers vehicle has made, is making, or will make (e.g., changing lanes now, taking exit 34B in two miles, etc.).

Each of components, features, and systems of vehicle 3700 in FIG. 37 may be connected via a bus 3702. Bus 3702 may include a CAN data interface (alternatively referred to herein as a "CAN bus"). A CAN may be a network inside vehicle 3700 used to aid in control of various features and functionality of vehicle 3700, such as, but not limited to, actuation of brakes, acceleration, braking, steering, windshield wipers, etc. Bus 3702 may be configured to have dozens or even hundreds of nodes, each with its own unique identifier (e.g., a CAN ID). Bus 3702 may be read to find steering wheel angle, ground speed, engine revolutions per minute ("RPMs"), button positions, and/or other vehicle status indicators. Bus 3702 may be a CAN bus that is ASIL B compliant.

In addition to, or alternatively from CAN, FlexRay and/or Ethernet protocols may be used. There may be any number of busses forming bus 3702, which may include zero or more CAN busses, zero or more FlexRay busses, zero or more Ethernet busses, and/or zero or more other types of busses using different protocols. Two or more busses may be used to perform different functions, and/or may be used for redundancy. For example, a first bus may be used for collision avoidance functionality and a second bus may be used for actuation control. Each bus of bus 3702 may communicate with any of components of vehicle 3700, and two or more busses of bus 3702 may communicate with corresponding components. Each of any number of system(s) on chip(s) ("SoC(s)") 3704 (such as, but not limited to, SoC 3704(A) and SoC 3704(B)), each of controller(s) 3736, and/or each computer within vehicle may have access to same input data (e.g., inputs from sensors of vehicle 3700), and may be connected to a common bus, such CAN bus.

Any number of cameras can be positioned at any choice of camera locations and fields of view for autonomous vehicle 3700 of FIG. 37A, in accordance with at least one embodiment. Cameras and respective fields of view may be one example embodiment and are not intended to be limiting. For instance, additional and/or alternative cameras may be included and/or cameras may be located at different locations on vehicle 3700.

Camera types for cameras may include digital cameras that may be adapted for use with components and/or systems of vehicle 3700. Camera(s) may operate at automotive safety integrity level ("ASIL") B and/or at another ASIL. Camera types may be capable of any image capture rate, such as, but not limited to, 60 frames per second (fps), 1220 fps, 240 fps, etc., depending on embodiment. Cameras may be capable of using rolling shutters, global shutters, another type of shutter, or a combination thereof. In at least one embodiment, color filter array may include a red clear clear clear ("RCCC") color filter array, a red clear clear blue ("RCCB") color filter array, a red blue green clear ("RBGC") color filter array, a Foveon X3 color filter array, a Bayer sensors ("RGGB") color filter array, a monochrome sensor color filter array, and/or another type of color filter array. Clear pixel cameras, such as, but not limited to, cameras with an RCCC, an RCCB, and/or an RBGC color filter array, may be used in an effort to increase light sensitivity.

One or more of camera(s) may be used to perform advanced driver assistance systems ("ADAS") functions (e.g., as part of a redundant or fail-safe design). For example, a MultiFunction Mono Camera may be installed to provide functions including lane departure warning, traffic sign assist and intelligent headlamp control. One or more of camera(s) (e.g., all cameras) may record and provide image data (e.g., video) simultaneously.

One or more cameras may be mounted in a mounting assembly, such as, but not limited to, a custom designed (three-dimensional ("3D") printed) assembly, in order to cut out stray light and reflections from within vehicle 3700 (e.g., reflections from dashboard reflected in windshield mirrors) which may interfere with camera image data capture abilities. With reference to wing-mirror mounting assemblies, wing-mirror assemblies may be custom 3D printed so that a camera mounting plate matches a shape of a wing-mirror. Camera(s) may be integrated into wing-mirrors. For side-view cameras, camera(s) may also be integrated within four pillars at each corner of a cabin.

Cameras with a field of view that include portions of an environment in front of vehicle 3700 (e.g., front-facing cameras) may be used for surround view, to help identify forward facing paths and obstacles, as well as aid in, with help of one or more of controller(s) 3736 and/or control SoCs, providing information critical to generating an occupancy grid and/or determining preferred vehicle paths. Front-facing cameras may be used to perform many similar ADAS functions as LIDAR, including emergency braking, pedestrian detection, and collision avoidance. Front-facing cameras may also be used for ADAS functions and systems including Lane Departure Warnings ("LDW"), Autonomous Cruise Control ("ACC"), and/or other functions such as, but not limited to, traffic sign recognition.

A variety of cameras may be used in a front-facing configuration, including, for example, a monocular camera platform that includes a CMOS ("complementary metal oxide semiconductor") color imager. A wide-view camera 3770 may be used to perceive objects coming into view from a periphery (e.g., pedestrians, crossing traffic or bicycles). There may be any number (including zero) wide-view cameras 3770 on vehicle 3700. Any number of long-range camera(s) 3798 (e.g., a long-view stereo camera pair) may be used for depth-based object detection, especially for objects for which a neural network has not yet been trained. Long-range camera(s) 3798 may also be used for object detection and classification, as well as basic object tracking.

Any number of stereo camera(s) 3768 may also be included in a front-facing configuration. One or more of stereo camera(s) 3768 may include an integrated control unit comprising a scalable processing unit, which may provide a programmable logic ("FPGA") and a multi-core micro-processor with an integrated Controller Area Network ("CAN") or Ethernet interface on a single chip. Such a unit may be used to generate a 3D map of an environment of vehicle 3700, including a distance estimate for all points in an image. One or more of stereo camera(s) 3768 may include compact stereo vision sensor(s) that may include two camera lenses (one each on left and right) and an image processing chip that may measure distance from vehicle 3700 to target object and use generated information (e.g., metadata) to activate autonomous emergency braking and lane departure warning functions. Other types of stereo camera(s) 3768 may be used in addition to, or alternatively from, those described herein.

Cameras with a field of view that include portions of environment to sides of vehicle 3700 (e.g., side-view cameras) may be used for surround view, providing information used to create and update an occupancy grid, as well as to generate side impact collision warnings. For example, surround camera(s) 3774 (e.g., four surround cameras) could be positioned on vehicle 3700. Surround camera(s) 3774 may include any number and combination of wide-view cameras, fisheye camera(s), 360 degree camera(s), and/or similar cameras. For instance, four fisheye cameras may be positioned on a front, a rear, and sides of vehicle 3700. Vehicle 3700 may use three surround camera(s) 3774 (e.g., left, right, and rear), and may leverage one or more other camera(s) (e.g., a forward-facing camera) as a fourth surround-view camera.

Cameras with a field of view that include portions of an environment behind vehicle 3700 (e.g., rear-view cameras) may be used for parking assistance, surround view, rear collision warnings, and creating and updating an occupancy grid. A wide variety of cameras may be used including, but not limited to, cameras that may be also suitable as a front-facing camera(s) (e.g., long-range cameras 3798 and/or mid-range camera(s) 3776, stereo camera(s) 3768, infrared camera(s) 3772, etc.,) as described herein.

Vehicle 3700 may include any number of SoCs 3704 or other processors described elsewhere herein, such as, but not limited to, processors and/or components illustrated and described for FIGs. 21-33. Each of SoCs 3704 may include central processing units ("CPU(s)") 3706, graphics processing units ("GPU(s)") 3708, processor(s) 3710, cache(s) 3712, accelerator(s) 3714, data store(s) 3716, and/or other components and features not illustrated. SoC(s) 3704 may be used to control vehicle 3700 in a variety of platforms and systems. For example, SoC(s) 3704 may be combined in a system (e.g., system of vehicle 3700) with a High Definition ("HD") map 3722 which may obtain map refreshes and/or updates via network interface 3724 from one or more servers (not shown). SoCs 3704 may include logic 3715 that can include any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

CPU(s) 3706 may include a CPU cluster or CPU complex (alternatively referred to herein as a "CCPLEX"). CPU(s) 3706 may include multiple cores and/or level two ("L2") caches. For instance, CPU(s) 3706 may include eight cores in a coherent multi-processor configuration. CPU(s) 3706 may include four dual-core clusters where each cluster has a dedicated L2 cache (e.g., a 2 megabyte (MB) L2 cache). CPU(s) 3706 (e.g., CCPLEX) may be configured to support simultaneous cluster operations enabling any combination of clusters of CPU(s) 3706 to be active at any given time.

One or more of CPU(s) 3706 may implement power management capabilities that include one or more of following features: individual hardware blocks may be clock-gated automatically when idle to save dynamic power; each core clock may be gated when such core is not actively executing instructions due to execution of Wait for Interrupt ("WFI")/Wait for Event ("WFE") instructions; each core may be independently power-gated; each core cluster may be independently clock-gated when all cores may be clock-gated or power-gated; and/or each core cluster may be independently power-gated when all cores may be power-gated. CPU(s) 3706 may further implement an enhanced algorithm for managing power states, where allowed power states and expected wakeup times may be specified, and hardware/microcode determines which best power state to enter for core, cluster, and CCPLEX. Processing cores may support simplified power state entry sequences in software with work offloaded to microcode.

GPU(s) 3708 may include an integrated GPU (alternatively referred to herein as an "iGPU"). GPU(s) 3708 may be programmable and may be efficient for parallel workloads. GPU(s) 3708 may use an enhanced tensor instruction set. GPU(s) 3708 may include one or more streaming microprocessors, where each streaming microprocessor may include a level one ("L1") cache (e.g., an L1 cache with at least 96 KB storage capacity), and two or more streaming microprocessors may share an L2 cache (e.g., an L2 cache with a 512 KB storage capacity). GPU(s) 3708 may include at least eight streaming microprocessors. GPU(s) 3708 may use compute application programming interface(s) (API(s)). GPU(s) 3708 may use one or more parallel computing platforms and/or programming models (e.g., NVIDIA's CUDA model). Streaming microprocessors may be referred to as streaming multiprocessors ("SMs"), stream processors ("SPs"), stream processing units ("SPUs"), compute units ("CUs"), execution units ("EUs"), and/or slices, where a slice in this context can refer to a portion of processing resources in a processing unit (e.g., 16 cores, a ray tracing unit, a thread director or scheduler).

One or more of GPU(s) 3708 may be power-optimized for best performance in automotive and embedded use cases. For example, GPU(s) 3708 could be fabricated on Fin field-effect transistor ("FinFET") circuitry. Each streaming microprocessor may incorporate a number of mixed-precision processing cores partitioned into multiple blocks. For example, 64 PF32 cores and 32 FP64 cores could be partitioned into four processing blocks. Each processing block could be allocated 16 FP32 cores, 8 FP64 cores, 16 INT32 cores, two mixed-precision NVIDIA Tensor cores for deep learning matrix arithmetic, a level zero ("L0") instruction cache, a scheduler (e.g., warp scheduler) or sequencer, a dispatch unit, and/or a 64 KB register file. Streaming microprocessors may include independent parallel integer and floating-point data paths to provide for efficient execution of workloads with a mix of computation and addressing calculations. Streaming microprocessors may include independent thread scheduling capability to enable finer-grain synchronization and cooperation between parallel threads. Streaming microprocessors may include a combined L1 data cache and shared memory unit in order to improve performance while simplifying programming.

One or more of GPU(s) 3708 may include a high bandwidth memory ("HBM") and/or a 16 GB HBM2 memory subsystem to provide, in some examples, about 900 GB/second peak memory bandwidth. In addition to, or alternatively from, HBM memory, a synchronous graphics random-access memory ("SGRAM") may be used, such as, but not limited to, a graphics double data rate type five synchronous random-access memory ("GDDR5").

GPU(s) 3708 may include unified memory technology. Address translation services ("ATS") support may be used to allow GPU(s) 3708 to access CPU(s) 3706 page tables directly. When a GPU of GPU(s) 3708 memory management unit ("MMU") experiences a miss, an address translation request may be transmitted to CPU(s) 3706. In response, 2 CPU of CPU(s) 3706 may look in its page tables for a virtual-to-physical mapping for an address and transmit translation back to GPU(s) 3708. Unified memory technology may allow a single unified virtual address space for memory of both CPU(s) 3706 and GPU(s) 3708, thereby simplifying GPU(s) 3708 programming and porting of applications to GPU(s) 3708.

GPU(s) 3708 may include any number of access counters that may keep track of frequency of access of GPU(s) 3708 to memory of other processors. Access counter(s) may help ensure that memory pages may be moved to physical memory of a processor that is accessing pages most frequently, thereby improving efficiency for memory ranges shared between processors.

One or more of SoC(s) 3704 may include any number of cache(s) 3712, including those described herein. For example, cache(s) 3712 could include a level three ("L3") cache that is available to both CPU(s) 3706 and GPU(s) 3708 (e.g., that is connected to CPU(s) 3706 and GPU(s) 3708). Cache(s) 3712 may include a write-back cache that may keep track of states of lines, such as, but not limited to, by using a cache coherence protocol (e.g., MEI, MESI, MSI, etc.). A L3 cache may include 4 MB of memory or more, depending on embodiment, although smaller cache sizes may be used.

One or more of SoC(s) 3704 may include one or more accelerator(s) 3714 (e.g., hardware accelerators, software accelerators, or a combination thereof). SoC(s) 3704 may include a hardware acceleration cluster that may include optimized hardware accelerators and/or large on-chip memory. Large on-chip memory (e.g., 4 MB of SRAM), may enable a hardware acceleration cluster to accelerate neural networks and other calculations. A hardware acceleration cluster may be used to complement GPU(s) 3708 and to off-load some of tasks of GPU(s) 3708 (e.g., to free up more cycles of GPU(s) 3708 for performing other tasks). Accelerator(s) 3714 could be used for targeted workloads (e.g., perception, convolutional neural networks ("CNNs"), recurrent neural networks ("RNNs"), etc.) that may be stable enough to be amenable to acceleration. A CNN may include a region-based or regional convolutional neural networks ("RCNNs") and Fast RCNNs (e.g., as used for object detection) or other type of CNN.

Accelerator(s) 3714 (e.g., hardware acceleration cluster) may include one or more deep learning accelerator ("DLA"). DLA(s) may include one or more Tensor processing units ("TPUs") that may be configured to provide an additional ten trillion operations per second for deep learning applications and inferencing, such as TPU(s) described herein, e.g., in FIG. 31. TPUs may be accelerators configured to, and optimized for, performing image processing functions (e.g., for CNNs, RCNNs, etc.). DLA(s) may further be optimized for a specific set of neural network types and floating point operations, as well as inferencing. Design of DLA(s) may provide more performance per millimeter than a typical general-purpose GPU, and typically vastly exceeds performance of a CPU. TPU(s) may perform several functions, including a single-instance convolution function, supporting, for example, INT8, INT16, and FP16 data types for both features and weights, as well as post-processor functions. DLA(s) may quickly and efficiently execute neural networks, especially CNNs, on processed or unprocessed data for any of a variety of functions, including, for example: a CNN for object identification and detection using data from camera sensors; a CNN for distance estimation using data from camera sensors; a CNN for emergency vehicle detection and identification and detection using data from microphones; a CNN for facial recognition and vehicle owner identification using data from camera sensors; and/or a CNN for security and/or safety related events.

DLA(s) may perform any function of GPU(s) 3708, and by using an inference accelerator, for example, a designer may target either DLA(s) or GPU(s) 3708 for any function. For example, a designer may focus processing of CNNs and floating point operations on DLA(s) and leave other functions to GPU(s) 3708 and/or accelerator(s) 3714.

Accelerator(s) 3714 may include programmable vision accelerator ("PVA"), which may alternatively be referred to herein as a computer vision accelerator. PVA may be designed and configured to accelerate computer vision algorithms for advanced driver assistance system ("ADAS") 3738, autonomous driving, augmented reality ("AR") applications, and/or virtual reality ("VR") applications. PVA may provide a balance between performance and flexibility. For example, each PVA may include, for example, any number of reduced instruction set computer ("RISC") cores, direct memory access ("DMA"), and/or any number of vector processors.

RISC cores may interact with image sensors (e.g., image sensors of any cameras described herein), image signal processor(s), etc. Each RISC core may include any amount of memory. RISC cores may use any of a number of protocols, depending on embodiment. RISC cores may execute a real-time operating system ("RTOS"). RISC cores may be implemented using one or more integrated circuit devices, application specific integrated circuits ("ASICs"), and/or memory devices. For example, RISC cores could include an instruction cache and/or a tightly coupled RAM.

DMA may enable components of PVA to access system memory independently of CPU(s) 3706. DMA may support any number of features used to provide optimization to a PVA including supporting multi-dimensional addressing and/or circular addressing. DMA may support up to six or more dimensions of addressing, which may include block width, block height, block depth, horizontal block stepping, vertical block stepping, and/or depth stepping.

Vector processors may be programmable processors that may be designed to efficiently and flexibly execute programming for computer vision algorithms and provide signal processing capabilities. A PVA may include a PVA core and two vector processing subsystem partitions. A PVA core may include a processor subsystem, DMA engine(s) (e.g., two DMA engines), and/or other peripherals. A vector processing subsystem may operate as a primary processing engine of a PVA, and may include a vector processing unit ("VPU"), an instruction cache, and/or vector memory (e.g., "VMEM"). VPU core may include a digital signal processor such as, but not limited to, a single instruction, multiple data ("SIMD"), very long instruction word ("VLIW") digital signal processor. A combination of SIMD and VLIW may enhance throughput and speed.

Each of vector processors may include an instruction cache and may be coupled to dedicated memory. As a result, each of vector processors may be configured to execute independently of other vector processors. Vector processors that may be included in a particular PVA may be configured to employ data parallelism. For instance, plurality of vector processors included in a single PVA may execute a common computer vision algorithm, but on different regions of an image. Vector processors included in a particular PVA may simultaneously execute different computer vision algorithms, on one image, or even execute different algorithms on sequential images or portions of an image. Among other things, any number of PVAs may be included in hardware acceleration cluster and any number of vector processors may be included in each PVA. PVA may include additional error correcting code ("ECC") memory, to enhance overall system safety.

Accelerator(s) 3714 may include a computer vision network on-chip and static random-access memory ("SRAM"), for providing a high-bandwidth, low latency SRAM for accelerator(s) 3714. On-chip memory may include at least 4 MB SRAM, including, for example, eight field-configurable memory blocks, that may be accessible by both a PVA and a DLA. Each pair of memory blocks may include an advanced peripheral bus ("APB") interface, configuration circuitry, a controller, and a multiplexer. Any type of memory may be used. A PVA and a DLA may access memory via a backbone that provides a PVA and a DLA with high-speed access to memory. A backbone may include a computer vision network on-chip that interconnects a PVA and a DLA to memory (e.g., using APB).

A computer vision network on-chip may include an interface that determines, before transmission of any control signal/address/data, that both a PVA and a DLA provide ready and valid signals. An interface may provide for separate phases and separate channels for transmitting control signals/addresses/data, as well as burst-type communications for continuous data transfer. An interface may comply with International Organization for Standardization ("ISO") 26262 or International Electrotechnical Commission ("IEC") 61508 standards, although other standards and protocols may be used.

One or more of SoC(s) 3704 may include a real-time ray-tracing hardware accelerator. Real-time ray-tracing hardware accelerator may be used to quickly and efficiently determine positions and extents of objects (e.g., within a world model), to generate real-time visualization simulations, for RADAR signal interpretation, for sound propagation synthesis and/or analysis, for simulation of SONAR systems, for general wave propagation simulation, for comparison to LIDAR data for purposes of localization and/or other functions, and/or for other uses.

Accelerator(s) 3714 can have a wide array of uses for autonomous driving. A PVA may be used for key processing stages in ADAS and autonomous vehicles. A PVA's capabilities may be a good match for algorithmic domains needing predictable processing, at low power and low latency. In other words, a PVA can perform well on semi-dense or dense regular computation, even on small data sets, which might require predictable run-times with low latency and low power. In vehicle 3700, PV As might be designed to run classic computer vision algorithms, as they can be efficient at object detection and operating on integer math. For example, a PVA is used to perform computer stereo vision. A semi-global matching-based algorithm may be used in some examples, although this is not intended to be limiting. Applications for Level 3-5 autonomous driving use motion estimation/stereo matching on-the-fly (e.g., structure from motion, pedestrian recognition, lane detection, etc.). A PVA may perform computer stereo vision functions on inputs from two monocular cameras. A PVA may be used to perform dense optical flow. For example, a PVA could process raw RADAR data (e.g., using a 4D Fast Fourier Transform) to provide processed RADAR data. A PVA is used for time of flight depth processing, by processing raw time of flight data to provide processed time of flight data, for example.

A DLA may be used to run any type of network to enhance control and driving safety, including, for example, a neural network that outputs a measure of confidence for each object detection. Confidence may be represented or interpreted as a probability, or as providing a relative "weight" of each detection compared to other detections. A confidence measure enables a system to make further decisions regarding which detections should be considered as true positive detections rather than false positive detections. A system may set a threshold value for confidence and consider only detections exceeding threshold value as true positive detections. When an automatic emergency braking ("AEB") system is used, false positive detections can cause vehicle to automatically perform emergency braking, which is obviously undesirable. Highly confident detections may be considered as triggers for AEB. a DLA may run a neural network for regressing confidence value. A neural network may take as its input at least some subset of parameters, such as, but not limited to, bounding box dimensions, ground plane estimate obtained (e.g., from another subsystem), output from IMU sensor(s) 3766 that correlates with vehicle 3700 orientation, distance, 3D location estimates of object obtained from neural network and/or other sensors (e.g., LIDAR sensor(s) 3764 or RADAR sensor(s) 3760), among others.

One or more of SoC(s) 3704 may include data store(s) 3716 (e.g., memory). Data store(s) 3716 may be on-chip memory of SoC(s) 3704, which may store neural networks to be executed on GPU(s) 3708 and/or a DLA. Data store(s) 3716 may be large enough in capacity to store multiple instances of neural networks for redundancy and safety. Data store(s) 3716 may comprise L2 or L3 cache(s).

One or more of SoC(s) 3704 may include any number of processor(s) 3710 (e.g., embedded processors). Processor(s) 3710 may include a boot and power management processor that may be a dedicated processor and subsystem to handle boot power and management functions and related security enforcement. A boot and power management processor may be a part of a boot sequence of SoC(s) 3704 and may provide runtime power management services. A boot power and management processor may provide clock and voltage programming, assistance in system low power state transitions, management of SoC(s) 3704 thermals and temperature sensors, and/or management of SoC(s) 3704 power states. Each temperature sensor may be implemented as a ring-oscillator whose output frequency is proportional to temperature, and SoC(s) 3704 may use ring-oscillators to detect temperatures of CPU(s) 3706, GPU(s) 3708, and/or accelerator(s) 3714. If temperatures may be determined to exceed a threshold, then a boot and power management processor may enter a temperature fault routine and put SoC(s) 3704 into a lower power state and/or put vehicle 3700 into a chauffeur to safe stop mode (e.g., bring vehicle 3700 to a safe stop).

Processor(s) 3710 may further include a set of embedded processors that may serve as an audio processing engine which may be an audio subsystem that enables full hardware support for multi-channel audio over multiple interfaces, and a broad and flexible range of audio I/O interfaces. An audio processing engine is a dedicated processor core with a digital signal processor with dedicated RAM.

Processor(s) 3710 may further include an always-on processor engine that may provide necessary hardware features to support low power sensor management and wake use cases. An always-on processor engine may include a processor core, a tightly coupled RAM, supporting peripherals (e.g., timers and interrupt controllers), various I/O controller peripherals, and routing logic.

Processor(s) 3710 may further include a safety cluster engine that may include a dedicated processor subsystem to handle safety management for automotive applications. A safety cluster engine may include two or more processor cores, a tightly coupled RAM, support peripherals (e.g., timers, an interrupt controller, etc.), and/or routing logic. In a safety mode, two or more cores may operate, in a lockstep mode and function as a single core with comparison logic to detect any differences between their operations. Processor(s) 3710 may further include a real-time camera engine that may include a dedicated processor subsystem for handling real-time camera management. Processor(s) 3710 may further include a high-dynamic range signal processor that may include an image signal processor that is a hardware engine that is part of a camera processing pipeline.

Processor(s) 3710 may include a video image compositor that may be a processing block (e.g., implemented on a microprocessor) that implements video post-processing functions needed by a video playback application to produce a final image for a player window. A video image compositor may perform lens distortion correction on wide-view camera(s) 3770, surround camera(s) 3774, and/or on in-cabin monitoring camera sensor(s). In-cabin monitoring camera sensor(s) may be preferably monitored by a neural network running on another instance of SoC 3704, configured to identify in cabin events and respond accordingly. An in-cabin system may perform lip reading to activate cellular service and place a phone call, dictate emails, change a vehicle's destination, activate or change a vehicle's infotainment system and settings, or provide voice-activated web surfing. Certain functions may be available to a driver when a vehicle is operating in an autonomous mode and may be disabled otherwise.

A video image compositor may include enhanced temporal noise reduction for both spatial and temporal noise reduction. For example, where motion occurs in a video, noise reduction weights spatial information appropriately, decreasing weights of information provided by adjacent frames. Where an image or portion of an image does not include motion, temporal noise reduction performed by video image compositor may use information from a previous image to reduce noise in a current image.

A video image compositor may also be configured to perform stereo rectification on input stereo lens frames. A video image compositor may further be used for user interface composition when an operating system desktop is in use, and GPU(s) 3708 may not be required to continuously render new surfaces. When GPU(s) 3708 are powered on and active doing 3D rendering, a video image compositor may be used to offload GPU(s) 3708 to improve performance and responsiveness.

One or more SoC of SoC(s) 3704 may further include a mobile industry processor interface ("MIPI") camera serial interface for receiving video and input from cameras, a high-speed interface, and/or a video input block that may be used for a camera and related pixel input functions. One or more of SoC(s) 3704 may further include an input/output controller(s) that may be controlled by software and may be used for receiving I/O signals that may be uncommitted to a specific role.

One or more SoC of SoC(s) 3704 may further include a broad range of peripheral interfaces to enable communication with peripherals, audio encoders/decoders ("codecs"), power management, and/or other devices. SoC(s) 3704 may be used to process data from cameras (e.g., connected over Gigabit Multimedia Serial Link and Ethernet channels), sensors (e.g., LIDAR sensor(s) 3764, RADAR sensor(s) 3760, etc. that may be connected over Ethernet channels), data from bus 3702 (e.g., speed of vehicle 3700, steering wheel position, etc.), data from GNSS sensor(s) 3758 (e.g., connected over a Ethernet bus or a CAN bus), etc. One or more SoC of SoC(s) 3704 may further include dedicated high-performance mass storage controllers that may include their own DMA engines, and that may be used to free CPU(s) 3706 from routine data management tasks.

SoC(s) 3704 may be an end-to-end platform with a flexible architecture that spans automation Levels 3-5, thereby providing a comprehensive functional safety architecture that leverages and makes efficient use of computer vision and ADAS techniques for diversity and redundancy, and provides a platform for a flexible, reliable driving software stack, along with deep learning tools. SoC(s) 3704 may be faster, more reliable, and even more energy-efficient and space-efficient than conventional systems. For example, accelerator(s) 3714, when combined with CPU(s) 3706, GPU(s) 3708, and data store(s) 3716, may provide for a fast, efficient platform for Level 3-5 autonomous vehicles.

Computer vision algorithms may be executed on CPUs, which may be configured using a high-level programming language, such as, but not limited to, C, to execute a wide variety of processing algorithms across a wide variety of visual data. However, CPUs may be oftentimes unable to meet performance requirements of many computer vision applications, such as, but not limited to, those related to execution time and power consumption, for example. Many CPUs may be unable to execute complex object detection algorithms in real-time, which is used in in-vehicle ADAS applications and in practical Level 3-5 autonomous vehicles.

Embodiments described herein allow for multiple neural networks to be performed simultaneously and/or sequentially, and for results to be combined together to enable Level 3-5 autonomous driving functionality. For example, a CNN executing on a DLA or a discrete GPU (e.g., GPU(s) 3720) may include text and word recognition, allowing reading and understanding of traffic signs, including signs for which a neural network has not been specifically trained. A DLA may further include a neural network that is able to identify, interpret, and provide semantic understanding of a sign, and to pass that semantic understanding to path planning modules running on a CPU Complex.

Multiple neural networks may be run simultaneously, as for Level 3, 4, or 5 driving. For example, a warning sign stating "Caution: flashing lights indicate icy conditions," along with an electric light, may be independently or collectively interpreted by several neural networks. Such warning sign itself may be identified as a traffic sign by a first deployed neural network (e.g., a neural network that has been trained), text "flashing lights indicate icy conditions" may be interpreted by a second deployed neural network, which informs a vehicle's path planning software (preferably executing on a CPU Complex) that when flashing lights may be detected, icy conditions exist. A flashing light may be identified by operating a third deployed neural network over multiple frames, informing a vehicle's path-planning software of a presence (or an absence) of flashing lights. All three neural networks may run simultaneously, such as, but not limited to, within a DLA and/or on GPU(s) 3708.

A CNN for facial recognition and vehicle owner identification may use data from camera sensors to identify presence of an authorized driver and/or owner of vehicle 3700. An always-on sensor processing engine may be used to unlock a vehicle when an owner approaches a driver door and turns on lights, and, in a security mode, to disable such vehicle when an owner leaves such vehicle. In this way, SoC(s) 3704 can provide for security against theft and/or carjacking.

A CNN for emergency vehicle detection and identification may use data from microphones 3796 to detect and identify emergency vehicle sirens. SoC(s) 3704 use a CNN for classifying environmental and urban sounds, as well as classifying visual data. A CNN running on a DLA is trained to identify a relative closing speed of an emergency vehicle (e.g., by using a Doppler effect). A CNN may also be trained to identify emergency vehicles specific to a local area in which a vehicle is operating, as identified by GNSS sensor(s) 3758. When operating in Europe, a CNN may seek to detect European sirens, and when in North America, a CNN may seek to identify only North American sirens. Once an emergency vehicle is detected, a control program may be used to execute an emergency vehicle safety routine, slowing a vehicle, pulling over to a side of a road, parking a vehicle, and/or idling a vehicle, with assistance of ultrasonic sensor(s) 3762, until emergency vehicles pass.

Vehicle 3700 may include CPU(s) 3718 (e.g., discrete CPU(s), or dCPU(s)), that may be coupled to SoC(s) 3704 via a high-speed interconnect (e.g., PCIe). CPU(s) 3718 may include an X86 processor, for example. CPU(s) 3718 may be used to perform any of a variety of functions, including arbitrating potentially inconsistent results between ADAS sensors and SoC(s) 3704, and/or monitoring status and health of controller(s) 3736 and/or an infotainment system on a chip ("infotainment SoC") 3730, for example. SoC(s) 3704 may include one or more interconnects, and an interconnect can include a peripheral component interconnect express (PCIe).

Vehicle 3700 may include GPU(s) 3720 (e.g., discrete GPU(s), or dGPU(s)), that may be coupled to SoC(s) 3704 via a high-speed interconnect (e.g., NVIDIA's NVLINK channel). GPU(s) 3720 may provide additional artificial intelligence functionality, such as, but not limited to, by executing redundant and/or different neural networks, and may be used to train and/or update neural networks based at least in part on input (e.g., sensor data) from sensors of a vehicle 3700.

Vehicle 3700 may further include network interface 3724 which may include wireless antenna(s) (e.g., one or more wireless antennas 3726 for different communication protocols, such as, but not limited to, a cellular antenna, a Bluetooth antenna, etc.). Network interface 3724 may be used to enable wireless connectivity to Internet cloud services (e.g., with server(s) and/or other network devices), with other vehicles, and/or with computing devices (e.g., client devices of passengers). To communicate with other vehicles, a direct link may be established between vehicle 3700 and another vehicle and/or an indirect link may be established (e.g., across networks and over the Internet). Direct links may be provided using a vehicle-to-vehicle communication link. A vehicle-to-vehicle communication link may provide vehicle 3700 information about vehicles in proximity to vehicle 3700 (e.g., vehicles in front of, on a side of, and/or behind vehicle 3700). Such aforementioned functionality may be part of a cooperative adaptive cruise control functionality of vehicle 3700.

Network interface 3724 may include an SoC that provides modulation and demodulation functionality and enables controller(s) 3736 to communicate over wireless networks. Network interface 3724 may include a radio frequency front-end for up-conversion from baseband to radio frequency, and down conversion from radio frequency to baseband. Frequency conversions may be performed in any technically feasible fashion. For example, frequency conversions could be performed through well-known processes, and/or using superheterodyne processes. Radio frequency front end functionality may be provided by a separate chip. Network interfaces may include wireless functionality for communicating over LTE, WCDMA, UMTS, GSM, CDMA2000, Bluetooth, Bluetooth LE, Wi-Fi, Z-Wave, ZigBee, LoRaWAN, and/or other wireless protocols.

Vehicle 3700 may further include data store(s) 3728 which may include off-chip (e.g., off SoC(s) 3704) storage. Data store(s) 3728 may include one or more storage elements including RAM, SRAM, dynamic random-access memory ("DRAM"), video random-access memory ("VRAM"), flash memory, hard disks, and/or other components and/or devices that may store at least one bit of data.

Vehicle 3700 may further include GNSS sensor(s) 3758 (e.g., GPS and/or assisted GPS sensors), to assist in mapping, perception, occupancy grid generation, and/or path planning functions. Any number of GNSS sensor(s) 3758 may be used, including, for example, a GPS using a USB connector with an Ethernet-to-Serial (e.g., RS-232) bridge.

Vehicle 3700 may further include RADAR sensor(s) 3760. RADAR sensor(s) 3760 may be used by vehicle 3700 for long-range vehicle detection, even in darkness and/or severe weather conditions. RADAR functional safety levels may be ASIL B. RADAR sensor(s) 3760 may use a CAN bus and/or bus 3702 (e.g., to transmit data generated by RADAR sensor(s) 3760) for control and to access object tracking data, with access to Ethernet channels to access raw data in some examples. A wide variety of RADAR sensor types may be used. For example, RADAR sensor(s) 3760 may be suitable for front, rear, and side RADAR use. One or more sensor of RADAR sensors(s) 3760 is a Pulse Doppler RADAR sensor.

RADAR sensor(s) 3760 may include different configurations, such as, but not limited to, long-range with narrow field of view, short-range with wide field of view, short-range side coverage, etc. Long-range RADAR may be used for adaptive cruise control functionality. Long-range RADAR systems may provide a broad field of view realized by two or more independent scans, such as, but not limited to, within a 250 m (meter) range. RADAR sensor(s) 3760 may help in distinguishing between static and moving objects, and may be used by ADAS system 3738 for emergency brake assist and forward collision warning. Sensors 3760(s) included in a long-range RADAR system may include monostatic multimodal RADAR with multiple (e.g., six or more) fixed RADAR antennae and a high-speed CAN and FlexRay interface. With six antennae, a central four antennae may create a focused beam pattern, designed to record vehicle's 3700 surroundings at higher speeds with minimal interference from traffic in adjacent lanes. Another two antennae may expand field of view, making it possible to quickly detect vehicles entering or leaving a lane of vehicle 3700.

Mid-range RADAR systems may include, as an example, a range of up to 160 m (front) or 80 m (rear), and a field of view of up to 42 degrees (front) or 150 degrees (rear). Short-range RADAR systems may include any number of RADAR sensor(s) 3760 designed to be installed at both ends of a rear bumper. When installed at both ends of a rear bumper, a RADAR sensor system may create two beams that constantly monitor blind spots in a rear direction and next to a vehicle. Short-range RADAR systems may be used in ADAS system 3738 for blind spot detection and/or lane change assist.

Vehicle 3700 may further include ultrasonic sensor(s) 3762. Ultrasonic sensor(s) 3762, which may be positioned at a front, a back, and/or side location of vehicle 3700, may be used for parking assist and/or to create and update an occupancy grid. A wide variety of ultrasonic sensor(s) 3762 may be used, and different ultrasonic sensor(s) 3762 may be used for different ranges of detection (e.g., 2.5 m, 4 m). Ultrasonic sensor(s) 3762 may operate at functional safety levels of ASIL B.

Vehicle 3700 may include LIDAR sensor(s) 3764. LIDAR sensor(s) 3764 may be used for object and pedestrian detection, emergency braking, collision avoidance, and/or other functions. LIDAR sensor(s) 3764 may operate at functional safety level ASIL B. Vehicle 3700 may include multiple LIDAR sensors 3764 (e.g., two, four, six, etc.) that may use an Ethernet channel (e.g., to provide data to a Gigabit Ethernet switch).

LIDAR sensor(s) 3764 may be capable of providing a list of objects and their distances for a 360-degree field of view. Commercially available LIDAR sensor(s) 3764 may have an advertised range of approximately 100 m, with an accuracy of 2 cm to 3 cm, and with support for a 100 Mbps Ethernet connection, for example. One or more non-protruding LIDAR sensors may be used. LIDAR sensor(s) 3764 may include a small device that may be embedded into a front, a rear, a side, and/or a corner location of vehicle 3700. LIDAR sensor(s) 3764, in such an embodiment, may provide up to a 120-degree horizontal and 35-degree vertical field-of-view, with a 200 m range even for low-reflectivity objects. Front-mounted LIDAR sensor(s) 3764 may be configured for a horizontal field of view between 45 degrees and 135 degrees.

LIDAR technologies, such as, but not limited to, 3D flash LIDAR, may also be used. 3D flash LIDAR uses a flash of a laser as a transmission source, to illuminate surroundings of vehicle 3700 up to approximately 200 m. A flash LIDAR unit may include a receptor, which records laser pulse transit time and reflected light on each pixel, which in turn corresponds to a range from vehicle 3700 to objects. Flash LIDAR may allow for highly accurate and distortion-free images of surroundings to be generated with every laser flash. Four flash LIDAR sensors may be deployed, one at each side of vehicle 3700. 3D flash LIDAR systems include a solid-state 3D staring array LIDAR camera with no moving parts other than a fan (e.g., a non-scanning LIDAR device). Flash LIDAR device may use a 5 nanosecond class I (eye-safe) laser pulse per frame and may capture reflected laser light as a 3D range point cloud and co-registered intensity data.

Vehicle 3700 may further include IMU sensor(s) 3766. IMU sensor(s) 3766 may be located at a center of a rear axle of vehicle 3700. IMU sensor(s) 3766 may include, for example, accelerometer(s), magnetometer(s), gyroscope(s), a magnetic compass, magnetic compasses, and/or other sensor types. In six-axis applications, but not limited to, IMU sensor(s) 3766 may include accelerometers and gyroscopes. In nine-axis applications, but not limited to, IMU sensor(s) 3766 may include accelerometers, gyroscopes, and magnetometers.

IMU sensor(s) 3766 may be implemented as a miniature, high performance GPS-Aided Inertial Navigation System ("GPS/INS") that combines micro-electro-mechanical systems ("MEMS") inertial sensors, a high-sensitivity GPS receiver, and advanced Kalman filtering algorithms to provide estimates of position, velocity, and attitude. IMU sensor(s) 3766 may enable vehicle 3700 to estimate its heading without requiring input from a magnetic sensor by directly observing and correlating changes in velocity from a GPS to IMU sensor(s) 3766. IMU sensor(s) 3766 and GNSS sensor(s) 3758 may be combined in a single integrated unit.

Vehicle 3700 may include microphone(s) 3796 placed in and/or around vehicle 3700. Microphone(s) 3796 may be used for emergency vehicle detection and identification, among other things.

Vehicle 3700 may further include any number of camera types, including stereo camera(s) 3768, wide-view camera(s) 3770, infrared camera(s) 3772, surround camera(s) 3774, long-range camera(s) 3798, mid-range camera(s) 3776, and/or other camera types. Cameras may be used to capture image data around an entire periphery of vehicle 3700. Types of cameras used may depend on vehicle 3700. Any combination of camera types may be used to provide necessary coverage around vehicle 3700. A number of cameras deployed may differ depending on embodiment. For example, vehicle 3700 could include six cameras, seven cameras, ten cameras, twelve cameras, or another number of cameras. Cameras may support, as an example, Gigabit Multimedia Serial Link ("GMSL") and/or Gigabit Ethernet communications. Each camera might be as described with more detail previously herein.

Vehicle 3700 may further include vibration sensor(s) 3742. Vibration sensor(s) 3742 may measure vibrations of components of vehicle 3700, such as, but not limited to, axle(s). For example, changes in vibrations may indicate a change in road surfaces. When two or more vibration sensors 3742 may be used, differences between vibrations may be used to determine friction or slippage of road surface (e.g., when a difference in vibration is between a power-driven axle and a freely rotating axle).

Vehicle 3700 may include ADAS system 3738. ADAS system 3738 may include an SoC, in some examples. ADAS system 3738 may include any number and combination of an autonomous/adaptive/automatic cruise control ("ACC") system, a cooperative adaptive cruise control ("CACC") system, a forward crash warning ("FCW") system, an automatic emergency braking ("AEB") system, a lane departure warning ("LDW") system, a lane keep assist ("LKA") system, a blind spot warning ("BSW") system, a rear cross-traffic warning ("RCTW") system, a collision warning ("CW") system, a lane centering ("LC") system, and/or other systems, features, and/or functionality.

ACC system may use RADAR sensor(s) 3760, LIDAR sensor(s) 3764, and/or any number of camera(s). ACC system may include a longitudinal ACC system and/or a lateral ACC system. A longitudinal ACC system monitors and controls distance to another vehicle immediately ahead of vehicle 3700 and automatically adjusts speed of vehicle 3700 to maintain a safe distance from vehicles ahead. A lateral ACC system performs distance keeping, and advises vehicle 3700 to change lanes when necessary. A lateral ACC is related to other ADAS applications, such as, but not limited to, LC and CW.

A CACC system uses information from other vehicles that may be received via network interface 3724 and/or wireless antenna(s) 3726 from other vehicles via a wireless link, or indirectly, over a network connection (e.g., over the Internet). Direct links may be provided by a vehicle-to-vehicle ("V2V") communication link, while indirect links may be provided by an infrastructure-to-vehicle ("I2V") communication link. In general, V2V communication provides information about immediately preceding vehicles (e.g., vehicles immediately ahead of and in same lane as vehicle 3700), while I2V communication provides information about traffic further ahead. A CACC system may include either or both I2V and V2V information sources. Given information of vehicles ahead of vehicle 3700, a CACC system may be more reliable and it has potential to improve traffic flow smoothness and reduce congestion on road.

An FCW system is designed to alert a driver to a hazard, so that such driver may take corrective action. An FCW system uses a front-facing camera and/or RADAR sensor(s) 3760, coupled to a dedicated processor, DSP, FPGA, and/or ASIC, that is electrically coupled to provide driver feedback, such as, but not limited to, a display, speaker, and/or vibrating component. An FCW system may provide a warning, such as, but not limited to, in form of a sound, visual warning, vibration and/or a quick brake pulse.

An AEB system detects an impending forward collision with another vehicle or other object, and may automatically apply brakes if a driver does not take corrective action within a specified time or distance parameter. AEB system may use front-facing camera(s) and/or RADAR sensor(s) 3760, coupled to a dedicated processor, DSP, FPGA, and/or ASIC. When an AEB system detects a hazard, it will typically first alert a driver to take corrective action to avoid collision and, if that driver does not take corrective action, that AEB system may automatically apply brakes in an effort to prevent, or at least mitigate, an impact of a predicted collision. An AEB system may include techniques such as, but not limited to, dynamic brake support and/or crash imminent braking.

An LDW system provides visual, audible, and/or tactile warnings, such as, but not limited to, steering wheel or seat vibrations, to alert driver when vehicle 3700 crosses lane markings. An LDW system does not activate when a driver indicates an intentional lane departure, such as, but not limited to, by activating a turn signal. An LDW system may use frontside facing cameras, coupled to a dedicated processor, DSP, FPGA, and/or ASIC, that is electrically coupled to provide driver feedback, such as, but not limited to, a display, speaker, and/or vibrating component. An LKA system is a variation of an LDW system. An LKA system provides steering input or braking to correct vehicle 3700 if vehicle 3700 starts to exit its lane.

A BSW system detects and warns a driver of vehicles in an automobile's blind spot. A BSW system may provide a visual, audible, and/or tactile alert to indicate that merging or changing lanes is unsafe. A BSW system may provide an additional warning when a driver uses a turn signal. A BSW system may use rear-side facing camera(s) and/or RADAR sensor(s) 3760, coupled to a dedicated processor, DSP, FPGA, and/or ASIC, that is electrically coupled to driver feedback, such as, but not limited to, a display, speaker, and/or vibrating component.

An RCTW system may provide visual, audible, and/or tactile notification when an object is detected outside a rear-camera range when vehicle 3700 is backing up. An RCTW system includes an AEB system to ensure that vehicle brakes may be applied to avoid a crash. An RCTW system may use one or more rear-facing RADAR sensor(s) 3760, coupled to a dedicated processor, DSP, FPGA, and/or ASIC, that is electrically coupled to provide driver feedback, such as, but not limited to, a display, speaker, and/or vibrating component.

Conventional ADAS systems may be prone to false positive results which may be annoying and distracting to a driver, but typically may not be catastrophic, because conventional ADAS systems alert a driver and allow that driver to decide whether a safety condition truly exists and act accordingly. Vehicle 3700 itself decides, in case of conflicting results, whether to heed result from a primary computer or a secondary computer (e.g., a first controller or a second controller of controllers 3736). For example, ADAS system 3738 may be a backup and/or secondary computer for providing perception information to a backup computer rationality module. A backup computer rationality monitor may run redundant diverse software on hardware components to detect faults in perception and dynamic driving tasks. Outputs from ADAS system 3738 may be provided to a supervisory MCU. If outputs from a primary computer and outputs from a secondary computer conflict, a supervisory MCU can determine how to reconcile conflict to ensure safe operation.

A primary computer may be configured to provide a supervisory MCU with a confidence score, indicating that primary computer's confidence in a chosen result. If that confidence score exceeds a threshold, that supervisory MCU may follow that primary computer's direction, regardless of whether that secondary computer provides a conflicting or inconsistent result. Where a confidence score does not meet a threshold, and where primary and secondary computers indicate different results (e.g., a conflict), a supervisory MCU may arbitrate between computers to determine an appropriate outcome.

A supervisory MCU may be configured to run a neural network(s) that is trained and configured to determine, based at least in part on outputs from a primary computer and outputs from a secondary computer, conditions under which that secondary computer provides false alarms. Neural network(s) in a supervisory MCU may learn when a secondary computer's output may be trusted, and when it cannot. For example, when that secondary computer is a RADAR-based FCW system, a neural network(s) in that supervisory MCU may learn when an FCW system is identifying metallic objects that may not be, in fact, hazards, such as, but not limited to, a drainage grate or manhole cover that triggers an alarm. When a secondary computer is a camera-based LDW system, a neural network in a supervisory MCU may learn to override LDW when bicyclists or pedestrians may be present and a lane departure is, in fact, a safest maneuver. A supervisory MCU may include at least one of a DLA or a GPU suitable for running neural network(s) with associated memory. A supervisory MCU may comprise and/or be included as a component of SoC(s) 3704.

ADAS system 3738 may include a secondary computer that performs ADAS functionality using traditional rules of computer vision, and that secondary computer may use classic computer vision rules (if-then), and presence of a neural network(s) in a supervisory MCU may improve reliability, safety and performance. For example, diverse implementation and intentional non-identity makes an overall system more fault-tolerant, especially to faults caused by software (or software-hardware interface) functionality. For example, if there is a software bug or error in software running on a primary computer, and non-identical software code running on a secondary computer provides a consistent overall result, then a supervisory MCU may have greater confidence that an overall result is correct, and a bug in software or hardware on that primary computer is not causing a material error.

An output of ADAS system 3738 may be fed into a primary computer's perception block and/or a primary computer's dynamic driving task block. For example, if ADAS system 3738 indicates a forward crash warning due to an object immediately ahead, a perception block may use this information when identifying objects. A secondary computer may have its own neural network that is trained and thus reduces a risk of false positives, as described herein.

Vehicle 3700 may further include infotainment SoC 3730 (e.g., an in-vehicle infotainment system (IVI)). Although illustrated and described as an SoC, infotainment system SoC 3730, may not be an SoC, and may include two or more discrete components. Infotainment SoC 3730 may include a combination of hardware and software that may be used to provide audio (e.g., music, a personal digital assistant, navigational instructions, news, radio, etc.), video (e.g., TV, movies, streaming, etc.), phone (e.g., hands-free calling), network connectivity (e.g., LTE, WiFi, etc.), and/or information services (e.g., navigation systems, rear-parking assistance, a radio data system, vehicle related information such as, but not limited to, fuel level, total distance covered, brake fuel level, oil level, door open/close, air filter information, etc.) to vehicle 3700. For example, infotainment SoC 3730 could include radios, disk players, navigation systems, video players, USB and Bluetooth connectivity, carputers, in-car entertainment, WiFi, steering wheel audio controls, hands free voice control, a heads-up display ("HUD"), HMI display 3734, a telematics device, a control panel (e.g., for controlling and/or interacting with various components, features, and/or systems), and/or other components. Infotainment SoC 3730 may further be used to provide information (e.g., visual and/or audible) to user(s) of vehicle 3700, such as, but not limited to, information from ADAS system 3738, autonomous driving information such as, but not limited to, planned vehicle maneuvers, trajectories, surrounding environment information (e.g., intersection information, vehicle information, road information, etc.), and/or other information.

Infotainment SoC 3730 may include any amount and type of GPU functionality. Infotainment SoC 3730 may communicate over bus 3702 with other devices, systems, and/or components of vehicle 3700. Infotainment SoC 3730 may be coupled to a supervisory MCU such that a GPU of an infotainment system may perform some self-driving functions in event that primary controller(s) 3736 (e.g., primary and/or backup computers of vehicle 3700) fail. Infotainment SoC 3730 may put vehicle 3700 into a chauffeur to safe stop mode, as described herein.

Vehicle 3700 may further include instrument cluster 3732 (e.g., a digital dash, an electronic instrument cluster, a digital instrument panel, etc.). Instrument cluster 3732 may include a controller and/or supercomputer (e.g., a discrete controller or supercomputer). Instrument cluster 3732 may include any number and combination of a set of instrumentation such as, but not limited to, a speedometer, fuel level, oil pressure, tachometer, odometer, turn indicators, gearshift position indicator, seat belt warning light(s), parking-brake warning light(s), engine-malfunction light(s), supplemental restraint system (e.g., airbag) information, lighting controls, safety system controls, navigation information, etc. Information may be displayed and/or shared among infotainment SoC 3730 and instrument cluster 3732. Instrument cluster 3732 may be included as part of infotainment SoC 3730, or vice versa.

System may include server(s), network(s), and any number and type of vehicles, including vehicle 3700. Server(s) may include a plurality of GPUs, PCIe switches, and/or CPUs. GPUs, CPUs, and PCIe switches may be interconnected with high-speed interconnects such as, but not limited to, for example, NVLink interfaces developed by NVIDIA and/or PCIe connections. GPUs can be connected via any interconnects, such as NVLink and/or NVSwitch SoC, and GPUs and PCIe switches can be, for example, connected via PCIe interconnects. Each of server(s) may include any number of GPUs, CPUs, and/or PCIe switches, in any combination. For example, server(s) could each include eight, sixteen, thirty-two, and/or more GPUs.

Server(s) may receive, over network(s) and from vehicles, image data representative of images showing unexpected or changed road conditions, such as, but not limited to, recently commenced road-work. Server(s) may transmit, over network(s) and to vehicles, neural networks, updated or otherwise, and/or map information, including information regarding traffic and road conditions. Updates to map information may include updates for HD map, such as, but not limited to, information regarding construction sites, potholes, detours, flooding, and/or other obstructions. Neural networks, and/or map information may have resulted from new training and/or experiences represented in data received from any number of vehicles in an environment, and/or based at least in part on training performed at a data center (e.g., using server(s) and/or other servers).

Server(s) may be used to train machine learning models (e.g., neural networks) based at least in part on training data. Training data may be generated by vehicles, and/or may be generated in a simulation (e.g., using a game engine). Any amount of training data can be tagged (e.g., where associated neural network benefits from supervised learning) and/or undergoes other pre-processing. Any amount of training data may not be tagged and/or pre-processed (e.g., where associated neural network does not require supervised learning). Once machine learning models are trained, machine learning models may be used by vehicles (e.g., transmitted to vehicles over network(s)), and/or machine learning models may be used by server(s) to remotely monitor vehicles.

Server(s) may receive data from vehicles and apply data to up-to-date real-time neural networks for real-time intelligent inferencing. Server(s) may include deep-learning supercomputers and/or dedicated AI computers powered by GPU(s), such as, but not limited to, a DGX and DGX Station machines developed by NVIDIA. Alternatively, server(s) may include deep learning infrastructure that uses CPU-powered data centers.

Deep-learning infrastructure of server(s) may be capable of fast, real-time inferencing, and may use that capability to evaluate and verify health of processors, software, and/or associated hardware in vehicle 3700. For example, deep-learning infrastructure may receive periodic updates from vehicle 3700, such as, but not limited to, a sequence of images and/or objects that vehicle 3700 has located in that sequence of images (e.g., via computer vision and/or other machine learning object classification techniques). Deep-learning infrastructure may run its own neural network to identify objects and compare them with objects identified by vehicle 3700 and, if results do not match and deep-learning infrastructure concludes that AI in vehicle 3700 is malfunctioning, then server(s) may transmit a signal to vehicle instructing a fail-safe computer of vehicle 3700 to assume control, notify passengers, and complete a safe parking maneuver.

Server(s) may include GPU(s) and one or more programmable inference accelerators (e.g., NVIDIA's TensorRT 3 devices). A combination of GPU-powered servers and inference acceleration may make real-time responsiveness possible. Where performance is less critical, servers powered by CPUs, FPGAs, and other processors may be used for inferencing.

In at least one embodiment, autonomous vehicle 3700 described elsewhere herein, can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits in autonomous vehicle 3700 can be configured by software, e.g., programming platforms described herein, to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

### CLOUD AND WEB-BASED SERVICES

The following description sets forth, without limitation, cloud-based and/or web-based services and/or systems that can be used to perform an instruction to perform one or more matrix multiply-accumulate (MMA) operations to multiply a first input matrix by a scaled matrix generated by multiplying one or more elements of a second input matrix by one or more corresponding scale factors or otherwise perform some or all of processes, operations and/or and techniques described elsewhere herein. cloud-based and/or web-based services and/or systems can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

Cloud computing can include a style of computing in which dynamically scalable and often virtualized resources are provided as a service over the Internet. Users need not have knowledge of, expertise in, or control over technology infrastructure, which can be referred to as "in the cloud," that supports them. Cloud computing may incorporate infrastructure as a service, platform as a service, software as a service, and other variations that have a common theme of reliance on the Internet for satisfying computing needs of users. A typical cloud deployment, such as in a private cloud (e.g., enterprise network), or a data center (DC) in a public cloud (e.g., Internet) can include thousands of servers (or alternatively, VMs), hundreds of Ethernet, Fiber Channel or Fiber Channel over Ethernet (FCoE) ports, switching and storage infrastructure, etc. A cloud can also include network services infrastructure like IPsec VPN hubs, firewalls, load balancers, wide area network (WAN) optimizers etc. Remote subscribers can access cloud applications and services securely by connecting via a VPN tunnel, such as an IPsec VPN tunnel.

Cloud computing may include a model for enabling convenient, on-demand network access to a shared pool of configurable computing resources (e.g., networks, servers, storage, applications, and services) that can be rapidly provisioned and released with minimal management effort or service provider interaction.

Cloud computing may be characterized by on-demand self-service, in which a consumer can unilaterally provision computing capabilities, such as server time and network storage, as needed automatically without requiring human inter-action with each service's provider. Cloud computing may be characterized by broad network access, in which capabilities are available over a network and accessed through standard mechanisms that promote use by heterogeneous thin or thick client platforms (e.g., mobile phones, laptops, and PDAs). Cloud computing may be characterized by resource pooling, in which a provider's computing resources are pooled to serve multiple consumers using a multi-tenant model, with different physical and virtual resources dynamically as-signed and reassigned according to consumer demand. In at least one embodiment, there is a sense of location independence in that a customer generally has no control or knowledge over an exact location of provided resources, but may be able to specify location at a higher level of abstraction (e.g., country, state, or datacenter). Examples of resources include storage, processing, memory, network bandwidth, and virtual machines. Cloud computing may be characterized by rapid elasticity, in which capabilities can be rapidly and elastically provisioned, in some cases automatically, to quickly scale out and rapidly released to quickly scale in. In at least one embodiment, to a consumer, capabilities available for provisioning often appear to be unlimited and can be purchased in any quantity at any time. Cloud computing may be characterized by measured service, in which cloud systems automatically control and optimize resource use by leveraging a metering capability at some level of abstraction appropriate to a type of service (e.g., storage, processing, bandwidth, and active user accounts). Resource usage can be monitored, controlled, and reported providing transparency for both a provider and consumer of a utilized service.

Cloud computing may be associated with various services. Cloud Software as a Service (SaaS) may refer to as service in which a capability provided to a consumer is to use a provider's applications running on a cloud infrastructure. Applications can be accessible from various client devices through a thin client interface such as a web browser (e.g., web-based email). In at least one embodiment, consumer does not manage or control underlying cloud infrastructure including network, servers, operating systems, storage, or even individual application capabilities, with a possible exception of limited user-specific application configuration settings.

Cloud Platform as a Service (PaaS) may refer to a service in which a capability provided to consumer is to deploy onto cloud infrastructure consumer-created or acquired applications created using programming languages and tools supported by a provider. In at least one embodiment, a consumer does not manage or control underlying cloud infrastructure including networks, servers, operating systems, or storage, but has control over deployed applications and possibly application hosting environment configurations.

Cloud Infrastructure as a Service (IaaS) may refer to a service in which a capability provided to a consumer is to provision processing, storage, networks, and other fundamental computing resources where a consumer is able to deploy and run arbitrary software, which can include operating systems and applications. In at least one embodiment, consumer does not manage or control underlying cloud infrastructure, but has control over operating systems, storage, deployed applications, and possibly limited control of select networking components (e.g., host firewalls).

Cloud computing may be deployed in various ways. A private cloud may refer to a cloud infrastructure that is operated solely for an organization. A private cloud may be managed by an organization or a third party and may exist on-premises or off-premises. A community cloud may refer to a cloud infrastructure that is shared by several organizations and supports a specific community that has shared concerns (e.g., mission, security requirements, policy, and compliance considerations). A community cloud may be managed by organizations or a third party and may exist on-premises or off-premises. A public cloud may refer to a cloud infrastructure that is made available to a general public or a large industry group and is owned by an organization providing cloud services. A hybrid cloud may refer to a cloud infrastructure that is a composition of two or more clouds (private, community, or public) that remain unique entities, but are bound together by standardized or proprietary technology that enables data and application portability (e.g., cloud bursting for load-balancing between clouds). A cloud computing environment is service oriented with a focus on statelessness, low coupling, modularity, and semantic interoperability.

### LOGIC AND NEURAL NETWORK TRAINING AND DEPLOYMENT

The following figures set forth, without limitation, examples of logic and artificial intelligence-based systems that can be used to implement functionality and/or operations described herein.

FIGs. 38A and 38B illustrate logic 3815 which, as described elsewhere herein, can be used in one or more devices or systems (e.g., such as any of the processors (e.g., any processor in FIGs. 21-33), data centers, cloud or web-based services described herein) to perform operations such as, but not limited to, those discussed herein, in accordance with at least one embodiment. Logic can refer to any combination of software logic, hardware logic, and/or firmware logic to provide functionality and/or operations described herein, wherein logic may be, collectively or individually, embodied as circuitry that forms part of a larger system, for example, an integrated circuit (IC), an application-specific integrated circuit (ASIC), a field programmable array (FPGA), system-on-chip (SoC), or one or processors (e.g., CPU, GPU). Logic 3815 illustrated in FIGs. 38A and 38B may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. Logic 3815 illustrated in FIG. 38A and 38B may be used in conjunction with central processing unit ("CPU") hardware, graphics processing unit ("GPU") hardware or other hardware, such as, but not limited to, field programmable gate arrays ("FPGAs").

Logic 3815 can be used to perform inferencing and/or training operations associated with one or more embodiments. Logic 3815 may be inference and/or training logic. In at least one embodiment, FIG. 38A illustrates inference and/or training logic 3815 used to perform inferencing and/or training operations associated with one or more embodiments. Inference and/or training logic 3815 may include code and/or data storage 3801 to store forward and/or output weight and/or input/output data, and/or other parameters to configure neurons or layers of a neural network trained and/or used for inferencing in aspects of one or more embodiments. Training logic 3815 may include, or be coupled to code and/or data storage 3801 to store graph code or other software to control timing and/or order, in which weight and/or other parameter information is to be loaded to configure, logic, including integer and/or floating point units (collectively, arithmetic logic units (ALUs). Code, such as, but not limited to, graph code, can load weight or other parameter information into processor ALUs based on an architecture of a neural network to which such code corresponds. Code and/or data storage 3801 can store weight parameters and/or input/output data of each layer of a neural network trained or used in conjunction with one or more embodiments during forward propagation of input/output data and/or weight parameters during training and/or inferencing using aspects of one or more embodiments. Any portion of code and/or data storage 3801 may be included with other on-chip or off-chip data storage, including a processor's L1, L2, or L3 cache or system memory.

Any portion of code and/or data storage 3801 may be internal or external to one or more processors or other hardware logic devices or circuits. Code and/or code and/or data storage 3801 may be cache memory, dynamic randomly addressable memory ("DRAM"), static randomly addressable memory ("SRAM"), non-volatile memory (e.g., flash memory), or other storage. A choice of whether code and/or code and/or data storage 3801 is internal or external to a processor, for example, or comprising DRAM, SRAM, flash or some other storage type may depend on available storage on-chip versus off-chip, latency requirements of training and/or inferencing functions being performed, batch size of data used in inferencing and/or training of a neural network, or some combination of these factors.

Inference and/or training logic 3815 may include a code and/or data storage 3805 to store backward and/or output weight and/or input/output data corresponding to neurons or layers of a neural network trained and/or used for inferencing in aspects of one or more embodiments. Code and/or data storage 3805 can store weight parameters and/or input/output data of each layer of a neural network trained or used in conjunction with one or more embodiments during backward propagation of input/output data and/or weight parameters during training and/or inferencing using aspects of one or more embodiments. Training logic 3815 may include, or be coupled to code and/or data storage 3805 to store graph code or other software to control timing and/or order, in which weight and/or other parameter information is to be loaded to configure, logic, including integer and/or floating point units (collectively, arithmetic logic units (ALUs).

Code, such as, but not limited to, graph code, may cause loading of weight or other parameter information into processor ALUs based on an architecture of a neural network to which such code corresponds. Any portion of code and/or data storage 3805 may be included with other on-chip or off-chip data storage, including a processor's L1, L2, or L3 cache or system memory. Any portion of code and/or data storage 3805 may be internal or external to one or more processors or other hardware logic devices or circuits. Code and/or data storage 3805 may be cache memory, DRAM, SRAM, non-volatile memory (e.g., flash memory), or other storage. A choice of whether code and/or data storage 3805 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

Code and/or data storage 3801 and code and/or data storage 3805 may be separate storage structures. Code and/or data storage 3801 and code and/or data storage 3805 may be a combined storage structure. Code and/or data storage 3801 and code and/or data storage 3805 may be partially combined and partially separate. Any portion of code and/or data storage 3801 and code and/or data storage 3805 may be included with other on-chip or off-chip data storage, including a processor's L1, L2, or L3 cache or system memory.

Inference and/or training logic 3815 may include one or more arithmetic logic unit(s) ("ALU(s)") 3810, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 3820 that may be functions of input/output and/or weight parameter data stored in code and/or data storage 3801 and/or code and/or data storage 3805. Activations stored in activation storage 3820 may be generated according to linear algebraic and or matrix-based mathematics performed by ALU(s) 3810 in response to performing instructions or other code, wherein weight values stored in code and/or data storage 3805 and/or data storage 3801 may be used as operands along with other values, such as, but not limited to, bias values, gradient information, momentum values, or other parameters or hyperparameters, any or all of which may be stored in code and/or data storage 3805 or code and/or data storage 3801 or another storage on or off-chip.

ALU(s) 3810 can be included within one or more processors or other hardware logic devices or circuits, whereas in another embodiment, ALU(s) 3810 may be external to a processor or other hardware logic device or circuit that uses them (e.g., a co-processor). ALUs 3810 may be included within a processor's execution units or otherwise within a bank of ALUs accessible by a processor's execution units either within same processor or distributed between different processors of different types (e.g., central processing units, graphics processing units, fixed function units, etc.). Code and/or data storage 3801, code and/or data storage 3805, and activation storage 3820 may share a processor or other hardware logic device or circuit, whereas in another embodiment, they may be in different processors or other hardware logic devices or circuits, or some combination of same and different processors or other hardware logic devices or circuits. Any portion of activation storage 3820 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

Activation storage 3820 may be cache memory, DRAM, SRAM, non-volatile memory (e.g., flash memory), or other storage. Activation storage 3820 may be completely or partially within or external to one or more processors or other logical circuits. A choice of whether activation storage 3820 is internal or external to a processor, for example, or comprising DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, inference and/or training logic 3815 illustrated in FIG. 38A may be used in conjunction with an application-specific integrated circuit ("ASIC"), such as, but not limited to, a TensorFlow^{®} Processing Unit from Google, an inference processing unit (IPU) from Graphcore^{™}, or a Nervana^{®} (e.g., "Lake Crest") processor from Intel Corp. In at least one embodiment, inference and/or training logic 3815 illustrated in FIG. 38A may be used in conjunction with central processing unit ("CPU") hardware, graphics processing unit ("GPU") hardware or other hardware, such as, but not limited to, field programmable gate arrays ("FPGAs").

FIG. 38B illustrates inference and/or training logic 3815, in accordance with at least one embodiment. Inference and/or training logic 3815 may include hardware logic in which computational resources may be dedicated or otherwise exclusively used in conjunction with weight values or other information corresponding to one or more layers of neurons within a neural network. Inference and/or training logic 3815 illustrated in FIG. 38B may be used in conjunction with an application-specific integrated circuit (ASIC), such as, but not limited to, TensorFlow^{®} Processing Unit from Google, an inference processing unit (IPU) from Graphcore^{™}, or a Nervana^{®} (e.g., "Lake Crest") processor from Intel Corp. Inference and/or training logic 3815 illustrated in FIG. 38B may be used in conjunction with central processing unit (CPU) hardware, graphics processing unit (GPU) hardware or other hardware, such as, but not limited to, field programmable gate arrays (FPGAs). Inference and/or training logic 3815 can include code and/or data storage 3801 and code and/or data storage 3805, which may be used to store code (e.g., graph code), weight values and/or other information, including bias values, gradient information, momentum values, and/or other parameter or hyperparameter information. In FIG. 38B, for example, each of code and/or data storage 3801 and code and/or data storage 3805 is associated with a dedicated computational resource, such as, but not limited to, computational hardware 3802 and computational hardware 3806, respectively. Each of computational hardware 3802 and computational hardware 3806 can include one or more ALUs that perform mathematical functions, such as, but not limited to, linear algebraic functions, only on information stored in code and/or data storage 3801 and code and/or data storage 3805, respectively, result of which is stored in activation storage 3820.

Each of code and/or data storage 3801 and 3805 and corresponding computational hardware 3802 and 3806, respectively, correspond to different layers of a neural network, such that resulting activation from one storage/computational pair 3801/3802 of code and/or data storage 3801 and computational hardware 3802 is provided as an input to a next storage/computational pair 3805/3806 of code and/or data storage 3805 and computational hardware 3806, in order to mirror a conceptual organization of a neural network. Each of storage/computational pairs 3801/3802 and 3805/3806 may correspond to more than one neural network layer. Additional storage/computation pairs (not shown) subsequent to or in parallel with storage/computation pairs 3801/3802 and 3805/3806 may be included in inference and/or training logic 3815.

In at least one embodiment, logic 3815 described elsewhere herein, can include one or more circuits to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more circuits in logic 3815 can be configured by software described herein, to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

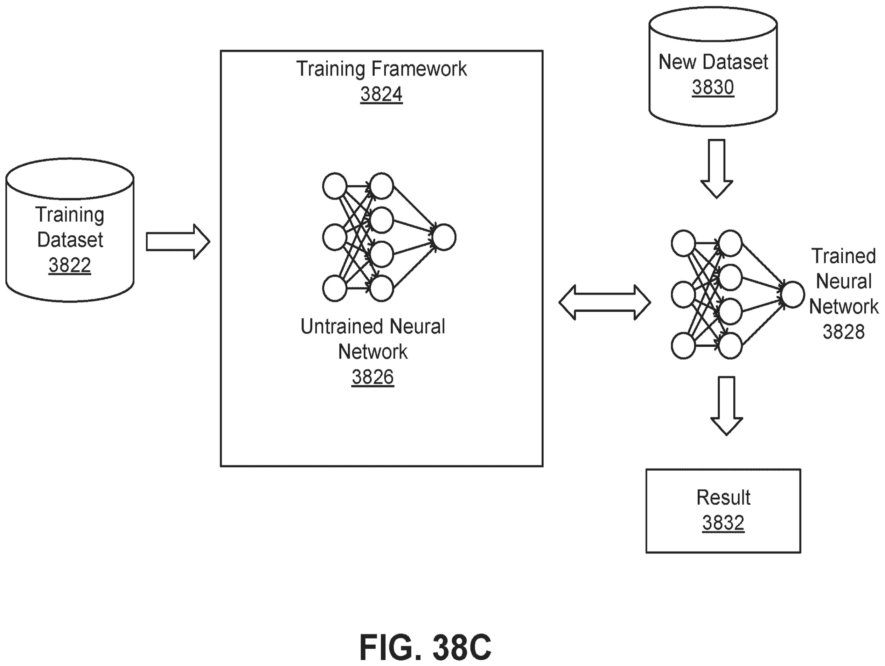

FIG. 38C illustrates training and deployment of a deep neural network, in accordance with at least one embodiment. An untrained neural network 3826 can be trained using a training dataset 3822. Training framework 3824 can be a PyTorch framework, and/or a training framework 3804 can include a TensorFlow, Boost, Caffe, Microsoft Cognitive Toolkit/CNTK, MXNet, Chainer, Keras, Deeplearning4j, or other training framework. Training framework 3824 can train an untrained neural network 3826 and enables it to be trained using processing resources described herein to generate a trained neural network 3828. Weights may be chosen randomly or by pre-training using a deep belief network. Training may be performed in either a supervised, partially supervised, or unsupervised manner.

Untrained neural network 3826 can be trained using supervised learning, wherein training dataset 3822 includes an input paired with a desired output for an input, or where training dataset 3822 includes input having a known output and an output of neural network 3826 is manually graded. Untrained neural network 3826 can be trained in a supervised manner and processes inputs from training dataset 3822 and compares resulting outputs against a set of expected or desired outputs. Errors can then be propagated back through untrained neural network 3826. Training framework 3824 can adjust weights that control untrained neural network 3826. Training framework 3824 can include tools to monitor how well untrained neural network 3826 is converging towards a model, such as, but not limited to, trained neural network 3828, suitable to generating correct answers, such as, but not limited to, in result 3832, based on input data such as, but not limited to, a new dataset 3830. Training framework 3824 can train untrained neural network 3826 repeatedly while adjust weights to refine an output of untrained neural network 3826 using a loss function and adjustment algorithm, such as, but not limited to, stochastic gradient descent. Training framework 3824 can train untrained neural network 3826 until untrained neural network 3826 achieves a desired accuracy. Trained neural network 3828 can then be deployed to implement any number of machine learning operations.

Untrained neural network 3826 can be trained using unsupervised learning, wherein untrained neural network 3826 attempts to train itself using unlabeled data. Unsupervised learning training dataset 3822 can include input data without any associated output data or "ground truth" data. Untrained neural network 3826 can learn groupings within training dataset 3822 and can determine how individual inputs may be related to untrained dataset 3822. Unsupervised training can be used to generate a self-organizing map in trained neural network 3828 capable of performing operations useful in reducing dimensionality of new dataset 3830. Unsupervised training can also be used to perform anomaly detection, which allows identification of data points in new dataset 3830 that deviate from normal patterns of new dataset 3830.

Semi-supervised learning may be used, which is a technique in which in training dataset 3822 includes a mix of labeled and unlabeled data. Training framework 3824 may be used to perform incremental learning, such as, but not limited to, through transferred learning techniques. Incremental learning can enable trained neural network 3828 to adapt to new dataset 3830 without forgetting knowledge instilled within trained neural network 3828 during initial training.

Training framework 3824 can include a framework processed in connection with a software development toolkit such as, but not limited to, an OpenVINO (Open Visual Inference and Neural network Optimization) toolkit. An OpenVINO toolkit can include a toolkit such as, but not limited to, those developed by Intel Corporation of Santa Clara, CA.

OpenVINO can include a toolkit for facilitating development of applications, specifically neural network applications, for various tasks and operations, such as, but not limited to, human vision emulation, speech recognition, natural language processing, recommendation systems, and/or variations thereof. OpenVINO can support neural networks such as, but not limited to, convolutional neural networks (CNNs), recurrent and/or attention-based neural networks, and/or various other neural network models. OpenVINO can support various software libraries such as, but not limited to, OpenCV, OpenCL, and/or variations thereof.

OpenVINO can support neural network models for various tasks and operations, such as, but not limited to, classification, segmentation, object detection, face recognition, speech recognition, pose estimation (e.g., humans and/or objects), monocular depth estimation, image inpainting, style transfer, action recognition, colorization, and/or variations thereof.

OpenVINO can include one or more software tools and/or modules for model optimization, also referred to as a model optimizer. A model optimizer can include a command line tool that facilitates transitions between training and deployment of neural network models. A model optimizer may optimize neural network models for execution on various devices and/or processing units, such as, but not limited to, a GPU, CPU, PPU, GPGPU, and/or variations thereof. A model optimizer can generate an internal representation of a model, and can optimize said model to generate an intermediate representation. A model optimizer may reduce a number of layers of a model. A model optimizer can remove layers of a model that may be utilized for training. A model optimizer may perform various neural network operations, such as, but not limited to, modifying inputs to a model (e.g., resizing inputs to a model), modifying a size of inputs of a model (e.g., modifying a batch size of a model), modifying a model structure (e.g., modifying layers of a model), normalization, standardization, quantization (e.g., converting weights of a model from a first representation, such as, but not limited to, floating point, to a second representation, such as, but not limited to, integer), and/or variations thereof.

OpenVINO can include one or more software libraries for inferencing, also referred to as an inference engine. An inference engine can include a C++ library, or any suitable programming language library. An inference engine can be utilized to infer input data. An inference engine may implement various classes to infer input data and generate one or more results. An inference engine can implement one or more API functions to process an intermediate representation, set input and/or output formats, and/or execute a model on one or more devices.

OpenVINO may provide various abilities for heterogeneous execution of one or more neural network models. Heterogeneous execution, or heterogeneous computing, can refer to one or more computing processes and/or systems that utilize one or more types of processors and/or cores. OpenVINO can provide various software functions to execute a program on one or more devices. OpenVINO may provide various software functions to execute a program and/or portions of a program on different devices. OpenVINO may provide various software functions to, for example, run a first portion of code on a CPU and a second portion of code on a GPU and/or FPGA. OpenVINO may provide various software functions to execute one or more layers of a neural network on one or more devices (e.g., a first set of layers on a first device, such as, but not limited to, a GPU, and a second set of layers on a second device, such as, but not limited to, a CPU).

OpenVINO can include various functionality similar to functionalities associated with a CUDA programming model, such as, but not limited to, various neural network model operations associated with frameworks such as, but not limited to, TensorFlow, PyTorch, and/or variations thereof. One or more CUDA programming model operations may be performed using OpenVINO. Various systems, methods, and/or techniques described herein may be implemented using OpenVINO.

In at least one embodiment, one or more circuits can be used to cause one or more neural networks and training frameworks described elsewhere herein to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein. One or more neural networks and training frameworks can be configured by software to perform an instruction to perform one or more matrix multiply-accumulate (MMA) operations to multiply a first input matrix by a scaled matrix generated by multiplying one or more elements of a second input matrix by one or more corresponding scale factors or otherwise perform any of the operations described above or elsewhere herein.

As will be apparent to one of ordinary skill in the art, other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

As described further herein, processors, such as those disclosed in FIGs. 21-33 can use instructions to perform any of the operations described herein. Instructions, for example, can be performed using one or more threads. A thread block can include any number of threads of execution. A workgroup can be a thread block. A processor can execute a group of threads (e.g., 16 threads). A group of threads can also be referred to as a warp, or subgroup, or wavefront (e.g., as used by AMD and Intel). Each thread in a warp, wave, subgroup, or wavefront can belong to a single thread block and can be configured to process a different set of data based on a single set of instructions. A lane can be a thread. A work item can be a thread, such as, but not limited to, e.g., with OpenCL.

A processor, such as, processors described further herein (e.g., FIGs. 21-33) can include one or more threads that can perform instructions synchronously. A thread can perform instructions synchronously. For example, a thread can perform a sequence of two instructions. An output of the first instruction can be input to the second instruction.

In at least one embodiment, a thread performs an instruction asynchronously if the thread performs one or more subsequent instructions before a processor's completion of all operations corresponding to the instruction have been completely been performed. For example, the thread can perform the instruction to cause a processor to queue or otherwise begin performing an operation and the thread can perform subsequent instructions before the processor has completed performing the operation. A processor, such as, processors described further herein (e.g., FIGs. 21-33) can perform instructions asynchronously. For example, a thread may submit or issue an instruction to be performed by processor, and processor can perform the instruction independently of a thread that can be performing other instruction(s). A thread may submit or issue an instruction that can be performed by processor, and, for example, can inform one or more threads (the same thread or other threads) when the processor has performed a previously submitted or issued instruction. A thread may perform a first instruction to wait to be informed that processor has performed previously submitted or issued instructions, and, for example, output from the processor can be available to the thread. Output from processor can be input to a thread performing a second instruction. Instructions can be performed asynchronously in a variety of sequences. For example, one or more threads may submit one or more instructions to a processor, and processor may perform instructions in a sequence that is the same or different than an order submitted by the threads. Processor may specify a sequencing for the instructions that the processor performs.

At least one embodiment of the disclosure can be described in view of the following clauses:
1. One or more processors, comprising:
   circuitry to perform an instruction to perform one or more matrix multiply-accumulate (MMA) operations to multiply a first input matrix by a scaled matrix generated by multiplying one or more elements of a second input matrix by one or more corresponding scale factors stored in tensor memory.
2. The one or more processors of clause 1, wherein an input of the instruction indicates that an element of the second input matrix is stored in 4 bits of tensor memory.
3. The one or more processors of any of clauses 1 or 2, wherein the element of the second input matrix is stored in a container that is represented using 4 bits of tensor memory, wherein the container is a unit of storage that represents the element of the second input matrix.
4. The one or more processors of any of clauses 1 to 3, wherein the one or more corresponding scale factors are retrieved from scale data stored in tensor memory based, at least in part, on a scale data selection operand of the instruction, wherein the scale data is indicated by a scale data operand of the instruction.
5. The one or more processors of any of clauses 1 to 4, wherein the one or more corresponding scale factors are arranged in a number of vectors indicated by an input of the instruction, and one or more scale factors of each vector are multiplied by one or more elements of each row or column in a portion of the second input matrix that corresponds to a vector of scale factors.
6. The one or more processors of any of clauses 1 to 5, wherein the first input matrix comprises a plurality of portions, and multiplying the one or more elements of the second input matrix by the one or more corresponding scale factors comprises multiplying one or more elements of each portion of the first input matrix by the one or more corresponding scale factors.
7. The one or more processors of any of clauses 1 to 6, wherein a number of portions in the plurality of portions of the first input matrix is indicated by an input of the instruction.
8. A method, comprising:
   receiving an instruction call to perform a matrix multiply-accumulate (MMA) operation, the instruction call having operands indicating a first input matrix, a second input matrix, and one or more scale data storage locations in tensor memory at which scale data is stored;
   in response to the instruction call, causing a scale matrix to be selected from the one or more scale data storage locations in accordance with a scale vector size input and a scale data selector operand of the instruction call;
   identifying, in the scale matrix, one or more scale vectors indicated by the scale vector size input;
   generating a plurality of scaled values corresponding to elements of the first input matrix, wherein each scaled value is a product of a corresponding matrix element from the first input matrix and a scale element from the identified one or more scale vectors; and
   executing the MMA operation to generate a plurality of elements of a result matrix based, at least in part, on the plurality of scaled values corresponding to elements of the first input matrix and one or more elements of the second input matrix.
9. The method of clause 8, wherein an input of the instruction call indicates that an element of the first input matrix is stored in 4 bits of tensor memory.
10. The method of any of clauses 8 or 9, wherein the element of the first input matrix is stored in a container that is represented using 4 bits of tensor memory, wherein the container is a unit of storage that represents the element of the first input matrix.
11. The method of any of clauses 8 to 10, wherein a position of the scale element in the one or more scale vectors is determined based, at least in part, on a position of the corresponding matrix element in the first input matrix.
12. The method of any of clauses 8 to 11, further comprising:
   identifying one or more chunks of the first input matrix, wherein each chunk includes one or more first input vectors of the first input matrix, and a number of chunks is based, at least in part, on a scale vector size input of the instruction.
13. The method of any of clauses 8 to 12, wherein the one or more scale vectors are identified in the scale matrix based, at least in part, on a byte selector operand of the instruction.
14. The method of any of clauses 8 to 13, further comprising:
   generating one or more scaled input vectors, each scaled input vector comprising one or more scaled values generated by computing one or more products of one or more elements of a corresponding input vector of the first input matrix and one or more corresponding elements of a scale vector of the scale matrix.
15. The method of any of clauses 8 to 14, wherein the corresponding input vector is in a chunk of the first input matrix, and the scale vector corresponds to the chunk of the first input matrix.
16. A system, comprising:
   one or more processors to perform an instruction to perform one or more matrix multiply-accumulate (MMA) operations to multiply a first input matrix by a scaled matrix generated by multiplying one or more elements of a second input matrix by one or more corresponding scale factors stored in tensor memory.
17. The system of clause 16, wherein the one or more corresponding scale factors are retrieved from scale data indicated by a scale data operand of the instruction based, at least in part, on a scale data selection operand of the instruction.
18. The system of any of clauses 16 or 17, wherein an input of the instruction indicates a size of each element of the second input matrix, and the size of each element is 4 bits, 6 bits, or 8 bits.
19. The system of any of clauses 16 to 18, wherein the one or more scale factors are arranged in a number of vectors indicated by an input of the instruction, and one or more scale factors of each vector are multiplied by one or more elements of each row or column in a portion of the second input matrix that corresponds to a vector of scale factors.
20. The system of any of clauses 16 to 19, wherein the first input matrix comprises a plurality of portions, and multiplying the one or more elements of the second input matrix by the one or more corresponding scale factors comprises multiplying one or more elements of each portion of the first input matrix by the one or more corresponding scale factors.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. Use of "may" and/or "can" is intended to indicate by way of example without limiting any particular embodiment or component or other function described above, below, or elsewhere herein. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. Use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as, but not limited to, phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). Number of items in a plurality can be at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. A process such as, but not limited to, those processes described herein (or variations and/or combinations thereof) can be performed under control of one or more computer systems configured with executable instructions and is implemented as code (e.g., executable instructions, one or more computer programs or one or more applications) executing collectively on one or more processors, by hardware or combinations thereof. Code can be stored on a computer-readable storage medium, for example, in form of a computer program comprising a plurality of instructions executable by one or more processors. A computer-readable storage medium can be a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. Code (e.g., executable code or source code) can be stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. A set of non-transitory computer-readable storage media can include multiple non-transitory computer-readable storage media and one or more of individual non-transitory storage media of multiple non-transitory computer-readable storage media lack all of code while multiple non-transitory computer-readable storage media collectively store all of code. Executable instructions can be executed such that different instructions are executed by different processors - for example, a non-transitory computer-readable storage medium store instructions and a main central processing unit ("CPU") executes some of instructions while a graphics processing unit ("GPU") executes other instructions. Different components of a computer system can have separate processors and different processors execute different subsets of instructions.

An arithmetic logic unit can include a set of combinational logic circuitry that takes one or more inputs to produce a result. An arithmetic logic unit can be used by a processor to implement mathematical operation such as, but not limited to, addition, subtraction, or multiplication. An arithmetic logic unit is used to implement logical operations such as, but not limited to, logical AND/OR or XOR. An arithmetic logic unit can be stateless, and made from physical switching components such as, but not limited to, semiconductor transistors arranged to form logical gates. An arithmetic logic unit may operate internally as a stateful logic circuit with an associated clock. An arithmetic logic unit may be constructed as an asynchronous logic circuit with an internal state not maintained in an associated register set. An arithmetic logic unit can be used by a processor to combine operands stored in one or more registers of the processor and produce an output that can be stored by the processor in another register or a memory location.

As a result of processing an instruction retrieved by the processor, the processor may present one or more inputs or operands to an arithmetic logic unit, causing the arithmetic logic unit to produce a result based at least in part on an instruction code provided to inputs of the arithmetic logic unit. The instruction codes provided by the processor to the ALU may be based at least in part on the instruction executed by the processor. Combinational logic in the ALU may process the inputs and produces an output which is placed on a bus within the processor. A processor can select a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

One or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Computer systems can be configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or example language (e.g., "such as, but not limited to,") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as, but not limited to, "processing," "computing," "calculating," "determining," or like, refer to action and/or processes of a computer or computing system, or similar electronic computing device, that manipulate and/or transform data represented as physical, such as, but not limited to, electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as, but not limited to, tasks, threads, and intelligent agents. Also, each process may refer to multiple processes, for carrying out instructions in sequence or in parallel, continuously or intermittently. Terms "system" and "method" are used herein interchangeably insofar as system may embody one or more methods and methods may be considered a system.

References may be made to obtaining, acquiring, receiving, or inputting analog or digital data into a subsystem, computer system, or computer-implemented machine. Processes of obtaining, acquiring, receiving, or inputting analog and digital data can be accomplished in a variety of ways such as, but not limited to, by receiving data as a parameter of a function call or a call to an application programming interface. Processes of obtaining, acquiring, receiving, or inputting analog or digital data can be accomplished by transferring data via a serial or parallel interface. Processes of obtaining, acquiring, receiving, or inputting analog or digital data can be accomplished by transferring data via a computer network from providing entity to acquiring entity. References may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as example forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. One or more processors, comprising:
circuitry to perform an instruction to perform one or more matrix multiply-accumulate (MMA) operations to multiply a first input matrix by a scaled matrix generated by multiplying one or more elements of a second input matrix by one or more corresponding scale factors stored in tensor memory.

2. The one or more processors of claim 1, wherein an input of the instruction indicates that an element of the second input matrix is stored in 4 bits of tensor memory.

3. The one or more processors of claim 2, wherein the element of the second input matrix is stored in a container that is represented using 4 bits of tensor memory, wherein the container is a unit of storage that represents the element of the second input matrix.

4. The one or more processors of claim 1, 2, or 3, wherein the one or more corresponding scale factors are retrieved from scale data stored in tensor memory based, at least in part, on a scale data selection operand of the instruction, wherein the scale data is indicated by a scale data operand of the instruction.

5. The one or more processors of any of claims 1-4, wherein the one or more corresponding scale factors are arranged in a number of vectors indicated by an input of the instruction, and one or more scale factors of each vector are multiplied by one or more elements of each row or column in a portion of the second input matrix that corresponds to a vector of scale factors.

6. The one or more processors of any of claims 1-5, wherein the first input matrix comprises a plurality of portions, and multiplying the one or more elements of the second input matrix by the one or more corresponding scale factors comprises multiplying one or more elements of each portion of the first input matrix by the one or more corresponding scale factors, wherein a number of portions in the plurality of portions of the first input matrix is indicated by an input of the instruction.

7. A method, comprising:
receiving an instruction call to perform a matrix multiply-accumulate (MMA) operation, the instruction call having operands indicating a first input matrix, a second input matrix, and one or more scale data storage locations in tensor memory at which scale data is stored;
in response to the instruction call, causing a scale matrix to be selected from the one or more scale data storage locations in accordance with a scale vector size input and a scale data selector operand of the instruction call;
identifying, in the scale matrix, one or more scale vectors indicated by the scale vector size input;
generating a plurality of scaled values corresponding to elements of the first input matrix, wherein each scaled value is a product of a corresponding matrix element from the first input matrix and a scale element from the identified one or more scale vectors; and
executing the MMA operation to generate a plurality of elements of a result matrix based, at least in part, on the plurality of scaled values corresponding to elements of the first input matrix and one or more elements of the second input matrix.

8. The method of claim 7, wherein an input of the instruction call indicates that an element of the first input matrix is stored in 4 bits of tensor memory.

9. The method of claim 7 or 8, wherein the element of the first input matrix is stored in a container that is represented using 4 bits of tensor memory, wherein the container is a unit of storage that represents the element of the first input matrix.

10. The method of claim 7, 8, or 9, wherein a position of the scale element in the one or more scale vectors is determined based, at least in part, on a position of the corresponding matrix element in the first input matrix.

11. The method of any of claims 7-10, further comprising:
identifying one or more chunks of the first input matrix, wherein each chunk includes one or more first input vectors of the first input matrix, and a number of chunks is based, at least in part, on a scale vector size input of the instruction.

12. The method of any of claims 7-11, wherein the one or more scale vectors are identified in the scale matrix based, at least in part, on a byte selector operand of the instruction.

13. The method of any of claims 7-12, further comprising:
generating one or more scaled input vectors, each scaled input vector comprising one or more scaled values generated by computing one or more products of one or more elements of a corresponding input vector of the first input matrix and one or more corresponding elements of a scale vector of the scale matrix.

14. The method of claim 13, wherein the corresponding input vector is in a chunk of the first input matrix, and the scale vector corresponds to the chunk of the first input matrix.

15. A system, comprising:
one or more processors to perform an instruction to perform one or more matrix multiply-accumulate (MMA) operations to multiply a first input matrix by a scaled matrix generated by multiplying one or more elements of a second input matrix by one or more corresponding scale factors stored in tensor memory.
